# EUROPEAN PATENT APPLICATION

(11) **EP 4 542 195 A2**
(43) Date of publication of application: **23.04.2025**
(21) Application number: 25162355.9
(22) Date of filing: 14.05.2020
(51) Int. Cl.: G01N 1/31

(54) **ASSEMBLY AND SYSTEM INCLUDING A BIOLOGICAL SAMPLE TREATMENT CHAMBER**

(30) Priority: 14.05.2019 US 201962847388 P; 23.08.2019 US 201962891118 P
(62) Divisional of application: 20726082.9
(71) Applicant: Ventana Medical Systems, Inc., Tucson, Arizona 85755 (US)
(72) Inventor: PHILLIPS-PORTILLO, James E., Tucson, 85755 (US); WILLEMS JR., John D., Tucson, 85755 (US); CRUM, Nathan, Tucson, 85755 (US); METTE, Matthew D., Tucson, 85755 (US); PSOTA, Samuel, Tucson, 85755 (US); BROWN, Patrick, Tucson, 85755 (US); OTTER, Michael, Tucson, 85755 (US); BENNETT, Vanessa J., Tucson, 85755 (US); LAING, Alastair, Tucson, 85755 (US); KRAM, Brian H., Tucson, 85755 (US); KELLER, Timothy J., Tucson, 85755 (US); BARNETT, Heidi, Tucson, 85755 (US); GRAVES, Evan T., Tucson, 85755 (US); KURYCKI, Daniel R., Tucson, 85755 (US); ROESSLER, Christian, Tucson, 85755 (US); WEIR, Kenneth S., Tucson, 85755 (US)
(74) Representative: Altmann Stößel Dick Patentanwälte PartG mbB

(57) **Abstract**

The present disclosure is directed to specimen processing assemblies including (a) a lower plate (10), (b) an upper plate (30) complementary to the lower plate, and (c) a chamber formed therefrom. In some embodiments, the formed chamber is adapted to perform an unmasking operation, e.g. antigen retrieval and/or target retrieval. In some embodiments, the specimen processing assemblies are configured to maintain a specimen-bearing substrate (15) horizontal during all processing steps. The present disclosure is also directed to systems including one or more independently operable specimen processing assemblies.

## Description

### CROSS REFERENCE TO RELATED APPLICATIONS

The present disclosure claims the benefit of the filing date of U.S. Provisional Application No: 62/891,118 filed on August 23, 2019, and the benefit of U.S. Provisional Application No. 62/847,388 filed on May 14, 2019, the disclosures of which are hereby incorporated by reference herein in their entireties.

### FIELD OF THE DISCLOSURE

The present disclosure relates to a system for unmasking protein antigens and nucleic acid targets from fixed biological samples.

### BACKGROUND OF THE DISCLOSURE

Fixation of tissue and cell samples is used to help ensure that the morphology of the sample and the spatial distribution of biomolecules is preserved and thus enable a diagnosis by a pathologist. As an adjunct to morphological indicators of disease, the presence of particular proteins and/or nucleic acid sequences can be used to further characterize a disease state and, in some instances, is used by an oncologist to direct therapy of the disease. However, fixation can also interfere with the detection of proteins and nucleic acids in a sample. As such, for immunohistochemical (IHC) procedures and *in-situ* hybridization (ISH) procedures, an unmasking step (also known as "antigen retrieval" or "target retrieval" for IHC and ISH, respectively) is often used make protein antigens or nucleic acid targets accessible to detection reagents such as antibodies or probes.

Fixation of samples is routinely accomplished using neutral-buffered formalin (NBF). It is believed that the formaldehyde in NBF preserves tissue and cell morphology by forming cross-links between reactive groups on proteins and nucleic acids in the sample, and these cross-links can lead to certain portions of the molecules being rendered undetectable. For example, formaldehyde preserves or fixes tissue or cells predominantly by cross-linking primary amine groups in proteins with other nearby nitrogen atoms in protein or DNA through a -CH₂- linkage. The process of tissue fixation however, frequently masks antigens on specific proteins for which detection is desirable for diagnostic and prognostic purposes. A variety of methods are used to reverse the effects of formalin fixation and provide access to antigens and targets in fixed biological samples. None of these methods, however, are believed to be completely successful in all instances, and some are more amenable to automation that others.

### BRIEF SUMMARY OF THE DISCLOSURE

The present disclosure is directed to specimen processing assemblies including (a) a lower plate, and (b) an upper plate which is complementary to the lower plate. Upper and lower plates which are "complementary" each include features or sets of features which complement one another. For example, a lower plate may have a first set of features (e.g. a substrate stage and a lower engagement surface) and an upper plate may have a second set of features (e.g. a cavity and an upper engagement surface), whereby the first and second set of features are complementary to each other. In some embodiments, the specimen processing assemblies include complementary lower and upper plates which are independently movable. For example, the lower plate may be coupled to a sub-assembly which is movable toward an upper plate (e.g. a fixed upper plate or a movable upper plate). By way of further example, the upper plate may be coupled to a sub-assembly which is movable toward a lower plate (e.g. a fixed lower plate or a movable lower plate). In some embodiments, the lower plate has a modular design ("modular lower plate") which allows it to be used in a multitude of different specimen processing assemblies.

In some embodiments, the specimen processing assemblies include a chamber formed from the complementary upper and lower plates (or a modular lower plate having features complementary to an upper plate). In some embodiments, the specimen processing assembly is adapted for unmasking, e.g. antigen retrieval and/or target retrieval, a specimen disposed on a substrate and provided within the chamber. In some embodiments, a specimen disposed on a substrate and/or at least a portion of the substrate itself is maintained at a temperature which is less than any other component within the chamber during an unmasking operation. For example, example the specimen disposed on the substrate or the portion of the substrate itself may be maintained as the "coldest" component within the chamber during an unmasking operation. Other aspects of specimen processing assemblies and the components of such specimen processing assemblies are described further herein. The present disclosure is also directed to systems including one or more independently operable specimen processing assemblies.

In one aspect of the present disclosure is a specimen processing assembly including (a) a lower plate, and (b) an upper plate which is complementary to the lower plate. In some embodiments, the lower and upper plates have complementary polygonal shapes. In some embodiments, the lower and upper plates have complementary wedge-based shapes. In some embodiments, at least one of the lower and upper plates are movable. In some embodiments, both of the lower and upper plates are independently movable.

In some embodiments, the lower plate includes a first set of features and the upper plate includes a second set of features, wherein the first and second sets of features are complementary to each other. In some embodiments, the first set of features includes a lower engagement surface and one or more substrate stages. In some embodiments, the one or more substrate stages are raised relative to at least a portion of the lower engagement surface. In some embodiments, the one or more substrate stages are recessed relative to at least a portion of the lower engagement surface. In some embodiments, the second set of features include an upper engagement surface. In some embodiments, the second set of features include an upper engagement surface and one or more cavities. In some embodiments, the one or more cavities are recessed relative to at least a portion of the upper engagement surface. In some embodiments, each of the lower and upper plates include additional features including one or more ports, one or more heating elements, one or more cooling elements, one or more substrate alignment members, etc. In some embodiments, the one or more ports may intake ports through which one or more gases and/or steam may be supplied. In some embodiments, the one or more ports may be vent ports through which gas and/or steam may be released.

In some embodiments, the lower plate has a modular design. In some embodiments, a modular lower plate includes a body having a lower engagement surface. In some embodiments, the modular lower plate includes a thermal management module. In some embodiments, the body may rest on, engage with, or couple to the thermal management module. In some embodiments, the body includes a substrate stage that is part of and integral with body. In some embodiments, the body may be picked up, transported to, and deposited onto a thermal management module while a substrate is supported by the substrate stage of body (where the body including the substrate stage and the thermal management module together constitute the modular lower plate). In some embodiments, the body is included within a carrier block. In some embodiments, the carrier block and the body may be picked up, transported to, and deposited onto a thermal management module. In other embodiments, the body includes a lower engagement surface but does not include an integral substrate stage. Rather, the modular lower plate includes a body having a separable substrate stage. In this way, a separable substrate stage may be used as a carrier for a substrate. For example, a substrate may be disposed onto the separable substrate stage and together the substrate and the separable substrate stage pair may be picked up, transported to, and deposited onto a body. In some embodiments, a substrate and a separate substrate stage pair remain together throughout all or at least some of the processing steps to which the specimen disposed on the substrate may be subjected, for example, through all or part of the steps used to prepare a sample for microscopic analysis, such as from baking through coverslipping or from baking through staining. In some embodiments, a user places a substrate bearing a sample onto the separate substrate stage and inputs the substrate/substrate stage pair into a system and following processing of the sample, retrieves the substrate/substrate stage from the system, and then removes the substrate with a processed sample thereon for analysis.

In some embodiments, the complementary upper and lower plates include complementary upper and lower engagement surfaces, respectively. In some embodiments, the complementary upper and lower engagement surfaces both include complementary flat surfaces. In some embodiments, the complementary upper and lower engagement surfaces both include complex complementary surfaces, such as complementary surfaces including curvilinear or arcuate shapes. In some embodiments, the complementary upper and lower engagement surfaces are configured such that a sealing engagement may be formed when the upper and lower engagement surfaces at least partially contact one another or contact a seal body disposed therebetween. In some embodiments, a sealing engagement between the complementary upper and lower engagement surfaces facilitates the formation of a sealed chamber.

In some embodiments, the sealed chamber is heated and/or pressurized for a predetermined amount of time and then cooled. In some embodiments, the sealed chamber is heated and/or pressurized for a predetermined amount of time and then opened without first cooling down. In some embodiments, at least a portion of the specimen disposed on the substrate and/or at least a portion of the substrate itself is maintained at a temperature which is lower than any other component within the sealed chamber during an unmasking operation. For example, the specimen disposed on the substrate or the substrate itself may be maintained as the "coldest" component within the sealed chamber during all steps of the unmasking operation, such as during heating, pressurization, cooling, depressurization, quenching, the dispensing of additional fluids, etc. For example, the specimen and/or the portion of the substrate may be maintained at a temperature which is at least about 2°C less than any other component within the sealed chamber. By way of another example, the specimen and/or the portion of the substrate may be maintained at a temperature which is at least about 5°C less than any other component within the sealed chamber.

In some embodiments, any fluids and/or reagents needed for performing an unmasking operation are first introduced to a specimen disposed on the substrate, to a portion of the substrate itself, and/or to a reservoir, and then the chamber is sealed. By way of example, a total volume of between about 250µL to about 1000µL of one or more fluids and/or reagents may dispensed to a specimen disposed on a substrate, a portion of the substrate itself, and/or a reservoir within the lower plate before the formation of a sealed chamber between the upper and lower plates. In some embodiments, no additional fluids and/or reagents are applied after the formation of a sealed chamber.

In some embodiments, one or more additional fluids and/or reagents are dispensed to the specimen and/or the substrate in the sealed chamber as part of the unmasking operation. For example, between about 250µL to about 1000µL of one or more additional fluids and/or reagents may dispensed into the sealed chamber as part of the unmasking operation. In some embodiments, one or more additional fluids and/or reagents are dispensed into the sealed chamber as part of the unmasking operation such that at least about 90% of the volume of the chamber is filled with fluids and/or reagents. In some embodiments, one or more additional fluids and/or reagents are dispensed into the sealed chamber as part of the unmasking operation such that at least about 95% of the volume of the chamber is filled with fluids and/or reagents. In some embodiments, one or more additional fluids and/or reagents are dispensed into the sealed chamber as part of the unmasking operation such that at least about 99% of the volume of the chamber is filled with fluids and/or reagents.

In some embodiments, either a body of the lower plate or the one or more substrate stages are themselves configured such that an upper surface of the substrate stage is horizontal, for example parallel to the ground. In those embodiments where the lower plate is movable, the one or more substrate stages and/or the lower body is configured such that as the lower plate is moved, a substrate supported by the upper surface remains horizontal. In some embodiments, the upper surface of the substrate stage remains in a horizontal orientation throughout the course of the movement of the lower plate, and this is regardless of whether the movement of the lower plate remains entirely parallel to the ground or if there is a vertical component to the movement of the lower plate (including those embodiments where there is a completely vertical movement). In embodiments where the bodies of the lower and upper plates have complementary wedge-based shapes, the raised substrate stage may itself have a substantially wedge-based shape such that an upper surface of the raised substrate stage remains horizontal while the lower plate is moved.

In some embodiments, the complementary lower and upper plates are independently movable such that they contact one another at an interface of the complementary lower and upper engagement surfaces. In some embodiments, the movement of any of the upper and lower plates is affected with one or more of a motor, a screw, a lever, a spring, a cam mechanism, a piston, or any combination thereof. In some embodiments, an additional external force is applied to one or both of the upper and/or lower plates after the plates are brought into at least partial contact with one another. In some embodiments, the application of the additional external force facilitates a sealing engagement between the upper and lower plates to be maintained (with or without the use of a seal body, as described below). In some embodiments, the external force is applied with one or more force generating members (e.g. one or more of a motor, a piston, a spring, a screw mechanism, a lever and/or a cam mechanism).

In some embodiments, the lower plate and the upper plate are both moved simultaneously toward each other until they both contact each other (for example their respective upper and lower engagement surfaces contact one another), and then one or more force generating members are engaged to apply an additional force on at least the upper plate. In some embodiments, one or more force generating members in communication with at least the upper plate may be engaged to force the upper plate against the lower plate, thereby further facilitating a sealing engagement between the upper and lower plates, or enabling a sealing engagement to be maintained as the internal pressure in a chamber formed from the upper and lower plates increases (for example, where the internal pressure increases during an unmasking operation and/or from pre-pressurization).

In some embodiments, each of the lower and upper plates are independently movable in any of the x-, y-, and z-coordinate directions. In some embodiments, the lower plate and the upper plate are both simultaneously movable toward each other in any of the x-, y-, and z-coordinate directions. In some embodiments, one of the upper or lower plates may be moved to a predetermined position and, simultaneously or subsequently, the other of the upper or lower plate may be moved toward the positioned plate. In some embodiments, the lower plate may be moved to a predetermined position and then, simultaneously or subsequently, the upper plate may be moved toward the positioned lower plate. In some embodiments, the lower plate is moved to a predetermined position and the upper plate may be moved downward toward the lower plate.

In some embodiments, one of the lower or upper plates is movable, while the other of the lower or upper plate is not movable. In some embodiments, the upper plate is fixed, and the lower plate is movable toward the upper plate. In some embodiments, the lower plate is fixed, and the upper plate is movable toward the lower plate.

In some embodiments, the lower plate moves from a loading area to at least one of a preparation area or an unmasking area. In some embodiments, the movement of the lower plate facilitates the treatment of a substrate supported by the lower plate with one or more fluids and/or reagents. In some embodiments, the lower plate is fixed and one or more dispense devices are moved to the fixed lower plate to dispense one or more fluids and/or reagents to a substrate supported by the lower plate. By way of example, a total volume of between about 250µL to about 1000µL of one or more fluids and/or reagents may be dispensed to a specimen disposed on a substrate, a portion of the substrate itself, and/or a reservoir within the lower plate before the formation of a sealed chamber between the lower and upper plates. In some embodiments, no additional fluids and/or reagents are dispensed to the substrate once the substrate is positioned within the sealed chamber.

In some embodiments, the complementary lower and upper engagement surfaces facilitate a sealing engagement without the use of any seal body disposed therebetween. In some embodiments, at least one of the lower plate and the upper plate includes at least one seal body. In some embodiments, the seal body may be disposed within a groove of either the complementary upper and/or lower plates, and the seal body, along with the complementary upper and lower engagement surfaces, facilitates a sealing engagement between the upper and lower plates. In some embodiments, the at least one seal body is removable. In some embodiments, a seal body may be disposed between the complementary upper and lower engagement surfaces without being disposed within a groove. In some embodiments, the seal body is positioned on the surface of the lower engagement surface. In these embodiments, when an upper plate is brought into contact with the sealing element positioned on the lower engagement surface, a sealing engagement may be maintained, such as by exerting an external force onto the lower plate and/or the upper plate with one or more force generating members. In some embodiments, the at least one removable seal is integrated within a removable seal attachment, wherein the removable seal attachment is configured to engage a portion of a periphery of the lower plate or the upper plate. In some embodiments, one of the complementary lower or upper engagement surfaces includes a raised sealing member protruding from a plane formed by the one of the complementary lower or upper engagement surfaces, and where the other of the complementary lower or upper engagement surface includes a channel which is complementary to the raised sealing member.

In some embodiments, at least one of the upper and lower plates further includes one or more heating and/or cooling elements. In some embodiments, the cooling elements are active cooling elements. In some embodiments, the active cooling elements include a tubes in at least partial contact with at least one of the body of the lower plate or the body of the upper plate, wherein the tube is connected to a circulation device (e.g. a chiller such that a liquid heat transfer medium may be circulated through the tube to effectuate cooling of at least a portion of the lower plate, the upper plate, and/or a substrate disposed on a substrate stage. In some embodiments, the cooling elements are a passive cooling elements. In some embodiments, the passive cooling elements are a heat sink. In some embodiments, only the upper plate includes a heating element. In some embodiments, at least one of the upper or lower plates includes a heating element, and wherein the lower plate includes a passive or active cooling element. In some embodiments, only the lower plate includes a heating element.

In embodiments where both the upper and lower plates include heating and/or cooling elements, the heating and/or cooling elements may be independently operable, as described herein. In some embodiments, any of the heating and/or cooling elements within the upper plate may be operated in conjunction with those heating and/or cooling elements within the lower plate, or those heating and/or cooling elements embedded within one or more thermal management modules. As a result, by independently controlling the various heating and/or cooling elements present in the upper and lower plates, the temperature of the substrate stage, any portion of a substrate supported by the substrate stage, and/or the chamber may be controlled. In some embodiments, independent control of the various heating and/or cooling elements enable thermal gradients to be formed and maintained, e.g. thermal gradients between a substrate supported by a substrate stage and the walls of the interior of the formed chamber.

In some embodiments, at least one of the upper and lower plates further includes a sensor, such as a temperature sensor. In some embodiments, the upper plate includes a temperature sensor which contacts the substrate and/or the sample disposed on the substrate. In some embodiments, the lower plate includes a temperature sensor which contacts the substrate. In some embodiments, the data from the temperature sensor is monitored such that one or more heating and/or cooling elements disposed within the lower and/or upper plates may be controlled. For example, the sensor may provide feedback such that the one or more heating and/or cooling elements disposed within the lower and/or upper plates may be controlled to maintain a specimen or a portion of the substrate as the coldest components within the sealed chamber.

Another aspect of the present disclosure is a specimen processing assembly including (i) a lower plate coupled to a sub-assembly, wherein the lower plate includes a lower engagement surface and one or more substrate stages, wherein the one or more substrate stages includes an upper surface adapted to hold a substrate horizontally; and (ii) an upper plate having an upper engagement surface complementary to the lower engagement surface. In some embodiments, the upper plate further includes one or more cavities. In some embodiments, the one or more cavities each receive at least a portion of the one or more substrate stages. In some embodiments, one of the lower plate and the one or more substrate stages are configured such that the upper surface of the one or more substrate stages remains horizontal as the lower plate traverses the sub-assembly (for example any substrate supported by the one or more substrate stages remain parallel to the ground throughout the movement of the lower plate along the sub-assembly, and regardless of whether the movement is completely horizontal along the sub-assembly or the movement includes a vertical component to the movement, or even a purely vertical movement). In some embodiments, the substrate is a microscope slide.

In some embodiments, the lower plate is coupled to a sub-assembly which functions to move the lower plate into contact with the upper plate. In some embodiments, the sub-assembly is moved with sufficient force such that the movement of sub-assembly itself is sufficient to create a seal between the lower plate coupled to the sub-assembly and the upper plate. For example, the sub-assembly can include a means for translating the lower plate along a rail (e.g. a rail arranged horizontally or a rail having one end offset from the horizontal, as described below). In some embodiments, the sub-assembly includes a motor adapted to move the lower plate along the rail, e.g. from a loading position to an unmasking position.

In some embodiments, the sub-assembly is arranged horizontally. In this configuration, the lower plate moves along the horizontally arranged sub-assembly. In some embodiments, the sub-assembly is arranged such that a first end of the sub-assembly is raised vertically relative to a second end of the sub-assembly, for example the sub-assembly is offset from the horizontal. In this particular embodiment, as the lower plate moves along the sub-assembly it does so with a motion that includes a vertical component, for example as the lower plate is moved along any of the x- and/or y- directions of the horizontally offset sub-assembly, there is a concomitant movement in the z-direction given the horizontal offset of the rail. In some embodiments, the rail is offset from the horizontal at an angle ranging from between about 5 degrees to about 70 degrees. In other embodiments, the horizontal offset angle ranges from between about 5 degrees to about 60 degrees. In yet other embodiments, the horizontal offset angle ranges from between about 10 degrees to about 50 degrees. In further embodiments, the horizontal offset angle ranges from between about 20 degrees to about 50 degrees. In yet further embodiments, the horizontal offset angle ranges from between about 20 degrees to about 45 degrees. In some embodiments, the sub-assembly further includes a motor adapted to move the lower plate along the sub-assembly.

In some embodiments, the upper plate is coupled to a support member and the lower plate is moved (either along a horizontal sub-assembly or a sub-assembly which is horizontally offset) to a position where the lower engagement surface contacts the complementary upper engagement surface of the upper plate. In some embodiments, the upper plate is coupled to one or more springs and the lower plate is moved to a position where the lower engagement surface contacts the complementary upper engagement surface of the upper plate, and where the one or more springs exert a downward force onto the upper plate as the lower plate contacts the upper plate.

In some embodiments, the lower plate is moved to a predetermined position underneath the upper plate and the upper plate is moved at least along the z-axis toward the positioned lower plate. In other embodiments, the lower plate is moved near an upper plate, and the upper plate is moved either simultaneously or subsequently (in any of the x, y, and z directions) toward the lower plate until the upper engagement surface of the upper plate contacts the lower engagement surface of the lower plate. In yet other embodiments, the lower plate and upper plate are both simultaneously moved toward each other (here, the movement of each of the lower and upper plates may independently be in any of the x-, y-, and/or z-directions). In some embodiments, the lower plate and the upper plate are both moved simultaneously toward each other until they both contact each other (for example their respective upper and lower engagement surfaces contact one another), and then force generating member in communication with the upper plate is engaged. In some embodiments, the engagement of the force generating member causes a force to be exerted onto at least the upper plate. In some embodiments, the force exerted onto the upper plate facilitates a sealing engagement between the upper and lower plates. In some embodiments, a predetermined amount of force is exerted by the force generating member onto the upper plate. In some embodiments, the predetermined amount of force exerted by the force generating member onto the upper plate is greater than a force generated through the internal pressurization of a chamber formed from the upper and lower plates but lower than a predetermined threshold force above which unsafe pressures could be generated within the chamber. In some embodiments, this predetermined force exerted by the force generating member is limited such that should pressure within the chamber exceed a predetermined pressure, the force exerted by the force generating member is overcome and the force generating member will slip or give way to relieve pressures above the predetermined pressure that might develop within the chamber.

In some embodiments, the specimen processing assembly includes a chamber. In some embodiments, the chamber is formed from the complementary lower and upper plates. In some embodiments, the complementary lower and upper engagement surfaces of the lower and upper plates, respectively, facilitate a sealing engagement between the upper and lower plates such that a chamber is formed therebetween. In some embodiments, the complementary lower and upper engagement surfaces provide a sealing engagement without the use of any seal body disposed therebetween. In some embodiments, a seal body may be disposed within a groove of either the upper and/or lower plates, and the seal body, along with the upper and lower engagement surfaces, facilitates a sealing engagement between the upper and lower plates. In some embodiments, a seal body may be disposed between the upper and lower engagement surfaces without being disposed within a groove, e.g. the seal body lies on the surface of the lower engagement surface. In some embodiments, one of the lower or upper engagement surfaces includes a raised sealing member protruding from the plane formed by the one of the lower or upper engagement surfaces, and where the other of the lower or upper engagement surface includes a channel which is complementary to the raised sealing member.

In some embodiments, one or both of the lower and upper plates include one or more heating and/or cooling elements. In some embodiments, the one or more heating and/or cooling elements within the lower and upper plates are operated together such that, for example, predetermined thermal gradients are established and maintained within the chamber. For example, the one or more heating and/or cooling elements within the lower and upper plates are operated together such that a thermal gradient is established and maintained between a substrate stage and between other components within the chamber, e.g. the walls defining the interior of the chamber. In some embodiments, the one or more heating and/or cooling elements are independently controlled such that the specimen disposed on the substrate and/or a portion of the substrate itself is maintained at a temperature which is less than any other component (e.g. chamber walls, ports, valves, sensors, probes, etc.) within the chamber. For example, the specimen and/or the portion of the substrate may be maintained at a temperature which is at least about 2°C less than any other component within the sealed chamber. By way of another example, the specimen and/or the portion of the substrate may be maintained at a temperature which is at least about 5°C less than any other component within the sealed chamber. In some embodiments, the upper plate further includes one or more ports. In some embodiments, the one or more ports permit the introduction of one or more gases and/or steam into the chamber formed from the lower and upper plates. For example, steam may be introduced to heat a specimen within the chamber and concomitantly pressurize the chamber. In some embodiments, the upper plate further includes one or more valves to facilitate the release of gases and/or steam from within the chamber formed from the lower and upper plates. For example, one or more valves may be opened for a predetermined amount of time such that pressure may be released from the sealed chamber. Alternatively, the sealed chamber may be opened immediately after an unmasking operation is completed, e.g. the sealed chamber may be opened without first cooling down or depressurizing.

In some embodiments, an unmasking operation conducted within the chamber formed from the complementary lower and upper plates is performed using fluids and/or reagents supplied to the substrate prior to the formation of the chamber. In some embodiments, no additional fluids and/or reagents are dispensed to the substrate when the substrate is positioned within the chamber and after the chamber is sealed.

In some embodiments, the chamber may include one or more ports into which one more additional fluids and/or reagents may be added directly into the sealed chamber, such as part of the unmasking operation. In some embodiments, one or more additional fluids and/or reagents are dispensed to the specimen and/or the substrate in the sealed chamber as part of the unmasking operation. For example, between about 250µL to about 1000µL of one or more additional fluids and/or reagents may dispensed into the sealed chamber as part of the unmasking operation. In some embodiments, one or more additional fluids and/or reagents are dispensed into the sealed chamber as part of the unmasking operation such that at least about 90% of the volume of the chamber is filled with fluids and/or reagents. In some embodiments, the lower plate may include one or more ports, e.g. vacuum ports, for removing excess liquids from within the chamber. In some embodiments, the vacuum ports in the lower plate may be controlled after substantially filling the chamber with additional fluids and/or reagents.

Another aspect of the present disclosure is a system including one or more independently operable specimen processing assemblies, one or more dispense devices, one or more optional liquid removal devices, one or more optional mixing devices, and a control system communicatively coupled to the one or more specimen processing assemblies and at least the one or more dispense devices. In some embodiments, each of the one or more independently operable specimen processing assemblies include one or more lower plates and one or more upper plates, where each of the one of more upper plates are complementary to each of the one or more lower plates.

In some embodiments, the lower plates have a modular design. In some embodiments, a modular lower plate includes a body having a lower engagement surface. In some embodiments, the modular lower plate includes a thermal management module. In some embodiments, the body may rest on, engage with, or couple to the thermal management module. In some embodiments, the body includes a substrate stage that is part of and integral with body. In other embodiments, the body includes a lower engagement surface but does not include an integral substrate stage. Rather, the modular lower plate includes a body having a separable substrate stage. In this way, a separable substrate stage may be used as a carrier for a substrate. For example, a substrate may be disposed onto the separable substrate stage and together the substrate and the separable substrate stage pair may be picked up, transported to, and deposited onto a body. In some embodiments, a substrate and a separate substrate stage pair remain together throughout all or at least some of the processing steps, for example, through all or part of the steps used to prepare a sample for microscopic analysis, such as from baking through coverslipping or from baking through staining. In some embodiments, a user places a substrate bearing a sample onto the separate substrate stage and inputs the substrate/substrate stage pair into a system and following processing of the sample, retrieves the substrate/substrate stage from the system, and then removes the substrate with a processed sample thereon for analysis.

In some embodiments, the system includes at least two independently operable specimen processing assemblies, and wherein one of the at least two specimen processing assemblies includes a sealed chamber (e.g. a chamber formed from one upper plate and one complementary lower plate or a complementary modular lower plate).

In some embodiments, the lower and upper plates include one or more independently operable heating and/or cooling elements. For example, the independently operable heating and/or cooling elements may be present in the lower plate, the upper plate, or both the lower and upper plates. In some embodiments, the chamber is in communication with at least two heating and/or cooling elements. In some embodiments, the heating and/or cooling elements within the upper plate may be operated in conjunction with those heating and/or cooling elements within the lower plate. By independently controlling the various heating and/or cooling elements present in the upper and lower plates, the temperature of the substrate stage, any portion of a substrate supported by the substrate stage, and/or the chamber may be controlled.

In some embodiments, the at least two heating and/or cooling elements enable a thermal gradient to be established between different portions of the lower and/or the upper plate. In some embodiments, the established thermal gradient enables a specimen disposed on a substrate and/or a portion of the substrate to be maintained at a temperature less than the temperature of any other component within the chamber during an unmasking operation. For example, it is possible to independently operate the various heating and/or cooling elements present in the lower and/or upper plates such that at least a portion of the substrate, or the specimen disposed on the substrate, remains the coldest component within the chamber during an unmasking operation. For example, the substrate or the specimen disposed on the substrate may be maintained at a temperature lower than the upper plate, the lower plate, ports, valves, and/or any other structure within a chamber formed from the upper and lower plates during an unmasking operation.

In some embodiments, a duration of an unmasking operation is standardized for all types of specimens and all types of analyses to be performed on a given type of specimen, thereby increasing the efficiency of the system and all components therein. For example, having a standardized duration for all specimen and analysis types permits easier scheduling of prior specimen processing steps (such as deparaffinization) and subsequent specimen processing steps (such as staining steps) since they can all be in "lock step" with the standardized unmasking operation duration. Standardization of the unmasking operation duration is made possible by the discovery that one need only change the temperature to vary the extent of unmasking for a given type of sample. By selecting a specific temperature at which the unmasking operation is performed for a particular sample type, not only can the duration of the unmasking operation be standardized, but also the extent of unmasking for the particular sample type can be optimized for a particular assay. In some embodiments, the disclosed system can be optimized to facilitate standardization of the duration of the unmasking operation. Thus, in some embodiments, an unmasking operation in each independently operable chamber is conducted for the same duration of time regardless of the biomarkers being unmasked in any individual chamber.

Another aspect of the present disclosure is a system including one or more independently operable specimen processing assemblies, wherein the one or more independently operable specimen processing assemblies are adapted to independently treat and/or move a specimen bearing substrate from one processing area to another while maintaining the specimen bearing substrate in a horizontal position during all steps of processing (e.g. during treatment with one or more fluids and/or reagents; and during an unmasking operation). In some embodiments, the horizontal processing (and/or horizontal movements) enables the one or more fluids and/or reagents dispensed on the specimen bearing substrate to be maintained and/or manipulated on the surface of the substrate. In some embodiments, the one or more specimen processing assemblies include a chamber configured to process the specimen bearing substrates at an elevated temperature and/or pressure (as compared with temperatures and/or pressures external to the chamber), while maintaining the substrate in a horizontal position and while minimizing evaporative losses. In some embodiments, the chamber is formed from a lower plate having a lower engagement surface and an upper plate having an upper engagement surface, where the upper engagement surface is complementary to the lower engagement surface.

In some embodiments, the chamber is formed from a modular lower plate. In some embodiments, a modular lower plate includes a body having a lower engagement surface. In some embodiments, the modular lower plate includes a thermal management module. In some embodiments, the body may rest on, engage with, or couple to the thermal management module. In some embodiments, the body includes a substrate stage that is part of and integral with body. In other embodiments, the body includes a lower engagement surface but does not include an integral substrate stage. Rather, the modular lower plate includes a body having a separable substrate stage. In this way, a separable substrate stage may be used as a carrier for a substrate. For example, a substrate may be disposed onto the separable substrate stage and together the substrate and the separable substrate stage pair may be picked up, transported to, and deposited onto a body. In some embodiments, a substrate and a separate substrate stage pair remain together throughout all or at least some of the processing steps, for example, through all or part of the steps used to prepare a sample for microscopic analysis, such as from baking through coverslipping or from baking through staining. In some embodiments, a user places a substrate bearing a sample onto the separate substrate stage and inputs the substrate/substrate stage pair into a system and following processing of the sample, retrieves the substrate/substrate stage from the system, and then removes the substrate with a processed sample thereon for analysis.

In some embodiments, the lower and upper plates are independently moved together such that a sealing engagement is made between the complementary lower and upper engagement surfaces. In some embodiments, the formed chamber is configured for performing one or more steps of an unmasking operation, such any of the steps of heating, pressurizing, cooling, depressurizing, quenching, and/or adding or removing fluids and/or reagents/

In some embodiments, one or more fluids and/or reagents are dispensed to a specimen disposed on a substrate, a portion of the substrate itself, and/or a reservoir within the lower plate prior to the formation of the sealed chamber. By way of example, a total volume of between about 250µL to about 1000µL of one or more fluids and/or reagents are dispensed to a specimen disposed on a substrate, a portion of the substrate itself, and/or a reservoir within the lower plate before the formation of the sealed chamber. In some embodiments, an unmasking operation is performed using fluids and/or reagents supplied to the substrate prior to the formation of the chamber. For example, no additional fluids and/or reagents are dispensed to the substrate while the substrate is positioned within the chamber and during an unmasking operation.

In some embodiments, the chamber is communication with one or more independently operable heating and/or cooling elements which enable a substrate, a specimen, and/or one or more fluids and/or reagents disposed within the chamber to be selectively heated and/or cooled to a predetermined temperature. In some embodiments, the heating of the fluid (such as a fluid disposed on the substrate or within a separate reservoir within the chamber) enables the chamber to be heated and/or pressurized. For example, the heating of the fluid may enable an unmasking operation to be conducted within the sealed chamber and on a specimen disposed on a substrate. In some embodiments, heating and/or pressurization of the chamber is monitored with one or more temperature and/or pressure sensors disposed within the chamber or in communication with at least one of the sample or substrate. In some embodiments, heating is achieved with a conductive heating element positioned on or in the substrate stage, a conductive heating element in the body of one or both of the upper and lower plates, other types of heating devices in locations adjacent to the fluids and/or reagents being heated, using microwaves passed into the reaction compartment to heat the regents, and/or magnetic induction. In some embodiments, at least a portion of the specimen disposed on the substrate and/or at least a portion of the substrate itself is maintained at a temperature which is lower than any other component within the chamber during an unmasking operation. For example, a specimen disposed on the substrate or the substrate itself may be maintained as the "coldest" component within the chamber during an unmasking operation.

In some embodiments, the sealed chamber is heated to a predetermined temperature and/or pressurized to a predetermined pressure for a predetermined amount of time. For example, the sealed chamber may be heated at a temperature ranging from between about 115°C to about 155°C and at a pressure ranging from between about 150 kPa to about 1050 kPa for a time period ranging from between about 2 minutes to about 10 minutes. In some embodiments, the specimen and/or a portion of the substrate are maintained as the "coldest" components within the chamber throughout the entire heating and/or pressurization process.

In some embodiments, the unmasking operation comprises a temperature ramp-up phase, a temperature maintenance phase, and a temperature ramp-down phase. In some embodiments, a substrate disposed on a substrate or a portion of the substrate itself is maintained as the "coldest" component within the chamber during the temperature ramp-up phase, the temperature maintenance phase, and the temperature ramp-down phase. In some embodiments, the unmasking operation does not include a temperature ramp-down phase. For example, the sealed chamber may be opened while heated and/or pressurized. In some embodiments, some of the pressure is relieved through one or more valves in communication with the chamber prior to opening the heated and/or pressurized chamber.

In some embodiments, additional fluids and/or reagents are added to the specimen and/or the substrate during one or more of the temperature ramp-up phase, the temperature maintenance phase, and the temperature ramp-down phase. By way of example, between about 250µL to about 1000µL of one or more additional fluids and/or reagents are dispensed to the specimen or a portion of the substrate itself after the chamber is formed. In some embodiments, the one or more additional fluids and/or reagents dispensed into the sealed chamber have a temperature less than the temperature inside the heated and/or pressurized chamber. For example, the one or more additional fluids and/or reagents may have a temperature of at least 25°C less than the temperature of the specimen or the temperature inside the sealed chamber. In some embodiments, the entire sealed chamber is substantially filled with one or more liquids. For example, if the total chamber volume is about 2mL (not accounting for the volume of the substrate with the chamber), then about 2mL of additional fluids and/or reagents may be added while the chamber is sealed. In some embodiments, between about 250µL to about 1000µL of one or more additional fluids and/or reagents are dispensed to a reservoir within the chamber, such as a fluid reservoir which is heated. In alternate embodiments, the fluid reservoir is maintained as the coldest component with the chamber.

In some embodiments, the chamber is in communication with one or more ports which facilitate the delivery of one or more gases and/or steam into the chamber so as to pressurize the chamber and/or to heat a substrate, a specimen, and/or one or more fluids and/or reagents disposed within the chamber. In some embodiments, the lower plate may include one or more ports, e.g. vacuum ports, for removing excess liquids from within the chamber. In some embodiments, the vacuum ports in the lower plate may be activated after substantially filling the chamber with additional fluids and/or reagents.

Another aspect of the present disclosure is a system including (a) one or more independently operable specimen processing assemblies, wherein the one or more independently operable specimen processing assemblies includes (i) a lower plate, wherein the lower plate includes a lower engagement surface and one or more substrate stages raised relative to the lower engagement surface, and wherein the one or more raised substrate stages includes an upper surface adapted to hold a substrate horizontally; and (ii) an upper plate having an upper engagement surface complementary to the lower engagement surface, and wherein the upper plate further includes one or more cavities recessed relative to the upper engagement surface, wherein the one or more recessed cavities are adapted to receive at least a portion of the raised substrate stage; (b) one or more dispense devices; and (c) a control system communicatively coupled to at least the one or more independently operable specimen processing assemblies and/or the one or more dispense devices.

In some embodiments, at least one of the lower plate and the upper plate includes one or more independently operable heating and/or cooling elements. For example, the lower plate may include one, two or three independently operable heating and/or cooling elements; and the upper plate may include one heating and/or cooling element. In some embodiments, at least one heating and/or cooling element is embedded within a body of the lower plate; and at least one heating and/or cooling element is embedded within a body of the upper plate. In some embodiments, the control system is in communication with the one or more independently operable heating and/or cooling elements. In some embodiments, any of the heating and/or cooling elements within the upper plate may be operated in conjunction with those heating and/or cooling elements within the lower plate. By independently controlling the various heating and/or cooling elements present in the upper and lower plates, the temperature of the substrate stage, any portion of a substrate supported by the substrate stage, and/or the chamber may be controlled. For example, it is possible to independently operate the various heating and/or cooling elements present in the lower and/or upper plates such that at least a portion of the substrate, or the specimen disposed on the substrate, remains the coldest structure within the chamber. For example, the substrate or the specimen disposed on the substrate may be maintained at a temperature lower than the upper plate, the lower plate, ports, valves, and/or any other structure within the chamber formed from the upper and lower plates. In some embodiments, the heating and/or cooling elements are each independently operated so as to maintain a predetermined temperature gradient between different portions of the upper and lower plates and the substrate stage.

In some embodiments, the one or more independently operable heating and/or cooling elements are in thermal communication with the one or more substrate stages. In some embodiments, the independently operable heating and/or cooling elements are configured such that a specimen disposed on a substrate and positioned on the surface of the substrate stage has a temperature which is lower than any other component in thermal communication with the one or more independently operable heating and/or cooling elements.

In some embodiments, each dispense device of the one or more dispense devices includes one or more dispense nozzles, one or more pipettes, and/or or one or more dispense-on-demand devices. For example, the dispense devices may be commanded by the control system to dispense a total volume of one or more fluids and/or reagents ranging from between about 250µL to about 1000µL. In some embodiments, the system further includes one or more mixing devices and/or one or more liquid removal devices. In some embodiments, the one or more dispense devices are coupled to a dispense sub-assembly. In some embodiments, the system includes a plurality of specimen processing assemblies. In some embodiments, at least one of the plurality of specimen processing assemblies includes a chamber formed from an upper plate and a lower plate. In some embodiments, a substrate is horizontally disposed within the chamber.

Another aspect of the present disclosure is a system including: (a) a plurality of independently operable specimen processing assemblies, wherein each independently operable specimen processing assembly includes (i) a lower plate movably coupled to a lower rail, wherein the lower plate includes a lower engagement surface and one or more substrate stages raised relative to the lower engagement surface, and wherein the one or more raised substrate stages includes an upper surface adapted to hold a substrate horizontally as the lower plate traverses the lower rail; and (ii) an upper plate having an upper engagement surface complementary to the lower engagement surface, and wherein the upper plate further includes one or more cavities recessed relative to the upper engagement surface, wherein the one or more recessed cavities are adapted to receive at least a portion of the one or more raised substrate stages; and wherein the lower plate is configured such that the planar upper surface of the substrate stage remains horizontal while the lower plate traverses the lower rail; (b) one or more dispense devices; and (c) a control system in communication with the plurality of independently operable specimen processing assemblies and/or the one or more dispense devices.

In some embodiments, the control system is adapted to maintain an environment within a chamber formed from the complementary lower and upper plates, such as by controlling one or more heating elements, one or more cooling elements, and/or one or more gas and/or steam generation and delivery units in communication with the chamber. In some embodiments, the one or more heating and/or cooling elements are independently controlled such that the specimen disposed on the substrate and/or a portion of the substrate itself is maintained at a temperature which is less than any other component (e.g. ports, valves, sensors, probes, etc.) within the formed chamber. In some embodiments, the control system monitors the temperature and/or pressure within the chamber (e.g. using one or more temperature and/or pressure sensors within the chamber and/or in contact with the substrate) and increases and/or decreases the temperature and/or pressure such that a predetermined temperature and/or a predetermined pressure is maintained. For example, the temperature within the chamber may be monitored with a temperature sensor communicatively coupled to the control system. When the temperature within the chamber meets a predetermined threshold chamber temperature, the control system may command the one or more heating elements to either maintain a steady-state or turn off.

In some embodiments, the control system commands one or more force generating members to exert a predetermined external force onto at least one of an upper plate or a lower plate so as to maintain the upper and lower engagement surfaces of the upper and lower plates, respectively, in sealing engagement, especially when the pressure within any formed chamber is increased. In some embodiments, the control system commands any force generating member to apply a predetermined amount of force which is less than a force generated at a predetermined threshold pressure. In some embodiments, the control system may command one or more ports and/or valves to release pressure above a predetermined threshold pressure.

In some embodiments, the one or more substrate stages are configured such that any substrate supported by the one or more substrate stages are held in a horizontal position and remains in the horizontal position during the movement of the lower plate within the system, regardless of whether the movement is entirely horizontal or whether the movement includes a vertical component (or even a completely vertical movement).

In some embodiments, at least one of the specimen processing assemblies includes a sealed chamber. In some embodiments, the system further includes a substrate at least partially disposed within the sealed chamber, and wherein the substrate is supported by the one or more substrate stages and is oriented in a horizontal position. In some embodiments, a specimen disposed on the substrate is treated outside the chamber with one or more fluids and/or reagents while in a horizontal position and wherein an unmasking operation is performed within the chamber while the substrate is disposed in a horizontal position. In some embodiments, no additional fluids and/or reagents are dispensed to the substrate while the substrate is positioned within the chamber. In some embodiments, an unmasking operation is conducted using only the fluids and/or reagents dispensed to the substrate prior to the formation of the chamber. In some embodiments, a specimen disposed on the substrate or the substrate itself is maintained as the "coldest" component within the chamber during all phases on an unmasking operation. For example, the substrate and/or a portion of the substrate are maintained as the "coldest" component within the chamber during a temperature ramp-up phase, a temperature maintenance phase, and a temperature ramp-down phase of an unmasking operation.

In some embodiments, the lower rail of each of the plurality of independently operable specimen processing assemblies is positioned horizontally, for example each lower rail is arranged parallel to the ground. In some embodiments, the lower rail of each of the plurality of independently operable specimen processing assemblies includes a first end which is raised vertically relative to a second end, such that each lower rail deviates from horizontal, for example the rail is offset from the horizontal.

In some embodiments, the system further includes a motor adapted to move the lower plate from a first position along the lower rail to a second position along the lower rail. In some embodiments, the second position along the lower rail is beneath the upper plate, e.g. a predetermined position beneath a pre-positioned upper plate. In some embodiments, the second position along the first lower rail is in a preparation area and wherein the upper plate is moved (along any of the x, y, and z directions) to the pre-positioned lower plate.

In some embodiments, the dispense device is coupled to a dispense rail, wherein the dispense rail oriented perpendicular to the lower rail of each of the plurality of independently operable specimen processing assemblies (regardless of whether the lower rails are arranged horizontally or offset from the horizontal). In some embodiments, the upper plate is coupled to a force generating member. In some embodiments, the force generating member is selected from the group consisting of a lever, a screw, a motor, a spring, a pneumatic piston, a hydraulic piston, a cam mechanism, and any combination thereof. In some embodiments, the upper plate is fixed to a sub-assembly.

In some embodiments, the disclosed system includes at least two independently operable specimen processing assemblies. In some embodiments, one of the at least two independently operable specimen processing assemblies includes a chamber.

Another aspect of the present disclosure is a specimen processing assembling including (i) a lower plate including (a) a substrate stage having an upper surface adapted to support a substrate horizontally, (b) a lower engagement surface, wherein the lower engagement surface at least partially circumscribes the substrate stage, and (c) a first lower temperature regulation element in thermal communication with the substrate stage; and (ii) an upper plate including (a) an upper engagement surface complementary to the lower engagement surface, and (b) a cavity. In some embodiments, the first lower temperature regulation element is positioned beneath the substrate stage. In some embodiments, the lower plate further includes a second lower temperature regulation element and a third lower temperature regulation element. In some embodiments, each of the temperature regulation elements are independently operable. In some embodiments, the second and third lower temperature regulation elements are each positioned adjacent the first lower temperature regulation element. In some embodiments, the second and third lower temperature regulation elements are each positioned beneath a portion of the lower engagement surface. In some embodiments, the first, second, and third lower engagement elements are positioned in parallel to each other.

In some embodiments, a thermal gradient is maintained between the first and second lower temperature regulation elements and between the first and third temperature regulation elements. In some embodiments, the thermal gradient maintained between the first and second lower temperature regulation elements ranges from between 2°C to about 10°C; and wherein the thermal gradient maintained between the first and second lower temperature regulation elements ranges from between 2°C to about 10°C. In some embodiments, the thermal gradient maintained between the first and second lower temperature regulation elements ranges from between 2°C to about 5°C; and wherein the thermal gradient maintained between the first and second lower temperature regulation elements ranges from between 2°C to about 5°C. In some embodiments, wherein the first, second, and third lower temperature regulation elements are positioned to maintain a thermal gradient at least between portions of the lower engagement surface and the substrate stage.

In some embodiments, the first lower temperature regulation element has a first thermal output, the second lower temperature regulation element has a second thermal output, and the third lower temperature regulation element has a third thermal output, wherein the first thermal output is less than either of the second and third thermal outputs. In some embodiments, the upper plate further includes at least one upper thermal regulation element. In some embodiments, a thermal output of the first lower temperature regulation element is maintained at a temperature less than a thermal output of the at least one upper thermal regulation element.

In some embodiments, the specimen processing assembly further includes a substrate disposed on the surface of substrate stage. In some embodiments, the substrate is maintained at a temperature which is less than the temperature of the lower and upper engagement surfaces. In some embodiments, a specimen disposed on the substrate or a portion of the substrate is maintained at a temperature which is less than any other component within the chamber, for example the specimen disposed on the substrate or the portion of the substrate is the "coldest" component within the chamber during an unmasking operation.

In some embodiments, the first lower temperature regulation element includes at least one fluid channel. In some embodiments, the second and third lower temperature regulation elements each comprise heating cartridges. In some embodiments, at least one of the lower plate and the upper plate includes at least one seal body. In some embodiments, the at least one seal body is removable. In some embodiments, at least one of the upper plate or the lower plate is coupled to at least one of a motor, a piston, a spring, a screw mechanism, a lever, or a cam mechanism.

In some embodiments, the specimen processing assembly further includes a sub-assembly having first and second ends. In some embodiments, the lower plate is movable along a length of the sub-assembly between the first and second ends.

In some embodiments, the sub-assembly is arranged horizontally. In some embodiments, the lower plate and upper plate are both moved independently to predetermined positions such that the lower engagement surface of the lower plate at least partially contacts the complementary upper engagement surface of the upper plate. In some embodiments, the lower plate is moved to a predetermined position and then the upper plate is moved toward the lower plate. In some embodiments, the movement toward the lower plate is performed using one of a motor, a piston, or a cam mechanism.

In some embodiments, the sub-assembly is offset from the horizontal. In some embodiments, the upper plate is held stationary and wherein the lower plate is moved toward the upper plate until the lower engagement surface of the lower plate at least partially contacts the complementary upper engagement surface of the upper plate. In some embodiments, the upper plate and lower plate have complementary wedge-based shapes. In some embodiments, the lower plate and upper plate are both moved independently to predetermined positions such that the lower engagement surface of the lower plate at least partially contacts the complementary upper engagement surface of the upper plate. In some embodiments, the lower and upper plates are both independently movable.

Another aspect of the present disclosure is a method of unmasking a specimen disposed on a substrate including: (a) dispensing a predetermined volume of one or more fluids and/or reagents to at least a portion of the specimen; (b) sealing the specimen within a chamber, wherein the chamber is formed by contacting (i) a lower engagement surface of a lower plate, with (ii) an upper engagement surface of an upper plate, wherein the upper engagement surface is complementary to the lower engagement surface, and wherein the lower plate further includes a substrate stage for supporting the substrate, and (c) performing an unmasking operation on the specimen within the sealed chamber. In some embodiments, the lower plate includes one or more independently operable heating and/or cooling elements. In some embodiments, the upper plate includes one or more independently operable heating and/or cooling elements. In some embodiments, both the lower and upper plates include operable heating and/or cooling elements. In some embodiments, any of the heating and/or cooling elements within the upper plate may be operated in conjunction with those heating and/or cooling elements within the lower plate. By independently controlling the various heating and/or cooling elements present in the upper and lower plates, the temperature of the substrate stage, any portion of a substrate supported by the substrate stage, and/or the chamber may be controlled.

In some embodiments, the chamber is formed from a lower plate having a modular design. In some embodiments, a modular lower plate includes a body having a lower engagement surface. In some embodiments, the modular lower plate includes a thermal management module. In some embodiments, the body may rest on, engage with, or couple to the thermal management module. In some embodiments, the body includes a substrate stage that is part of and integral with body. In other embodiments, the body includes a lower engagement surface but does not include an integral substrate stage. Rather, the modular lower plate includes a body having a separable substrate stage. In this way, a separable substrate stage may be used as a carrier for a substrate. For example, a substrate may be disposed onto the separable substrate stage and together the substrate and the separable substrate stage pair may be picked up, transported to, and deposited onto a body. In some embodiments, a substrate and a separate substrate stage pair remain together throughout all or at least some of the processing steps, for example, through all or part of the steps used to prepare a sample for microscopic analysis, such as from baking through coverslipping or from baking through staining. In some embodiments, a user places a substrate bearing a sample onto the separate substrate stage and inputs the substrate/substrate stage pair into a system and following processing of the sample, retrieves the substrate/substrate stage from the system, and then removes the substrate with a processed sample thereon for analysis.

In some embodiments, the one or more fluids and/or reagents are selected from water and a buffer solution having a pH ranging from between about 5 to about 10. In some embodiments, the one or more fluids and/or reagents comprise a mixture of deionized water, tris(hydroxymethyl)methylamine, and a chelator. In some embodiments, the predetermined volume of the one or more fluids and/or reagents dispensed to the at least a portion of the specimen ranges from between about 200µL to about 1000µL. In some embodiments, the predetermined volume of the one or more fluids and/or reagents dispensed to the at least the portion on\f the specimen ranges from between about 250µL to about 500µL.

In some embodiments, the unmasking operation includes the step of heating the specimen disposed on the substrate to a first predetermined temperature for a predetermined duration of time. In some embodiments, the first predetermined temperature ranges from between about 125°C to about 155°C. In some embodiments, the first predetermined temperature ranges from between about 135°C to about 150°C. In some embodiments, the first predetermined temperature is about 140°C. In some embodiments, the predetermined duration of time ranges from between about 1 minute to about 10 minutes. In some embodiments, the predetermined duration of time ranges from between about 1 minute to about 7 minutes. In some embodiments, the predetermined duration of time ranges from between about 1 minute to about 5 minutes.

In some embodiments, a temperature of the substrate is less than a temperature of any other component within the chamber during the unmasking operation. In some embodiments, the temperature of the substrate is at least 10°C less than the temperature of the other components within the chamber. In some embodiments, the temperature of the substrate is at least 5°C less than the temperature of the other components within the chamber.

In some embodiments, less than about 5% of the predetermined volume of the one or more fluids and/or reagents dispensed to the specimen is lost to evaporation during the unmasking operation. In some embodiments, less than about 2% of the predetermined volume of the one or more fluids and/or reagents dispensed to the specimen is lost to evaporation during the unmasking operation. In some embodiments, substantially no further fluids and/or reagents are dispensed to the substrate after the chamber is sealed. In some embodiments, no further fluids and/or reagents are dispensed to the substrate after the chamber is sealed.

In some embodiments, the method further includes pre-pressurizing the sealed chamber. In some embodiments, the method further includes introducing steam into the sealed chamber.

In some embodiments, the lower plate further includes at least one heating element. In some embodiments, the lower plate further includes at least three heating elements, wherein a first of the at least three heating elements is positioned beneath the substrate stage, and wherein the second and third of the at least three heating elements are each positioned adjacent the first of the at least three heating elements. In some embodiments, a first thermal gradient is maintained between the first and second of the at least three heating elements during the performance of the unmasking operation, and wherein a second thermal gradient is maintained between the second and third of the at least three heating elements during the performance of the unmasking operation.

In some embodiments, a force generating member applies an external force to the sealed chamber. In some embodiments, the force generating member is selected from the group consisting a motor, a piston, a spring, a screw mechanism, a lever, a cam mechanism. In some embodiments, at least one of the lower and upper plates is in thermal communication with a thermal management module. In some embodiments, the unmasking operation includes a temperature ramp-up phase and a temperature maintenance phase. In some embodiments, the temperature ramp-up phase includes heating the specimen at a rate ranging from between about 1°C/s to about 4°C/s. In some embodiments, the temperature ramp-up phase includes heating the specimen at a rate ranging from between about 3°C/s to about 4°C/s.

In some embodiments, unmasking operation further includes a temperature ramp-down phase. In some embodiments, the temperature ramp-up phase is shorter than the temperature ramp-down phase. In some embodiments, the temperature ramp-down phase includes cooling the specimen at a rate ranging from between about 0.5°C/s to about 3°C/s.

In some embodiments, the unmasking operation is stopped by opening the chamber without a temperature ramp-down phase. In some embodiments, the unmasking operation is stopped by introducing a predetermined amount of a fluid into the chamber. In some embodiments, the predetermined amount of fluid introduced to stop the unmasking operation ranges from between about 0.5mL to about 5mL.

In some embodiments, the method further includes staining the specimen for the presence of one or more biomarkers after the completion of the unmasking operation.

Another aspect of the present disclosure is a method of unmasking a specimen disposed on a substrate including: (a) dispensing a predetermined volume of one or more fluids and/or reagents to at least a portion of the specimen; (b) sealing the specimen within a chamber, wherein the chamber includes (i) a lower plate having a substrate stage and a lower engagement surface, and (ii) an upper plate having an upper engagement surface complementary to the lower engagement surface, and wherein the substrate is supported by the substrate stage in a horizontal position; and (c) performing an unmasking operation within the sealed chamber. In some embodiments, the one or more fluids and/or reagents dispensed to the specimen are selected from the group consisting of water and a buffer solution. In some embodiments, the predetermined volume of the one or more fluids and/or reagents dispensed to the specimen ranges from between about 200µL to about 1000µL. In some embodiments, the predetermined volume of the one or more fluids and/or reagents dispensed to the specimen ranges from between about 250µL to about 500µL.

In some embodiments, the lower plate includes one or more independently operable heating and/or cooling elements. In some embodiments, the upper plate includes one or more independently operable heating and/or cooling elements. In some embodiments, both the lower and upper plates include independently operable heating and/or cooling element. In some embodiments, any of the heating and/or cooling elements within the upper plate may be operated in conjunction with those heating and/or cooling elements within the lower plate. By independently controlling the various heating and/or cooling elements present in the upper and lower plates, the temperature of the substrate stage, any portion of a substrate supported by the substrate stage, and/or the chamber may be controlled.

In some embodiments, the lower plate has a modular design. In some embodiments, a modular lower plate includes a body having a lower engagement surface. In some embodiments, the modular lower plate includes a thermal management module. In some embodiments, the body may rest on, engage with, or couple to the thermal management module. In some embodiments, the body includes a substrate stage that is part of and integral with body. In other embodiments, the body includes a lower engagement surface but does not include an integral substrate stage. Rather, the modular lower plate includes a body having a separable substrate stage. In this way, a separable substrate stage may be used as a carrier for a substrate. For example, a substrate may be disposed onto the separable substrate stage and together the substrate and the separable substrate stage pair may be picked up, transported to, and deposited onto a body. In some embodiments, a substrate and a separate substrate stage pair remain together throughout all or at least some of the processing steps, for example, through all or part of the steps used to prepare a sample for microscopic analysis, such as from baking through coverslipping or from baking through staining. In some embodiments, a user places a substrate bearing a sample onto the separate substrate stage and inputs the substrate/substrate stage pair into a system and following processing of the sample, retrieves the substrate/substrate stage from the system, and then removes the substrate with a processed sample thereon for analysis.

In some embodiments, the unmasking operation includes heating the specimen disposed on the substrate to a first predetermined temperature for a predetermined duration of time. In some embodiments, the first predetermined temperature ranges from between about 125°C to about 155°C. In some embodiments, the predetermined duration of time ranges from between about 1 minute to about 10 minutes. In some embodiments, a temperature of the substrate is less than a temperature of any other component within the chamber during the unmasking operation. In some embodiments, the temperature of the substrate is at least 5°C less than the temperature of the other components within the chamber. In some embodiments, less than about 5% of the predetermined volume of the one or more fluids and/or reagents dispensed to the specimen are lost to evaporation during the unmasking operation. In some embodiments, no further fluids and/or reagents are dispensed to the substrate after the chamber is sealed.

In some embodiments, the method further includes pre-pressurizing the sealed chamber prior to the performance of the unmasking operation. In some embodiments, the chamber is pre-pressurized simultaneously with the performance of the unmasking operation. In some embodiments, the method further includes introducing steam into the sealed chamber.

In some embodiments, the unmasking operation includes heating the specimen at a rate ranging from between about 1°C/s to about 4°C/s. In some embodiments, the unmasking operation includes heating the specimen at a rate ranging from between about 3°C/s to about 4°C/s. In some embodiments, the unmasking operation includes cooling the specimen at a rate ranging from between about 0.5°C/s to about 2.5°C/s.

In another aspect of the present disclosure is a method of unmasking a specimen disposed on a substrate including: (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation, wherein the unmasking operation includes a temperature ramp-up phase, a temperature maintenance phase, and a temperature ramp-down phase. In some embodiments, the temperature ramp-up phase includes heating the specimen at a rate ranging from between about 1°C/s to about 4°C/s. In some embodiments, temperature ramp-up phase includes heating the specimen at a rate ranging from between about 3°C/s to about 4°C/s. In some embodiments, the temperature ramp-up phase includes heating the specimen to a predetermined temperature of between about 110°C to about 150°C. In some embodiments, the temperature ramp-up phase includes heating the specimen to a predetermined temperature of between about 120°C to about 145°C.

In some embodiments, the specimen is maintained at the predetermined temperature for a predetermined time period ranging from between about 1 minute to about 10 minutes. In some embodiments, specimen is maintained at the predetermined temperature for a predetermined time period ranging from between about 2 minutes to about 7 minutes. In some embodiments, the specimen is maintained at the predetermined temperature for a predetermined time period ranging from between about 3 minutes to about 5 minutes.

In some embodiments, the temperature ramp-down phase includes cooling the specimen at a rate ranging from between about 0.5°C/s to about 3°C/s. In some embodiments, temperature ramp-down phase includes cooling the specimen at a rate ranging from between about 0.5°C/s to about 2°C/s.

In some embodiments, the one or more fluids and/or reagents are selected from the group consisting of water and a buffer solution. In some embodiments, the predetermined volume of the one or more fluids and/or reagents dispensed to the specimen ranges from between about 200µL to about 1000µL. In some embodiments, the predetermined volume of the one or more fluids and/or reagents dispensed to the specimen ranges from between about 250µL to about 500µL.

Another aspect of the present disclosure is an antigen retrieved specimen prepared by (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation within the sealed chamber.

Another aspect of the present disclosure is a target retrieved specimen prepared by (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation within the sealed chamber.

Another aspect of the present disclosure is a target retrieved specimen prepared by (a) dispensing a predetermined volume of one or more fluids and/or reagents to a portion of the specimen; (b) sealing the specimen within a chamber, where the chamber is formed by contacting a lower engagement surface of a lower plate with an upper engagement surface of an upper plate, wherein the upper engagement surface is complementary to the lower engagement surface, and wherein the lower plate further includes a substrate stage for supporting the substrate; and (c) performing an unmasking operation on the specimen within the sealed chamber. In some embodiments, the antigen retrieved specimen is a biopsy sample.

Another aspect of the present disclosure is an antigen retrieved specimen prepared by (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation, wherein the unmasking operation includes a temperature ramp-up phase, a temperature maintenance phase, and a temperature ramp-down phase. In some embodiments, the specimen is retained as the "coldest" component within the sealed chamber during performance of all phases of the unmasking operation, for example during a temperature ramp-up phase, during a temperature maintenance phase, and during a temperature ramp-down phase.

Another aspect of the present disclosure is a target retrieved specimen prepared by (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation, wherein the unmasking operation includes a temperature ramp-up phase, a temperature maintenance phase, and a temperature ramp-down phase. In some embodiments, the specimen is retained as the "coldest" component within the sealed chamber during performance of all phases of the unmasking operation, for example during a temperature ramp-up phase, during a temperature maintenance phase, and during a temperature ramp-down phase.

Another aspect of the present disclosure is an unmasked specimen disposed on a substrate, wherein the unmasked specimen is prepared according to a process including (a) dispensing a predetermined volume of one or more fluids and/or reagents to a portion of a specimen disposed on the substrate; (b) sealing the specimen within a chamber, where the chamber is formed by contacting a lower engagement surface of a lower plate with an upper engagement surface of an upper plate, wherein the upper engagement surface is complementary to the lower engagement surface, and wherein the lower plate further includes a substrate stage for supporting the substrate; and (c) performing an unmasking operation on the specimen within the sealed chamber. In some embodiments, the antigen retrieved specimen is a biopsy sample, and (c) performing an unmasking operation on the specimen. In some embodiments, the unmasked specimen includes one or more retrieved antigenic sites. In some embodiments, the unmasked specimen includes one or more retrieved nucleic acid targets. In some embodiments, no further fluids and/or reagents are dispensed to the substrate after the chamber is sealed.

In some embodiments, the lower plate includes one or more independently operable heating and/or cooling elements. In some embodiments, the upper plate includes one or more independently operable heating and/or cooling elements. In some embodiments, both the lower and upper plates include independently operable heating and/or cooling element. In some embodiments, any of the heating and/or cooling elements within the upper plate may be operated in conjunction with those heating and/or cooling elements within the lower plate. By independently controlling the various heating and/or cooling elements present in the upper and lower plates, the temperature of the substrate stage, any portion of a substrate supported by the substrate stage, and/or the chamber may be controlled.

In some embodiments, the lower plate has a modular design. In some embodiments, a modular lower plate includes a body having a lower engagement surface. In some embodiments, the modular lower plate includes a thermal management module. In some embodiments, the body may rest on, engage with, or couple to the thermal management module. In some embodiments, the body includes a substrate stage that is part of and integral with body. In other embodiments, the body includes a lower engagement surface but does not include an integral substrate stage. Rather, the modular lower plate includes a body having a separable substrate stage. In this way, a separable substrate stage may be used as a carrier for a substrate. For example, a substrate may be disposed onto the separable substrate stage and together the substrate and the separable substrate stage pair may be picked up, transported to, and deposited onto a body.

In some embodiments, a substrate and a separate substrate stage pair remain together throughout all or at least some of the processing steps, for example, through all or part of the steps used to prepare a sample for microscopic analysis, such as from baking through coverslipping or from baking through staining. In some embodiments, a user places a substrate bearing a sample onto the separate substrate stage and inputs the substrate/substrate stage pair into a system and following processing of the sample, retrieves the substrate/substrate stage from the system, and then removes the substrate with a processed sample thereon for analysis. In some embodiments, the one or more fluids and/or reagents are selected from the group consisting of water and a buffer solution having a pH ranging from between about 5 to about 10. In some embodiments, the one or more fluids and/or reagents comprise a mixture of deionized water, tris(hydroxymethyl)methylamine, and a chelator. In some embodiments, the predetermined volume of the one or more fluids and/or reagents dispensed to the specimen ranges from between about 200µL to about 1000µL. In some embodiments, the predetermined volume of the one or more fluids and/or reagents dispensed to the specimen ranges from between about 250µL to about 500µL.

In some embodiments, the unmasking operation includes heating the specimen disposed on the substrate to a first predetermined temperature for a predetermined duration of time. In some embodiments, the first predetermined temperature ranges from between about 125°C to about 155°C. In some embodiments, the first predetermined temperature ranges from between about 135°C to about 150°C. In some embodiments, the first predetermined temperature is about 140°C. In some embodiments, the predetermined duration of time ranges from between about 1 minute to about 10 minutes. In some embodiments, the predetermined duration of time ranges from between about 1 minute to about 5 minutes.

In some embodiments, a temperature of the substrate is less than a temperature of any other component within the chamber during the unmasking operation. In some embodiments, the temperature of the substrate is at least 5°C less than the temperature of the other components within the chamber. In some embodiments, less than about 5% of the predetermined volume of the one or more fluids and/or reagents dispensed to the specimen is lost to evaporation during the unmasking operation. In some embodiments, less than about 2% of the predetermined volume of the one or more fluids and/or reagents dispensed to the specimen is lost to evaporation during the unmasking operation.

In some embodiments, the sealed chamber is pre-pressurized. In some embodiments, steam is further introduced into the sealed chamber.

In some embodiments, the lower plate further includes at least one heating element. In some embodiments, the lower plate further includes at least three heating elements, wherein a first of the at least three heating elements is positioned beneath the substrate stage, and wherein the second and third of the at least three heating elements are positioned adjacent the first of the at least three heating elements. In some embodiments, a first thermal gradient is maintained between the first and second of the at least three heating elements during the performance of the unmasking operation, and wherein a second thermal gradient is maintained between the second and third of the at least three heating elements during the performance of the unmasking operation.

Another aspect of the present disclosure is an unmasked specimen, where the unmasked specimen is prepared in a process where a specimen disposed on a substrate is retained as the coldest component within a sealed chamber during an unmasking operation, wherein unmasked specimen is prepared by: (a) dispensing a predetermined volume of one or more fluids and/or reagents to a portion of the specimen disposed on the substrate; (b) positioning the specimen bearing substrate including the dispensed one or more fluids and/or reagents onto a substrate stage within a chamber formed from an upper plate and a lower plate, wherein the lower plate includes the substrate stage and a lower engagement surface, and wherein the upper plate includes an upper engagement surface complementary to the lower engagement surface; (c) sealing the chamber; and (d) performing an unmasking operation on the specimen. In some embodiments, the unmasked specimen includes one or more retrieved antigenic sites. In some embodiments, the unmasked specimen includes one or more retrieved nucleic acid targets. In some embodiments, no further fluids and/or reagents are dispensed to the substrate after the chamber is sealed.

Another aspect of the present disclosure is directed to a system including_(i) at least one chamber, wherein the at least one chamber comprises an upper plate and a lower plate, wherein the lower plate includes a lower engagement surface and one or more substrate stages adapted to hold a substrate horizontally within the at least one chamber, and wherein the upper plate includes an upper engagement surface which is complementary to the lower engagement surface and a cavity recessed relative to the upper engagement surface; and wherein at least one of the upper plate and the lower plate includes at least one of a heating element or a cooling element; and (ii) a staining module. In some embodiments, the at least one chamber is an unmasking chamber.

In some embodiments, the at least one unmasking chamber has a predetermined internal volume. In some embodiments, the predetermined internal volume ranges from between about 14cm³ to about 25cm³. In some embodiments, the predetermined internal volume ranges from between about 16cm³ to about 22cm³. In some embodiments, the predetermined internal volume ranges from between about 18cm³ to about 20cm³. In some embodiments, the one or more substrate stages are raised relative to the lower engagement surface. In some embodiments, the upper plate includes at least one steam injection port. In some embodiments, the at least one steam injection port is in fluidic communication with a steam reservoir or a steam generating element. In some embodiments, the at least one chamber is configured to rapidly heat and/or pressurize the predetermined interior volume. In some embodiments, the lower and/or upper plates may be separated from each other after the steam heating and/or pressurization.

In some embodiments, at least one of the lower and/or upper plates further comprises one or more alignment members. In some embodiments, at least one of the lower and/or upper plates further comprises one or more temperature and/or pressure sensors. In some embodiments, at least one of the lower and/or upper plates further comprises one or more temperature sensors which contact the horizontally held substrate or a fluid disposed thereon. In some embodiments, the one or more temperature sensors directly contact the horizontally held substrate or a fluid disposed thereon.

In some embodiments, a body of the lower plate and a body of the upper plate both have complementary wedge-based shapes. In some embodiments, at least one of the lower plate and the upper plate includes at least one seal body. In some embodiments, the at least one seal body is removable. In some embodiments, the lower plate comprises a groove and wherein the at least one removable seal body at least partially engages the groove. In some embodiments, the at least one removable seal body is integrated within a removable seal attachment, wherein the removable seal attachment engages a portion of a periphery of the lower plate or the upper plate.

In some embodiments, at least one of the upper plate or the lower plate is coupled to at least one of a motor, a piston, a spring, a screw mechanism, a lever, or a cam mechanism. In some embodiments, the upper and lower plates are independently movable.

In some embodiments, the system further includes a control system. In some embodiments, the control system is adapted to operate the at least one heating or cooling element to uniformly heat and/or cool the one or more substrate stages. In some embodiments, the control system is adapted to operate the at least one heating or cooling element to maintain the one or more substrate stages as the coolest component within the chamber.

In some embodiments, the system includes at least one substrate transfer device. In some embodiments, the at least one substrate transfer device is selected from the group consisting of a gripper device, a forklift device, and carrier transport. In some embodiments, the system further includes one or more substrate loading stations.

In some embodiments, the lower plate is modular. In some embodiments, the modular lower plate is transportable to the upper plate. In some embodiments, the upper plate is coupled to a force generating member. In some embodiments, the force generating member is configured to give way if a pressure within the chamber exceeds a predetermined threshold.

Another aspect of the present disclosure is a system including (i) at least one unmasking chamber having a predetermined interior volume, wherein the at least one unmasking chamber comprises an upper plate and a lower plate, wherein the lower plate includes a lower engagement surface and one or more substrate stages adapted to hold a substrate horizontally within the at least one unmasking chamber, and wherein the upper plate includes an upper engagement surface which is complementary to the lower engagement surface and a cavity recessed relative to the upper engagement surface; and wherein the upper plate comprises one or more steam injection ports for introducing steam within the at least one unmasking chamber; (ii) a staining module; and (iii) a steam reservoir. In some embodiments, a predetermined internal volume of the at least one unmasking chamber ranges from between about 14cm³ to about 25cm³. In some embodiments, the upper and lower plates may be removably coupled together (e.g. clamped together) such that upon reaching a predetermining internal pressure and/or temperature, the coupling may be disengaged, and the upper and lower plates may rapidly separate from each other. In some embodiments, at least one of the lower and/or upper plate is in thermal communication with at least one heating and/or cooling element. In some embodiments, the at least one heating and/or cooling element may be operated in conjunction with the one or more steam injection ports.

In some embodiments, the upper plate is coupled to a force generating member. In some embodiments, the force generating member is configured to give way if a pressure within the chamber exceeds a predetermined threshold. In some embodiments, the force generating member is selected from the group consisting of a motor, a spring, a screw, a level, a piston, a cam, or any combination thereof.

In some embodiments, at least one of the lower and/or upper plates further comprises one or more alignment members.

In some embodiments, at least one of the lower and/or upper plates further comprise one or more temperature and/or pressure sensors. In some embodiments, at least one of the lower plate and the upper plate further comprises at least one seal body. In some embodiments, the at least one seal body is removable. In some embodiments, the lower plate comprises a groove and wherein the at least one removable seal body at least partially engages the groove.

Another aspect of the present disclosure is a system comprising: (i) at least one specimen processing assembly comprising: (1) a lower plate comprising a body, the body comprising (a) a substrate stage having an upper surface adapted to support a substrate horizontally, (b) a lower engagement surface, and (c) a first lower temperature regulation element in thermal communication with the substrate stage; and (2) an upper plate comprising an upper engagement surface complementary to the lower engagement surface; and (ii) a staining module.

In some embodiments, the first lower temperature regulation element is positioned beneath the substrate stage. In some embodiments, the lower plate further comprises a second lower temperature regulation element and a third lower temperature regulation element, wherein the second and third lower temperature regulation elements are each positioned adjacent the first lower temperature regulation element. In some embodiments, the first lower temperature regulation element has a first thermal output, the second lower temperature regulation element has a second thermal output, and the third lower temperature regulation element has a third thermal output, wherein the first thermal output is less than either of the second and third thermal outputs.

In some embodiments, a thermal gradient is maintained between the first and second lower temperature regulation elements and between the first and third temperature regulation elements. In some embodiments, the thermal gradient maintained between the first and second lower temperature regulation elements ranges from between 2°C to about 10°C; and wherein the thermal gradient maintained between the first and second lower temperature regulation elements ranges from between 2°C to about 10°C.

In some embodiments, the lower plate is modular. In some embodiments, the modular lower plate is transportable to an upper plate. In some embodiments, the upper plate includes an upper engagement surface which is complementary to the lower engagement surface and a cavity recessed relative to the upper engagement surface. In some embodiments, the upper plate is coupled to a force generating member. In some embodiments, the force generating member is configured to give way if a pressure within the chamber exceeds a predetermined threshold.

In some embodiments, at least one of the upper plate or the lower plate is coupled to at least one of a motor, a piston, a spring, a screw mechanism, a lever, or a cam mechanism.

In some embodiments, the system further comprises at least one substrate transfer device. In some embodiments, the at least one substrate transfer device is selected from the group consisting of a gripper device, a forklift device, and carrier transport. In some embodiments, the system further comprises one or more substrate loading stations.

### BRIEF DESCRIPTION OF THE FIGURES

For a general understanding of the features of the disclosure, reference is made to the drawings. In the drawings, like reference numerals have been used throughout to identify identical elements.
FIG. 1A illustrates a top down view of a lower plate in accordance with one embodiment of the present disclosure.
FIG. 1B illustrates a side view of a lower plate in accordance with one embodiment of the present disclosure.
FIG. 1C illustrates a side view (longitudinal side) of a lower plate in accordance with one embodiment of the present disclosure.
FIG. 1D illustrates a top down view of a lower plate including a vacuum port in accordance with one embodiment of the present disclosure.
FIG. 1E illustrates a top down view of a lower plate including a vacuum port in accordance with one embodiment of the present disclosure.
FIG. 1F illustrates a perspective view of a lower plate including a vacuum port in accordance with one embodiment of the present disclosure.
FIG. 1G illustrates a top down view of a lower plate including a vacuum port in accordance with one embodiment of the present disclosure.
FIG. 1H illustrates a top down view of a lower plate including a vacuum port in accordance with one embodiment of the present disclosure.
FIG. 2A illustrates a top down view of a lower plate in accordance with one embodiment of the present disclosure.
FIG. 2B illustrates a side view of a first end of a lower plate in accordance with one embodiment of the present disclosure.
FIG. 2C illustrates a side view of a second end lower plate in accordance with one embodiment of the present disclosure.
FIG. 2D illustrates a side view (longitudinal side) of a lower plate in accordance with one embodiment of the present disclosure.
FIG. 3A illustrates a top down view of a lower plate in accordance with one embodiment of the present disclosure.
FIG. 3B illustrates a side view (longitudinal side) of a lower plate in accordance with one embodiment of the present disclosure.
FIG. 4A illustrates a top down view of a lower plate in accordance with one embodiment of the present disclosure.
FIG. 4B illustrates a side view of a first end of a lower plate in accordance with one embodiment of the present disclosure.
FIG. 4C illustrates a side view of a second end lower plate in accordance with one embodiment of the present disclosure.
FIG. 4D illustrates a side view (longitudinal side) of a lower plate in accordance with one embodiment of the present disclosure.
FIG. 5A illustrates a seal attachment removably coupled to a lower plate in accordance with one embodiment of the present disclosure.
FIG. 5B illustrates a seal attachment positioned above a lower plate in accordance with one embodiment of the present disclosure.
FIG. 6A illustrates a lower plate having a wedge-based shape in accordance with one embodiment of the present disclosure.
FIG. 6B illustrates a lower plate having a wedge-based shape and illustrates an upper plate having a wedge-based shaped, wherein the upper and lower plates are in contact with one another in accordance with one embodiment of the present disclosure.
FIG. 6C illustrates a side view of a first end of a lower plate having a wedge-based shaped in accordance with one embodiment of the present disclosure.
FIG. 6D illustrates a side view of a second end of a lower plate having a wedge-based shaped in accordance with one embodiment of the present disclosure.
FIG. 6E illustrates a side view of a lower plate having a wedge-based shaped in accordance with one embodiment of the present disclosure.
FIG. 6F illustrates a side view of a lower plate having a wedge-based shaped in accordance with one embodiment of the present disclosure.
FIG. 7A illustrates a lower plate coupled to a housing member in accordance with one embodiment of the present disclosure.
FIG. 7B illustrates a lower plate coupled to a housing member in accordance with one embodiment of the present disclosure.
FIG. 7C illustrates a lower plate coupled to a housing member in accordance with one embodiment of the present disclosure.
FIG. 7D illustrates a lower plate coupled to a housing member in accordance with one embodiment of the present disclosure.
FIG. 8A illustrates a lower plate coupled to a heat sink in accordance with one embodiment of the present disclosure.
FIG. 8B illustrates a lower plate coupled to a heat sink in accordance with one embodiment of the present disclosure.
FIG. 9A illustrates a top down view of an upper plate in accordance with one embodiment of the present disclosure.
FIG. 9B illustrates a top down view of an upper plate in accordance with one embodiment of the present disclosure.
FIG. 9C illustrates a side view of a first end of an upper plate in accordance with one embodiment of the present disclosure.
FIG. 9D illustrates a side view of a first end of an upper plate in accordance with one embodiment of the present disclosure.
FIG. 9E illustrates a side view of a first end of an upper plate in accordance with one embodiment of the present disclosure.
FIG. 9F illustrates a side view of a first end of an upper plate in accordance with one embodiment of the present disclosure.
FIG. 9G illustrates an upper plate including a heating element in accordance with one embodiment of the present disclosure.
FIG. 9H illustrates an upper plate including a heating element in accordance with one embodiment of the present disclosure.
FIG. 10A illustrates a lower plate and an upper plate in contact with each other in accordance with one embodiment of the present disclosure.
FIG. 10B illustrates a lower plate and an upper plate in contact with each other in accordance with one embodiment of the present disclosure.
FIG. 10C illustrates a lower plate and an upper plate in contact with each other in accordance with one embodiment of the present disclosure.
FIG. 10D illustrates a lower plate and an upper plate in contact with each other in accordance with one embodiment of the present disclosure.
FIG. 10E illustrates a lower plate and an upper plate in contact with each other in accordance with one embodiment of the present disclosure.
FIG. 10F illustrates a lower plate and an upper plate in contact with each other in accordance with one embodiment of the present disclosure.
FIG. 11A illustrates a lower plate having an integrated heat sink and an upper plate positioned above the lower plate in accordance with one embodiment of the present disclosure.
FIG. 11B illustrates a lower plate having an integrated heat sink and an upper plate in contact with the lower plate in accordance with one embodiment of the present disclosure.
FIG. 12A illustrates a top down view of a lower plate movably coupled to a rail in accordance with one embodiment of the present disclosure.
FIG. 12B illustrates a side view of a lower plate movably coupled to a rail where the rail is horizontally offset by a predetermined amount in accordance with one embodiment of the present disclosure.
FIG. 13A illustrates the relative positions in which a lower plate may be moved in accordance with one embodiment of the present disclosure.
FIG. 13B illustrates the relative positions in which a lower plate may be moved in accordance with one embodiment of the present disclosure.
FIG. 14A illustrates the progression of a lower plate from a first area, to a second area, and to a third area during processing in accordance with one embodiment of the present disclosure.
FIG. 14B illustrates a cam mechanism, in communication with an upper plate, and wherein the cam mechanism exerts a pressure onto the upper plate (or a structure disposed therebetween) to exert or to maintain a sealing engagement between the upper and lower plates in accordance with embodiment of the present disclosure.
FIG. 14C illustrates a cam mechanism, in communication with an upper plate, and wherein the cam mechanism is adapted to exert a force onto the upper plate (or a structure disposed therebetween) to exert or to maintain a sealing engagement between the upper and lower plates in accordance with embodiment of the present disclosure.
FIG. 14D illustrates a side view of an assembly including a force generating member in accordance with one embodiment of the present disclosure.
FIG. 14E illustrates a piston, in communication with an upper plate, and wherein the piston is adapted to exert a pressure onto the upper plate (or a structure disposed therebetween) to exert or to maintain a sealing engagement between the upper and lower plates in accordance with embodiment of the present disclosure.
FIG. 14F illustrates a cam mechanism, in communication with an upper plate, and wherein the cam mechanism is adapted to exert a force onto the upper plate (or a structure disposed therebetween) to exert or to maintain a sealing engagement between the upper and lower plates in accordance with embodiment of the present disclosure.
FIG. 14G illustrates a piston, in communication with an upper plate, and wherein the piston is adapted to exert a pressure onto the upper plate (or a structure disposed therebetween) to exert or to maintain a sealing engagement between the upper and lower plates in accordance with embodiment of the present disclosure.
FIG. 14H illustrates a cam mechanism, in communication with an upper plate, and wherein the cam mechanism is adapted to exert a force onto the upper plate (or a structure disposed therebetween) to exert or to maintain a sealing engagement between the upper and lower plates in accordance with embodiment of the present disclosure.
FIG. 14I illustrates multiple cam mechanisms joined together through a single cam shaft in accordance with one embodiment of the present disclosure.
FIG. 14J illustrates a piston, in communication with an upper plate, and wherein the piston is adapted to exert a pressure onto the upper plate (or a structure disposed therebetween) to exert or to maintain a sealing engagement between the upper and lower plates in accordance with embodiment of the present disclosure.
FIG. 14K illustrates a cam mechanism, in communication with an upper plate, and wherein the cam mechanism is adapted to exert a force onto the upper plate (or a structure disposed therebetween) to exert or to maintain a sealing engagement between the upper and lower plates in accordance with embodiment of the present disclosure.
FIG. 14L illustrates a piston, in communication with an upper plate, and wherein the piston is adapted to exert a pressure onto the upper plate (or a structure disposed therebetween) to exert or to maintain a sealing engagement between the upper and lower plates in accordance with embodiment of the present disclosure.
FIG. 14M illustrates a cam mechanism, in communication with an upper plate, and wherein the cam mechanism is adapted to exert a force onto the upper plate (or a structure disposed therebetween) to exert or to maintain a sealing engagement between the upper and lower plates in accordance with embodiment of the present disclosure.
FIG. 15A provides a top view of an assembly including a vessel in which an unmasking operation may be performed in accordance with one embodiment.
FIG. 15B provides a side view of an assembly including a vessel and a hinged upper plate in accordance with one embodiment of the present disclosure.
FIG. 15C provides a perspective view of an assembly including a vessel in which an unmasking operation may be performed in accordance with one embodiment.
FIG. 15D provides a perspective view of an assembly including a vessel in which an unmasking operation may be performed in accordance with one embodiment.
FIG. 15E provides a perspective view of an assembly including a vessel in which an unmasking operation may be performed in accordance with one embodiment.
FIG. 16A illustrates the progression of a lower plate from a first area, to a second area, and to a third area during processing in accordance with one embodiment of the present disclosure.
FIG. 16B illustrates the progression of a lower plate having a wedge-based shape from a first area, to a second area, and to a third area during processing in accordance with one embodiment of the present disclosure.
FIG. 16C illustrates the progression of a lower plate having a wedge-based shape from a first area, to a second area, and to a third area during processing in accordance with one embodiment of the present disclosure.
FIG. 16D illustrates lower and upper plates having wedge-based shapes and where the upper and lower plates may be independently moved toward each other in accordance with one embodiment of the present disclosure.
FIG. 17A illustrates a system having a variety of interoperable modules in accordance with one embodiment of the present disclosure.
FIG. 17B illustrates a system having four discrete assemblies in accordance with one embodiment of the present disclosure.
FIG. 17C illustrates a system having a plurality of discrete assemblies in accordance with one embodiment of the present disclosure.
FIG. 18A illustrates an assembly in accordance with one embodiment of the present disclosure.
FIG. 18B illustrates an assembly in accordance with one embodiment of the present disclosure.
FIG. 18C illustrates an assembly in accordance with one embodiment of the present disclosure.
FIG. 19A illustrates a top view of an assembly including a carousel, one or more substrate loaders, and a lower plate in accordance with one embodiment of the present disclosure.
FIG. 19B illustrates a side view of the assembly of FIG. 19A including a carousel, one or more substrate loaders, and a lower plate in accordance with one embodiment of the present disclosure.
FIG. 19C illustrates a perspective view of the assembly of FIG. 19A including a carousel, one or more substrate loaders, and a lower plate in accordance with one embodiment of the present disclosure.
FIG. 20A illustrates a perspective view of a system including a plurality of carousels, substrate holders, substrate loaders, lower plates, and upper plates in accordance with one embodiment of the present disclosure.
FIG. 20B illustrates a top view of a system including a plurality of carousels, substrate holders, substrate loaders, lower plates, and upper plates in accordance with one embodiment of the present disclosure.
FIG. 21A illustrates the arrangement of heating and/or cooling elements in relation to an upper plate and a lower plate in accordance with one embodiment of the present disclosure.
FIG. 21B illustrates the arrangement of heating and/or cooling elements in relation to an upper plate and a lower plate in accordance with one embodiment of the present disclosure.
FIG. 21C illustrates the arrangement of heating and/or cooling elements in relation to an upper plate and a lower plate in accordance with one embodiment of the present disclosure.
FIG. 21D illustrates the arrangement of heating and/or cooling elements in relation to an upper plate and a lower plate in accordance with one embodiment of the present disclosure.
FIG. 22A illustrates a lower plate configured with two substrate stages in accordance with one embodiment of the present disclosure, where the lower plate is complementary to the upper plate of FIG. 22B.
FIG. 22B illustrates an upper plate configured with two recessed cavities in accordance with one embodiment of the present disclosure, wherein the upper plate is complementary to the lower plate of FIG. 22A.
FIG. 23A illustrates upper and lower plates in proximity to one another, wherein the upper plate includes a deformable sealing element and where the lower plate includes a tab in accordance with one embodiment of the present disclosure.
FIG. 23B illustrates upper and lower plates in engagement with one another, wherein the upper plate includes a deformable sealing element and where the lower plate includes a tab in accordance with one embodiment of the present disclosure.
FIG. 24A illustrates a side cross-sectional view of body of a lower plate including one or more heating and/or cooling elements in accordance with one embodiment of the present disclosure.
FIG. 24B illustrates a side cross-sectional view of body of a lower plate including one or more heating and/or cooling elements in accordance with one embodiment of the present disclosure.
FIG. 24C illustrates a side cross-sectional view of body (longitudinal side of the body) of a lower plate including one or more heating and/or cooling elements in accordance with one embodiment of the present disclosure.
FIG. 24D illustrates a side cross-sectional view of body of a lower plate including one or more heating and/or cooling elements in accordance with one embodiment of the present disclosure.
FIG. 25A illustrates a side cross-sectional view of body of a lower plate including one or more heating and/or cooling elements (e.g. bores into which one or more heating modules, e.g. heating cartridges, may be inserted) in accordance with one embodiment of the present disclosure.
FIG. 25B illustrates a side cross-sectional view of body of a lower plate including one or more heating and/or cooling elements (e.g. one or more fluid channels serving as conduits for a fluid which may be heated and/or cooled, such as heated and/or cooled to a predetermined temperature or heated and/or cooled on-demand according to commands from a control unit) in accordance with one embodiment of the present disclosure.
FIG. 25C illustrates a side cross-sectional view of body of a lower plate including one or more heating and/or cooling elements (e.g. bores for the insertion of one or more heating modules; fluid channels) in accordance with one embodiment of the present disclosure.
FIG. 25D illustrates a side cross-sectional view of body of a lower plate including one or more heating and/or cooling elements (e.g. a plurality of fluid channels) in accordance with one embodiment of the present disclosure.
FIG. 25E illustrates a side cross-sectional view of body of a lower plate including one or more heating and/or cooling elements (e.g. a thermoelectric module) in accordance with one embodiment of the present disclosure.
FIG. 25F illustrates a top down cut-away view of body of a lower plate including one or more heating and/or cooling elements (e.g. bores for the insertion of one or more heating modules; fluid channels) in accordance with one embodiment of the present disclosure.
FIG. 25G illustrates a top down cut-away view of body of a lower plate including one or more heating and/or cooling elements (e.g. a network of fluid channels) in accordance with one embodiment of the present disclosure.
FIG. 25H illustrates a top down cut-away view of body of a lower plate including one or more heating and/or cooling elements (e.g. two separate networks of fluid channels) in accordance with one embodiment of the present disclosure.
FIGS. 25I and 25J illustrate fluid flow through fluid channels in a lower plate in accordance with one embodiment of the present disclosure.
FIG. 26A illustrates a side cross-sectional view of a body in communication with a thermal management module, wherein the thermal management module includes one or more heating and/or cooling elements in accordance with one embodiment of the present disclosure.
FIG. 26B illustrates a side cross-sectional view of a body in communication with a thermal management module, wherein the body and the thermal management module both include one or more heating and/or cooling elements in accordance with one embodiment of the present disclosure.
FIG. 26C illustrates a side cross-sectional view of a body in communication with a thermal management module, wherein the thermal management module includes one or more heating and/or cooling elements in accordance with one embodiment of the present disclosure.
FIG. 26D illustrates a side cross-sectional view of a body in communication with a thermal management module, wherein the body and the thermal management module both include one or more heating and/or cooling elements in accordance with one embodiment of the present disclosure.
FIG. 26E illustrates a side cross-sectional view of a body in communication with a thermal management module, wherein the body and the thermal management module both include one or more heating and/or cooling elements in accordance with one embodiment of the present disclosure.
FIG. 26F illustrates a specimen processing apparatus including a substrate supported by body, the body being in thermal communication with a thermal management module in accordance with one embodiment of the present disclosure.
FIG. 26G illustrates a specimen processing apparatus including a substrate supported by body, the body being in thermal communication with a thermal management module in accordance with one embodiment of the present disclosure.
FIG. 27A illustrates a body set within a carrier in accordance with one embodiment of the present disclosure.
FIG. 27B illustrates a perspective view of a body inserted or embedded within a carrier in accordance with one embodiment of the present disclosure.
FIG. 27C illustrates a perspective view of a body inserted or embedded within a carrier in accordance with one embodiment of the present disclosure.
FIG. 27D illustrates top view of a body inserted or embedded within a carrier in accordance with one embodiment of the present disclosure.
FIG. 27E illustrates a side cut-away view of a body inserted or embedded within a carrier in accordance with one embodiment of the present disclosure.
FIG. 27F illustrates a perspective view of a body inserted or embedded within a carrier, where the carrier is in communication with a pickup member in accordance with one embodiment of the present disclosure.
FIG. 27G illustrates a perspective view of a body inserted or embedded within a carrier, where the carrier is in communication with a pickup member, and where the body and carrier are in thermal communication with a thermal management module in accordance with one embodiment of the present disclosure.
FIG. 27H illustrates a perspective view of a body inserted or embedded within a carrier, where the carrier is in communication with a pickup member, and where the body and carrier are positioned over a thermal management module in accordance with one embodiment of the present disclosure.
FIG. 27I illustrates a forklift device moving a carrier including a body to a thermal management module in accordance with one embodiment of the present disclosure.
FIG. 28A illustrates a top down view of a body of a lower plate in accordance with one embodiment of the present disclosure.
FIG. 28B illustrates a top down view of a body of a lower plate in accordance with one embodiment of the present disclosure.
FIG. 28C illustrates a perspective view of a body of a lower plate including a vacuum port and/or one or more indentations in accordance with one embodiment of the present disclosure.
FIG. 28D illustrates a body of a lower plate including one or more indentations in accordance with one embodiment of the present disclosure. The figure also depicts a gripper device positioned near a substrate.
FIG. 28E illustrates a body of a lower plate including one or more indentations in accordance with one embodiment of the present disclosure. The figure also depicts a gripper device positioned near a substrate.
FIG. 28F illustrates a body of a lower plate including one or more indentations in accordance with one embodiment of the present disclosure. The figure also depicts a gripper device positioned near a substrate.
FIG. 29A illustrates a side cross-sectional view of body of an upper plate including one or more heating and/or cooling elements in accordance with one embodiment of the present disclosure.
FIG. 29B illustrates a side cross-sectional view of body of an upper plate including one or more heating and/or cooling elements in accordance with one embodiment of the present disclosure.
FIG. 29C illustrates a side cross-sectional view of body of an upper plate including one or more heating and/or cooling elements (e.g. fluid channels) in accordance with one embodiment of the present disclosure.
FIG. 29D illustrates a side cross-sectional view of body of an upper plate including one or more heating and/or cooling elements (e.g. bore for the insertion of one or more heating modules; fluid channels) in accordance with one embodiment of the present disclosure.
FIG. 29E illustrates a side cross-sectional view of body of an upper plate including one or more heating and/or cooling elements (e.g. bore for the insertion of one or more heating modules) in accordance with one embodiment of the present disclosure.
FIG. 29F illustrates a top down cut-away view of body of an upper plate including one or more heating and/or cooling elements (e.g. bores for the insertion of one or more heating modules; fluid channels) in accordance with one embodiment of the present disclosure.
FIG. 29G illustrates a top down cut-away view of body of an upper plate including one or more heating and/or cooling elements (e.g. a network of fluid channels) in accordance with one embodiment of the present disclosure.
FIG. 30A illustrates a side cross-sectional view of a lower plate and an upper plate in communication with one another and where a chamber is formed therebetween. The figure also illustrates that the upper and/or lower plates include one or more heating and/or cooling elements in accordance with one embodiment of the present disclosure.
FIG. 30B illustrates a side cross-sectional view of a lower plate and an upper plate in communication with one another and where a chamber is formed therebetween. The figure also illustrates that the upper and/or lower plates include one or more heating and/or cooling elements (fluid channels; bore for the insertion of one or more heating modules) in accordance with one embodiment of the present disclosure.
FIG. 30C illustrates a side cross-sectional view of a lower plate and an upper plate in communication with one another and where a chamber is formed therebetween. The figure also illustrates that the upper and/or lower plates include one or more heating and/or cooling elements (fluid channels) in accordance with one embodiment of the present disclosure.
FIG. 30D illustrates a side cross-sectional view of a lower plate and an upper plate in communication with one another and where a chamber is formed therebetween. The figure also illustrates that the upper and/or lower plates include one or more heating and/or cooling elements (fluid channels; thermoelectric modules) in accordance with one embodiment of the present disclosure.
FIGS. 30E and 30F each illustrate a fluid flow path between upper and lower plates, each of the upper and lower plates including one or more fluid channels.
FIG. 31A illustrates a specimen processing assembly including a lower plate movably coupled to a sub-assembly, wherein the lower plate includes a lower engagement surface and one or more substrate stages; an upper plate having an upper engagement surface complementary to the lower engagement surface; and a motorized vice in accordance with one embodiment of the present disclosure.
FIG. 31B illustrates a lower plate including a lower engagement surface and one or more substrate stages; a sub-assembly for transporting the lower plate; an upper plate having an upper engagement surface complementary to the lower engagement surface; and a jack screw mechanism in accordance with one embodiment of the present disclosure.
FIG. 31C illustrates a lower plate including a lower engagement surface and one or more substrate stages; a sub-assembly for transporting the lower plate; an upper plate having an upper engagement surface complementary to the lower engagement surface; and a scissor jack mechanism in accordance with one embodiment of the present disclosure.
FIG. 31D illustrates a lower plate including a lower engagement surface and one or more substrate stages; a sub-assembly for transporting the lower plate; an upper plate having an upper engagement surface complementary to the lower engagement surface; and a scissor jack mechanism in accordance with one embodiment of the present disclosure.
FIG. 31E illustrates a lower plate including a lower engagement surface and one or more substrate stages; a sub-assembly for transporting the lower plate; an upper plate having an upper engagement surface complementary to the lower engagement surface; and a scissor jack mechanism in accordance with one embodiment of the present disclosure.
FIG. 32A illustrates a body having one or more attachment members in accordance with one embodiment of the present disclosure.
FIG. 32B illustrates a body a roughened or patterned surface in accordance with one embodiment of the present disclosure.
FIG. 32C illustrates a body having a coating disposed thereon in accordance with one embodiment of the present disclosure.
FIG. 33A illustrates grippers arms of a gripper device in accordance with one embodiment of the present disclosure.
FIG. 33B illustrates grippers arms of a gripper device in accordance with one embodiment of the present disclosure.
FIG. 33C illustrates grippers arms of a gripper device in accordance with one embodiment of the present disclosure.
FIG. 33D illustrates grippers arms of a gripper device in accordance with one embodiment of the present disclosure.
FIG. 33E illustrates a gripper device including a suction cup in accordance with one embodiment of the present disclosure.
FIGS. 34A illustrates the movement of a substrate with a gripper device to a specimen processing assembly, and the subsequent position of the substrate onto a body of a lower plate of the specimen processing assembly in accordance with one embodiment of the present disclosure.
FIG. 34B illustrates the placement of a substrate onto a body of a lower plate using a gripper device and gripper arms in accordance with one embodiment of the present disclosure.
FIG. 35A illustrates a forklift device in accordance with one embodiment of the present disclosure.
FIG. 35B illustrates a forklift device in accordance with one embodiment of the present disclosure.
FIG. 35C illustrates a forklift device in accordance with one embodiment of the present disclosure.
FIG. 35D illustrates a forklift device in accordance with one embodiment of the present disclosure.
FIG. 36A illustrates a forklift device including a cylinder which acts upon an upper surface of a substrate in accordance with one embodiment of the present disclosure.
FIG. 36B illustrates an alternative view of a forklift device including a cylinder which acts upon an upper surface of a substrate in accordance with one embodiment of the present disclosure.
FIG. 36C illustrates an alternative view of a forklift device including a cylinder which acts upon an upper surface of a substrate in accordance with one embodiment of the present disclosure.
FIG. 36D illustrates an alternative view of a forklift device including a cylinder which acts upon an upper surface of a substrate in accordance with one embodiment of the present disclosure.
FIG. 36E illustrates an alternative view of a forklift device including a cylinder which acts upon an upper surface of a substrate in accordance with one embodiment of the present disclosure.
FIG. 36F illustrates the pick-up of a substrate using the forklift device depicted in FIGS. 36A to 36E.
FIG. 37A illustrates a gripper device for picking up and moving a carrier in accordance with one embodiment of the present disclosure.
FIG. 37B illustrates a gripper device for picking up and moving a carrier in accordance with one embodiment of the present disclosure.
FIG. 37C illustrates a gripper device for picking up and moving a carrier in accordance with one embodiment of the present disclosure.
FIG. 38A illustrates a substrate loading station having a platform and raised sides in accordance with one embodiment of the present disclosure.
FIG. 38B illustrates a substrate loading station having a platform and raised sides in accordance with one embodiment of the present disclosure.
FIG. 38C illustrates a substrate loading station having a platform and one or more spring mechanisms in accordance with one embodiment of the present disclosure.
FIG. 38D illustrates a substrate loading station having a platform and one or more spring mechanisms in accordance with one embodiment of the present disclosure.
FIG. 38E illustrates a substrate loading station having a platform and one or more alignment grippers in accordance with one embodiment of the present disclosure.
FIG. 38F illustrates a substrate loading station having a platform and one or more alignment grippers in accordance with one embodiment of the present disclosure.
FIG. 38G illustrates a substrate loading station having a platform and one or more alignment grippers in accordance with one embodiment of the present disclosure.
FIG. 38H illustrates a substrate loading station having a platform and one or more rollers in accordance with one embodiment of the present disclosure.
FIG. 39A illustrates an upper plate and a lower plate in communication with one another, thereby forming a chamber in accordance with one embodiment of the present disclosure. The figure further illustrates four different thermal zones which may be independently regulated, such that at least a portion of the substrate or the substrate stage remains, comparatively, the coldest component within the formed chamber.
FIG. 39B illustrates an upper plate and a lower plate in communication with one another, thereby forming a chamber in accordance with one embodiment of the present disclosure. The figure further illustrates five different thermal zones which may be independently regulated, such that at least a portion of the substrate or the substrate stage remains, comparatively, the coldest component within the formed chamber.
FIG. 39C illustrates an upper plate and a lower plate in communication with one another, thereby forming a chamber in accordance with one embodiment of the present disclosure. The figure further illustrates six different thermal zones which may be independently regulated, such that at least a portion of the substrate or the substrate stage remains, comparatively, the coldest component within the formed chamber.
FIG. 40A illustrates a top-down view of a lower plate where different thermal zones A, B, B', C, and D are illustrated. In some embodiments, at least a portion of thermal zone A is in communication with a substrate, and wherein at least a portion of the substrate is maintained at a temperature which is less than the temperature in thermal zones B, B', C, and/or D.
FIG. 40B illustrates a side cut-away view of an upper plate in communication with a lower plate, thereby forming a chamber in accordance with one embodiment of the present disclosure. The figure further illustrates thermal zones A, B, C, D, E, and F which may be independently regulated, such that at least a portion of a substrate disposed within the formed chamber remains at temperature which is less than the temperature of at least thermal zones C, D, E, and F.
FIG. 40C illustrates a top-down view of an upper plate where different thermal zones E and F are illustrated. In some embodiments, at least a portion of thermal zone E is in communication with a substrate (such a substrate disposed within a chamber formed from the upper plate and a lower plate), and wherein at least a portion of the substrate is maintained at a temperature which is less than the temperature in thermal zones E and F.
FIGS. 41A, 41B, and 41C each illustrate a thermal analysis of an upper plate and/or a lower plate in communication with one or more independently controllable heating and/or cooling elements.
FIGS. 42A and 42B illustrate fluid channels in communication with a lower plate and other system components which enable the fluid within the fluid channels to be cooled to a pre-determined temperature.
FIGS. 43A - 43H provide flow charts illustrating methods of performing an unmasking operation using any of the specimen processing assemblies and/or systems of the present disclosure.
FIG. 44 sets forth an example of the times and temperatures used in a temperature ramp-up phase, a temperature maintenance phase, and a temperature ramp-down phase.
FIG. 45 provides an example of the temperatures generated using a specimen processing assembly in accordance with one embodiment of the present disclosure.
FIG. 46 provides a schematic illustrating one or more control systems communicatively coupled to one or more heating elements, one or more cooling elements, and one or more sensors.

### DETAILED DESCRIPTION

It should also be understood that, unless clearly indicated to the contrary, in any methods claimed herein that include more than one step or act, the order of the steps or acts of the method is not necessarily limited to the order in which the steps or acts of the method are recited.

### Definitions

As used herein, the singular terms "a," "an," and "the" include plural referents unless context clearly indicates otherwise. Similarly, the word "or" is intended to include "and" unless the context clearly indicates otherwise. The term "includes" is defined inclusively, such that "includes A or B" means including A, B, or A and B.

As used herein in the specification and in the claims, "or" should be understood to have the same meaning as "and/or" as defined above. For example, when separating items in a list, "or" or "and/or" shall be interpreted as being inclusive, for example, the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (for example "one or the other but not both") when preceded by terms of exclusivity, such as "either," "one of," "only one of" or "exactly one of." "Consisting essentially of," when used in the claims, shall have its ordinary meaning as used in the field of patent law.

The terms "comprising," "including," "having," and the like are used interchangeably and have the same meaning. Similarly, "s," "includes," "has," and the like are used interchangeably and have the same meaning. Specifically, each of the terms is defined consistent with the common United States patent law definition of "comprising" and is therefore interpreted to be an open term meaning "at least the following," and is also interpreted not to exclude additional features, limitations, aspects, etc. Thus, for example, "a device having components a, b, and c" means that the device includes at least components a, b and c. Similarly, the phrase: "a method involving steps a, b, and c" means that the method includes at least steps a, b, and c. Moreover, while the steps and processes may be outlined herein in a particular order, the skilled artisan will recognize that the ordering steps and processes may vary.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

As used herein, the term "antigen" refers to a substance to which an antibody, an antibody analog (e.g. an aptamer), or antibody fragment binds. Antigens may be endogenous whereby they are generated within the cell as a result of normal or abnormal cell metabolism, or because of viral or intracellular bacterial infections. Endogenous antigens include xenogenic (heterologous), autologous and idiotypic or allogenic (homologous) antigens. Antigens may also be tumor-specific antigens or presented by tumor cells. In this case, they are called tumor-specific antigens (TSAs) and, in general, result from a tumor-specific mutation. Antigens may also be tumor-associated antigens (TAAs), which are presented by tumor cells and normal cells. Antigen also includes CD antigens, which refers any of a number of cell-surface markers expressed by leukocytes and can be used to distinguish cell lineages or developmental stages. Such markers can be identified by specific monoclonal antibodies and are numbered by their cluster of differentiation.

As used herein, the term "fluid" refers to any liquid or liquid composition, including water, solvents, solutions (e.g. polar solvents, non-polar solvents), mixtures, colloids, suspensions, etc., used in a specimen processing operation that involves adding liquid or a composition including a liquid to a substrate, a specimen disposed on a substrate, etc. The fluid may be aqueous or nonaqueous. Non-limiting examples of fluids include solvents and/or solutions for deparaffinizing paraffin-embedded biological specimens, aqueous detergent solutions, washing solutions, rinsing solutions, acidic solutions, alkaline solutions, transfer solutions, and hydrocarbons (e.g., alkanes, isoalkanes and aromatic compounds such as xylene). Still further examples of fluids include solvents (and mixtures thereof) used to dehydrate or rehydrate biological specimens. In some embodiments, washing solutions include a surfactant to facilitate spreading of the washing liquids over the specimen-bearing surfaces of the slides. In some embodiments, acid solutions include deionized water, an acid (e.g., acetic acid), and a solvent. In some embodiments, alkaline solutions include deionized water, a base, and a solvent. In some embodiments, transfer solutions include one or more glycol ethers, such as one or more propylene-based glycol ethers (e.g., propylene glycol ethers, di(propylene glycol) ethers, and tri(propylene glycol) ethers, ethylene-based glycol ethers (e.g., ethylene glycol ethers, di(ethylene glycol) ethers, and tri(ethylene glycol) ethers), and functional analogs thereof. Additional wash solutions, transfer solutions, acid solutions, and alkaline solutions, as well as their methods of application, and instruments for applying them are described in United States Patent Application Publication No. 2016/0282374, the disclosure of which is hereby incorporated by reference herein in its entirety.

As used herein, the "horizontal" generally refers to an angle within about +/-2 degrees of horizontal, for example, within about +/-1 degree of horizontal such as within about +/-0.8 degrees of horizontal. Horizontal also refers to ranges of small angles from horizontal, for example, angles between about 0.1 degrees and 1.8 degrees from horizontal, such as angles between about 0.2 degrees and about 1.2 degrees, for example angles between about 0.3 degrees and about, 0.8 degrees. For example, a substrate that is positioned or held horizontal will have an orientation such that the large surfaces of the substrate are generally facing up and down, and which are substantially parallel to the ground. In particular embodiments, a rectangular substrate, such as a microscope slide, that is held horizontal will have an angle with respect to horizontal of between about 0.0 degrees and about 2.0 degrees along its short axis and an angle with respect to horizontal of between about 0.0 degrees and 2.0 degrees along its long axis, again with the large surfaces of the substrate generally facing up and down. Likewise, a sub-assembly (e.g. a rail) that is arranged or positioned horizontally is one that is substantially parallel to the ground or has an angle within about +/-2 degrees of horizontal.

As used herein, the term "plurality" refers to two or more, for example, 3 or more, 4 or more, 5 or more, etc.

As used herein, the terms "reagent" or "rare reagent" refer to solutions or suspensions including specific-binding entities, antibodies (primary antibodies, secondary antibodies, or antibody conjugates), nucleic acid probes (an isolated nucleic acid or an isolated synthetic oligonucleotide, attached to a detectable label or reporter molecule), unmasking agents (defined herein), detection probes, and solutions or suspensions of dye or stain molecules (e.g., H&E staining solutions, Pap staining solutions, etc.). The term "detection probes" refers to nucleic acid probes or antibodies which bind to specific targets (e.g. nucleic acid sequences, proteins, etc.). The detection probes may include a label for detection, such as radioactive isotopes, enzyme substrates, co-factors, ligands, chemiluminescent or fluorescent agents, haptens (including, but not limited to, DNP), and enzymes. Alternatively, the detection probes may contain no label or tag and may be detected indirectly (e.g. with a secondary antibody that is specific for the detection probe). The term "antibody conjugates" refers to those antibodies conjugated (either directly or indirectly) to one or more labels, where the antibody conjugate is specific to a particular target and where the label is capable of being detected (directly or indirectly). For example, an antibody conjugate may be coupled to a hapten such as through a polymeric linker and/or spacer, and the antibody conjugate, by means of the hapten, may be indirectly detected. As an alternative example, an antibody conjugate may be coupled to a fluorophore, such as through a polymeric linker and/or spacer, and the antibody conjugate may be detected directly. Examples of antibody conjugates are described in US Publication No. 2014/0147906 and U.S. Pat. Nos. 8,658,389; 8,686,122; 8,618,265; 8,846,320; and 8,445,191, the disclosures of which are hereby incorporated by reference here in their entireties.

As used herein, the term "slide" refers to any substrate (e.g., substrates made, in whole or in part, glass, quartz, plastic, silicon, etc.) of any suitable dimensions on which a biological specimen is placed for analysis, and more particularly to a "microscope slide" such as a standard 3 inch by 1 inch microscope slide or a standard 75 mm by 25 mm microscope slide. Examples of biological specimens that can be placed on a slide include, without limitation, a cytological smear, a thin tissue section (such as from a biopsy), and an array of biological specimens, for example a tissue array, a cellular array, a DNA array, an RNA array, a protein array, or any combination thereof. Thus, in one embodiment, tissue sections, DNA samples, RNA samples, and/or proteins are placed on a slide at particular locations. In some embodiments, the term slide may refer to SELDI and MALDI chips, and silicon wafers.

As used herein, the term "specific binding entity" refers to a member of a specific-binding pair. Specific binding pairs are pairs of molecules that are characterized in that they bind each other to the substantial exclusion of binding to other molecules (for example, specific binding pairs can have a binding constant that is at least 10³ M⁻¹ greater, 10⁴ M⁻¹ greater or 10⁵ M⁻¹ greater than a binding constant for either of the two members of the binding pair with other molecules in a biological sample). Examples of specific binding moieties include specific binding proteins (for example, antibodies, lectins, avidins such as streptavidins, and protein A). Specific binding moieties can also include the molecules (or portions thereof) that are specifically bound by such specific binding proteins. Specific binding entities include primary antibodies, described above, or nucleic acid probes.

As used herein, the term "sample," "tissue sample," "specimen" or the like refers to any sample including a biomolecule (such as a protein, a peptide, a nucleic acid, a lipid, a carbohydrate, or a combination thereof) that is obtained from any organism including viruses. Other examples of organisms include mammals (such as humans; veterinary animals like cats, dogs, horses, cattle, and swine; and laboratory animals like mice, rats and primates), insects, annelids, arachnids, marsupials, reptiles, amphibians, bacteria, and fungi. Biological samples include tissue samples (such as tissue sections and needle biopsies of tissue), cell samples (such as cytological smears such as Pap smears or blood smears or samples of cells obtained by microdissection), or cell fractions, fragments or organelles (such as obtained by lysing cells and separating their components by centrifugation or otherwise). Other examples of biological samples include blood, serum, urine, semen, fecal matter, cerebrospinal fluid, interstitial fluid, mucous, tears, sweat, pus, biopsied tissue (for example, obtained by a surgical biopsy or a needle biopsy), nipple aspirates, cerumen, milk, vaginal fluid, saliva, swabs (such as buccal swabs), or any material containing biomolecules that is derived from a first biological sample. In certain embodiments, the term "biological sample" as used herein refers to a sample (such as a homogenized or liquefied sample) prepared from a tumor or a portion thereof obtained from a subject.

As used herein, the terms "stain," "staining," or the like as used herein generally refers to any treatment of a biological specimen that detects and/or differentiates the presence, location, and/or amount (such as concentration) of a particular molecule (such as a lipid, protein or nucleic acid) or particular structure (such as a normal or malignant cell, cytosol, nucleus, Golgi apparatus, or cytoskeleton) in the biological specimen. For example, staining can provide contrast between a particular molecule or a particular cellular structure and surrounding portions of a biological specimen, and the intensity of the staining can provide a measure of the amount of a particular molecule in the specimen. Staining can be used to aid in the viewing of molecules, cellular structures and organisms not only with bright-field microscopes, but also with other viewing tools, such as phase contrast microscopes, electron microscopes, and fluorescence microscopes. Some staining performed by the system can be used to visualize an outline of a cell. Other staining performed by the system may rely on certain cell components (such as molecules or structures) being stained without or with relatively little staining other cell components. Examples of types of staining methods performed by the system include, without limitation, histochemical methods, immunohistochemical methods, and other methods based on reactions between molecules (including non-covalent binding interactions), such as hybridization reactions between nucleic acid molecules. Staining methods include, but are not limited to, primary staining methods (e.g., H&E staining, Pap staining, etc.), enzyme-linked immunohistochemical methods, and in situ RNA and DNA hybridization methods, such as fluorescence in situ hybridization (FISH).

As used herein, the term "substantially" means the qualitative condition of exhibiting total or near-total extent or degree of a characteristic or property of interest. In some embodiments, "substantially" means within about 20%. In some embodiments, "substantially" means within about 15%. In some embodiments, "substantially" means within about 10%. In some embodiments, "substantially" means within about 5%.

As used herein, the term "target" refers to any molecule for which the presence, location and/or concentration is or can be determined. Examples of target molecules include proteins, epitopes, nucleic acid sequences, and haptens, such as haptens covalently bonded to proteins. Target molecules are typically detected using one or more conjugates of a specific binding molecule and a detectable label.

As used herein, the terms "unmask", or "unmasking" refer to retrieving antigens or targets and/or improving the detection of antigens, amino acids, peptides, proteins, nucleic acids, and/or other targets in fixed tissue. For example, it is believed that antigenic sites that can otherwise go undetected, for example, may be revealed by breaking some of the protein cross-links surrounding the antigen during the unmasking. In some embodiments, antigens and/or other targets are unmasked through the application of one or more unmasking agents (defined below), heat, and/or pressure. In some embodiments, only one or more unmasking agents are applied to the specimen to effectuate unmasking (for example no heating or pressure is required). In other embodiments, only heat is applied to effectuate unmasking. In some embodiments, unmasking may occur only in the presence of water and added heat. Unmasking is further described in United States Patent Publication Nos. 2009/0170152 and 2009/0104654, the disclosures of which are hereby incorporated by reference herein in their entireties. In some embodiments, unmasking may commence once an unmasking agent is applied to the specimen, regardless of when and where an unmasking operation takes place. For example, unmasking may start once an unmasking agent is applied to the specimen, but prior to commencing an unmasking operation.

As used herein, the term "unmasking operation" refers to the steps or phases of unmasking conducted within a sealed chamber. For example, an unmasking operation may include the steps of heating and/or pressurizing a specimen disposed on a substrate in the presence one or more unmasking agents (defined below) for a pre-determined amount of time in a sealed chamber. Other steps of an unmasking operation may include cooling the chamber or any portions thereof or depressurizing the sealed chamber. Yet other steps of an unmasking operation include quenching, flash boiling, and/or the step of dispensing additional fluids and/or reagents to the specimen while in the sealed chamber. In some embodiments, an unmasking operation may include a ramp-up phase, a temperature maintenance phase, a temperature ramp-down phase, a pressure ramp-up phrase, a pressure maintenance phase, and/or pressure ramp-down phase that occur after the chamber is formed.

As used herein, the term "unmasking agent" refers to any liquids, including solutions and mixtures, dispensed to a specimen to assist in unmasking. In some embodiments, the unmasking agent includes multiple components, such as the components recited below. In some embodiments, the unmasking agent is a buffer solution. In some embodiments, the buffer solution has a pH ranging from between about 5 and about 10. In other embodiments, the buffer solution has a pH ranging from between about 7 and about 9. In other embodiments, the buffer solution has a pH ranging from between about 7.5 and about 11. Non-liming examples of buffers include citric acid, potassium dihydrogen phosphate, boric acid, diethyl barbituric acid, piperazine-N,N' -bis(2-ethanesulfonic acid), dimethylarsinic acid, 2-(N-morpholino)ethanesulfonic acid, tris(hydroxymethyl)methylamine (TRIS), 2-(N-morpholino)ethanesulfonic acid (TAPS), N,N-bis(2-hydroxyethyl)glycine(Bicine), N-tris(hydroxymethyl)methylglycine (Tricine), 4-2-hydroxyethyl-1-piperazineethanesulfonic acid (HEPES), 2-{[tris(hydroxymethyl)methyl]amino }ethanesulfonic acid (TES), and combinations thereof. In some embodiments, the unmasking agent is water. In other embodiments, the buffer solution may be comprised of tris(hydroxymethyl)methylamine (TRIS), 2-(N-morpholino)ethanesulfonic acid (TAPS), N,N-bis(2-hydroxyethyl)glycine(Bicine), N -tris(hydroxymethyl)methylglycine (Tricine), 4-2-hydroxyethyl-1-piperazineethanesulfonic acid (HEPES), 2-{[tris(hydroxymethyl)methyl]amino }ethanesulfonic acid (TES), or a combination thereof.

In some embodiments, the unmasking agent includes a TRIS-based buffer with a basic pH. In some embodiments, the TRIS-based buffer has a pH of about 10 (such as at elevated temperatures). In yet other embodiments, the buffer solution may be a citric acid sodium phosphate buffer solution having a pH of approximately 6.0 at elevated temperatures. In other embodiments, the unmasking agent includes about 0.05% citraconic anhydride. In other embodiments, the unmasking agent includes about 100 mM TRIS and has a pH of between about 8 and about 10. In other embodiments, the unmasking agent includes about 10 mM citrate, about 2 mM EDTA, and about 0.05% Tween 20, and has a pH of about 6.2. In other embodiments, the unmasking agent includes about 0.01M citrate buffer and has a pH of about 6.0.

In some embodiments, the unmasking agent includes a component which reacts with any liberated fixative to prevent it from reacting again with the sample. Examples a such unmasking agents include purpald or dimedone. Alternatively, or in addition, the unmasking agent can include a component that reacts in a reversible manner with free amino-groups of proteins and thus protects them from reaction with any available formaldehyde, e.g. citraconic anhydride (CCA).

In other embodiments, the unmasking agent includes a chelator. Examples of chelators include, but are not limited to, ethylenediaminetetraacetic acid (EDTA), ethylene glycol-bis(β-aminoethyl ether)-N,N,N',N'-tetraacetic acid (EGTA), EGTA/AM (EGTA, Tetra(acetoxymethyl Ester)), (1,2-bis(o-aminophenoxy)ethane-N,N,N' ,N' -tetraacetic acid) (BAPTA), BAPTA/AM (EGTA Tetra(acetoxymethyl Ester)), 5,5'-Dimethyl-BAPTA-AM; 1,2-Bis(2-amino-5-methylphenoxy) ethane (MAPTAM), N,N,N',N'-tetrakis(2-pyridylmethyl)ethane-1,2-diamine (TPEN), citrate, or ionophores such as ionomycin or calcimycin, or any combination or mixtures thereof.

In other embodiments, the unmasking agent includes an enzyme. Non-limiting examples of enzymes include proteinases (such as trypsin, chymotrypsin, pepsin, or proteinase K), a nuclease, a glycanases, and a hyaluronidase.

In other embodiments, the unmasking agent includes a chaotropic agent. Non-limiting examples of chaotropic agents include butanol, ethanol, a guanidinium salt (for example, guanidinium hydrochloride or guanidinium thiocyanate), lithium perchlorate, lithium acetate, magnesium chloride, phenol, propanol, thiourea and urea.

In other embodiments, the unmasking agent includes a nucleophile, for example a chemical species that donates an electron pair to an electrophile. Non-limiting examples of nucleophiles include ammonia, primary amines, secondary amines and tertiary amines. Other examples of nucleophiles include hydrazines, alcohols and halogenides.

In other embodiments, the unmasking agent includes a Lewis acid. Non-limiting examples of Lewis acids include metal ions such as iron (III) ions, aluminum ions, magnesium ions or other electron-deficient compounds such as toluenesulfonic acid, boric acid, boron trifluoride, and tartaric acid.

In other embodiments, the unmasking agent can include a surfactant. As used herein, "surfactants" are classified as anionic, cationic, or nonionic, depending on their mode of chemical action. In general, surfactants reduce interfacial tension between two liquids. An example of a surfactant is sodium dodecyl sulfate. Examples of suitable nonionic surfactants include polyethylene glycol monohexadecyl ether, Cetostearyl alcohol, Cetyl alcohol, cocamide diethanolamine, cocamide monoethanolamine, Decyl glucoside, Octylphenoxypolyethoxyethanol, Polyethylene glycol monoisohexadecyl ether, Lauryl glucoside, Nonyl phenoxypolyethoxylethanol, 4-Nonylphenyl-polyethylene glycol, 1-(4-Nonylphenyl)-1,4,7,10,13,16,19,22,25-nonaoxaheptacosan-27-ol, nonoxynols, Monolaurin, Octaethylene glycol monododecyl ether, Oleyl alcohol, Polyethylene-polypropylene glycol, Polyglycerol polyricinoleate, Polysorbates, Sorbitan monostearate. Sorbitan tristearate; Stearyl alcohol; polyethylene glycol p-(1,1,3,3-tetramethylbutyl)-phenyl ether; and Polyoxyethylene (20) sorbitan monooleate. octyl-, decyl, dodecyl-glucopyranoside, -maltoside or deoxycholic acid. Exemplary surfactants are sold under the names: Brij^{®} 35, TWEEN^{®}, Tergitol^{™}, Triton^{™}, Ecosurf^{™}, Dowfax^{™}, polysorbate 80^{™}, BigCHAP, Deoxy BigCHAP, IGEPAL^{®}, Saponin, Thesit^{®}, Nonidet^{®}, Pluronic F-68, digitonin, deoxycholate, and the like. Particular disclosed working embodiments concern using surfactants selected from Brij^{®} 35, TWEEN^{®}, Tergitol^{™}, Triton^{™}. Additional antigen unmasking agents are disclosed in U.S. Patent No. 8,486,335, the disclosure of which is hereby incorporated by reference herein in its entirety.

In some embodiments, the unmasking agent includes deionized water, TRIS, and a chelator. In some embodiments, the unmasking agent includes deionized water, TRIS, and a chelator and has a pH ranging from between about 7 to about 9.5. In some embodiments, the unmasking agent includes deionized water, TRIS, a chelator, and a preservative. In some embodiments, the unmasking agent is CC1, available from Ventana Medical Systems, Inc., Tucson, AZ, USA. Further unmasking agents are further herein and described in United States Patent Publication No. 2009/0170152, the disclosure of which is hereby incorporated by reference herein in its entirety.

### OVERVIEW

As described herein, the present disclosure is directed to specimen processing assemblies including (a) a lower plate, and (b) an upper plate which is complementary to the lower plate. Upper and lower plates which are "complementary" each include features or sets of features which complement one another. For example, a lower plate may have a first set of features (e.g. a substrate stage and a lower engagement surface) and an upper plate may have a second set of features (e.g. a cavity and an upper engagement surface). In this example, the cavity of the upper plate may be complementary to the substrate stage; and the upper engagement surface may be complementary to the lower engagement surface.

In some embodiments, the specimen processing assembly is configured such that the lower plate and the upper plate may be brought into contact with one another so as to form a chamber, such as a sealed chamber. In some embodiments, one or both of the lower and upper plates are movable. In some embodiments, the lower and upper plates are both independently movable, such as independently movable in any of the x, y, and z-coordinate directions. In other embodiments, one of the lower or the upper plates is movable, while the other of the lower or the upper plates is fixed. In some embodiments, the lower plate is moved toward a fixed upper plate. In other embodiments, the upper plate is moved toward a fixed lower plate.

In some embodiments, one or both of the lower and/or upper plates include one or more independently operable heating and/or cooling elements. In some embodiments, any of the heating and/or cooling elements within the upper plate may be operated in conjunction with those heating and/or cooling elements within the lower plate. As described further herein, any of the independently operable heating and/or cooling elements in the upper plate and/or lower plate may also be operated in conjunction with one or more thermal management modules. As a result, by independently controlling the various heating and/or cooling elements present in the upper and lower plates (or within one or more thermal management modules), the temperature of a specimen (such as a specimen disposed on a substrate), a substrate, and/or the chamber may be controlled.

For example, it is possible to independently operate the various heating and/or cooling elements present in the upper and lower plates (or those in the thermal management modules) such that at least a portion of the substrate, or the specimen disposed on the substrate, remains the coldest structure within the chamber. For example, the substrate or the specimen disposed on the substrate may be maintained at a temperature lower than the upper plate, the lower plate, ports, valves, chamber walls, and/or any other structure within the chamber formed from the upper and lower plates.

In some embodiments, the one or more independently operable heating and/or cooling elements in any of the lower and/or upper plates may be arranged such that during their operation their arrangement and/or positioning allow for one or more temperature gradients to be established within the formed chamber (or along any constituent part of the formed chamber, including the lower and upper plates). In some embodiments, the one or more heating and/or cooling elements are arranged such that during their operation a temperature gradient is established between the substrate stage and those portions of the chamber surrounding the substrate stage. In this regard, the temperature gradient enables the substrate stage (or at least a portion of the substrate disposed thereon) to be held at a comparatively lower temperature than other adjacent areas of the chamber. In some embodiments, a temperature gradient is established and maintained during all phases of an unmasking operation (e.g. heating, pressurizing, cooling, depressurization, quenching, etc.). In some embodiments, temperature gradients are established and maintained such that the specimen or a portion of the substrate are the "coldest" components within the formed chamber. For example, the specimen and/or the portion of the substrate may be maintained at a temperature which is less than the temperature of any other portions of the upper and/or lower plates, the chamber walls, nozzles, ports, temperature probes, pressure sensors, etc.

In some embodiments, the upper plate is coupled to one or more force generating members. In some embodiments, the one or more force generating members are selected from motors, screws, levers, pistons, cam mechanisms, etc. In some embodiments, the one or more force generating members exert a predetermined amount force onto at least the upper plate or any structure disposed therebetween. In some embodiments, the predetermined amount of force applied is less than a force generated by a predetermined threshold pressure within a chamber formed from the complementary upper and lower plates. In this regard, the predetermined force exerted by the force generating member is less than the forces pushing the upper and lower plates apart and, as a result, the force generating member may give way or slip such that pressure may be relieved from within the formed chamber. Alternatively, the predetermined amount of force applied does not exceed a force generated by a predetermined threshold pressure within the chamber. It is believed that this may act as a safety mechanism, thus mitigating the build-up of pressured within the chamber that exceed the predetermined threshold pressure. In some embodiments, the lower and/or upper plate may also include one or more ports and/or valves such that pressure which exceeds the predetermined threshold pressure may be released from the internal environment within the chamber. For example, a spring having a particular spring constant can be used as at least part of the force generating member such that when the internal pressure of the chamber exceeds a predetermined pressure, the spring will collapse further and release pressure from the chamber.

The present disclosure also is directed to specimen processing assemblies including a chamber, such as a chamber formed from a lower plate and an upper plate which is complementary to the lower plate. In some embodiments, unmasking (e.g. antigen retrieval, target retrieval) may be performed within the chamber. For example, gas and/or steam may be introduced into the chamber to pressurize the chamber. By way of another example, one or more heating elements may be activated to heat one or more fluids and/or reagents present within the chamber. In some embodiments, one or more cooling elements are activated simultaneously with the one or more heating elements to enable uniform heating of a substrate, the specimen disposed on the substrate, or the chamber itself. In some embodiments, the chamber may have any size and/or shape. In some embodiments, the chamber is sized to accommodate at least a portion of a substrate and any specimens, fluids, and/or reagents disposed thereon.

The present disclosure is also directed to systems including one or more specimen processing assemblies. In some embodiments, the systems include one or more specimen processing assemblies and at least one dispense device. In some embodiments, the system further includes one or more liquid removal modules, mixing modules, pressurization modules, imaging modules, coverslipping modules, etc. In some embodiments, the systems include a control system having one or more processors and one or more memories.

### SPECIMEN PROCESSING ASSEMBLY COMPONENTS

As noted above, the specimen processing assemblies may include a lower plate, and an upper plate which is complementary to the lower plate. In some embodiments, the specimen processing assemblies further include at least one additional component, e.g. a sub-assembly, a support member, a substrate loader, a substrate holder, a force generating member, etc. Each of these components will be described further herein.

### LOWER PLATE

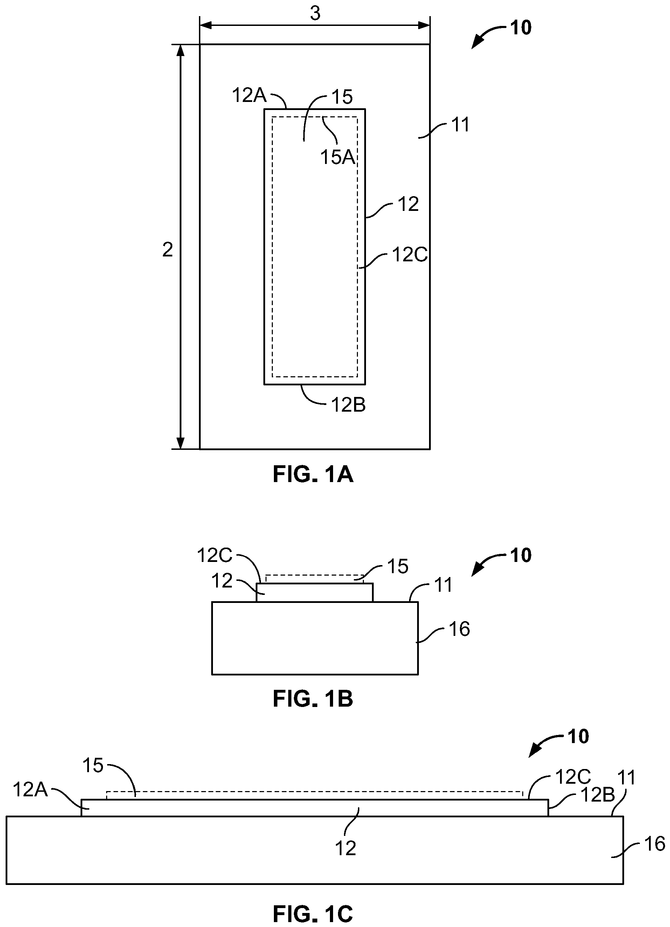

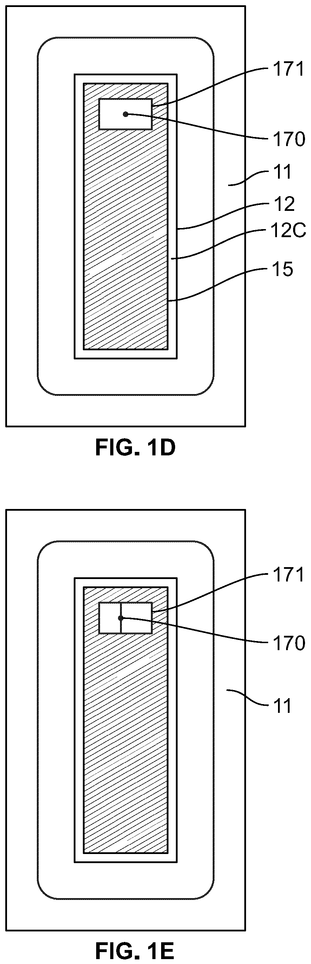

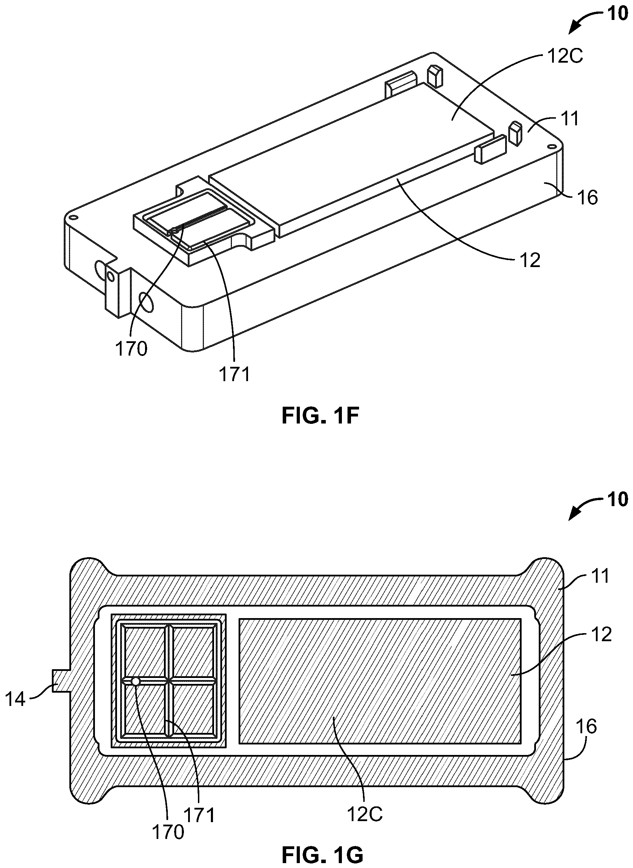

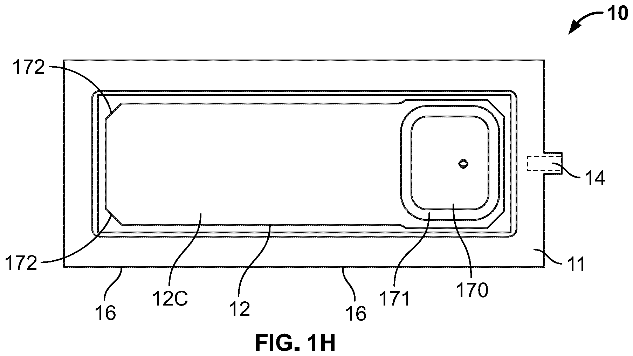

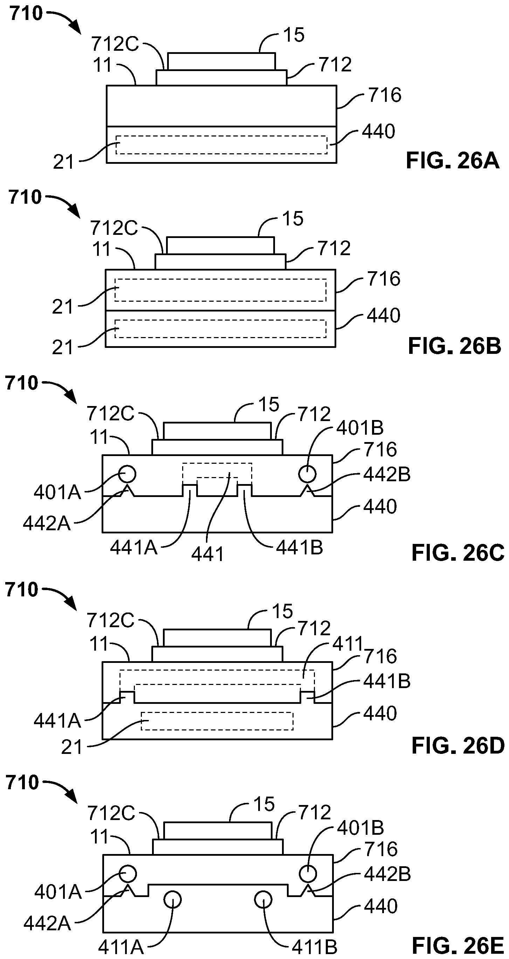

The specimen processing assemblies of the present disclosure include at least one lower plate, such as those illustrated in FIGS. 1 - 4, or a modular lower plate, such as those illustrated in FIGS. 26A - E.

With references to FIGS. 1A - 1C, in some embodiments, the lower plate 10 includes a body 16, having a lower engagement surface 11 and one or more substrate stages 12. In some embodiments, the one or more substrate stages 12 each include an upper surface 12C (e.g. an upper planar surface) adapted to support a substrate 15, such as a microscope slide.

In some embodiments, the one or more substrate stages 12 are raised relative to the lower engagement surface 11. In other embodiments, the one or more substrate stages 12 are recessed relative to the lower engagement surface 11. In yet other embodiments, the one or more substrate stages 12 includes a first portion which is raised or level with the lower engagement surface 11 and a second portion which is recessed or level with the lower engagement surface 11.

In some embodiments, the substrate stage 12 has a shape which is substantially rectangular (see, e.g. FIG. 1A or FIG. 1D). In other embodiments, the substrate stage 12 has rounded edges. In yet other embodiments, the substrate stage 12 has chamfered edges 172 (see, e.g., FIG. 1H). In some embodiments, the substrate stage 12 approximates the size of a substrate. In other embodiments, the substrate stage 12 is larger than the size of a substrate. In yet other embodiments, the substrate stage 12 is smaller than the size of a substrate. For example, the size of a substrate stage 12 may be smaller than a standard microscope slide in at least one dimension. In some embodiments, a substrate stage which is sized smaller than the substrate allows for any condensation formed within a chamber formed from the lower plate and a complementary upper plate to form under the slide or migrate under the slide. In some embodiments, at least a portion of one edge of the substrate overhangs one side of the substrate stage.

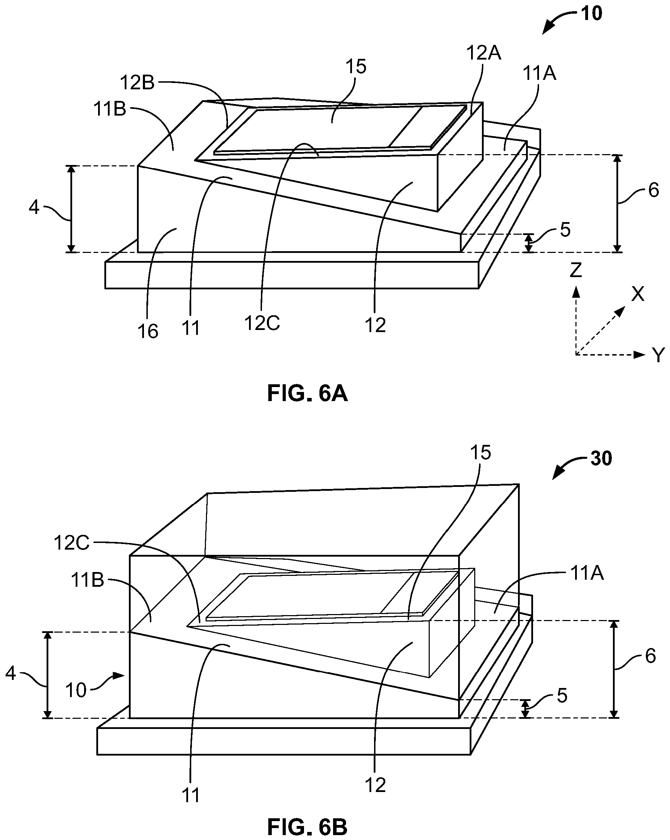

In some embodiments, and as described herein, the lower plate 10 is configured to be complementary to an upper plate 30 (see, e.g., FIG. 6B). In some embodiments, the lower plate 10 is adapted such that a substrate 15 supported by substrate stage 12 remains horizontal while the lower plate 10 is moved. In this way, any fluids and/or reagents disposed thereon remain on the substrate, for example they do not migrate to the edges of the substrate or run off the substrate. In some embodiments, the body 16 of the lower plate 10 is monolithic. In other embodiments, the body 16 includes of two or more members coupled together. These and other features of the lower plate 10 are described herein.

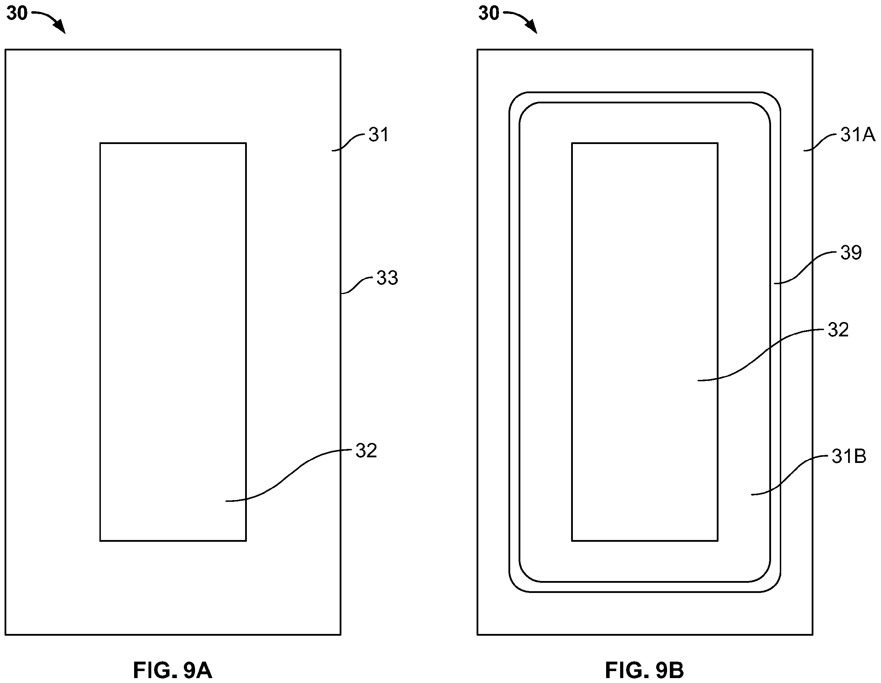

In some embodiments, the body 16 of the lower plate 10 may have any size or shape, e.g. a polygonal shape or a wedge-based shape. Likewise, the lower engagement surface 11 may have any size or shape, provided that it is complementary to an upper engagement surface 31 of an upper plate 30 as described herein (see, e.g., FIG. 9A). In some embodiments, the lower engagement surface 11 of the lower plate 10 may have the same general shape as the lower plate. While not depicted, in some embodiments, the lower plate 10 may have a lower engagement surface that is not linear, but curvilinear, again provided that any upper engagement surface of an upper plate is complementary to the curvilinear lower engagement surface.

In some embodiments, and as depicted in any of FIGS. 1, 2, 3, and 4, the body 16 of the lower plate 10 may have a generally rectangular shape. In other embodiments, and with reference to FIG. 1A, the body 16 of the lower plate 10 includes a length 2 and width 3 whose general proportions conform to those of a microscope slide. In embodiments where the body 16 has a rectangular shape, a plane formed by the upper planar surface 12C of the substrate stage 12 is parallel with a plane formed by the lower engagement surface 11.

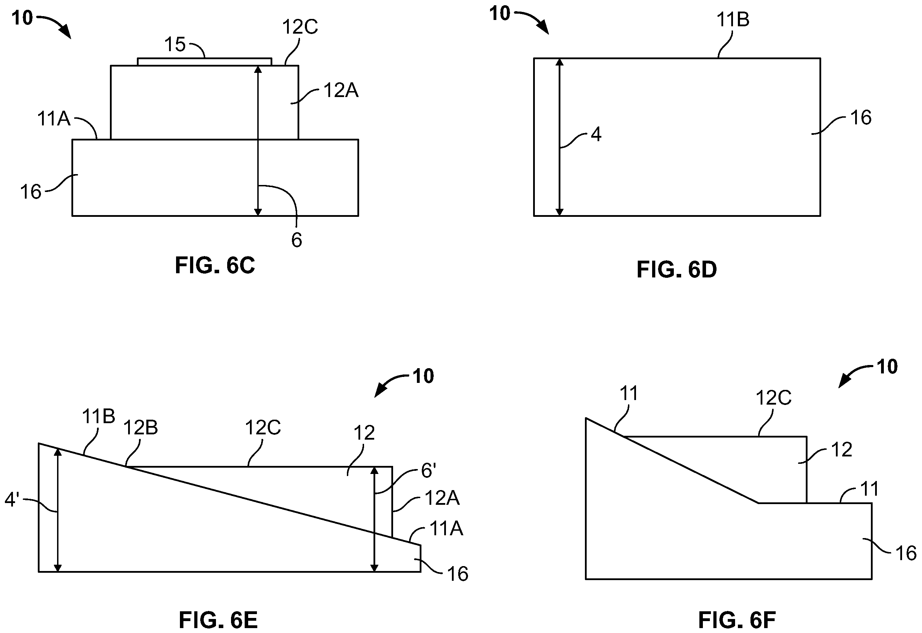

In other embodiments, the body 16 of the lower plate 10 has a wedge-based shape. For example, and as depicted in at least FIG. 6A, a side of body 16 may have a wedge-based shape which tapers from about a first height 4 to about a second height 5. FIGS. 6C and 6D show front-on end views, respectively, of the two ends of a wedge-based body 16. In some embodiments, a body 16 having a wedge-based shape, may further include a lower engagement surface 11 and a substrate stage 12 (FIG. 6A). In some embodiments, and as illustrated in FIG. 6A, the substrate stage 12 is configured such that a plane formed by the upper planar surface 12C of the substrate stage 12 (and any substrate 15 supported by the substrate stage 12) would intersect a plane formed by the lower engagement surface 11. In some embodiments, the upper surface 12C of the substrate stage 12 is configured such that a substrate disposed thereon is held horizontally, for example a substrate disposed on the upper surface 12C will remain parallel to the ground as the lower plate, coupled to a sub-assembly as described herein, traverses the sub-assembly.

With reference to FIGS. 6A and 6B, in some embodiments, a substrate stage first end 12A may be raised relative to a lower engagement surface first portion 11A; while a substrate stage second end 12B may be even with or recessed relative to a lower engagement surface second portion 11B. In some embodiments, and with reference to FIG. 6A, a substrate stage upper surface 12C is provided at a height 6 that is the same, higher, or lower than height 4. FIG. 6E provides an alternate wedge-based body 16 where a substrate stage first end 12A is raised relative to a lower engagement surface first portion 11A; while a substrate stage second end 12B is recessed relative to a lower engagement surface second portion 11B. FIG. 6F provides yet a further alternative lower plate 10 having a wedge-based body 16.

While not depicted in FIG. 6A, the substrate stage 12 may include one or more alignment members, such as described further herein. In some embodiments, the one or more alignment members have a height which is less than a height of a substrate disposed on a substrate stage. In other embodiments, the one or more alignment members have a height which is about half the height of the substrate, or less than half the height of the substrate. Additionally, the body 16 of the wedge-based lower plate 10 may include a groove, such as a groove circumscribing a periphery of a substrate stage 12. In some embodiments, the groove is adapted to at least partially engage a seal body as described further herein.

In some embodiments, the substrate stage 12 may include a vacuum port 170. In some embodiments, the substrate stage 12 includes a vacuum port and one or more vacuum sealing members 171 such as depicted in FIGS. 1D through 1H. In some embodiments, the vacuum port 170 is plumbed through the body 16 and is in fluidic communication with one or more vacuum lines and/or a vacuum source. In some embodiments, the one or more vacuum sealing members 171 have a non-round shape. In some embodiments, the one or more vacuum sealing members 171 are comprised of a material such as rubber, silicon, or a fluorocarbon rubber. In some embodiments, the one or more vacuum sealing members 171 comprise an O-ring. In some embodiments, the substrate stage includes 1 vacuum sealing member. In other embodiments, the substrate stage includes 2 or more vacuum sealing members. In yet other embodiments, the substrate stage includes 3 or more vacuum sealing members. In some embodiments, each of the one or more vacuum sealing members are contiguous with each other.

In some embodiments, the one or more vacuum sealing members 171 are compressible and/or temporarily deformable (e.g. compressible by about 5%, compressible by about 10%, compressible by about 15%, compressible by about 20%, compressible by about 25%, etc.). In some embodiments, the one or more vacuum sealing members 171 may be in an uncompressed state where the one or more vacuum sealing members 171 can extend upwardly beyond the surface 12C of the substrate stage 12. In some embodiments, the one or more vacuum sealing members 171 may be in a compressed state where the one or more vacuum sealing members 171 can be configured to maintain an airtight seal with a backside of a substrate (e.g. the backside of a microscope slide) such that the substrate is pulled against the surface 12C of the substrate stage 12 by a vacuum drawn via the one vacuum port 170.

In some embodiments, a vacuum may be drawn between the substrate and the substrate stage. For example, a sufficient vacuum may be drawn to inhibit or limit movement of the substrate along the substrate stage. The vacuum can be reduced or eliminated to remove the substrate from the substrate stage. Any of the vacuum ports, sealing members, sealing surfaces, vacuum lines, and vacuum sources described in United States Patent No. 9,989,448 (the disclosures of which are hereby incorporated by reference herein in their entireties) may be utilized within the present disclosure. In addition, any of the methods of operation of the vacuum ports as described within United States Patent No. 9,989,448 may be adapted for use in the lower plates 10 of the present disclosure.

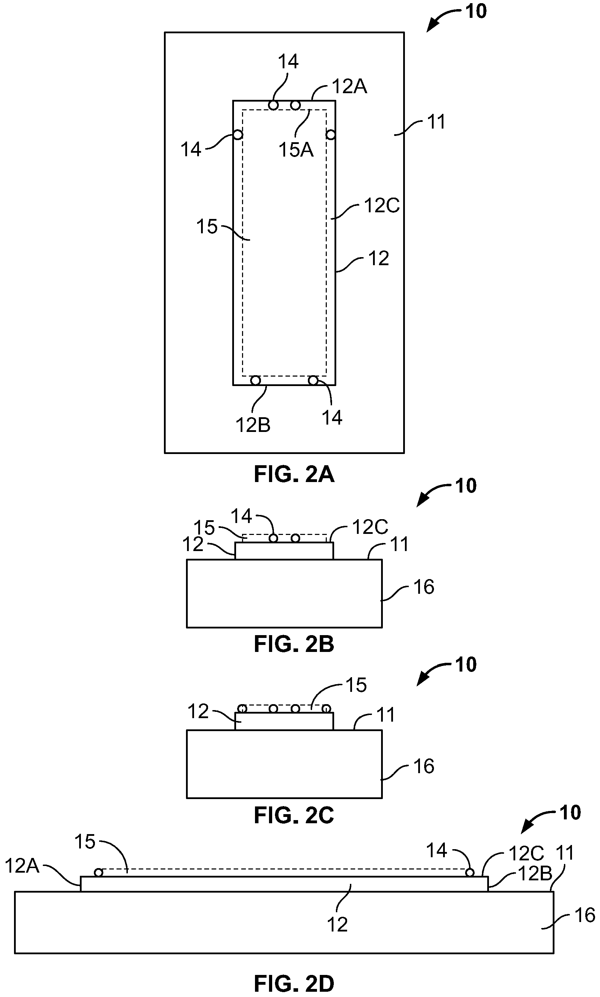

With reference to at least FIGS. 2A - 2D, in some embodiments, the substrate stage 12 may further include one or more alignment members 14. In some embodiments, the one or more alignment members 14 are adapted to guide a substrate into an appropriate position on the upper surface 12C of the substrate stage 12, e.g. a position that is centered within the upper surface 12C of the substrate stage 12. In some embodiments, the substrate stage 12 may include between 1 and 10 alignment members. In some embodiments, the alignment members 14 are protuberances which project vertically from the surface of the substrate stage 12. In some embodiments, the protuberances may have any size and shape, such as cylindrical or polygonal. In some embodiments, the alignment members 14 are pins that project from the upper surface 12C of the substrate stage 12. In some embodiments, one or more alignment members 14 are located near one or both of the substrate stage ends 12A and 12B. In some embodiments, the one or more alignment members have a height which is less than the height of the substrate. In other embodiments, the one or more alignment members have a height which is about half the height of the substrate, or less than half the height of the substrate.

In the context of a microscope slide being supported by substrate stage 12, one or more alignment members 14 may be located on the substrate stage 12 such that they are positioned at the terminal ends of the microscope slide. For example, 1, 2, or 3 alignment members 14 may be positioned on the substrate stage 12 at a label end 15A of a microscope slide 15; and another 1, 2, or 3 alignment members 14 may be positioned on the substrate stage 12 at the opposing terminal end of the slide 15 (for example the specimen-bearing end). In some embodiments, one or more alignment members 14 may be located along the periphery of the longitudinal length of the substrate stage 12. By way of another example, and again in the context of a microscope slide, one or more alignment members 14 may be positioned on the substrate stage 12 along each longitudinal edge of the slide supported by the substrate stage 12. In some embodiments, the alignment members 14 may be equally spaced apart from one another. In other embodiments, the alignment members 14 may be spaced randomly.

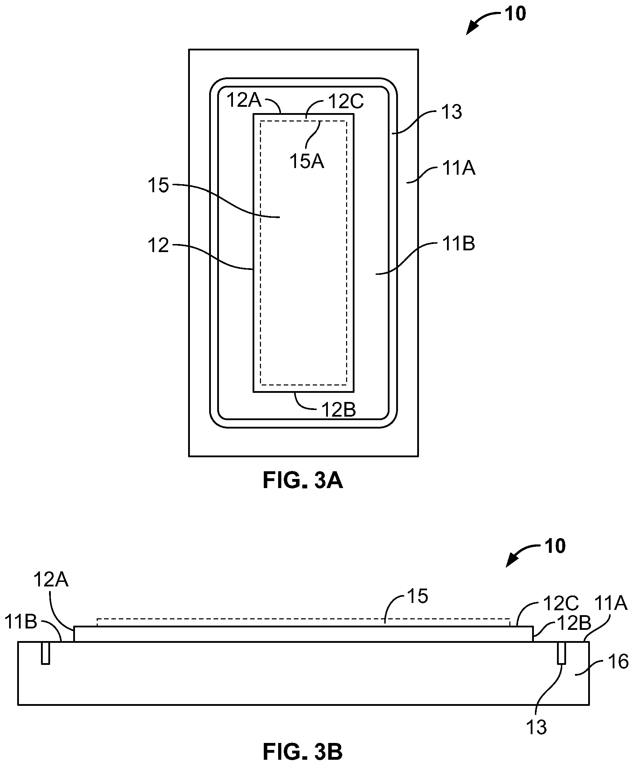

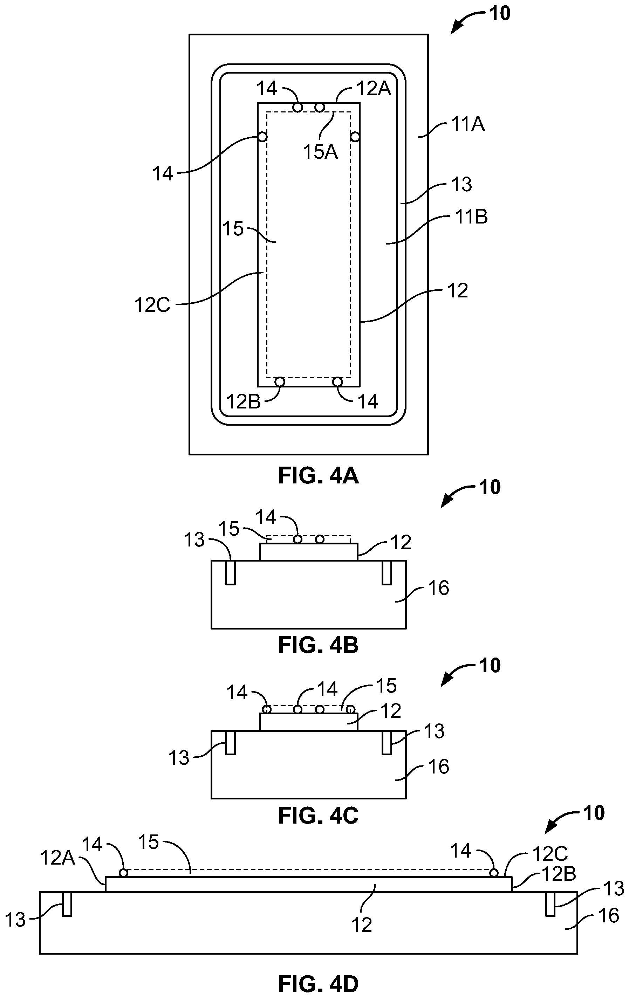

With reference to at least FIGS. 3A and 3B, in some embodiments, the lower plate 10 may further include a groove 13 which at least partially circumscribes the body 16 of the lower plate 10. As shown in FIGS. 3A and 4A, in some embodiments, the groove 13 may circumscribe the substrate stage 12 such that the lower plate 10 includes a first lower engagement surface 11A and a second lower engagement surface 11B. In some embodiments, the groove 13 is configured such that a seal body may removably engage the groove walls (not depicted). In some embodiments, a seal body inserted into groove 13 may have a first portion which at least partially engages the groove walls; and a second portion which protrudes from the groove 13 and extends at least partially above engagement surfaces 11A and/or 11B (such that it is available for communication with an upper engagement surface 31). In some embodiments, the seal body is in the form of an O-ring seal. By an "O-ring seal" it is meant an annular seal, irrespective of the shape of its cross section. In some embodiments, the substrate stage 12 may further include one or more alignment members, as shown in FIGS. 4A - 4C.

In some embodiments, a seal body may be comprised of a material that is resistant to chemicals and/or heat. In some embodiments, the seal body is comprised of a metal. In some embodiments, the seal body is compressible and/or temporarily deformable. In some embodiments, the seal body is comprised of a material such as rubber, silicon, or a fluorocarbon rubber. Suitable examples of rubber include, but are not limited to, ethylene propylene diene monomer (EPDM), ethylene propylene rubber, chloroprene rubber (CR), butyl rubber (IIR), and silicone rubber. Suitable examples of fluorocarbon rubbers include, but are not limited to, a vinylidene fluoride rubber of a binary system such as a vinylidene fluoride/hexafluoropropylene copolymer, a vinylidene fluoride/trifluorochloroethylene copolymer, and a vinylidene fluoride/pentafluoropropylene copolymer, a vinylidene fluoride rubber of a ternary system such as a vinylidene fluoride/tetrafluoroethylene/hexafluoropropylene copolymer, a vinylidene fluoride/tetrafluoroethylene/perfluoroalkylvinyl ether copolymer, and a vinylidene fluoride/tetrafluoroethylene/propylene copolymer, a tetrafluoroethylene/propylene copolymer, a tetrafluoroethylene/perfluoroalkylvinyl ether copolymer, and a thermoplastic fluorocarbon rubber.

In other embodiments, the seal body may be comprised of a perfluoroelastomer, such as those recited in US Patent No. 7,834,096, the disclosure of which is hereby incorporated by reference herein in its entirety. In yet other embodiments, the seal body may be comprised of nitriles, such as acrylonitrile-butadiene (NBR), hydrogenated nitrile (HNBR), and carboxylated nitrile (XNBR); fluorocarbon (FKM); fluorosilicone (FVMQ); perfluoroelastomer (FFKM); tetrafluoroethylene-propylene (FEPM); ethylene acrylate (AEM); polyacrylate; and thermoplastic polyurethane. In further embodiments, the seal may be comprised of a material that is heat-resistant, such as any of those described within US Patent No. 7,919,554, the disclosure of which is hereby incorporated by reference herein in its entirety.

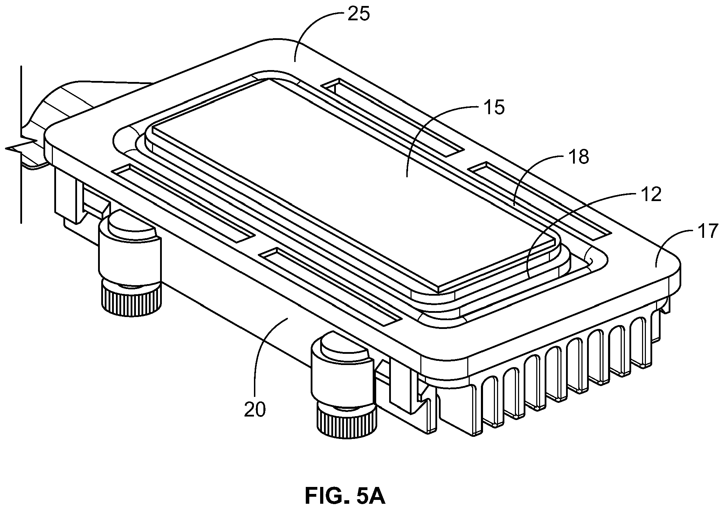

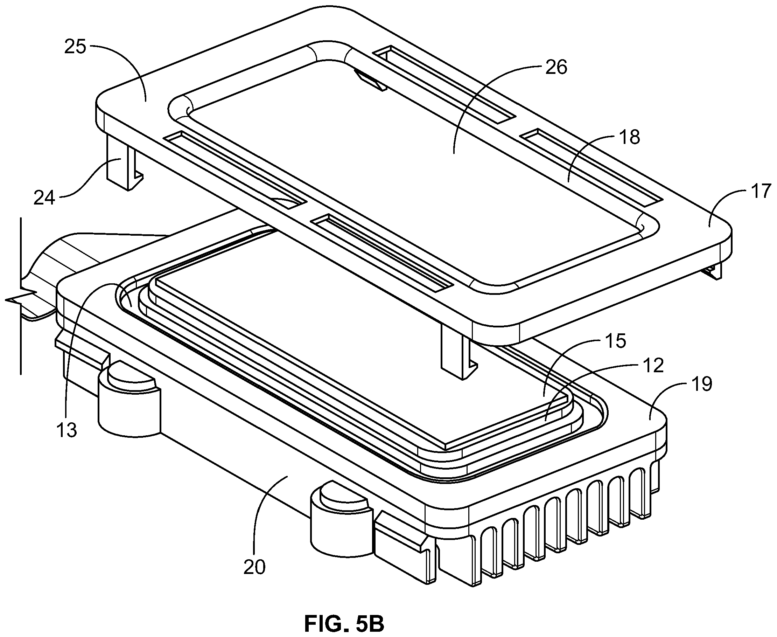

In some embodiments, a seal body 18 is integrated within a removable seal attachment 17, such as depicted in FIG. 5B. In some embodiments, the removable seal attachment 17 is configured to engage a portion of the lower plate 10 (although, the removable seal attachment 17 could also be configured to engage a portion of the upper plate 30). For example, the removable seal attachment 17 may include one or more clips 24 which facilitate its attachment to a portion of the lower plate 10 (see, e.g., FIG. 5B). In other embodiments, the removable seal attachment 17 may frictionally engage a periphery of the lower plate 10. In yet other embodiments, the removable seal attachment 17 may be screwed into the lower plate 10. In some embodiments, the seal body 18 of the removable seal attachment 17 fits into groove 13 of the lower body and at least partially engages the walls of groove 13. In some embodiments, at least a portion of seal body 18 of the removable seal attachment 17 extends above an upper surface of the removable seal attachment 17. In some embodiments, the seal body is positioned such that it may contact a portion of an upper engagement surface 31. In some embodiments, the removable seal attachment 17 includes an upper surface 25 which acts as an engagement surface, such as a lower engagement surface for contacting and/or facilitating the formation of a seal with an upper engagement surface 31 of an upper plate 30. In some embodiments, the removable seal attachment 17 helps to retain the seal formed between the upper and lower plates, especially when a chamber formed from the upper and lower plates is pressurized. In some embodiments, the removable seal attachment 17 includes a cavity 26 such that the substrate stage 12 (and any substrate 15 supported by the substrate stage 12) may be exposed for further processing when the removable seal attachment 17 is coupled to the lower plate 10.

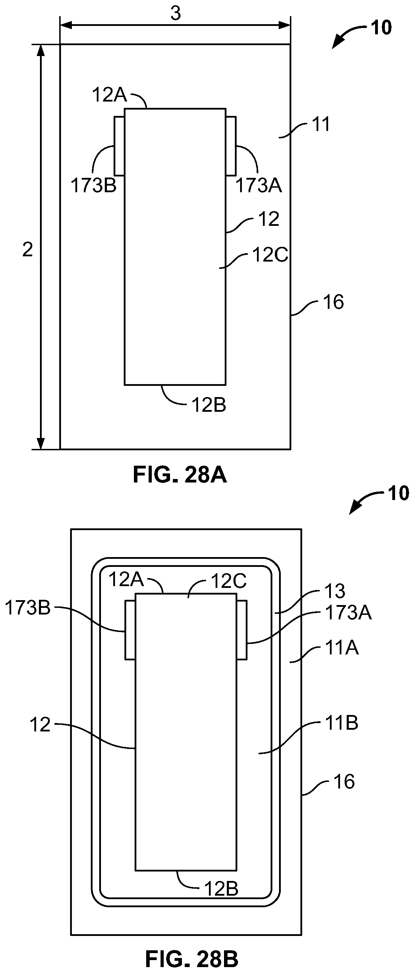

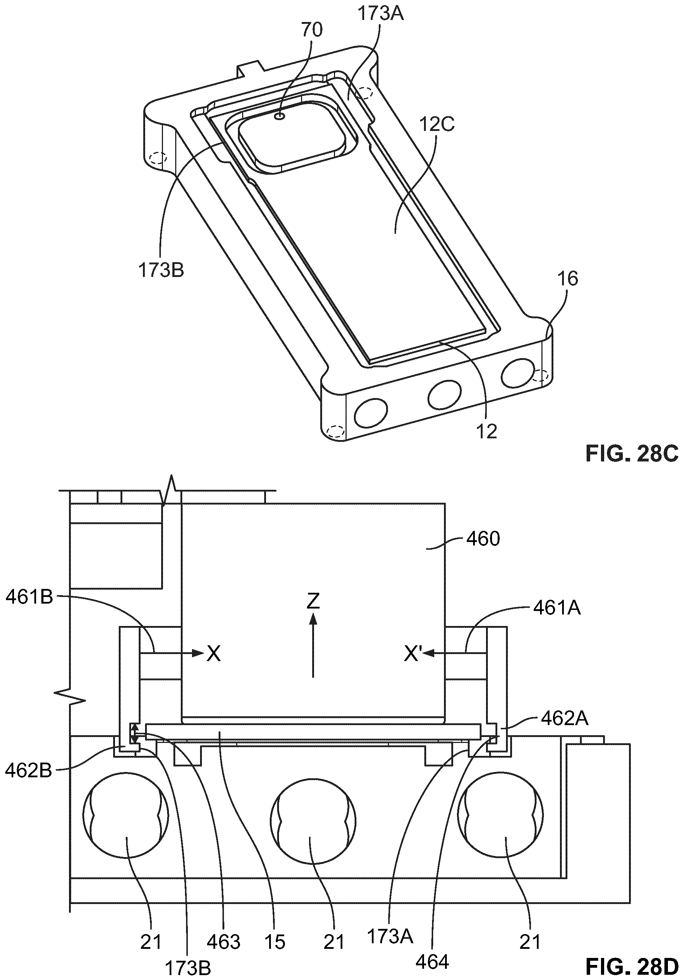

In some embodiments, the lower plate 10 includes one or more indentations within the body 16 and adjacent to the substrate stage 12. For example, FIGS. 28A, 28B, and 28C each illustrate a body 16 having two indentations 173A and 173B, where the one or more indentations are adjacent to both longitudinal sides of a substrate stage 12. The indentations 173A and 173B may be of any size and/or shape. Additionally, the indentations 173A and 173B may have any depth within the body 16. In some embodiments, the two indentations 173A and 173B are in alignment with each other. In other embodiments, the two indentations 173A and 173B are offset from each other. In some embodiments, the indentations are also provided within the substrate stage 12 itself.

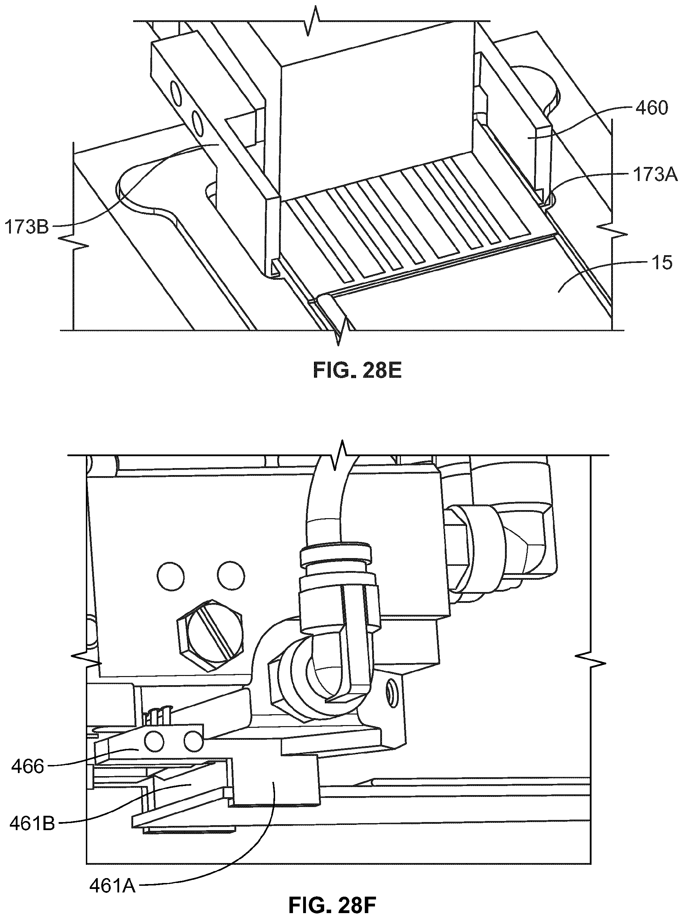

In some embodiments, the one or more indentations are sized to accommodate a gripper device, e.g. sized to accommodate the arms of a gripper device adapted to pick-up and move a substrate. Suitable gripper devices for picking up a slide supported by a substrate stage are described herein. FIGS. 28D and 28E illustrate a body 16 of a lower plate 10 including one or more indentations 173A and 173B, and further illustrate a gripper device 460 having notched ends 462A and 462B within gripper arms 461A and 461B, respectively. These figures illustrate the notched ends 462A and 462B inserted into the indentations 173A and 173B within the body 16. In the configuration illustrated in FIG. 28E, the gripper arms 461A and 461B are in an extended configuration, but that the gripper arms 461A and 461B may be retracted such that the gripper arms 461A and 461B move in the illustrated directions X and X'. Upon retraction of the gripper arms 461A and 461B, the notched ends 462A and 462B of the gripper 460 move towards the substrate 15 and at least partially surround the edges of the substrate 15, allowing it to be picked up by the gripper device 460 and moved, such as in the illustrated Z direction. In some embodiments, the indentations 173A and 173B within the body 16 are sized to accommodate at least the notched ends 462A and 462B in both the extended and retracted positions of gripper arms 461A and 461B.

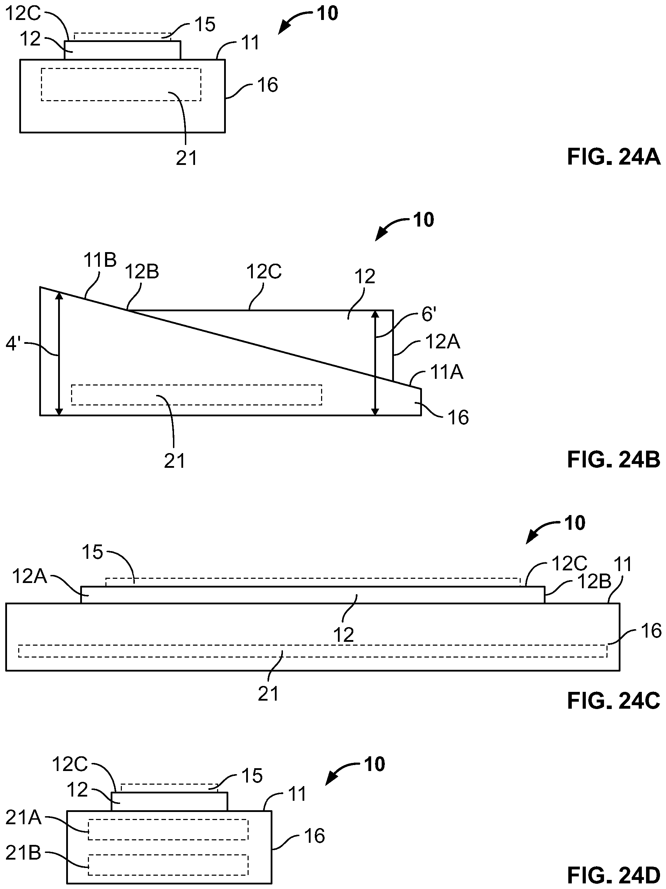

The lower plate may include one or more heating and/or cooling elements 21. In some embodiments, the one or more heating and/or cooling elements 21 are embedded within the body 16 of the lower plate 10. For example, FIGS. 24A and 24C each depict a lower plate 10 having a body 16, whereby one or more heating and/or cooling elements 21 are shown embedded within the body 16 of the lower plate 10. Any number of heating and/or cooling elements may be embedded within the body 16 of the lower plate, e.g. 1 or more heating and/or cooling elements, 2 or more heating and/or cooling elements, 3 or more heating and/or cooling elements, 4 or more heating and/or cooling elements, 5 or more heating and/or cooling elements, 6 or more heating and/or cooling elements, etc. Likewise, the body 16 of the lower plate 10 may include any combination of heating and/or cooling elements, e.g. 1 heating and/or cooling element; 1 heating and 1 cooling element; 2 heating elements; 2 cooling elements; 2 heating elements and 1 cooling element; 2 cooling elements and 1 heating element; 2 cooling elements and 2 heating elements; 3 heating elements; 3 cooling elements; 3 heating elements and 1 or 2 cooling elements; 3 cooling elements and 1 or 2 heating elements; 3 cooling elements and 3 heating elements; etc.

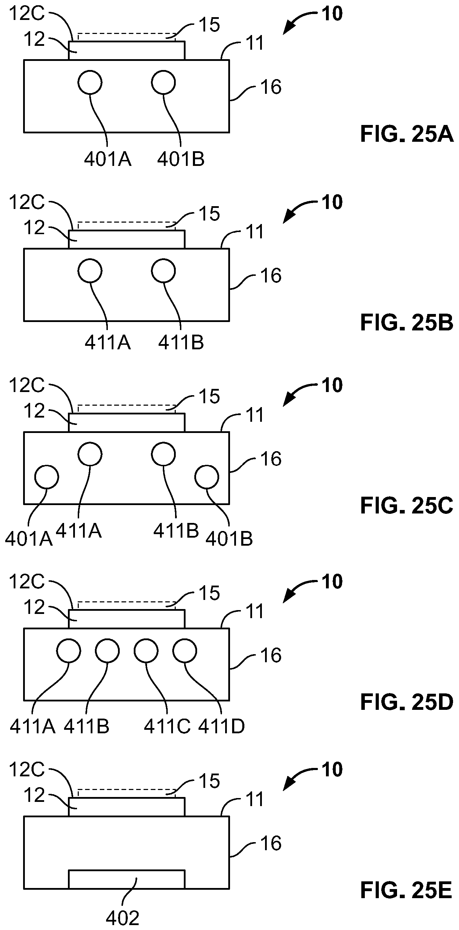

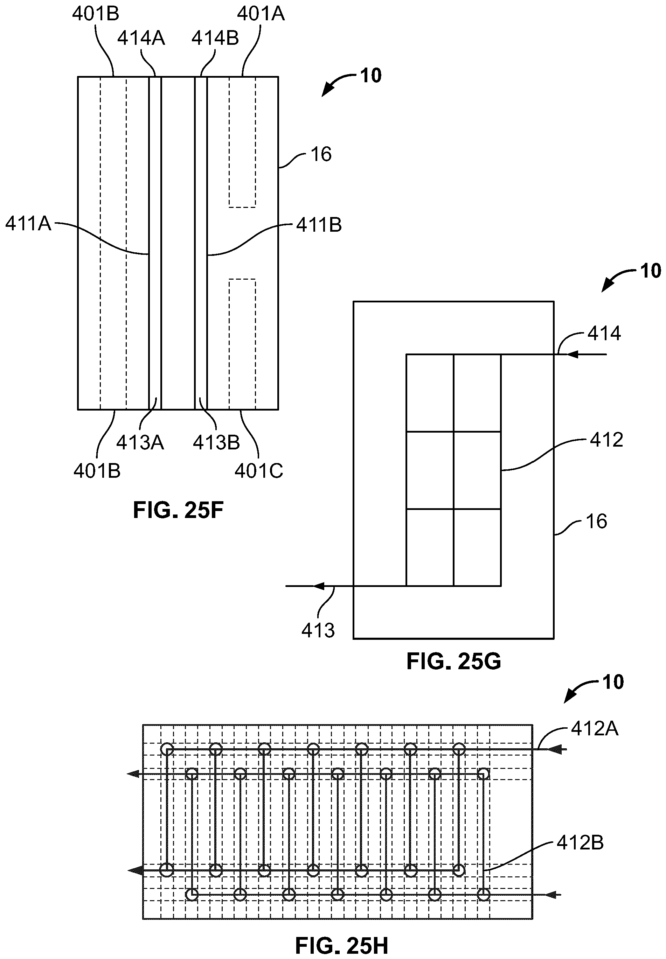

In some embodiments, the one or more heating and/or cooling elements 21 may have any arrangement within the body 16 of the lower plate. For illustrative purposes only, FIG. 24D illustrates one or more heating elements 21A arranged parallel to one or more cooling elements 21B. The skilled artisan will appreciate, however, that the one or more heating and/or cooling elements may be arranged side-by-side (e.g. heating elements 401A and 401B of FIG. 25A), in a staggered arrangement (e.g., compare heating elements 401A and 401B versus heating elements 411A and 411B), may be spaced evenly, may be spaced randomly, etc. In some embodiments, one or more heating and/or cooling elements may be positioned beneath a substrate stage. In other embodiments, one or more heating and/or cooling elements may be positioned beneath a substrate stage while additional heating and/or cooling elements are positioned beside the one or more heating and/or cooling elements positioned beneath the substrate stage, whereby the additional heating and/or cooling elements flank the one or more heating and/or cooling elements positioned beneath the substrate stage (see FIGS. 25C, 25D, and 25F).

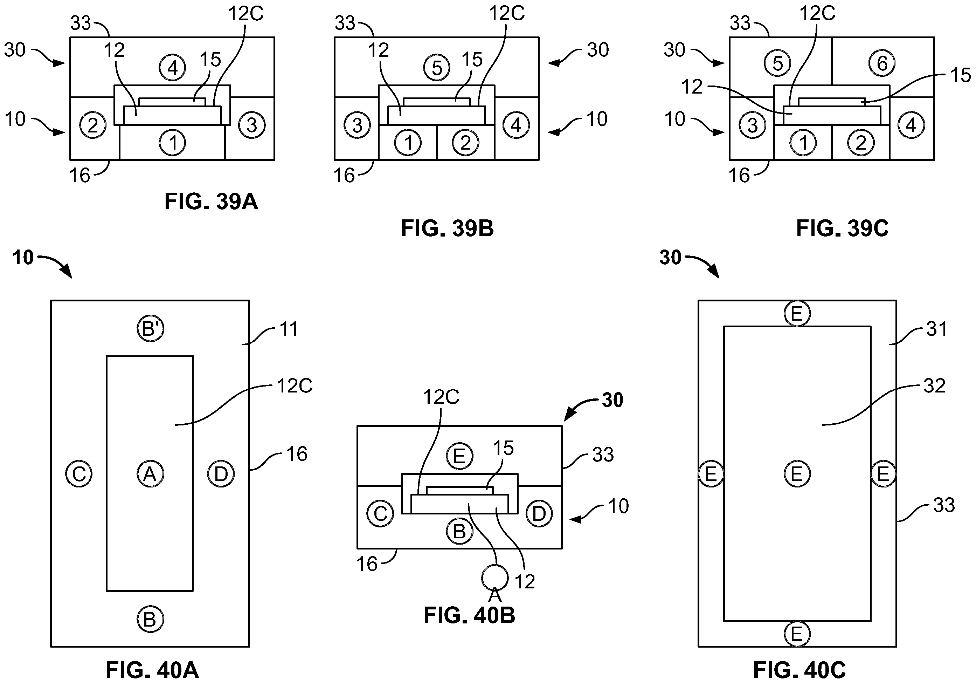

In some embodiments, the one or more heating and/or cooling elements may be arranged such that during their operation (such as during any heating and/or cooling steps, temperature ramp-up or temperature ramp-down steps), their arrangement and/or positioning relative to the body of the lower plate enables a temperature (or thermal) gradient to be established between different portions of the body 16 of the lower plate 10. In some embodiments, the one or more heating and/or cooling elements are arranged such that during operation a temperature gradient is established between the substrate stage and those portions of the body surrounding the substrate stage. In this regard, the temperature gradient enables the substrate stage (or at least a portion of the substrate disposed thereon) to be held at a comparatively lower temperature than other adjacent areas of the body 16 of the lower plate 10. For instance, and with reference to FIG. 40A, the surface 12C of substrate stage 12 may be maintained at a temperature A, while those portions of the body 16 of the lower plate 10 surrounding or adjacent to the substrate stage 12 may be maintained at temperatures B, B', C, and D. Following this particular example, a temperature gradient may be established between A and B, between A and B', between A and C, and between A and D. In some embodiments, when temperature A is maintained at a temperature less than any of the temperatures B, B', C, and D, the surface 12C of the substrate stage 12 will comparatively be the "coldest" portion of the lower plate 10.

In some embodiments, a temperature gradient is established and maintained during a temperature ramp-up phase (e.g. heating) and during a temperature ramp-down phase (e.g. cooling or reducing the amount of heat supplied). In some embodiments, even before the temperature ramp-up phase initiates, the temperature of the substrate stage is maintained at a temperature which is comparatively colder than the surrounding and/or adjacent portions of body 16. It is believed that establishing and maintaining the temperature gradient even during temperature ramp-up and ramp-down enables at least a portion of the substrate to be maintained comparatively cooler than other parts of the body of the lower plate. In this regard, when the lower plate and upper plate (described herein) are in communication with one another such that a chamber is formed therebetween (such as forming a chamber enclosing the substrate and/or substrate stage), at least a portion of the substrate and/or substrate stage are maintained as the "coldest" component within the formed chamber, for example, colder than any other portions of the upper and/or lower plate, colder than any nozzles, ports, temperature probes, pressure sensors, etc.

For example, the one or more heating and/or cooling elements may be independently operated such that during any temperature ramp-up phase, the surface 12C of substrate stage 12 is maintained at all times at a temperature which is less than the temperature of the surrounding and/or adjacent areas of body 16. That is, at any one particular time during a temperature ramp-up phase, the substrate stage 12 is maintained, in some embodiments, at a temperature lower than the surrounding and/or adjacent portions of body 16. For example, and with reference to FIG. 40A, assuming that a temperature ramp-up takes place over a 10-minute time period, if one were to take a temperature measurement at a time of 3 minutes, temperature A would be comparatively less than temperatures B, B', C, and/or D. Likewise, if one were to take a second temperature measurement at a time of 7 minutes, temperature A would be comparatively less than temperatures B, B', C, and/or D. Following this example further, once a pre-determined temperature is reached for any one of the portions A, B, B', C, and/or D (such as at a time point of 10 minutes), the temperature measurement of A taken at this time point would again be comparatively less than temperatures B, B', C, and/or D.

As described in further detail herein, this is believed to enable any substrate supported by the substrate stage (or any portion of the substrate) to have a comparatively lower temperature than adjacent portions of the body of the lower plate. In some embodiments, the temperature gradient between a substrate stage and portions of the body 16 flanking the substrate stage ranges from between 5°C and 50°C. In other embodiments, the temperature gradient between a substrate stage and portions of the body 16 flanking the substrate stage ranges from between 5°C and 40°C. In yet other embodiments, the thermal gradient between a substrate stage and portions of the body 16 flanking the substrate stage ranges from between 5°C and 30°C. In further embodiments, the temperature gradient between a substrate stage and portions of the body 16 flanking the substrate stage ranges from between 5°C and 25°C. In yet further embodiments, the temperature gradient between a substrate stage and portions of the body 16 flanking the substrate stage ranges from between 5°C and 20°C. In other embodiments, the temperature gradient between a substrate stage and portions of the body 16 flanking the substrate stage ranges from between 5°C and 15°C. In other embodiments, the temperature gradient between a substrate stage and portions of the body 16 flanking the substrate stage ranges from between 5°C and 10°C.

The one or more heating and/or cooling elements embedded within the body 16 of the lower plate 10 may be of any type known to those of skilled in the art, including any of those described herein. The skilled artisan will appreciate that in those lower plate embodiments which include more than one heating and/or cooling element, the same or different types of heating and/cooling elements may be utilized. By way of example only, the body 16 of lower plate 10 may include one or more fluid channels for circulating a fluid to effectuate heating and/or cooling of the body, and the body 16 may also include one or more bores into which one or more heating modules (e.g. heating cartridges) may be inserted. By way of another example, the body 16 of the lower plate 10 may include a thermoelectric cooling module to enable cooling to a temperature below room temperature and also one or more fluid tubes or channels for circulating a fluid having a temperature above room temperature.

In some embodiments, the one or more heating elements 21 include a heating cartridge. Suitable heating cartridges include those described in U.S. Patent Nos. 3,927,301, 4,617,455, 1,882,365, and 1,433,691. In some embodiments, the heating cartridge includes a heating foil bent around a cylindrical inner core, such as a ceramic inner core, fully covered by a metallic cylinder.

The body 16 of lower plate 10 may include one or more bores into which a heating module, e.g. a heating cartridge may be inserted. In some embodiments, any number of bores may be provided within the body 16 of a lower plate 10, e.g. 1 bore, 2 bores, 3 bores, 4 bores, 6 bores, 8 bores, 12 bores, etc. The bores may be arranged in any manner within the body 16 of the lower plate. As such, the body 16 may accommodate 1, 2, 3, 4, 6, 8, 12, etc. heating cartridges. For example, FIGS. 25A and 25C each illustrates a body 16 having two bores 401A and 401B into which heating cartridges may be inserted.

In some embodiments, one or more bores may be evenly spaced apart from one another. In other embodiments, the one or more bores may be randomly spaced. In some embodiments, the bores are open to the longitudinal side of the lower plate 10 (see, e.g., FIG. 1D which illustrates the longitudinal side of the lower plate 10). Alternatively, in in other embodiments, the bores may be open on the "short side" of the lower plate, as illustrated in FIG. 25A. As illustrated in FIG. 25F, the bores may traverse the entire length of the body 16 of the lower plate (see bore 401B) or may run only partially through the body 16 of the lower plate 10 (see bores 401A and 401C). The bores themselves may independently have any size and/or diameter.

In some embodiments, each of the one or more heating cartridges inserted into the body 16 may be independently operable. For example, assuming that a body 16 of a lower plate 10 includes three heating cartridges inserted into each of three different bores, each of the three heating cartridges may be independently operable, for example heating cartridges 1 and 3 may be operated at 80% of their power rating while cartridge 2 is operated at 40% of its power rating.

In other embodiments, the one or more heating elements 21 embedded within the body 16 include a ceramic element having an electrically conductive ceramic material sintered into a shell of insulating ceramic material. In other embodiments, the one or more heating elements 21 embedded within the body 16 include a resistive electrical heater. In yet other embodiments, the one or more heating elements 21 embedded within the body 16 includes an induction coil. In further embodiments, the one or more heating elements embedded within the body 16 utilize one of infrared radiation or microwave radiation to heat a substrate or a sample disposed on the substrate. In some embodiments, infrared radiation or microwave radiation is used to heat a fluid, such as fluid present within a reservoir or present on a substrate. In these embodiments, the fluid is heated with infrared radiation or microwave radiation such that steam is generated. In some embodiments, the generated steam is used to heat the sample and/or pressurize a chamber formed from the lower plate and a complementary upper plate as described further herein.

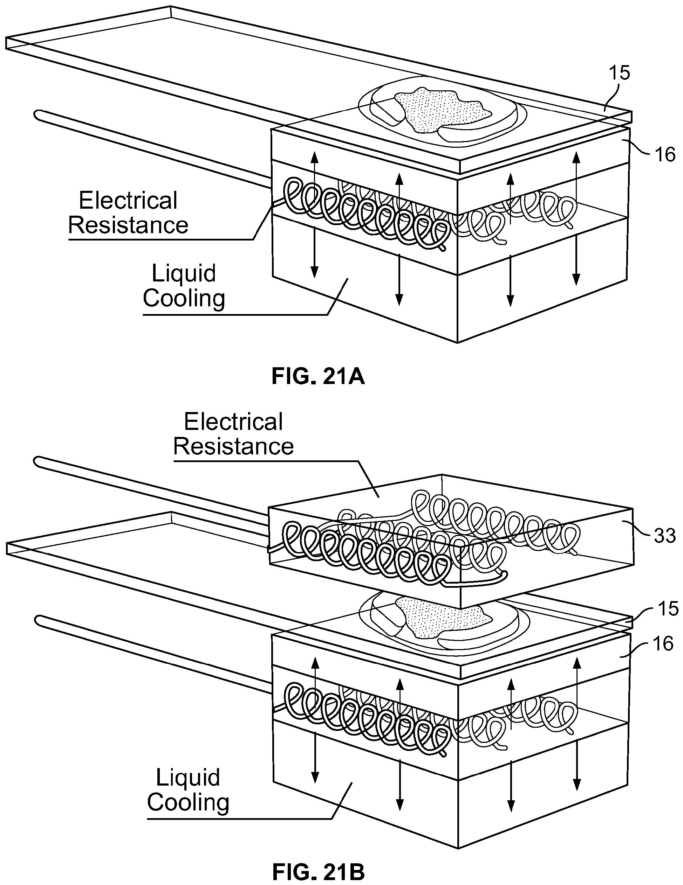

In other embodiments, the one or more heating elements embedded within the body 16 are selected from one or more of a heating foil, a heating wire, or a heating band. Additional embodiments illustrating the use of heating elements and/or cooling elements in the upper and lower plates are illustrate din FIGS. 21A - 21D. In some embodiments, any of the heating and/or cooling elements within the lower plate 10 may be operated in conjunction with those heating and/or cooling elements within an upper plate 30 or with any thermal management module. As a result, the skilled artisan will appreciate that by controlling the various heating and/or cooling elements present in the upper and lower plates and/or in the thermal management module, that the temperature of the substrate stage, any substrate supported by the substrate stage, and/or the chamber may be regulated, e.g. regulated to maintain at least a portion of the specimen or at least a portion of the substrate as the coldest component within any chamber formed from upper and lower plates.

In some embodiments, the one or more heating elements or cooling elements 21 embedded within the body 16 includes a Peltier device or includes a thermoelectric module 402. Suitable Peltier devices include any of those described within U.S. Pat. Nos. 4,685,081, 5,028,988, 5,040,381, and 5,079,618, the disclosures of which are hereby incorporated by reference herein in their entireties. By way of example, FIG. 25E which illustrates a thermoelectric module embedded within the body 16 of the lower plate 10, where a "hot side" of the thermoelectric module is in thermal communication with the body 16 of the lower plate 10. Of course, a "cold side" of the thermoelectric module may similarly be in thermal communication with the body 16 of the lower plate 10.

In other embodiments, the one or more heating elements and/or cooling elements 21 embedded within the body 16 include one or more fluid channels, where the one or more fluid channels serve to circulate a fluid within the body 16 of the lower plate 10. In some embodiments, the fluid is a heating oil. In other embodiments, the fluid is a mixture, such as an aqueous mixture including a polyol (e.g. polyethylene glycol or polypropylene glycol) and/or an alcohol (e.g. ethanol or methanol).

The one or more fluid channels embedded within the body 16 of the lower plate may have any configuration and may be independently operable. For example, and with reference to FIGS. 25B and 25F, the one or more fluid channels 411A and 411B may be arranged as two independent parallel conduits which independently permit the flow of a suitable fluid through the body 16, for example flow through a first opening (414A and 414B) on one side of the body 16, flow through the fluid channels 411A and 411B, and flow out of a second opening (413A and 413B) on the opposite side of body 16. In this particular example, the fluid channels 411A and 411B may each be configured for cooling, may each be configured for heating, or one may be configured for heating while the other is configured for cooling. Likewise, the fluid channels 411A and 411B, while both configured for heating, may be configured to heat at different temperatures.

FIG. 25D, which shows a cross section of a body 16, illustrates yet another example of a body 16 of a lower plate 10 including a plurality of fluid channels 411A - 411D. In this particular embodiment, the plurality of fluid channels 411A - 411D may each be independent fluid channels, may all be interconnected, or some of the fluid channels may be interconnected (e.g. 411B and 411C may be interconnected) while others are not. In some embodiments, some of the fluid channels 411A - 411D may be used for circulating a fluid for heating the body 16, the substrate stage 12, the substrate 15, or any specimen deposited on substrate 15; while others of the fluid channels 411A - 411D may be used for circulating a fluid for cooling the body 16, the substrate stage 12, the substrate 15, or any specimen deposited on substrate 15. In some embodiments, the one or more fluid channels are in communication with one or more fluid delivery line, ports, fluid reservoirs, heating devices, cooling devices, heat exchanges, pumps, and/or valves such that fluid may be supplied independently to each fluid channel.

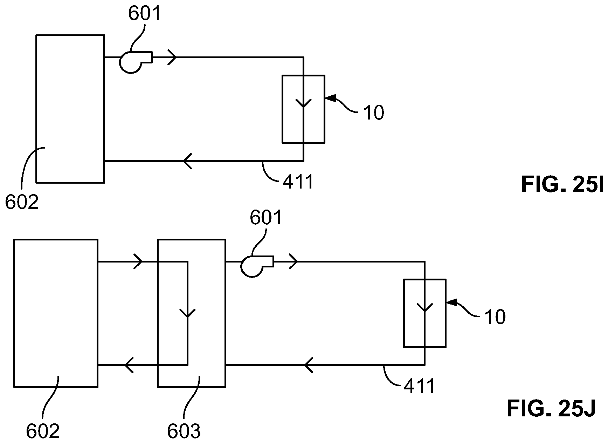

Alternatively, the one or more fluids channels may include a network 412 of fluid channels, such as those depicted in FIG. 25G. The network 412 of fluid channels may include one or more independently controllable inlets 414, outlets 413, or valves (not depicted) so as to direct the circulation along a particular fluid flow path, or to provider circulation within only a portion of the network of channels. In some embodiments, the network of fluid channels may be in communication with a fluid reservoir (not depicted), and where the fluid reservoir may be heated or cooled as needed. In some embodiments, the lower plate includes more than one network of fluid channels. For example, FIG. 25H illustrates a lower plate 10 including a first network of fluid channels 412A and a second network of fluid channels 412B. Each of the networks of fluid channels 412A and 412B may be independently operated, e.g. may each include a fluid heated to different temperatures, may each have different fluid flow rates, etc. FIGS. 25I and 25J both illustrate a lower plate 10 having at least one fluid channel 411 disposed therein, and wherein the fluid channel is in communication with a recirculation pump 601 and a chiller 602. In some embodiments, the fluid channel 411 is in further communication with a fluid reservoir.

In some embodiments, the substrate or the sample disposed on the substrate may be heated with steam, such as described herein. In these embodiments, heating and/or cooling elements within the lower plate may be used for thermal management in conjunction with the introduction of steam to a specimen disposed on a substrate.

In some embodiments, the lower plate may include one or more cooling elements. In some embodiments, the one or more cooling elements are active cooling elements. By way of example, an active cooling element may include one or more fluid channels to facilitate the flow of a coolant and thus provide active cooling of the sample, the upper plate, and/or the lower plate as noted above.

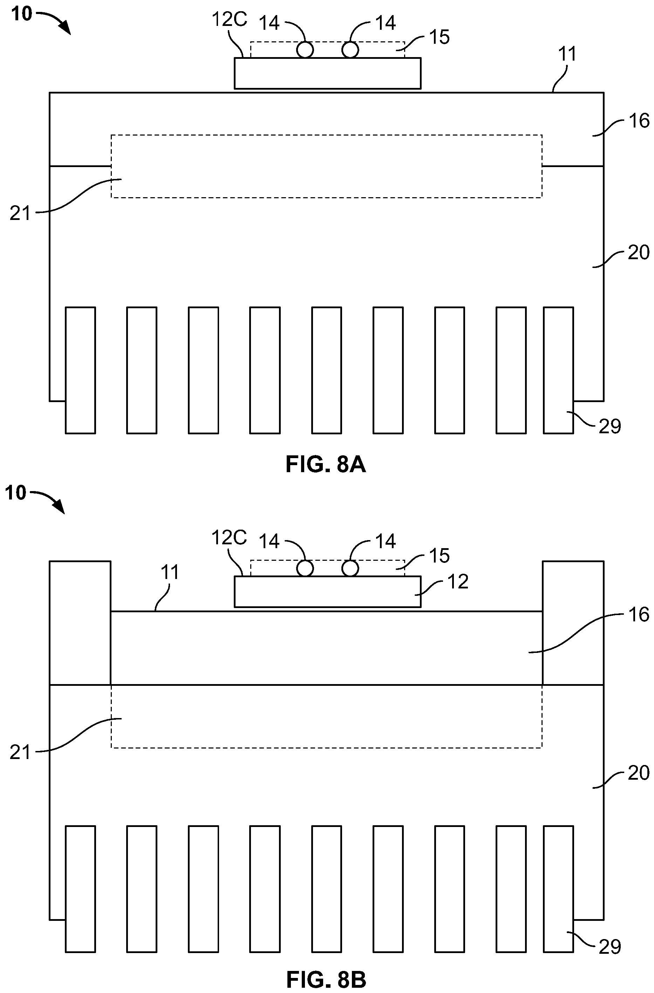

In other embodiments, the one or more cooling elements are passive cooling elements, e.g. heat sinks. In some embodiments, the lower plate 10 includes a heat sink. In some embodiments, the heat sink is integral with the lower plate 10. In some embodiments, the heat sink is formed within the body 16 of the lower plate. In other embodiments, the heat sink is formed within a housing member 20 engageable with the body 16, such as described further herein. For example, as depicted in FIGS. 8A and 8B, a heat sink 29 may be integral with a housing member 20. In other embodiments, a heat sink may be fixedly secured to a bottom surface lower plate 10, e.g. may be glued onto, screwed onto, or clipped onto either the body 16 or housing member 20. In some embodiments, the heat sink is a liquid-cooled heat sink, or the heat sink includes one or more fans, thermoelectric coolers, or any combination thereof.

As noted above, in those embodiments where the body 16 of lower plate 10 includes two or more heating and/or cooling elements 21, the two or more heating and/or cooling elements 21 may be the same or different. For example, FIGS. 25C and 25F each illustrates a body 16 of a lower plate 10 including two different types of heating and/or cooling elements. In these specific example, the body 16 includes two fluid channels 411A and 411B (which may be interconnected and/or independent of one another) and two bores 401A and 401B into which heating cartridges may be inserted. In this particular embodiment, the two fluid channels may independently be used for heating and/or cooling the body 16, the substrate stage 12, the substrate 15, or any specimen deposited on substrate 15.

In some embodiments, the two independently operable fluid channels 411A and 411B may be used to establish a first temperature (e.g. 95°), while the two independently operable heating cartridges within bores 401A and 401B may be used to establish a second temperature (e.g. 140°C). In this way, a temperature gradient may be established across portions of the body 16 of the lower plate 10. Following the above example further, the portion of the body 16 beneath the substrate stage 12 may comparatively have a lower temperature than the temperature established at the periphery of the body 16 due to the arrangement of the various heating and/or cooling elements and the temperatures attained by each of the various heating and/or cooling elements. According to this example, the substrate 15 supported by the substrate stage 12 may have a comparatively lower temperature than the periphery of the body, again due to the established temperature gradient.

In some embodiments, the lower plate 10 may include a device for mixing of fluids and/or reagents disposed on the surface of substrate 15. In some embodiments, the device for mixing of fluids and/or reagents is a contactless mixing device. In some embodiments, the device for contactlessly mixing fluids and/or reagents may be integrated into the body of the lower plate. In other embodiments, the device of contactlessly mixing fluids and/or reagents may in coupled to the body of the lower plate. In some embodiments, the lower plate 10 may include an element or be in communication with an element capable of providing vibrations to the substrate 15 supported by substrate stage 12. In other embodiments, the lower plate 10 may include an acoustic wave generator, such as a transducer. In some embodiments, the transducer is a mechanical transducer. In other embodiments, the transducer is a piezoelectric transducer. In some embodiments, the transducer is composed of a piezoelectric wafer that generates a mechanical vibration. In some embodiments, a surface transducer is used to distribute or mix a fluid volume on-slide. Suitable devices and methods for contactless mixing are described in PCT Publication No. WO/2018/215844, the disclosure of which is hereby incorporated by reference herein in its entirety.

In some embodiments, the lower plate 10 (or the body 16 or housing member 20) is formed by machine or milling a block of solid material. In other embodiments, the lower plate 10 (or the body 16 or housing member 20) is formed through a 3D printing process. In other embodiments, the lower plate 10 or any portion thereof is produced from a mold. The lower plate 10 may be fabricated from any material. For example, the lower plate 10 or any constituent part thereof, may be made from a metal or an alloy; ceramic; glass; glass epoxy laminates, or plastic (e.g. derived from a polymer, a copolymer, or a polymer or co-polymer blend). Examples of suitable polymers include, but are not limited to, polyether ether ketone, polyimides, polyetherimide, polytetrafluoroethylene, polysulfones, polyvinylidene difluoride, and polyphenylene sulfide. Examples of suitable metal materials include aluminum and steel. In some embodiments, if the lower plate is made from a metal, the metal may be coated or uncoated (e.g. coated with a fluoropolymer).

In some embodiments, the lower plate has a total mass ranging from between about 30 grams to 200 grams. In other embodiments, the lower plate has a total mass ranging from between about 40 grams to 180 grams. In yet other embodiments, the lower plate has a total mass ranging from between about 40 grams to 160 grams. In yet other embodiments, the lower plate has a total mass ranging from between about 40 grams to 140 grams. In other embodiments, the lower plate has a total mass ranging from between about 40 grams to 120 grams. In other embodiments, the lower plate has a total mass ranging from between about 50 grams to 120 grams. In other embodiments, the lower plate has a total mass ranging from between about 50 grams to 100 grams.

In some embodiments, the lower plate has a thermal capacity ranging from between about 40 J/C to about 110 J/C. In some embodiments, the lower plate has a thermal capacity ranging from between about 40 J/C to about 100 J/C. In some embodiments, the lower plate has a thermal capacity ranging from between about 40 J/C to about 90 J/C. In some embodiments, the lower plate has a thermal capacity ranging from between about 50 J/C to about 80 J/C. In some embodiments, the lower plate has a thermal capacity ranging from between about 50 J/C to about 70 J/C. In some embodiments, the lower plate has a thermal capacity ranging from between about 55 J/C to about 75 J/C.

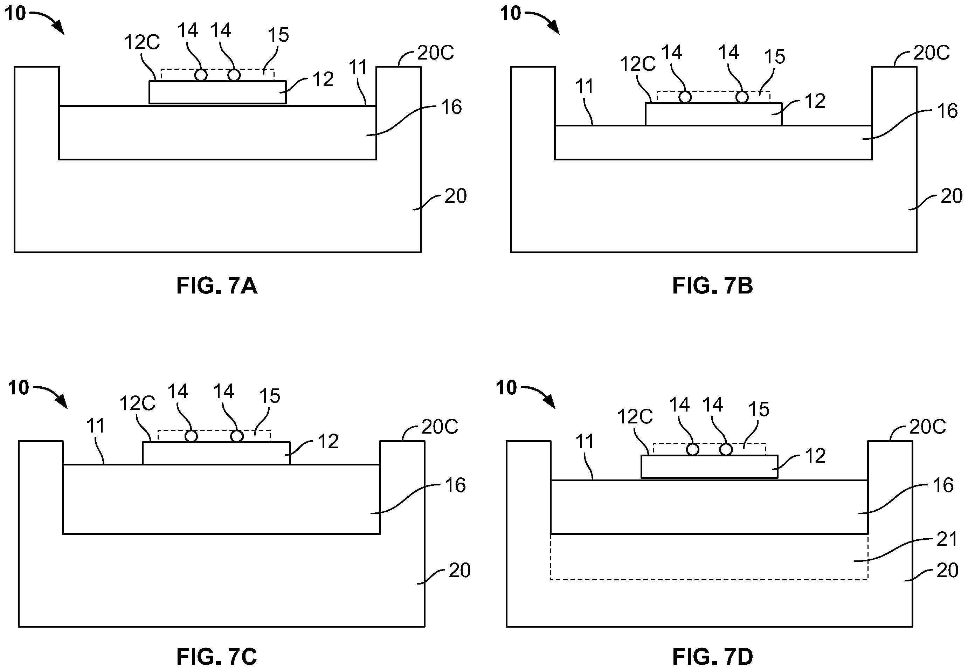

With reference to at least FIGS. 7A - 7D, 8A and 8B, in some embodiments the lower plate 10 includes a body 16 and a housing member 20. As noted above, in some embodiments, the body 16 of the lower plate 10 and the housing member 20 are integral with each other and formed from a single monolithic block, e.g. milled or machined from a single monolithic block. In other embodiments, the body 16 of the lower plate 10 is adapted to fit (e.g. releasably fit) within a housing member 20 (see FIGS. 7A - 7D and 8B). In alternative embodiments, the body 16 of the lower plate 10 is fixedly attached to the housing member 20, e.g. glued into, screwed into, or clamped onto the housing member 20. In other embodiments, the body 16 of the lower plate 10 is removably engageable with the housing member 20.

For example, the body 16 of the lower plate 10 may be inserted into and removed from the housing member 20 on an as-needed basis. Here, a single type of lower plate 10 may be designed and used with various types of housing members 20, where the various housing members may have different shapes and/or designs (e.g. a housing member including an integral heat sink; a housing member including one or more heating and/or cooling elements without an integral heat sink). In some embodiments, the housing member 20 is configured to receive the body 16 such that an upper surface 12C of the substrate stage 12 is recessed relative to an upper surface 20C of the housing member 20 (FIGS. 7A and 8B).

In other embodiments, the housing member 20 is configured to receive the body 16 such that an upper surface 12C of the substrate stage 12 is level with an upper surface 20C of the housing member 20 (FIG. 7B). In yet other embodiments, the housing member 20 is configured to receive the body 16 such that an upper surface 12C of the substrate stage 12 is raised relative to an upper surface 20C of the housing member 20 (FIG. 7C). In further embodiments, such as depicted in FIG. 7D, the housing member 20 includes one or more heating and/or cooling elements 21 in thermal communication with the body 16, and the one or more heating and/or cooling elements 21 may include any combination of those described herein. Again, with reference to FIG, 7D, the one or more heating and/or cooling elements 21 may be sandwiched between the body 16 of the lower plate 10 and the housing member 20. Alternatively, the one or more heating and/or cooling elements may be provided solely in either one or both of the body 16 of the lower plate 10 and/or the housing member 20.

In some embodiments, the lower plate 710 has a modular design (see, e.g. FIGS. 26A - 26E). It is believed that a lower plate having a modular design enables the lower plate (or any portion thereof) to be used in a multitude of different specimen processing assemblies 100 and in multiple different ways for multiple different purposes. For instance, a modular lower plate 710 may be adapted to rest on, engage with, or couple to other components of the specimen processing assembly 100.

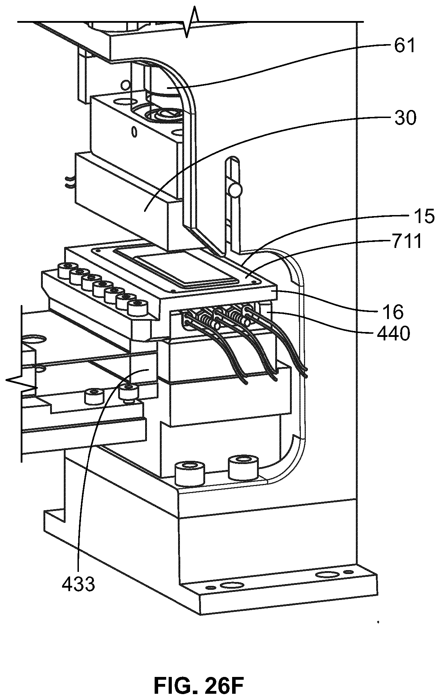

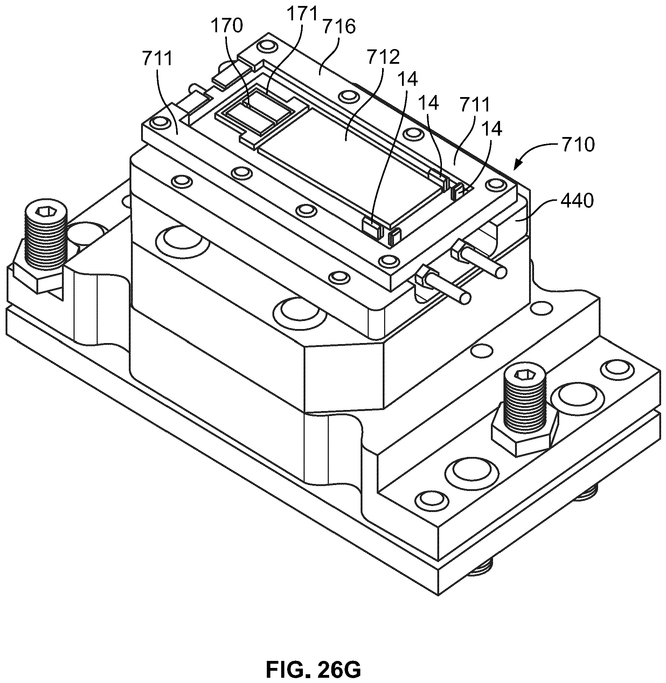

In some embodiments, a modular lower plate 710 includes a body 716 having a lower engagement surface 711. In some embodiments, the modular lower plate 710 includes a thermal management module (described herein). In some embodiments, the body 716 may rest on, engage with, or couple to the thermal management module 440. FIGS. 26 For example, FIG. 26A - 26G each illustrate a body 716 resting on a thermal management module 440.

In some embodiments, the body 716 includes a substrate stage 712 that is part of and integral with body 716. In some embodiments, the body 716 may be picked up, transported to, and deposited onto a thermal management module 440 while a substrate is supported by the substrate stage of body 716 (where the body 716 including the substrate stage 712 and the thermal management module 440 together constitute the modular lower plate 710). In some embodiments, the body 716 may be transported between different thermal management modules 440 or between different components of the specimen processing assembly 100 or system 200. In some embodiments, the body 716 may itself include any of the components described herein with regard to the body 16 of the lower plate 10, e.g. one or more heating and/or cooling elements, one or more alignment members, etc. The body 716 may be comprised of any material, including any of those described herein with regard to the lower plate 10.

In other embodiments, the body 716 includes a lower engagement surface but does not include an integral substrate stage. Rather, the modular lower plate 710 includes a body 716 having a separable substrate stage. In this way, a separable substrate stage may be used as a carrier for a substrate. For example, a substrate may be disposed onto the separable substrate stage and together the substrate and the separable substrate stage pair may be picked up, transported to, and deposited onto a body 716. Following this example further, once an unmasking operation is completed using the modular lower plate 710 (e.g. including the separate substrate stage, the body 716, and a thermal management module), the separable substrate stage (again acting as a carrier for the substrate) may be picked up and transported to other components of the specimen processing assembly 100 or system 200. For example, the separable substrate and separable substrate stage may together be transported to a staining apparatus or a coverslipping apparatus. In some embodiments, a substrate and a separate substrate stage pair remain together throughout all processing steps in system 200.

In some embodiments, and with reference to FIG. 26A, the modular lower plate 710 includes a body 716 having a substrate stage 712 and a lower engagement surface 711, where the body 716 is in thermal communication with a thermal management module 440. In some embodiments, the thermal management module 440 includes one or more heating and/or cooling elements 21, including any of those heating elements and cooling described herein. For example, the thermal management module 440 may include any number of heating and/or cooling elements, e.g. 1 heating element, 1 cooling element, 1 heating element and 1 cooling element, 2 heating elements and 1 cooling element, 2 heating elements, 2 cooling elements, 2 heating elements and 2 cooling elements, etc. In some embodiments, the thermal management module 440 may be used to maintain and establish any of the temperature gradients described herein. In some embodiments, both the body 716 and the one or more thermal management modules 440 include one or more heating and/or cooling elements 21 (see, e.g., FIG. 26B).

In some embodiments, and with reference to at least FIGS. 26C and 26D, the thermal management module 440 includes one or more electrical contacts and/or one or more ports, e.g. one or more electrical contacts for supplying power to another system component and/or one or more ports for supplying fluid to a fluid channel or for receiving fluid from a reservoir. Likewise, the body 716 of the modular lower plate 710 may include one or more complementary electrical contacts for receiving power from the thermal management module 440 and/or one or more complementary ports for receiving fluid from the thermal management module 440.

For example, and as illustrated in FIG. 26C, the body 716 of the modular lower plate 710 may include one or more bores 401A and 401B into which heating cartridges are inserted. To maintain the ability for the body 716 to be transportable between different processing areas and/or different specimen processing assemblies 100 (or even other system 200 components) and without hindrance from electrical wiring connected to the body 716 or its sub-components, the body 716 may include one or more electrical contacts 442A and 442B such that power may be received from a thermal management module 440. Likewise, and as illustrated in FIGS. 26C and 26D, the body 716 may include one or more fluid channels 411, where fluid may be received into the fluid channels 411 via one or more ports 441A and 441B, the ports 411A and 441B being complementary to the one or more ports on the thermal management module 440. In this way, the body 716 of the modular lower plate 710 may be moved without being directly connected to any fluid delivery lines.

FIG. 26E illustrates another embodiment where a body 716 is in thermal communication with a thermal management module 440, where the body 716 of the modular lower plate 710 includes bores 401A and 401B into which heating cartridges may be inserted, and where the body 716 of the modular lower plate 710 includes electrical contacts 442A and 442B for providing power to the heating cartridges inserted into bores 401A and 401B. The embodiment depicted in FIG. 26E further illustrates that the thermal management module 440 may include one or more independent fluid channels 411A and 411B. In this particular modular lower plate 710 configuration, power may be delivered from the thermal management module 440 via electrical contacts 442A and 442B to heating cartridges inserted into bores 401A and 401B to effectuate heating of the body 716 of the modular lower plate 710 and/or the substrate stage 712. At the same time, the thermal management module 440 may provide additional heating to the body 716 of the modular lower plate 710 and/or the substrate stage 712; or may provide cooling to the body 716 of the modular lower plate 710 and/or the substrate stage 712 depending on the temperature of the fluid circulated within fluid channels 411A and 411B.

FIG. 26F illustrates a substrate 15 positioned on a substrate stage (not shown), the substrate stage being integral with the body 716. In this particular embodiment, the body 716 is shown in thermal communication with a thermal management module 440 including one or more heating and/or cooling elements. FIG. 26F further depicts the body 716 in communication with a transport member 433, such that the transport member 433 is capable of delivering the body 716 to a position above the thermal management module 440 but below an upper plate 30. FIG. 26G illustrates a substrate stage 712 integral with a body 716 of a modular lower plate 710, where the body 716 further includes a lower engagement surface 711, a vacuum port 170, and a vacuum sealing element 171. The body 716 of the modular lower plate 710 is depicted as being supported by and in thermal communication with a thermal management module 440.

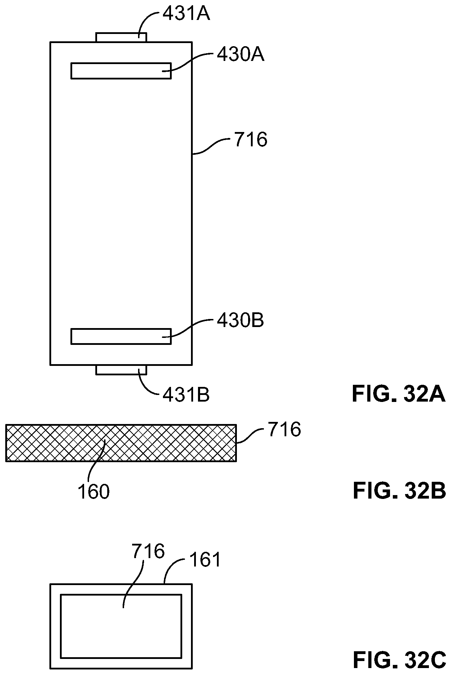

With reference to FIG. 32A, the body 716 may further include one or more attachment members 431A and 431B located on opposite ends (e.g. longitudinal ends) of the body 716. In some embodiments, the one or more attachment members 431A and 431B facilitate the movement of the body 716 by one or more grippers or other devices configured to pick up and/or move the body 716, such as in any one of the x, y, and z coordinate directions. For example, a gripper or other pickup device may be configured to pick up and move a body 716 710 by holding onto the first and second attachment members 431A and 431B. In yet other embodiments, the body 716 may include one or more notches 430A and 430B within the lower surface of body 716 such that a gripper or pickup device (described further herein) may cradle the body 716 from beneath, thus supporting it during any transport operation (see FIG. 32A).

In some embodiments, one or more sides of the body 716 have a surface which has been roughened or patterned 160 (see FIG. 32B) so as to increase friction between the one or more sides of the body 716 and a gripper or other pickup device configured to grasp the body 716. In other embodiments, one or more sides of the body 716 have a surface which includes a coating 161 (see FIG. 32C), such as a polymer coating, so as to increase friction between the one or more coated sides the of the body 716 710 and a gripper or other pickup device configured to grasp the body 716.

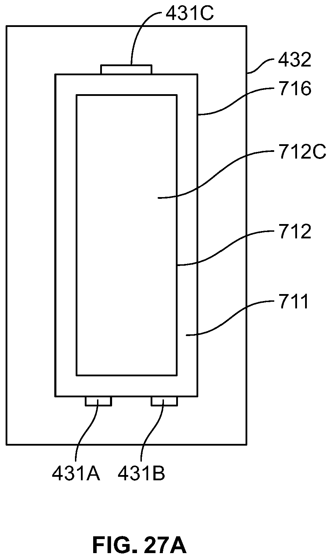

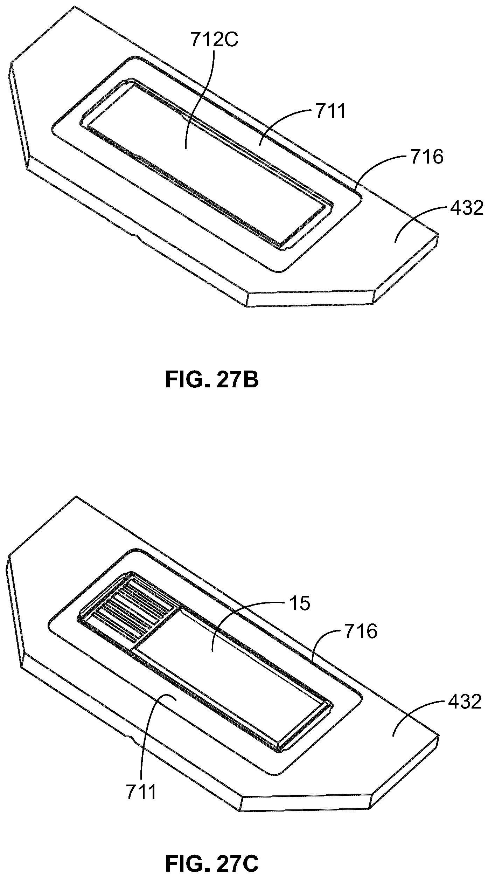

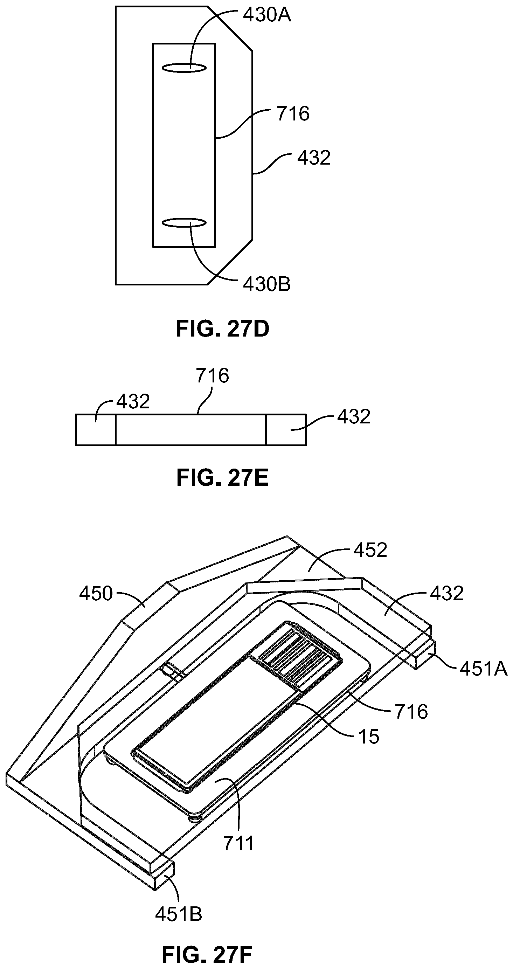

As depicted in FIGS. 27A - 27E, a body 716 having a substrate stage 712 and a lower engagement surface 711 may be incorporated within a carrier block 432. The carrier block 432 may have any size or shape. In some embodiments, the carrier block has a size and/or shape which facilitates it being picked up by a gripper device 460 or other pickup device. FIG. 27D illustrates a bottom view of a body 716 incorporated within a carrier block 432. FIG. 27E illustrates a side cutaway view of a body 716 incorporated within a carrier block 432.

In some embodiments, the body 716 may be fixed within the carrier block 432. In other embodiments, the body 716 is removably engageable with the carrier block 432. In some embodiments, a single body 716 may be used with differently sized and/or shaped carrier blocks 432. In some embodiments, the carrier block 432 is disposable while the body 716 is reusable. In some embodiments, and with reference to FIG. 27A, the body 716 further includes one or more attachment members 431A and 431B. In some embodiments, the one or more attachment members 431A and 431B are protrusions which emanate from the body 716 (e.g. from the longitudinal ends of the body) and which are integral with the body 716. In some embodiments, the attachment members 431A and 431B on body 716 may have any size and/or shape, provided that the carrier block 432 has a complementary shape which accommodates the attachment members 431A and 431B. In some embodiments, the one or more attachment members 431A and 431B facilitate the alignment of the body 716 within a carrier block 432 and/or secure the body 716 within the carrier block 432 while the combined body 716 and carrier block 432 are moved, such as moved to a thermal management module 440 or to other components of the specimen processing assembly 100 or system 200.

In some embodiments, the carrier block 432 is comprised of a material selected from polymers, copolymers, metals, etc. In some embodiments, the carrier block 432 is comprised of the same material as that of the body 716. In other embodiments, the body 716 is comprised of a first material (e.g. a metal) while the carrier block 432 is comprised of a second material (e.g. a heat-resistant copolymer). In some embodiments, one or more sides of the carrier block 432 have a surface which has been roughened or patterned so as to increase friction between the one or more sides of the carrier block 432 and the gripper or other pickup device. In other embodiments, one or more sides of the carrier block 432 have a surface which includes a coating, such as a polymer coating, so as to increase friction between the one or more coated sides the of the carrier block 432 and the gripper or other pickup device.

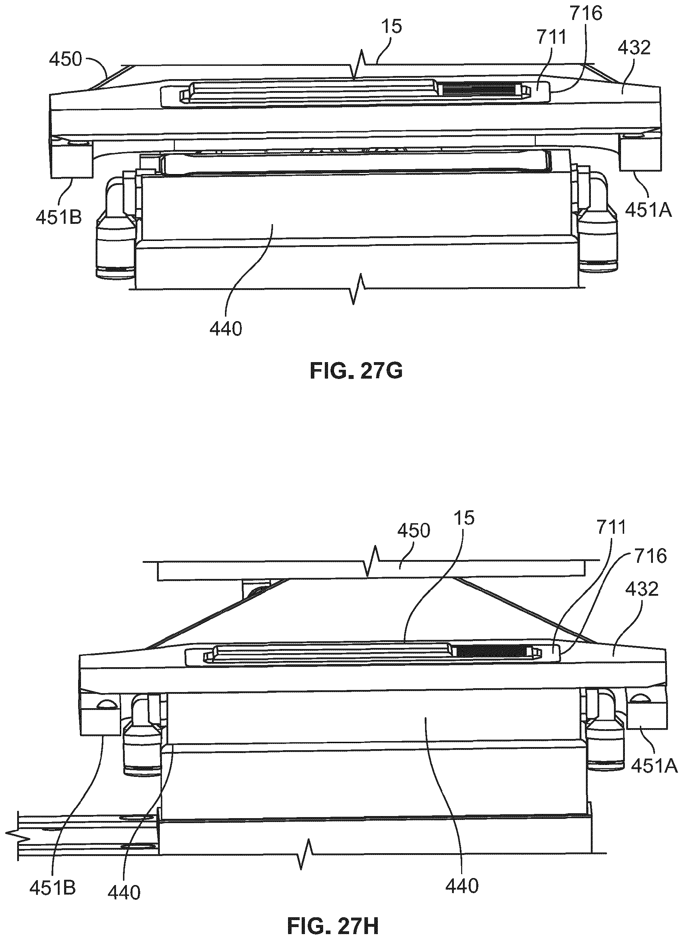

The movement of a body 716 including carrier block 432 is depicted in FIGS. 27F - 27H. Specifically, FIG. 27F illustrates a body 716 including a carrier block 432 in communication with a carrier pickup member 450. In some embodiments, the carrier pickup member 450 includes a carrier pickup body 452 and a pair of carrier pickup arms 451A and 451B. In some embodiments, the carrier pickup body 452 and carrier pickup arms 451A and 451B are configured to support the edges of carrier block 432. For example, the carrier block 432 may be sized to rest on top of a portion of the carrier pickup body 452 and both carrier pickup arms 451A and 451B. FIG. 27G illustrates a body 716 included a carrier block 432 after the carrier pickup body 450 and carrier block 432 have been moved to a position adjacent a thermal management module 440. As illustrated in FIG. 27G, the carrier block 432 is supported by at least carrier pickup arms 451A and 451B. FIG. 27H illustrates a body 716 including a carrier block 432 after the carrier 432 has been moved via a pick-up device (described herein) and positioned on top of a thermal management module 440. As illustrated in FIG. 27H, the carrier pickup arms 451A and 451B are no longer in communication with, e.g. supporting, the edges of carrier block 432. As depicted, the carrier pickup device and carrier pickup member may be moved away from the thermal management unit 440, while leaving the carrier block 432 and body 716 supported by the thermal management module 440.

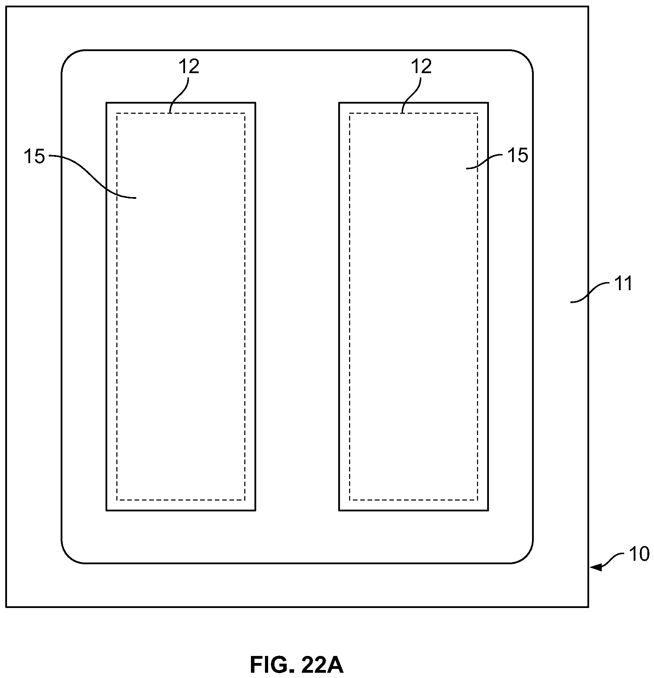

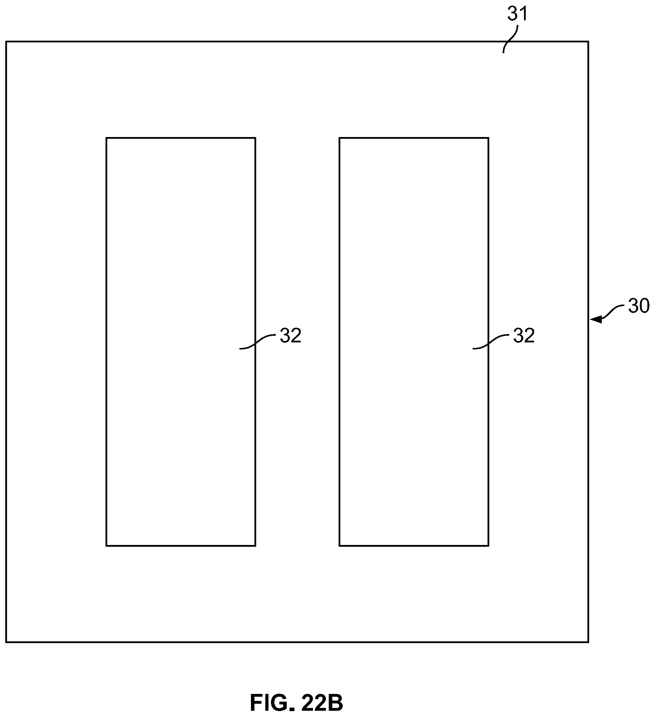

Although not depicted, in some embodiments, the lower plate may include two or more substrate stages. In other embodiments, the lower plate may include three or more substrate stages. In yet other embodiments, the lower plate may include four or more substrate stages. In further embodiments, the lower plate may include 10 or more substrate stages. By way of example, FIG. 22A illustrates a lower plate having two substrate stages 12 arranged parallel to each other. In embodiments where the lower plate includes two or more substrate stages, in some embodiments, an upper plate will include features which are complementary to the features of the lower plate having the two or more substrate stages (see, for example, FIG. 22B which includes two cavities 32 adapted to receive at least the substrates 15 of FIG. 22A). In such embodiments, complementary upper and lower plates may be brought together to form a chamber, whereby the chamber is adapted to process two or more substrates together. In some embodiments, the upper plate and the lower plate may be configured such that there is a divider between each substrate stage. In this way, the divider may act to provide separate processing chambers formed from a single upper plate and a single lower plate. In some embodiments, each of the multiple substrates may be heated by the same heating element or each may be heated independently with a separate heating element, such as separate heating elements embedded within each substrate stage. Other features of the chamber and how the chamber is formed from lower and upper plates having certain complementary features are described herein.

### UPPER PLATE

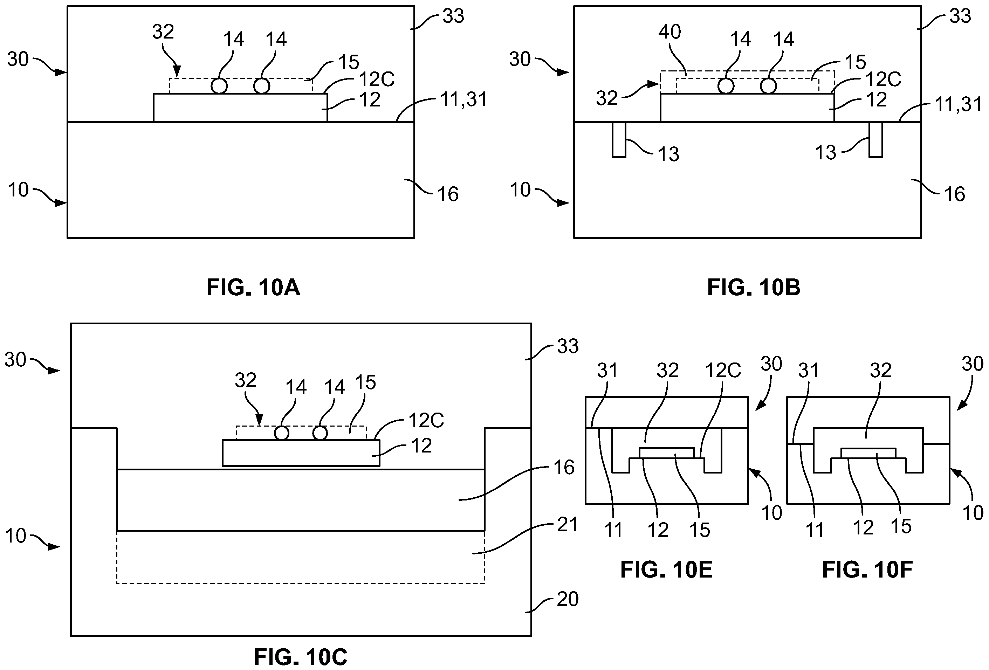

The specimen processing assemblies of the present disclosure include at least one upper plate, such as those illustrated in FIGS. 9A - 9H. With reference to FIG. 9A, in some embodiments, the upper plate 30 includes a body 33 having an upper engagement surface 31. In some embodiments, the upper plate 30 further includes one or more cavities 32 (at least FIG. 9A), for example one or more cavities recessed into the body 33. In some embodiments, the upper plate may include a body 33 having an upper engagement surface 31, but unlike the embodiment depicted in FIG. 9A, the upper plate 30 may not include a recessed cavity (see, for example, FIG. 10E).

In some embodiments, the upper plate 30 includes elements which are complementary to features of the lower plate 10. In some embodiments, the features of the upper plate 30 at least partially conform to features present on the lower plate 10. In particular, the upper plate 30 includes elements which are adapted to conform to those features of the lower plate 10 such that when the upper and lower plates are brought together, a chamber may be formed. In this regard, the upper and lower plates may be considered the complements of one another, such that the upper plate is adapted to accommodate features of the lower plate (or vice versa).

As with the lower plate 10, the upper plate 30 may have any size or shape, provided the upper plate 30 is complementary to the lower plate 10. For example, as depicted in FIGS. 9A - 9H, the upper plate 30 may have a generally rectangular shape whereby both the rectangular upper and lower plates are complementary to each other. Alternatively, and as illustrated in FIGS. 6A and 6B, the upper and lower plates 30 and 10, respectively, may both have a wedge-based shape, whereby the upper plate 30 includes an upper engagement surface 31 having a size and/or shape which is complementary to the size and/or shape of the lower engagement surface 11 or 711, but where the upper and lower surfaces have differing conformations.

The cavity 32 itself may have any size or shape. In some embodiments, the cavity 32 has a size and/or shape adapted to accommodate features of the lower plate 10, e.g. a substrate stage 12 and any substrate 15 disposed on the substrate stage 12. In this regard, the cavity 32 may have a shape and size which is complementary to those portions of the lower plate 10 which are raised relative to a lower engagement surface 11 or 711. In some embodiments, the portions of the lower plate 10 which are raised relative to a lower engagement surface 11 may have a first conformation, while the cavity 32 may be adapted to have a second conformation which is the opposite of the first conformation (and optionally including additional headspace 40 to accommodate any substrate, fluids, and/or reagents disposed on the substrate). Additionally, in some embodiments, the cavity 32 may be adapted to accommodate any fluids, reagents, or specimens disposed on a surface of substrate 15 and/or to further accommodate headspace, for example a predetermined dead volume above a substrate surface 15C.

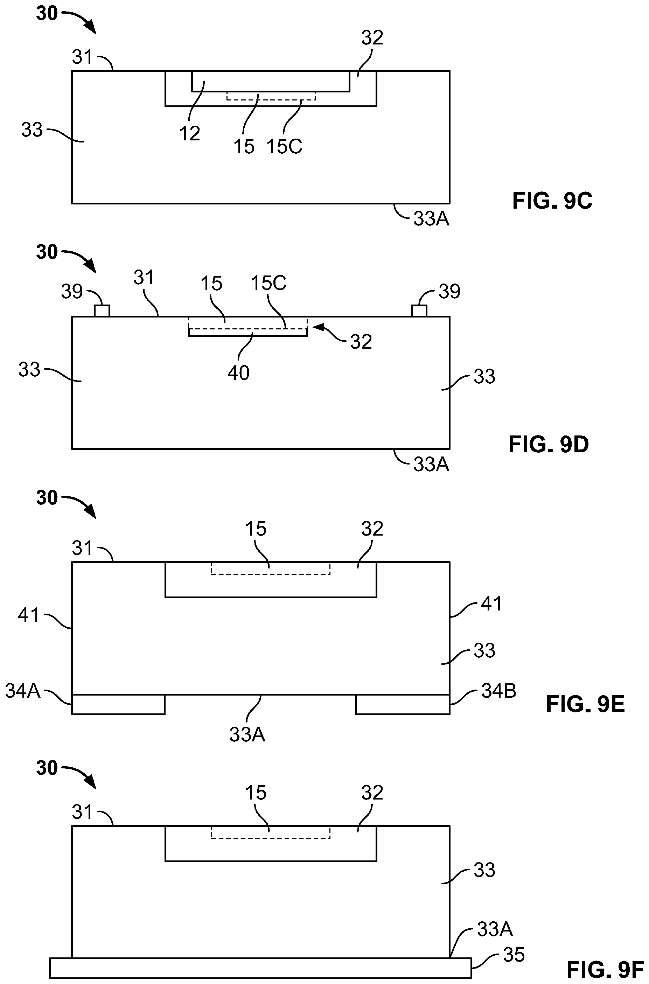

FIGS. 9C and 9D provide cut-away views of a body 33, illustrating non-limiting examples of a cavity 32. In some embodiments, the cavity 32 is about the same size as or larger than a substrate 15. In some embodiments, the cavity 32 has a volume that is at least the same as a volume of a substrate (e.g. a volume that is the same as a volume of the substrate and a predefined amount of headspace volume). In some embodiments, the cavity 32 is sized to have a volume which would accommodate not only a substrate, but at least a portion of a substrate stage 12. By way of a non-limiting example, FIG. 9C depicts a cavity 32 having a volume larger than a volume of a substrate 15. For instance, the additional volume available may accommodate at least a portion of a substrate stage 12 upon which the substrate 15 is supported. By way of another non-limiting example, FIG. 9D illustrates a cavity 32 sized to at least accommodate a substrate (e.g. a microscope slide) and any materials disposed on the surface of the substrate, including fluids, reagents, and/or samples. The cavity also includes a headspace 40 having a predefined volume. While FIGS. 9C - 9F depict a cavity 32 having a monolithic recess, in some embodiments, the cavity 32 may be tiered, such as depicted in FIGS. 10A - 10D. In some embodiments, a tiered cavity 32 may conform to the features of the lower plate 10, including those features raised relative to a lower engagement surface 11.

With reference to FIG. 9B, in some embodiments, the upper plate 30 includes a sealing member 39 which is raised relative to the engagement surface 31, for example protruding from the upper engagement surface 31. In some embodiments, the sealing member 39 may be comprised of the same material as the body 33 (e.g. an aluminum body 33 and an aluminum sealing member 39). In some embodiments, the body 33 and the sealing member 39 are machined from a single monolithic block or 3D printed as a single unit. In some embodiments, the sealing member 39 is adapted to fit within and/or engage the walls of a groove 13 in a lower plate 10. Although not depicted, in other embodiments, the upper plate may alternatively include a groove similar to groove 13 within the lower plate 10 to accommodate a seal body, for example the upper plate may include a groove having walls capable of engaging a seal body (such as those described herein).

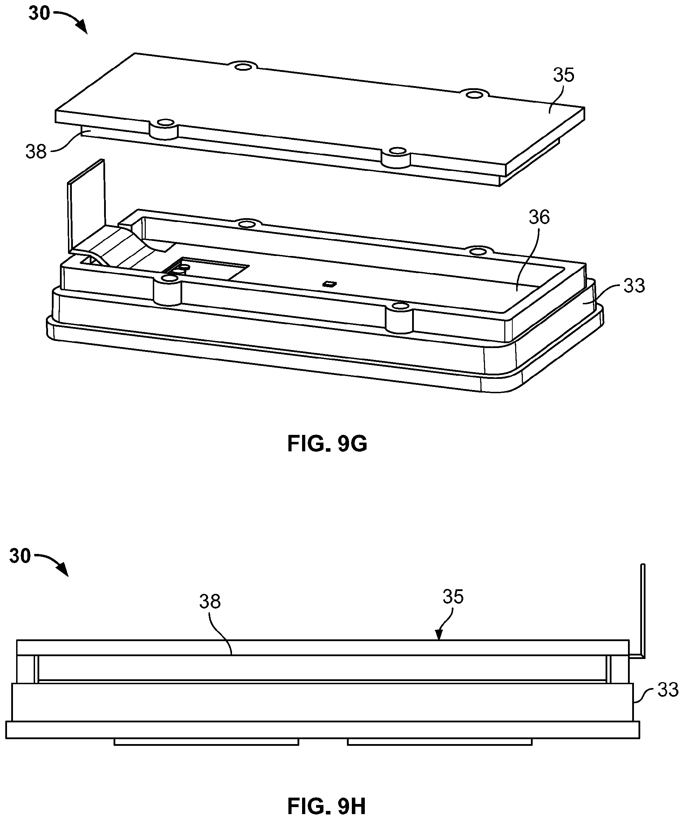

In some embodiments, the upper plate 30 may include one or more heating elements and/or one or more cooling elements, for example one or more elements adapted to heat and/or cool the material of the upper plate. In some embodiments, the one or more heating and/or cooling elements may be the same or different as those described for use in relation to the lower plate (see description above). In some embodiments, an active cooling element includes a plurality of fluid flow channels to facilitate the flow of a coolant and thus provide active cooling of the sample, the upper plate, and/or the lower plate. In some embodiments, one or more heating and/or cooling elements are integrated or embedded within the upper plate 30 (see, e.g., FIGS. 9G and 9H). In other embodiments, one or more heating and/or cooling elements are mounted external to one or more surfaces of the body 33 of the upper plate 30. In some embodiments, the upper plate 30 may include an integral heat sink, e.g. one formed into the side walls of the body 33. Additional embodiments illustrating the use of heating elements and/or cooling elements in the upper and lower plates are illustrate din FIGS. 21A - 21D.

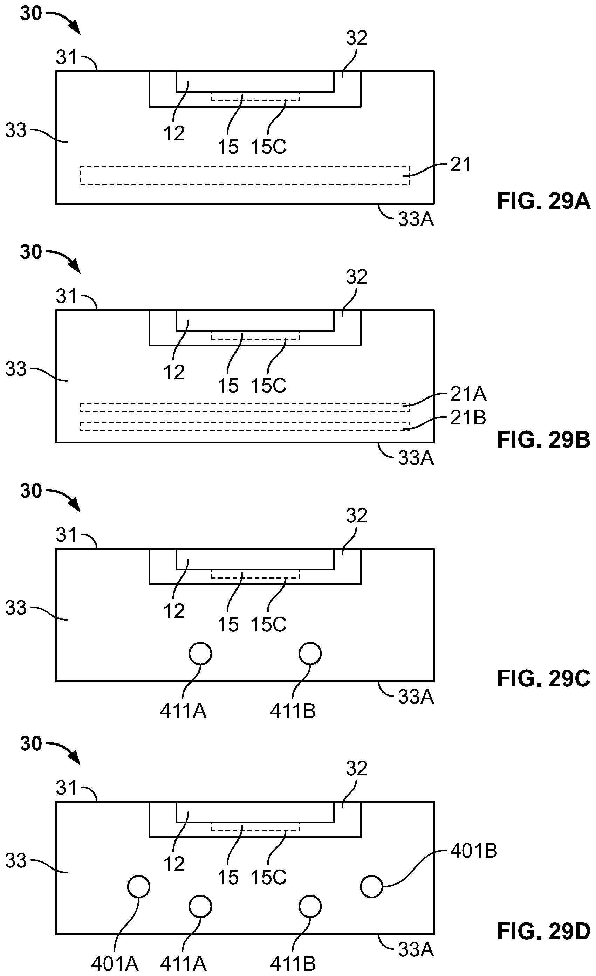

In some embodiments, the upper plate 30 may include one or more heating and/or cooling elements 21 (see FIGS. 29A and 29B). In some embodiments, the one or more heating and/or cooling elements 21 are embedded within the body 33 of the upper plate 30. For example, FIGS. 29A and 29C each depict an upper plate 30 having a body 33, whereby one or more heating and/or cooling elements 21 are shown embedded within the body 33 of the upper plate 30. Any number of heating and/or cooling elements may be embedded within the body 33 of the upper plate 30. Likewise, the body 33 of the upper plate 30 may include any combination of heating and/or cooling elements, e.g. 1 heating and/or cooling element; 1 heating and 1 cooling element; 2 heating elements; 2 cooling elements; 2 heating elements and 1 cooling element; 2 cooling elements and 1 heating element; 2 cooling elements and 2 heating elements; 3 heating elements; 3 cooling elements; 3 heating elements and 1 or 2 cooling elements; 3 cooling elements and 1 or 2 heating elements; 3 cooling elements and 3 heating elements; etc.

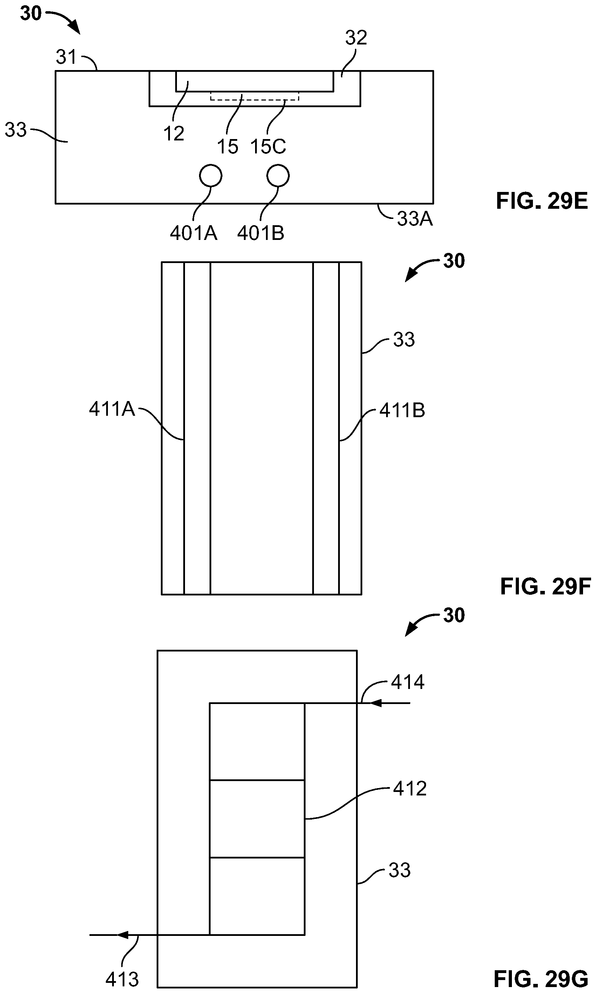

In some embodiments, the one or more heating and/or cooling elements 21 may have any arrangement within the body 33 of the upper plate 30. For illustrative purposes only, FIG. 29B illustrates one or more heating elements 21A arranged parallel to one or more cooling elements 21B. In some embodiments, the one or more heating and/or cooling elements may be arranged side-by-side (e.g. heating elements 401A and 401B of FIG. 29E), in a staggered arrangement (e.g., compare elements 401A and 401B versus elements 411A and 411B as in FIG. 29F), may be spaced evenly or randomly, etc. In some embodiments, one or more heating and/or cooling elements may be positioned opposite the cavity 32, while additional heating and/or cooling elements are positioned beside the one or more heating and/or cooling elements positioned opposite the cavity 32, whereby the additional heating and/or cooling elements flank the one or more heating and/or cooling elements positioned opposite the cavity (see FIG. 29D).

The body 33 of upper plate 30 may include one or more bores into which a heating module, e.g. a heating cartridge may be inserted. In some embodiments, any number of bores may be provided within the body 33 of an upper plate 30, e.g. 1 bore, 2 bores, 3 bores, 4 bores, 6 bores, 8 bores, 12 bores, etc. The bores may be arranged in any manner within the body 16 of the lower plate. As such, the body 16 may accommodate 1, 2, 3, 4, 6, 8, 12, etc. heating cartridges. For example, FIGS. 29D and 29E each illustrates a body 33 having two bores 401A and 401B into which heating cartridges may be inserted.

In some embodiments, one or more bores may be evenly spaced apart from one another. In other embodiments, the one or more bores may be randomly spaced. In some embodiments, the bores are open to the longitudinal side of the upper plate 30. Alternatively, in in other embodiments, the bores may be open on the "short side" of the lower plate, as illustrated in FIG. 29E. The bores themselves may independently have any size and/or diameter.

In some embodiments, each of the one or more heating cartridges inserted into the body 33 may be independently operable. For example, assuming that a body 33 of an upper plate 30 includes three heating cartridges inserted into three bores, each of the three heating cartridges may be independently operable, for example heating cartridges 1 and 3 may be operated at 80% of their power rating while cartridge 2 is operated at 40% of its power rating.

In other embodiments, the one or more heating elements and/or cooling elements 21 embedded within the body 33 of the upper plate 30 include one or more fluid channels, where the one or more fluid channels serve to circulate a fluid within the body 33 of the upper plate 30. In some embodiments, the fluid is a heating oil. In other embodiments, the fluid is a mixture, such as an aqueous mixture including a polyol (e.g. polyethylene glycol or polypropylene glycol) and/or an alcohol (e.g. ethanol or methanol). The one or more fluid channels embedded within the body 33 of the upper plate 30 may have any configuration and may be independently operable. For example, and with reference to FIGS. 29D and 29F, the one or more fluid channels 411A and 411B may be arranged as two independent parallel conduits which independently permit the flow of a suitable fluid through the body 33. In this particular example, the fluid channels 411A and 411B may each be configured for cooling, may each be configured for heating, or one may be configured for heating while the other is configured for cooling. Likewise, the fluid channels 411A and 411B, while both configured for heating, may be configured to heat at different temperatures.

Alternatively, the one or more fluids channels may include a network 412 of fluid channels, such as those depicted in FIG. 29G. The network 412 of fluid channels may include one or more independently controllable inlets 414, outlets 413, or valves (not depicted) so as to direct the circulation along a particular fluid flow path, or to provider circulation within only a portion of the network of channels. In some embodiments, the network of fluid channels may be in communication with a fluid reservoir (not depicted), and where the fluid reservoir may be heated or cooled as needed.

In some embodiments, any of the heating and/or cooling elements within the upper plate 30 may be operated in conjunction with those heating and/or cooling elements within the lower plate 10 or with any thermal management module. As a result, the skilled artisan will appreciate that by controlling the various heating and/or cooling elements present in the upper and lower plates and/or in the thermal management module, that the temperature of the substrate stage, any substrate supported by the substrate stage, and/or the chamber may be regulated. For example, it is possible to operate the various heating and/or cooling elements present in the upper and lower plates such that the substrate, or the specimen disposed on the substrate, remains the coldest structure within the chamber, for example the substrate and/or the specimen disposed on the substrate are maintained at a temperature lower than the upper plate, the lower plate, ports, and/or any other structure within the chamber formed from the upper and lower plates. In some embodiments, and with reference to FIG. 40C, a temperature of the cavity 32 of the upper plate 30 is maintained at a temperature F which is the same as the temperature E of any of the surrounding portions of body 33 of the upper plate 30. In other embodiments, and with reference to FIG. 40C, a temperature of the cavity 32 of the upper plate 30 is maintained at a temperature F which is lower than the temperature E of any of the surrounding portions of body 33 of the upper plate 30. In other embodiments, and with reference to FIG. 40C, a temperature of the cavity 32 of the upper plate 30 is maintained at a temperature F which is higher than the temperature E of any of the surrounding portions of body 33 of the upper plate 30.

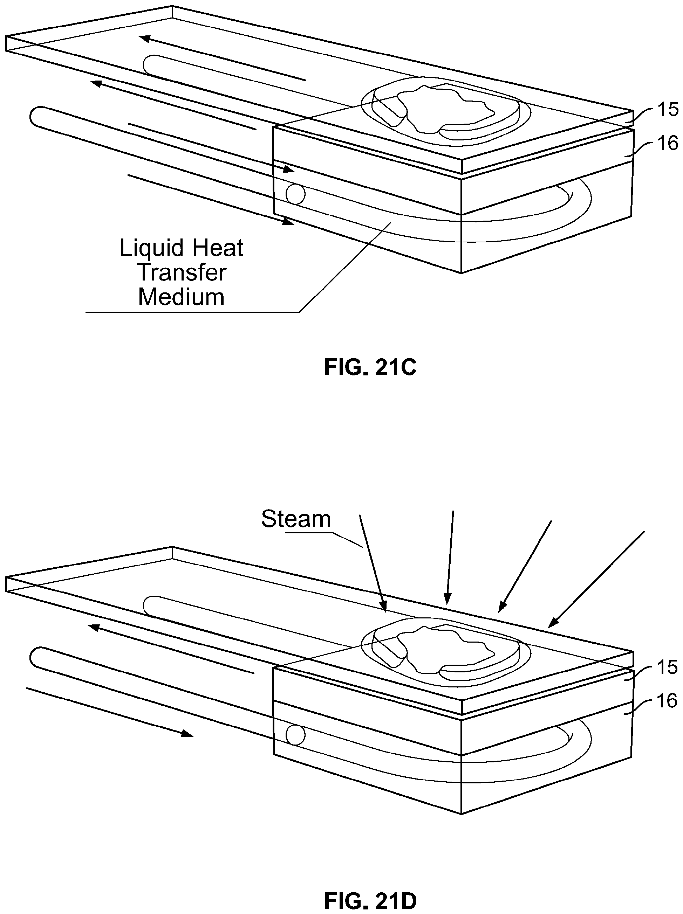

In some embodiments, the upper plate may include one or more ports. In some embodiments, the ports comprise a seal or a pressure valve such that gases and/or steam may be released or introduced (such as from a chamber formed from complementary upper and lower plates). In some embodiments, the one or more ports are configured such that gases and/or steam may be introduced into a chamber formed from the upper and lower plates. In some embodiments, the ports are connected to a gas and/or steam source and the valves may be independently operated such that steam may be introduced, such as into a chamber formed between the upper and lower plates (see FIG. 21D). In some embodiments, gas and/or steam is introduced to at least partially heat the substrate and/or sample. In other embodiments, gas and/or steam is introduced to pre-pressurize a chamber formed by the upper and lower plates. In other embodiments, the one or more ports are configured for the introduction of one or more fluids and/or reagents.

In some embodiments, the upper plate 30 further includes at least one pressure member. In some embodiments, the at least one pressure member is configured to receive an external force applied to the upper plate 30, e.g. an external force applied by one or more force generating members. In some embodiments, the one or more force generating members include motors, springs, screws, levers, pistons (e.g. a mechanically, an electrically, pneumatically, or hydraulically actuated pistons), cam mechanisms, or any combination thereof. In some embodiments, the externally applied force ranges from between about 5 Newtons to about 3000 Newtons. In other embodiments, the externally applied force ranges from between about 10 Newtons to about 2000 Newtons. In other embodiments, the externally applied force ranges from between about 10 Newtons to about 1000 Newtons. In other embodiments, the externally applied force ranges from between about 10 Newtons to about 500 Newtons. In yet other embodiments, the externally applied force ranges from between about 10 Newtons to about 250 Newtons. In further embodiments, the externally applied force ranges from between about 20 Newtons to about 150 Newtons. In some embodiments, the force generating member exerts a predetermined amount of force to the pressure member of the upper plate 30. In some embodiments, the predetermined amount of force applied to the pressure member is either less than a predetermined threshold pressure or an amount which does not exceed any predetermined threshold pressure of the internal environment within a chamber formed from the complementary upper and lower plates. In this regard, the force exerted by the force generating member is less than the forces pushing the upper and lower plates apart and, as a result, the force generating member may give way or slip such that pressure may be relieved from within the formed chamber.

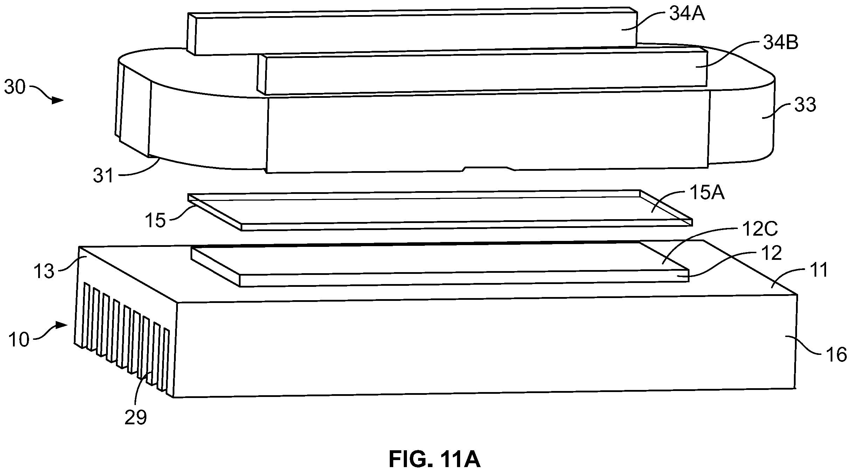

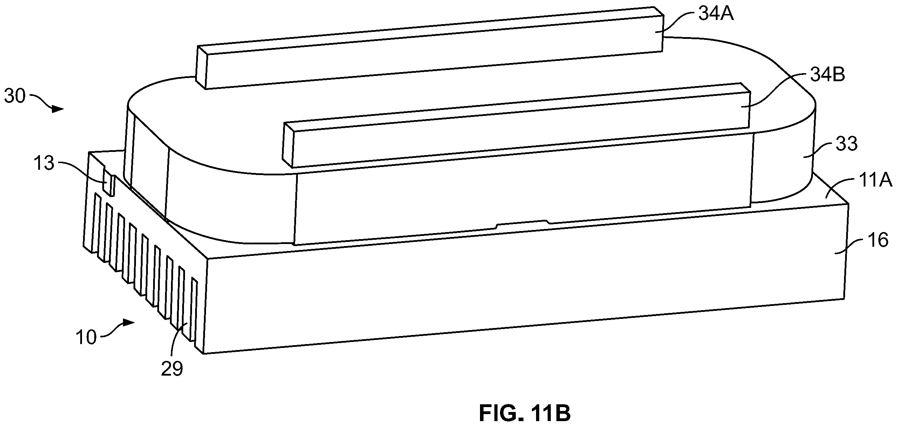

In some embodiments, the at least one pressure member is configured to distribute any received force across the body 33 of the upper plate 30, e.g. to evenly distribute a received force evenly over the upper plate 30. In some embodiments, and as illustrated in FIG. 9E, the at least one pressure member includes two parallel bars 34A and 34B. In some embodiments, the parallel bars 34A and 34B run along the longitudinal sides 41 of the body 33 of the upper plate 30 (see also FIGS. 11A and 11B). In other embodiments, and with reference to FIG. 9F, the at least one pressure member includes a pressure plate 35, e.g. a monolithic pressure plate coupled to an upper surface 33A of the upper plate 30. In some embodiments, the pressure plate 35 includes a surface area which is larger than a surface area of the upper surface 33A of the upper plate 30. In some embodiments, the pressure plate 35 includes a surface area which is smaller than a surface area of the upper surface 33A of the upper plate 30.

Although not depicted, in some embodiments, an upper surface 33A of the body 33 (or, for that matter, the pressure plate 35) may include one or more mounting points adapted to couple the upper plate to a support member or a sub-assembly.

In some embodiments, and as depicted in FIGS. 9G and 9H, the pressure plate 35 is adapted to fit within a void of body 33. In some embodiments, the pressure plate 35 which is adapted to fit within a void of the body 33 frictionally engages a raised portion of the body 33 of the upper plate 30. In other embodiments, the pressure plate 35 which is adapted to fit within a void of the body 33 is fixedly secured to the body 33 of the upper plate 30, e.g. glued into, screwed into, or clamped onto the upper plate 30. In some embodiments, a heating element 36 is sandwiched between the pressure plate 35 and the body 33. In some embodiments, the pressure plate 35 may further an integral seal 38.

In some embodiments, the upper plate 30 is formed by machine or milling a block of solid material. In other embodiments, upper plate 30 is formed through a 3D printing process. In other embodiments, the upper plate 30 or any portion thereof is produced from a mold. The upper plate 30 may be fabricated from any material. For example, the upper plate 30 or any constituent part thereof, may be made from a metal or an alloy; ceramic; glass; or plastic (e.g. derived from a polymer, a copolymer, or a polymer or co-polymer blend). Examples of suitable polymers include, but are not limited to, polyether ether ketone, polyimides, polyetherimide, polytetrafluoroethylene, polysulfones, polyvinylidene difluoride, and polyphenylene sulfide. Examples of suitable metal materials include aluminum and steel. In some embodiments, if the upper plate is made from a metal, the metal may be coated or uncoated (e.g. coated with a fluoropolymer).

In some embodiments, the upper plate has a total mass ranging from between about 30 grams to 200 grams. In other embodiments, the upper plate has a total mass ranging from between about 40 grams to 180 grams. In yet other embodiments, the upper plate has a total mass ranging from between about 40 grams to 160 grams. In yet other embodiments, the upper plate has a total mass ranging from between about 40 grams to 140 grams. In other embodiments, the upper plate has a total mass ranging from between about 40 grams to 120 grams. In other embodiments, the upper plate has a total mass ranging from between about 50 grams to 120 grams. In other embodiments, the upper plate has a total mass ranging from between about 50 grams to 100 grams.

In some embodiments, the upper plate has a thermal capacity ranging from between about 40 J/C to about 110 J/C. In some embodiments, the upper plate has a thermal capacity ranging from between about 40 J/C to about 100 J/C. In some embodiments, the upper plate has a thermal capacity ranging from between about 40 J/C to about 90 J/C. In some embodiments, the upper plate has a thermal capacity ranging from between about 50 J/C to about 80 J/C. In some embodiments, the upper plate has a thermal capacity ranging from between about 50 J/C to about 70 J/C. In some embodiments, the upper plate has a thermal capacity ranging from between about 55 J/C to about 75 J/C.

### ADDITIONAL SPECIMEN PROCESSING ASSEMBLY COMPONENTS

In some embodiments, the specimen processing assemblies of the present disclosure include (i) a lower plate; (ii) an upper plate which is complementary to the lower plate; and (iii) at least one additional component. In some embodiments, the at least one additional component is selected from a sub-assembly, a support member, a force generating member, a substrate loader, etc.

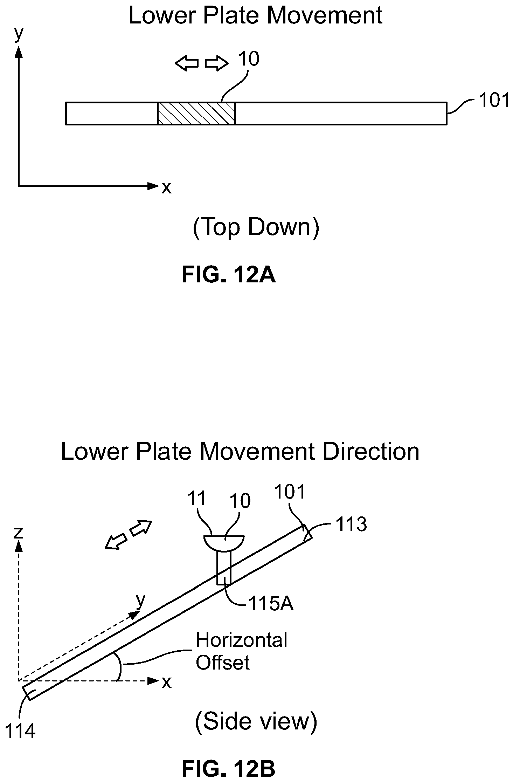

In some embodiments, the specimen processing assemblies include one or more sub-assemblies, e.g. rails, to which one of the lower and/or upper plates may be independently coupled (either directly or indirectly). In some embodiments, the one or more sub-assemblies enable the independent movement of the lower and/or upper plates in any of the x, y, and z-coordinate directions. For example, and with reference to at least FIGS. 12A and 12B, the specimen processing assemblies of the present disclosure may, in some embodiments, include a lower plate 10 movably coupled to a sub-assembly 101. In some embodiments, the sub-assembly is a rail. In some embodiments, the sub-assembly includes a motor coupled to a belt or a screw, where the belt or screw may be directly or indirectly coupled to the lower plate 10.

In some embodiments, the sub-assembly 101 may be linear or curvilinear, e.g. arcuate, semi-circular, etc. In other embodiments, the sub-assembly 101 may have a complex shape including one or more portions which are linear and one or more portions which are curvilinear, e.g. two portions that are linear with an intermediary portion that is arcuate. In some embodiments, two or more lower plates 10 may be coupled to a single sub-assembly 101, where each of the two or more plates 10 may move independently or may be linked such that they move in tandem.

In some embodiments, the lower plate 10 may be directly coupled to the sub-assembly 101, such as within a track along the top and/or sides of the sub-assembly 101 (see FIGS. 12A and 12B). In this way, the lower plate 10 may directly slide or be moved within the track along the sub-assembly 101, such as along the plane of the sub-assembly 101.

In other embodiments, the lower plate 10 may be indirectly coupled to the sub-assembly 101. For example, a support member 115A may be coupled to (i) a portion of the lower plate 10, and (ii) a track of the sub-assembly 101. In this particular embodiment, the support member 115A facilitates the movement of the lower plate 10 along the sub-assembly 101. In some embodiments, the support member 115A is configured such that a plane defined by the upper surface of substrate 15 remains horizontal, for example parallel to the ground, regardless of the movement of the lower plate 10 along the sub-assembly 101. In some embodiments, the support member 115A includes one or more springs.

In some embodiments, the sub-assembly 101 may be positioned horizontally. This is illustrated in FIG. 12A, where the sub-assembly 101 is positioned horizontally within the x,y plane. In this embodiment, the horizontal movement of the lower plate 10 along the length of the sub-assembly 101 would be within the x,y plane. FIG. 12A also depicts a substrate stage 12 having an upper surface which is parallel to the ground. By virtue of the rail being positioned parallel to the ground, any substrate 15 supported by the substrate stage 12, and any specimens, fluids and/or reagents disposed thereon, remains parallel to the ground (for example within the x,y plane of FIG. 12A) throughout the movement of the lower plate 10.

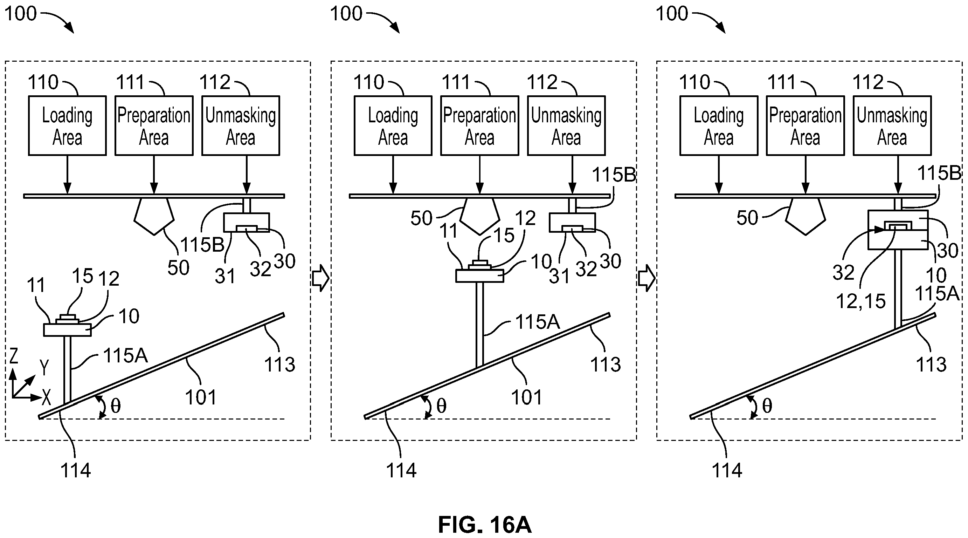

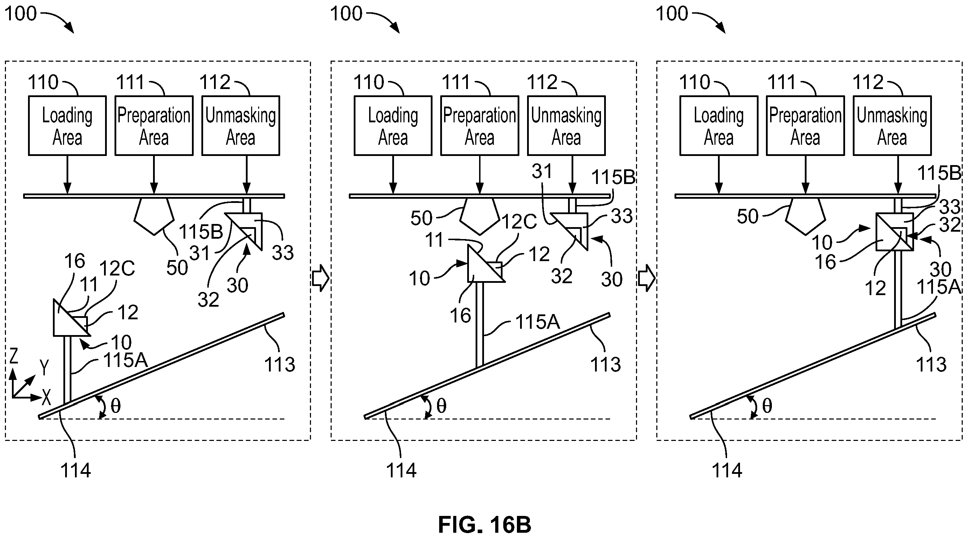

In other embodiments, one end of the sub-assembly 101 may be raised along the z-axis relative to another end. For example, FIG. 12B illustrates a sub-assembly 101 having a first end 113 and a second end 114, whereby the first end 113 is raised along the z-axis relative to the second end 114 (hereinafter referred to as being "offset from the horizontal" or "horizontally offset"). In such embodiments, a component of the movement of the lower plate 10 along a horizontally offset sub-assembly 101 will be along the z-axis, for example there is a vertical component to the movement. This is further illustrated, for example, in FIGS. 16A and 16B, which illustrate that a lower plate 10 may be moved along a sub-assembly 101, such as from end 114 to end 113, and from a first position, to a second position, and any intermediary position therebetween.

In some embodiments, the horizontal offset may be at an angle ranging from between about 5 degrees to about 70 degrees. In other embodiments, the horizontal offset angle may range from between about 5 degrees to about 60 degrees. In yet other embodiments, the horizontal offset angle may range from between about 5 degrees to about 50 degrees. In yet other embodiments, the horizontal offset angle may range from between about 10 degrees to about 50 degrees. In yet other embodiments, the horizontal offset angle may range from between about 15 degrees to about 50 degrees. In further embodiments, the horizontal offset angle may range from between about 20 degrees to about 50 degrees. In yet further embodiments, the horizontal offset angle may range from between about 20 degrees to about 45 degrees.

In embodiments where the sub-assembly 101 is offset from the horizontal, a support member 115A may be adapted to orient the lower plate 10, and hence the upper surface of the substrate stage 12, such that any substrate positioned thereon remains parallel to the ground and within the x,y plane. In other embodiments, the lower plate itself is configured such that either a lower engagement surface remains parallel to the ground or a surface of a substrate stage remains parallel to the ground.

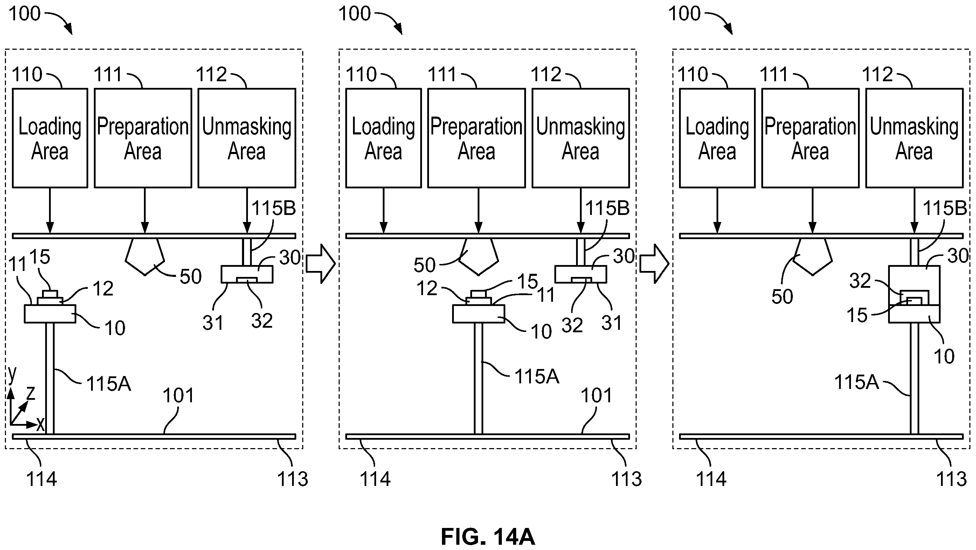

In some embodiments, the upper plate 30 may be coupled to a sub-assembly. In some embodiments, and with reference to FIG. 14A, the upper plate 30 may be coupled to a sub-assembly such that it is fixed in space, such as through a support member 115B. In those embodiments where the lower plate 10 is fixed, the upper plate may be movably coupled to a sub-assembly (movable in any of the x, y, and z directions). In these embodiments, the upper plate 30 may be coupled to the sub-assembly in a manner that allows its movement along any of the x, y, and z-axes. Alternatively, the upper plate 30 may be coupled in a manner that allows its movement only within a z-axis.

In some embodiments, the upper plate may be coupled directly or indirectly to one or more force generating members. In some embodiments, the one or more force generating members include motors, springs, screws, levers, pistons (e.g. a mechanically, pneumatically, electrically, or hydraulically actuated pistons), cam mechanisms, or any combination thereof. In some embodiments, the force generating member facilitates either movement of the upper plate along the z-axis (e.g. to move the upper plate toward a lower plate) or the exertion of a force along the z-axis (such that a force is exerted to maintain the upper and lower plates in contact with one another, even when a chamber formed from the upper and lower plates is pressurized). In some embodiments, the one or more force generating members exert a predetermined force onto the upper plate. In some embodiments, this predetermined force is limited such that should pressure within the chamber exceed a predetermined threshold pressure, the force exerted by the force generating member is overcome and the force generating member will slip or give way to relieve pressures above the predetermined threshold pressure that might develop within the chamber. For example, where the one or more force generating members includes a spring or a piston, the spring or piston may be configured to exert a predetermined amount of force which is less than any force exerted when the chamber exceeds a predetermined threshold pressure. In other embodiments, a pressure relief port and/or valve is included in either or both of the lower and upper plates such that such that a predetermined threshold pressure with the chamber is not exceeded.

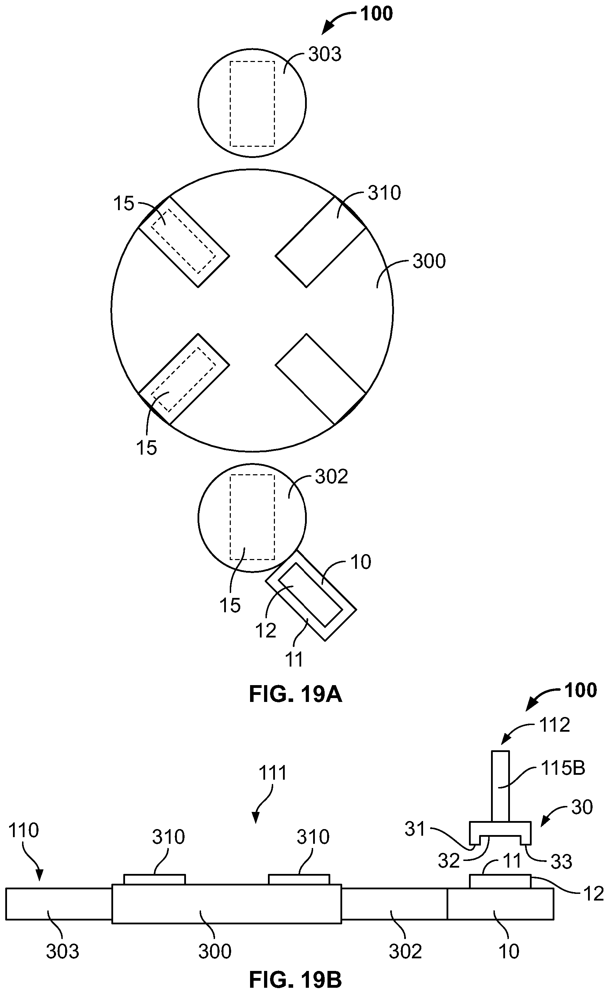

In some embodiments, the specimen processing assemblies may include a substrate loader 302 (see, e.g., FIG. 19A) such that substrates may be moved to or removed from a lower plate 10. Additional aspects of substrate loaders and examples of their utilization in certain specimen processing assemblies is described further herein.

In some embodiments, the specimen processing assemblies include one or more substrate and/or lower plate leveling devices. The substrate and/or lower plate leveling devices may include, for example, one or more adjustable feet or other adjustment protrusions or springs such that a substrate may be maintained in a substantially horizontal position during processing, as described herein.

### CHAMBERS FORMED FROM THE UPPER AND LOWER PLATES

As noted above, the specimen processing assemblies of the present disclosure may include one or more chambers. In some embodiments, each chamber is formed from a lower plate and an upper plate, where the upper plate is complementary to the lower plate. In some embodiments, the chamber formed from the complementary upper and lower plates 30 and 10, respectively, is adapted to at least enclose an upper surface 15A of substrate 15 and any fluids, reagents, and/or samples disposed thereon (see, for example, FIGS. 6B and 10A - 10F). In some embodiments, the complementary upper and lower plates may be configured such that only the substrate or a portion of the substrate is provided within the formed chamber. In other embodiments, the complementary upper and lower plates may be configured such that the substrate and a portion of the substrate stage are provided within the formed chamber.

As set forth herein, the upper plate 30 and the lower plate 10 are each configured to have sizes and/or shapes which are complementary to one another such that features present on one of the lower or upper plates are accommodated by the other of the upper or lower plate. In some embodiments, a chamber may be formed when the complementary upper and lower engagement surfaces 31 and 11 (or 711) of the upper and lower plates 30 and 10 (or 710), respectively, are brought into contact with one another. In some embodiments, the contact between the upper and lower engagement surfaces 31 and 11 (or 711) facilitates the formation of a seal, such as an airtight seal or a moisture-tight seal. In some embodiments, the formation of the seal is further facilitated through the application of an external force to one or both of the upper and lower plates, as described further herein.

In some embodiments, the chamber formed by the lower and upper plates 10 and 30, respectively, provides for an environment which may be controlled according to user preferences. For example, the chamber may be configured such that an environment within or surrounding the formed chamber is different than an environment external to the chamber, for example an environment outside of the lower and upper plates. In some embodiments, the formed chamber allows specimens, fluids, and/or reagents disposed on the surface of a substrate to be treated at elevated temperatures (for example temperatures greater than room temperature) and/or at elevated pressures (for example pressures greater than atmospheric), as described further herein.

In some embodiments, the chamber formed from the complementary upper and lower plates may be internally pressurized, such as by heating a fluid present within the chamber and/or introducing gas and/or steam into the chamber, such as through one or more ports in communication with the formed chamber. For example, a fluid present on a substrate or within a reservoir within the chamber may be heated to increase the pressure within the chamber. In some embodiments, a fluid reservoir is provided in the lower plate or on the substrate itself. In some embodiments, the upper plate itself or a heating element protruding from the upper plate may contact the fluid reservoir (regardless of its location) and heat the fluid within the reservoir to generate steam. The generated steam may then be used to heat and/or pressurize the chamber.

Alternatively, a gas and/or steam may be introduced into the chamber (such as through one or more ports in communication with the internal environment of the chamber) to facilitate pressurization and/or heating of the chamber. In some embodiments, the pressure within the chamber is modulated by turning off and on one or more heating elements and/or cooling elements, introducing additional gas and/or steam into the chamber through one or more ports, releasing gas and/or steam through one or more ports, or any combination thereof. In some embodiments, the specimen processing device and/or the chamber includes one or more safety mechanisms for preventing over-pressurization, e.g. vent ports, a force generating member which may exert a force less than the forces exerted outward from the internal pressurization of the chamber.

In some embodiments, the chamber is adapted to sustain temperatures ranging from between about 70°C to about 220°C. In other embodiments, the chamber is adapted to sustain temperatures ranging from between about 90°C to about 200°C. In yet other embodiments, the chamber is adapted to sustain temperatures ranging from between about 95°C to about 180°C. In further embodiments, the chamber is adapted to sustain temperatures ranging from between about 100°C to about 170°C. In even further embodiments, the chamber is adapted to sustain temperatures ranging from between about 110°C to about 160°C. In yet further embodiments, the chamber is adapted to sustain temperatures ranging from between about 120°C to about 150°C.

In some embodiments, a pressure ranging from between about 95 kPa to about 2000 kPa is maintained within the chamber during heating. In other embodiments, a pressure ranging from between about 100 kPa to about 1600 kPa is maintained within the chamber during heating. In yet other embodiments, a pressure ranging from between about 150 kPa to about 1050 kPa is maintained within the chamber during heating. In further embodiments, a pressure ranging from between about 190 kPa to about 850 kPa is maintained within the chamber during heating. In even further embodiments, a pressure ranging from between about 260 kPa to about 750 kPa is maintained within the chamber during heating. In yet further embodiments, a pressure ranging from between about 300 kPa to about 700 kPa is maintained within the chamber during heating.

In some embodiments, a force generating member is utilized to exert a force onto the chamber, such as a force generating member which exerts a force onto the upper plate through one or more pressure members in communication with the upper plate. In this manner, the force exerted by the force generating member allows for the pressurized internal environment of the chamber to be maintained. As also noted above, the force exerted by the force generating member may be predetermined. In some embodiments, the predetermined force exerted by any force generating member is less than any predetermined threshold pressure. Alternatively, the predetermined force exerted by the force generating member is programmed not to exceed any predetermined threshold pressure. In this regard, should the pressure within the chamber exceed the predetermined threshold pressure, and given that the predetermined force is set to be lower than any predetermined threshold pressure or set not to exceed the predetermined threshold pressure, the force generating member will give way such that the chamber may release or vent excess pressure, for example the upper and lower plates may at least partially separate from each other so as to permit gases and/or steam to be released to an external environment.

By way of example, if the chamber or substrate, fluids, and/or reagents disposed within the chamber are heated to about 160°C and the predetermined threshold pressure is set as 750 kPa, then a force generating member is configured to exert an amount of force which is either less than the predetermined threshold pressure or is configured to exert an amount of force which does not exceed the predetermined threshold pressure. Following this example, should the pressure exceed the predetermined threshold pressure of 750 kPa (e.g. the chamber reaches a pressure of 760 kPa), then the force generating member will give way to permit release of the excess gas and/or steam. As noted herein, the upper and/or lower plates may further include one or more ports and/or valves to permit the release of gas and/or steam from the chamber should the predetermined threshold pressure be exceeded.

In some embodiments, the force generating member is configured to give way if the pressure within the chamber exceeds 1250 kPa. In other embodiments, the force generating member is configured to give way if the pressure within the chamber exceeds 1050 kPa. In yet other embodiments, the force generating member is configured to give way if the pressure within the chamber exceeds 950 kPa. In further embodiments, the force generating member is configured to give way if the pressure within the chamber exceeds 900 kPa. In further embodiments, the force generating member is configured to give way if the pressure within the chamber exceeds 850 kPa. In further embodiments, the force generating member is configured to give way if the pressure within the chamber exceeds 800 kPa. In even further embodiments, the force generating member is configured to give way if the pressure within the chamber exceeds 750 kPa. In yet even further embodiments, the force generating member is configured to give way if the pressure within the chamber exceeds 700 kPa. In yet even further embodiments, the force generating member is configured to give way if the pressure within the chamber exceeds 650 kPa. In yet even further embodiments, the force generating member is configured to give way if the pressure within the chamber exceeds 600 kPa. In yet even further embodiments, the force generating member is configured to give way if the pressure within the chamber exceeds 500 kPa. In still other embodiments, the force generating member is configured to give way if the pressure exceeds 200 kPa, 300 kPa or 400 kPa. The predetermined threshold pressure at which the force generating member gives way can be set to any value that prevents chamber pressures from exceeding values that are deemed unsafe. For example, the predetermined threshold pressure may vary depending upon the materials from which the chamber is constructed, local safety regulations, and combinations thereof.

In some embodiments, one of the lower and/or upper plates may further include one or more temperature sensors and/or pressure sensors. In some embodiments, the one or more temperature sensors are platinum resistance thermometers or thermistors. In other embodiments, one or more temperature sensors are placed below the substrate. In other embodiments, the one or more temperature sensors are placed on the substrate, such as at one end of the substrate or on an edge of the substrate. In some embodiments, the one or more temperature sensors are placed on the sample disposed on the substrate.

The complementarity of the shapes and/or sizes of features of the upper and lower plates and how this complementary facilitates the formation of a chamber therebetween is further illustrated in FIGS. 10A - 10C. For example, FIG. 10A illustrates upper and lower plates 30 and 10, respectively, that have been brought together and which are contacting one another. In some embodiments, the upper and lower plates 30 and 10, respectively, contact each other at the interface of the lower engagement surface 11 and the upper engagement surface 31. As further depicted in FIG. 10A, the recessed cavity 32 within the upper plate 30 is sized to accommodate at least substrate 15 and/or a portion substrate stage 12, as well as any specimens, fluids, and/or reagents, disposed on the upper surface of the substrate 15. In some embodiments, the recessed cavity 32 further includes a predetermined amount of headspace, e.g. space surrounding the substrate 15. In some embodiments, the chamber has a volume ranging from between about 14cm³ to about 25cm³. In some embodiments, the chamber has a volume ranging from between about 15cm³ to about 24cm³. In some embodiments, the chamber has a volume ranging from between about 16cm³ to about 23cm³. In some embodiments, the chamber has a volume ranging from between about 17cm³ to about 22cm³. In some embodiments, the chamber has a volume ranging from between about 18cm³ to about 21cm³. In some embodiments, the chamber has a volume ranging from between about 19cm³ to about 20cm³.

Likewise, FIG. 10B illustrates upper and lower plates 30 and 10, respectively, that have been brought together and which are contacting one another, where the upper engagement surface 31 contacts the lower engagement plate 11 and/or any seal body disposed within groove 13 of the lower plate 10 (seal body not depicted). Additionally, FIG. 10B shows a recessed cavity 32 within the body 33 of the upper plate 30, where the recessed cavity 32 is again sized to accommodate at least the substrate 15 and/or a portion of the substrate stage 12. In some embodiments, the recessed cavity 32 of FIG. 10B includes additional headspace 40 surrounding the substrate 15 as compared with the recessed cavity 32 of FIG. 10A.

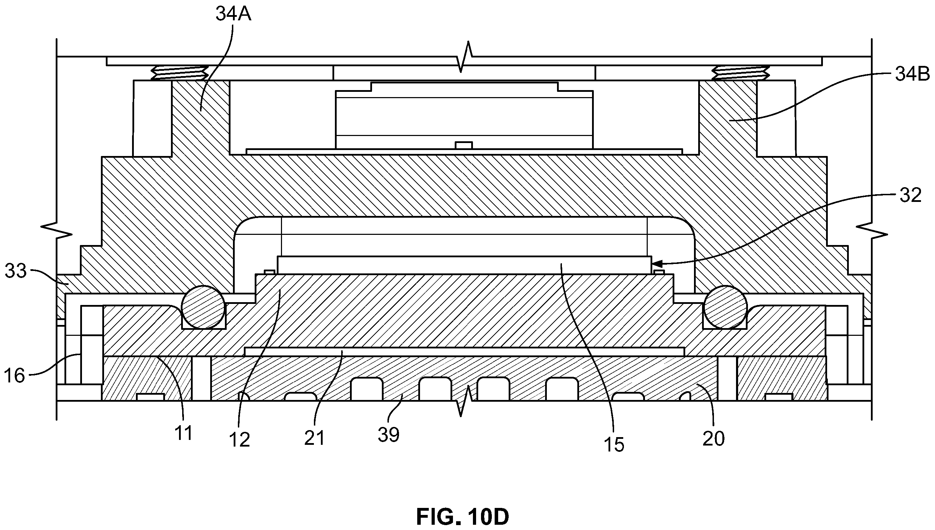

FIG. 10C further illustrates that the body 16 of the lower plate 10 may be in communication with a heating element 21, such as any of those types of heating elements described herein. The embodiments depicted in FIGS. 10A - 10C may further include one or more pressure members in communication with the upper plate 30 (such as to receive an externally applied force and to confer that force to the upper and/or lower plates), one or more passive and/or active cooling elements (e.g. a heat sink 39 in communication with a lower plate 10 so as to passively dissipate heat; cooling channels in thermal communication with one of the upper and/or lower plates so as to actively remove heat), and/or one or more heating elements (e.g. one or more heating elements embedded within or in communication with the upper plate 30 and/or the lower plate 10 so as to heat the upper and lower plates or any materials disposed on the surface of the substrate when positioned within the formed chamber) (see, e.g., FIG. 10D).

In some embodiments, and with reference to FIG. 10E, a chamber may be formed from complementary upper and lower plates 30 and 10, respectively, where the lower plate 10 includes a lower engagement surface 11 and a substrate stage 12 recessed relative to the lower engagement surface 11, and where the upper plate 30 includes an upper engagement surface 31 but no recessed cavity. FIG. 10F illustrates an alternative embodiment where the upper plate 30 includes a cavity recessed relative to an upper engagement surface 31 and a lower plate 10 including a substrate stage 12 recessed relative to the lower engagement surface 11. When the two plates are brought into contact with one another, a chamber is formed 32.

FIG. 11A illustrates a non-limiting embodiment illustrating the positioning of a lower plate 10 and an upper plate 30 relative to each other such that complementary features of each of the lower and upper plates may align. In some embodiments, a lower plate 10 is positioned such that a least a portion of the lower engagement surface 11 of the lower plate 10 aligns with a portion of the upper engagement surface 31 of the upper plate 30. FIG. 11B depicts a lower plate 10 and an upper plate 30 in physical communication with one another, for example at least a portion of the lower engagement surface 11 of the lower plate 10 is in contact with a portion of the upper engagement surface 31 of the upper plate 30, thereby forming a chamber enclosing at least a portion of the substrate 15 and any specimens, fluids, and/or reagents, disposed thereon.

In some embodiments, the chamber formed from the upper and lower plates 30 and 10, respectively, is in communication with one or more heating elements and/or cooling elements such that any substrate or sample positioned with the chamber may be heated and/or cooled; or such that any fluid present within the chamber (such as on the substrate or in a separate reservoir) may be heated to increase the pressure within the chamber. In some embodiments, at least one of the upper plate 30 or the lower plate 10 includes a heating element. In some embodiments, at least one of the upper plate 30 or the lower plate 10 comprise a cooling element (e.g. a passive cooling element or an active cooling element). In some embodiments, the cooling element is an active cooling element which utilizes a liquid heat transfer medium. In other embodiments, the cooling element is a passive cooling element, such as a heat sink. In some embodiments, the cooling element is a heatsink coupled to a body of the lower plate. In some embodiments, the cooling element includes a liquid heat transfer medium and a pump or other device for circulating the liquid heat transfer medium (see, e.g., FIG. 21C). In some embodiments, a cooling element and a heating element are operated together so as to provide uniform or homogenous temperature throughout the substrate and/or the sample (e.g. each may be turned off or on as needed and in a controlled manner so as to provide a substrate or a sample having a homogeneous temperature distribution). In some embodiments, it is believed that a homogeneous temperature distribution in the sample may be attained when using a heating surface below the substrate, or by introducing an additional heating source above the sample (see FIGS. 21A and 21B). In some embodiments, the chamber includes one or more pressure and/or temperature sensors.

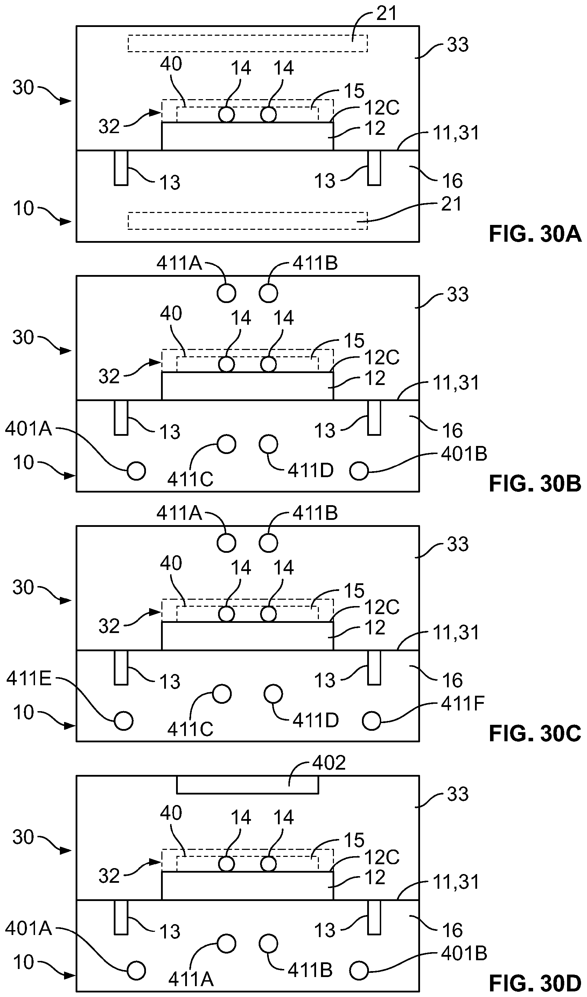

FIGS. 30A to 30D each illustrate alternative embodiments of a chamber formed from upper and lower plates 30 and 10, respectively, and further illustrate the relative positioning of one or more heating and/or cooling elements 21 within the upper and lower plates and the relative positioning of the heating and/or cooling elements to the chamber and/or to a substrate disposed within the chamber. For example, FIG. 30A illustrates that an upper plate 30 may include one or more heating and/or cooling elements 21 embedded within a body 33 of the upper plate; while one or more heating and/or cooling elements 21 are also embedded within a body 16 of the lower plate.

FIG. 30B illustrates an embodiment where the upper and lower plates each include fluid flow channels (411A through 411), where the fluid flow channels are arranged beneath recess 32 and beneath the substrate stage 12. The fluid flow channels 411A - 411D may each be independently operated. For instance, the type of fluid, the fluid flow rate, the temperature of the fluid, etc. may each independently controlled for each of the fluid flow channels 411A through 411D. Heating cartridges inserted into bores 401A and 401B of the lower plate 10 may likewise be controlled independently and, together with the fluid flow channels, be used to regulate the temperature of a substrate stage, a substrate, or any specimen disposed on the substrate. In some embodiments, the heating and/or cooling elements are each independently operated to as to maintain a predetermined temperature gradient between different portions of the upper and lower plates and the substrate stage.

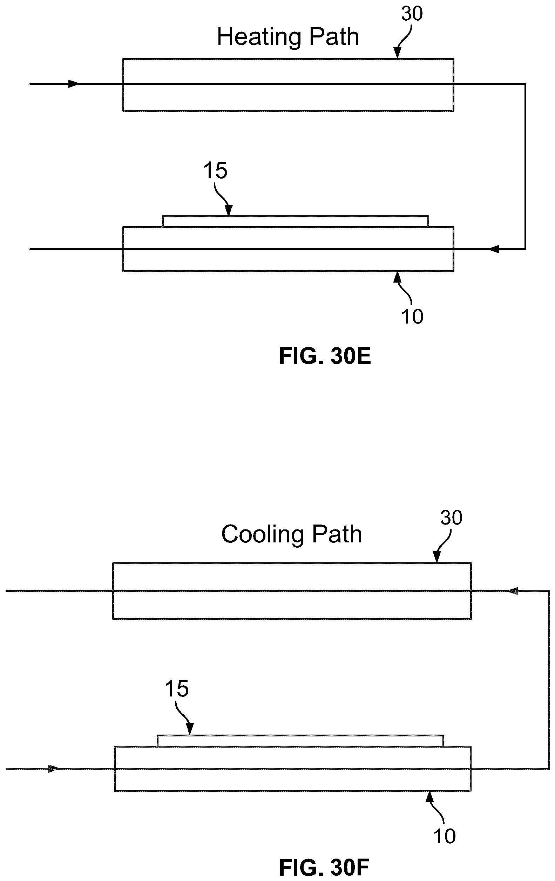

FIG. 30C provides yet a further alternative embodiment of a chamber formed from upper and lower plates, where the upper and lower plates comprise a plurality of fluid flow channels 411A through 411F. FIG. 30D illustrates an embodiment where the lower plate 16 is similar to that depicted in FIG. 30B, but where the upper plate includes a thermoelectric module 402 to effectuate heating and/or cooling of the body 33 of the upper plate 30. In some embodiments, and as illustrated in FIGS. 30E and 30F, the fluid channels of the upper and lower plate 30 and 10, respectively, may be connected such that fluid flows through the fluid channels of one of the upper or lower plates and then flows through the fluid flow channels of the other of the lower or upper plates.

In some embodiments, any of the heating and/or cooling elements within the upper plate 30 may be operated in conjunction with those heating and/or cooling elements within the lower plate 10, or those heating and/or cooling elements embedded within one or more thermal management modules. As a result, by independently controlling the various heating and/or cooling elements present in the upper and lower plates, that the temperature of the substrate stage, any portion of a substrate supported by the substrate stage, and/or the chamber may be controlled.

For example, it is possible to independently operate the various heating and/or cooling elements present in the upper and lower plates such that at least a portion of the substrate, or the specimen disposed on the substrate, remains the coldest structure within the chamber, for example the substrate or the specimen disposed on the substrate are maintained at a temperature lower than the upper plate, the lower plate, ports, valves, and/or any other structure within the chamber formed from the upper and lower plates. In some embodiments, the heating and/or cooling elements are each independently operated to as to maintain a predetermined temperature gradient between different portions of the upper and lower plates and the substrate stage.

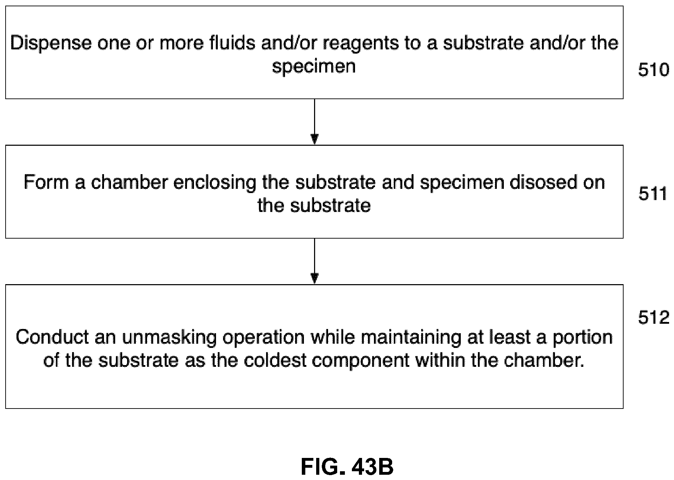

With reference to FIG. 40B, different temperature zones may be established, such as temperature zones A, B, C, D, and E. In some embodiments, each of these different temperature zones are adjacent to and/or in thermal communication with portions of the body 16 of lower plate 10 and/or the body 33 of upper plate 30. The temperature within each of these zones may be established, maintained, and/or regulated by independently controlling any number of heating and/or elements in thermal communication with any of the depicted zones, including heating and/or cooling elements disposed within any of the lower plate, the upper plate, or any thermal management module. In some embodiments, at least one of a portion of the substrate 15, the surface of substrate stage 12C, or the substrate stage itself are maintained at a temperature less than other portions of the body 16 of the lower plate 10 or other portions of the body 33 of the upper plate 33. In some embodiments, at least a portion of the substrate disposed within the chamber formed from the upper and lower plates is maintained as the coolest components within the chamber, such as during an unmasking operation (see FIGS. 43B - 43G).

By way of example, and again with reference to FIG. 40B, zone A may be established at a temperature which is less than any of zones B, C, D, and/or E In some embodiments, zones A and B are maintained at about the same temperature, while zones C, D, and E are maintained at temperatures which are comparatively less. The skilled artisan will appreciate that one or more heating and/or cooling elements positioned proximal to zone B will allow zones A and B to maintained within a first temperature range, while one or more heating and/or cooling elements positioned proximal to each of zones C, D, and E will allow zones C, D, and to be maintained with a second temperature range. In some embodiments, the first temperature range is less than the second temperature range. In some embodiments, the first temperature range is about 2% lower than the second temperature range. In other embodiments, the first temperature range is about 3% lower than the second temperature range. In some embodiments, the first temperature range is about 4% lower than the second temperature range. In some embodiments, the first temperature range is about 5% lower than the second temperature range. In some embodiments, the first temperature range is about 7% lower than the second temperature range. In some embodiments, the first temperature range is about 8% lower than the second temperature range. In some embodiments, the first temperature range is about 10% lower than the second temperature range. In some embodiments, the first temperature range is about 12% lower than the second temperature range. In some embodiments, the first temperature range is about 15% lower than the second temperature range. In some embodiments, the first temperature range is about 20% lower than the second temperature range. In some embodiments, the first temperature range is about 25% lower than the second temperature range. In some embodiments, the first temperature range is about 30% lower than the second temperature range.

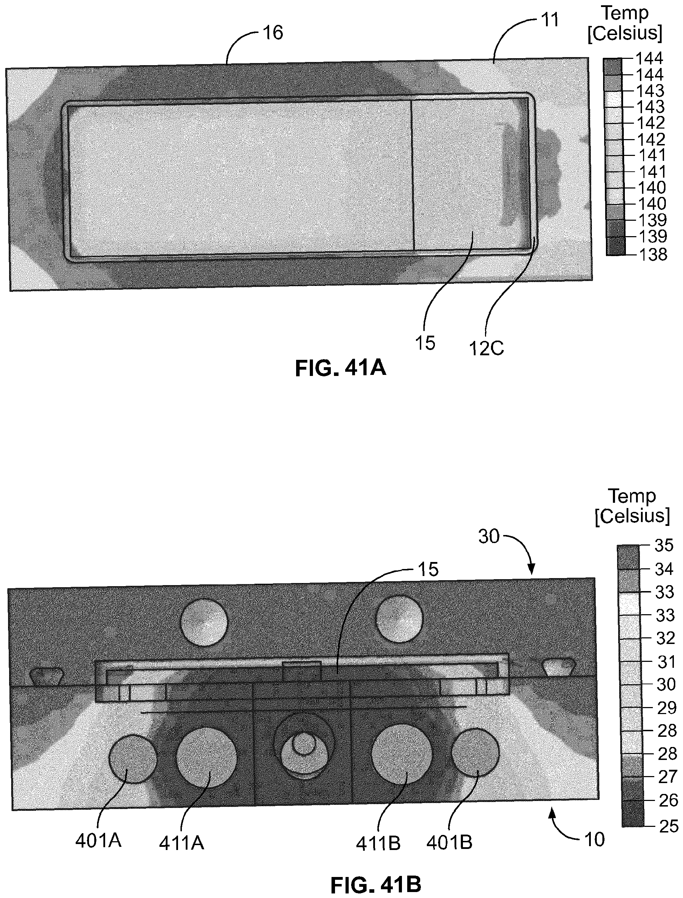

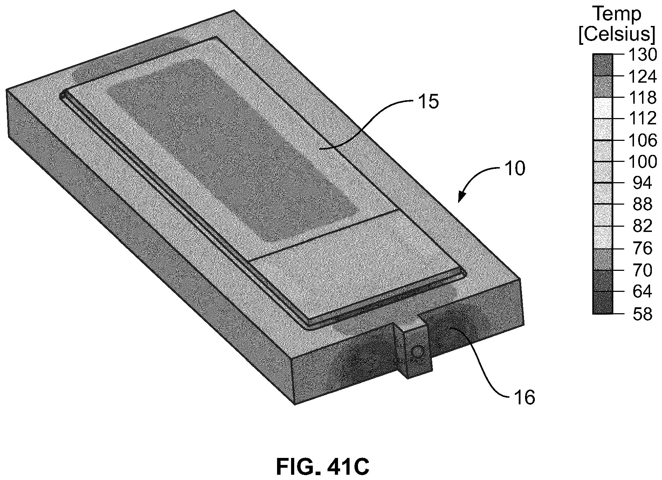

FIGS. 41A, 41B, and 41C each illustrate a substrate 15 in thermal communication with one or more heating and/or cooling elements (see, e.g., the heating and/or cooling elements 401A, 401B, 411A, and 411B in FIG. 41B). Each FIGS. 41A, 41B, and 41C illustrate that individual heating and/or cooling elements may be independently operated such that at least a portion of the substrate (or a specimen disposed on the substrate) within a chamber formed by the upper and lower pates 30 and 10, respectively, may have a temperature which is less than a temperature of other components disposed within the chamber. In this regard, and as noted above, any condensation formed within the chamber may be driven to that coldest portion of the chamber, for example the coldest portion of the specimen or the substrate, during any temperature ramp-down operation. In this way, evaporated fluids and/or reagents may be returned to the substrate and/or the specimen disposed on the substrate.

### SPECIMEN PROCESSING

The specimen processing assemblies of the present disclosure are configured to facilitate the processing of specimens disposed on the surface of a substrate. In some embodiments, the processing of specimens includes unmasking a specimen, e.g. antigen retrieval and/or target retrieval.

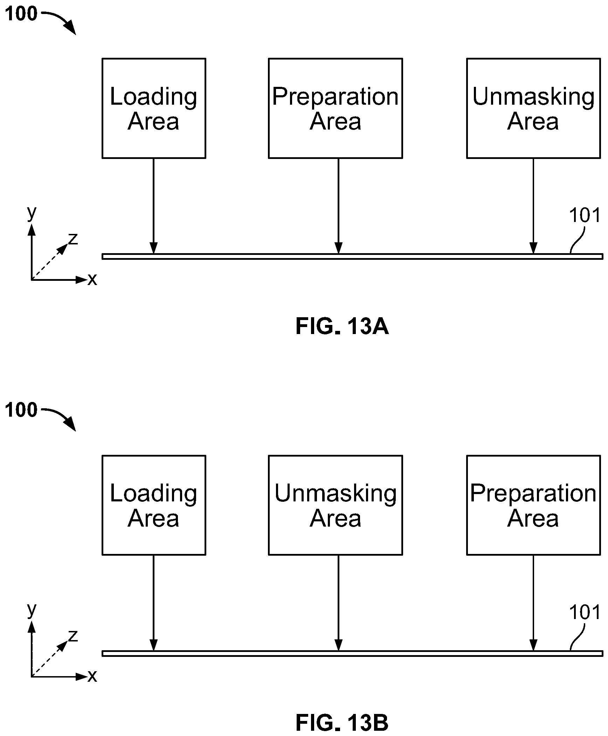

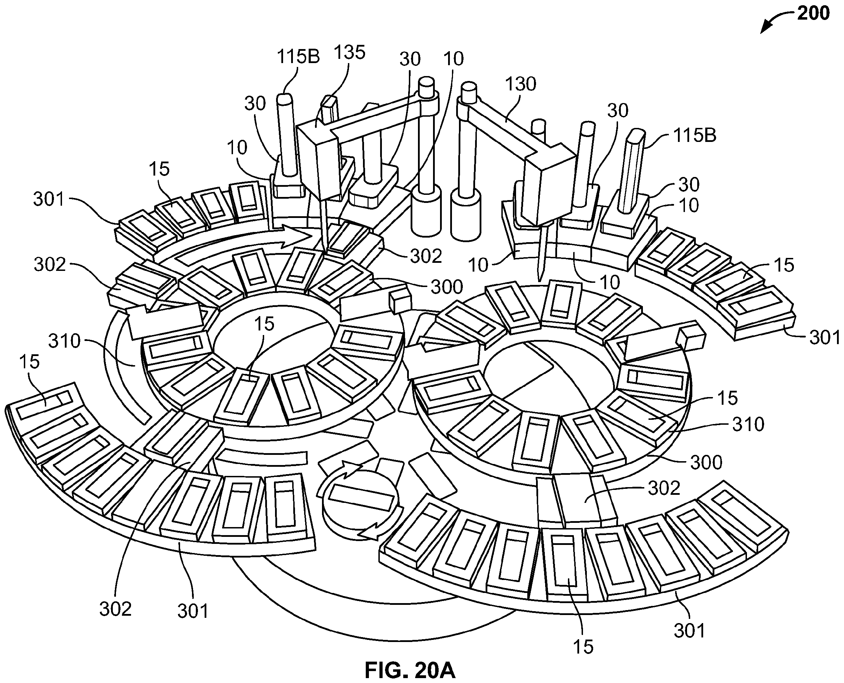

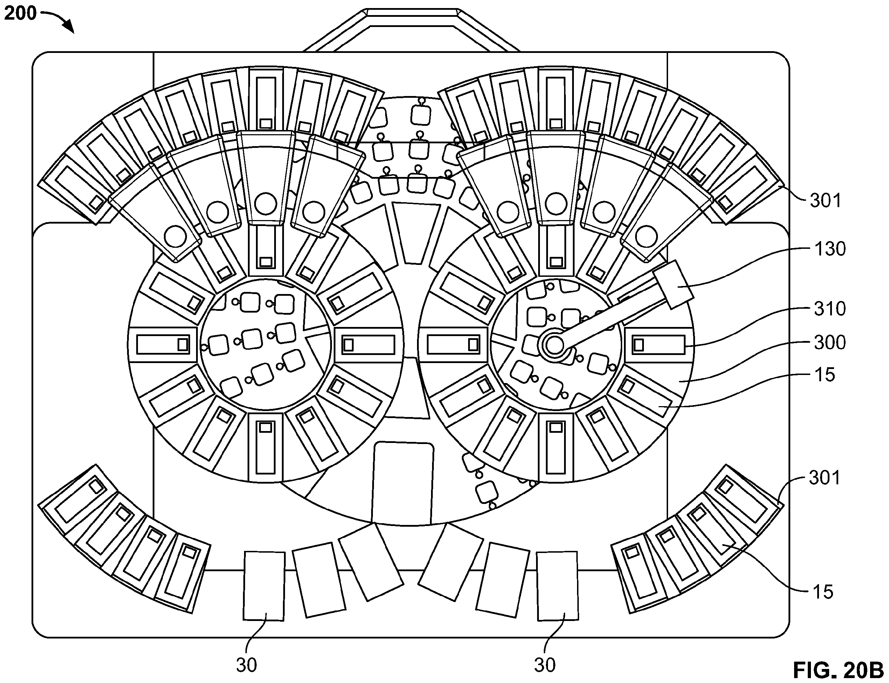

In some embodiments, different specimen processing operations may take place in the same area or in different areas of the specimen processing assemblies. In some embodiments, each of these different specimen processing areas may be pre-designated areas, for example areas that are set aside with the specimen processing assembly for performing a specific processing operation. FIGS. 13A and 13B provide two non-limiting examples of pre-designated specimen processing areas in the context of a movable lower plate coupled to a sub-assembly 101. As described further below, the lower plate may be moved along the sub-assembly 101 to different pre-designated processing areas. By way of another example, one or more dispense devices may be positioned over one or more substrate trays or carousels, such as depicted in FIGS. 20A and 20B. In this example, the area defined by the one or more substrate trays, carousels, and dispense devices is a pre-established specimen preparation area.

Alternatively, specimen processing areas may be defined by the presence or absence of one or more specimen processing assembly components. For example, for a specimen processing assembly including a fixed lower plate, a user may position a specimen bearing substrate on an upper surface of a substrate stage of the fixed lower plate, and this would define a loading area. Then, one or more dispense devices, mixing devices, and/or liquid removal devices may be moved to that fixed lower plate to dispense one or more fluids and/or reagents to the substrate. The presence of the one or more dispense devices in this area would define the area as a specimen preparation area.

Subsequently, an upper plate (and/or a force generating member) may then be moved to the fixed lower plate (after the one or more dispense devices, mixing devices, and/or liquid removal devices are moved out of the area), such that a chamber may be formed between the movable upper plate and the fixed lower plate. The formed chamber would then define an unmasking area. As in this example, any one area serves multiple purposes, e.g. the same area may be used as a preparation area and an unmasking area depending on what devices and/or components are positioned in that area.

By way of another example, a lower plate may be moved from a first position to a second position. In some embodiments, the first position is in a loading area and thus constitutes a pre-designated area. In some embodiments, the second position may be defined as a preparation area or an unmasking area depending on what component is present with the lower plate. For example, one or more dispense devices may be moved to the lower plate in the second position thereby defining a preparation area. Following the dispensing of one or more fluids and/or reagents to a specimen bearing substrate, an upper plate may then be moved to the lower plate in the second position such that a chamber may be formed. In some embodiments, the formed chamber defines an unmasking area.

In the context of a specimen processing assembly 100 including a lower plate 10 movably coupled to a sub-assembly 101, the lower plate 10 may be moved from a first position, to a second position, to a third position, and to an n^{th} position. For example, in some embodiments, the lower plate 10 may be moved between a loading area, a preparation area, and an unmasking area. Of course, the lower plate 10 may be moved or held at any intermediate area in between any of the loading, preparation, or unmasking areas. In some embodiments, specimen bearing substrates are loaded onto a lower plate in a loading area. Alternatively, specimen bearing substrates are loaded onto an intermediary member for holding and/or transporting a substrate in a loading area.

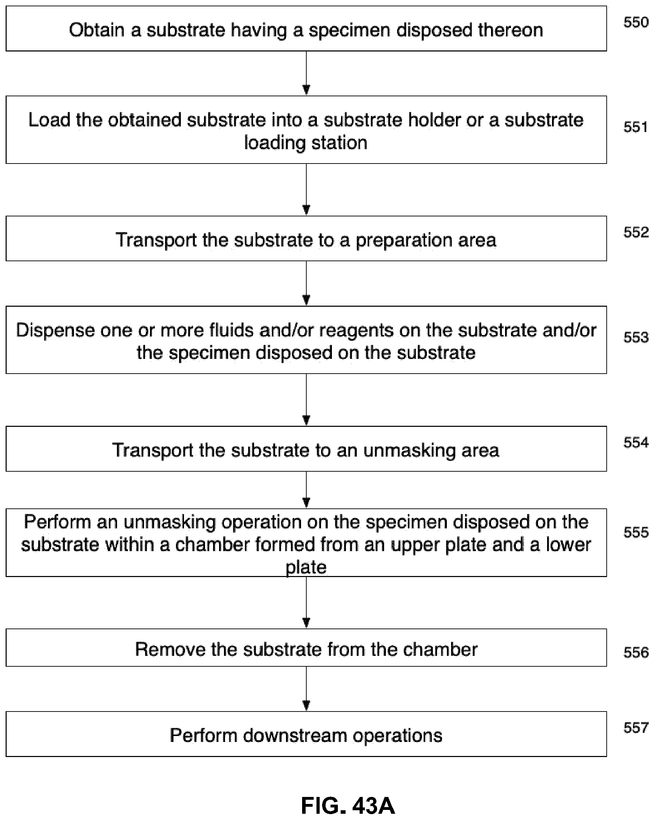

Examples of intermediary members, such as substrate loaders 302, substrate holders 310, and/or substrate trays, are depicted in FIGS. 19A - 19C and 20A - 20B. In these embodiments, the intermediary member may transfer the substrate to the lower plate for further processing. Following the loading of the specimen bearing substrate, the specimen may be treated in a preparation area with one or more fluids and/or reagents. Unmasking operations may then be carried out at elevated temperatures and/or pressures in an unmasking area (see FIGS. 43A - 43F). For example, once a specimen bearing substrate 15 is moved into position, such as within a chamber formed by the upper plate 30 and lower plate 10, an unmasking operation may allow surface antigens and/or nucleic acids to become visibly distinguishable, whether or not a subsequent staining procedure is applied thereto. Unmasking may be performed according to any of the methods described in PCT Publication No. WO/2013/079606, the disclosure of which is hereby incorporated by reference herein in its entirety.

FIGS. 13A and 13B illustrate the various specimen processing areas in the context of a movable lower plate. In these embodiments, the lower plate 10 may be moved between a loading area 110, a preparation area 111, and an unmasking area 112. In some embodiments, the lower plate 10 may be moved or held at any intermediate area in-between any of the loading 110, processing 111, or unmasking areas 112.

In some embodiments, the lower plate 10 is initially moved to a loading area, such as illustrated in FIGS. 13A and 13B (if it is not already located within such an area). Once in the loading area, a specimen bearing substrate 15 may be positioned on the upper surface 12C of the substrate stage 12 of the lower plate 10, such as by an operator of the specimen processing assembly or a system including the specimen processing assembly. In some embodiments, the specimen bearing substrate 15 is a microscope slide.

Next, the lower plate 10 may be moved from the loading area 110 to one of a preparation area 111 or an unmasking area 112. In one embodiment, such as depicted in FIG. 13A, a lower plate 10 is moved from the loading area to the preparation area such that one or more fluids and/or reagents may be deposited or dispensed onto the surface of the substrate 15 and/or any sample disposed thereon. In some embodiments, one or more unmasking agents may be dispensed onto the specimen while in the preparation area, and unmasking may commence upon the dispensing of such reagents. In some embodiments, a total volume of one or more fluids and/or reagents dispensed to the substrate or the specimen disposed on the substrate ranges from between about 100µL to about 2000µL. In some embodiments, a total volume of one or more fluids and/or reagents dispensed to the substrate or the specimen disposed on the substrate ranges from between about 100µL to about 1500µL. In some embodiments, a total volume of one or more fluids and/or reagents dispensed to the substrate or the specimen disposed on the substrate ranges from between about 100µL to about 1250µL. In some embodiments, a total volume of one or more fluids and/or reagents dispensed to the substrate or the specimen disposed on the substrate ranges from between about 100µL to about 1000µL. In some embodiments, a total volume of one or more fluids and/or reagents dispensed to the substrate or the specimen disposed on the substrate ranges from between about 100µL to about 900µL. In some embodiments, a total volume of one or more fluids and/or reagents dispensed to the substrate or the specimen disposed on the substrate ranges from between about 150µL to about 800µL. In some embodiments, a total volume of one or more fluids and/or reagents dispensed to the substrate or the specimen disposed on the substrate ranges from between about 200µL to about 750µL. In some embodiments, a total volume of one or more fluids and/or reagents dispensed to the substrate or the specimen disposed on the substrate ranges from between about 250µL to about 700µL. In some embodiments, a total volume of one or more fluids and/or reagents dispensed to the substrate or the specimen disposed on the substrate ranges from between about 250µL to about 650µL. In some embodiments, a total volume of one or more fluids and/or reagents dispensed to the substrate or the specimen disposed on the substrate ranges from between about 250µL to about 600µL. In some embodiments, a total volume of one or more fluids and/or reagents dispensed to the substrate or the specimen disposed on the substrate ranges from between about 250µL to about 550µL. In some embodiments, a total volume of one or more fluids and/or reagents dispensed to the substrate or the specimen disposed on the substrate ranges from between about 300µL to about 550µL. In some embodiments, a total volume of one or more fluids and/or reagents dispensed to the substrate or the specimen disposed on the substrate ranges from between about 350µL to about 550µL. In some embodiments, a total volume of one or more fluids and/or reagents dispensed to the substrate or the specimen disposed on the substrate is about 500µL.

Again, with reference to FIG. 13A, once all fluids and/or reagents have been dispensed onto the specimen bearing substrate, the lower plate 10 may be moved to the unmasking area 112. Once in the unmasking area 112, the lower plate 10 and/or upper plate 30 may be independently moved such that at least a portion of a lower engagement surface 11 and a portion of an upper engagement surface 31 are brought into contact so as to form a chamber that at least partially encloses the specimen bearing substrate 15 and any fluids and/or reagents disposed thereon. In some embodiments, the chamber facilitates the processing of specimens, fluids, and/or reagents in a controlled environment and in a predetermined manner. In some embodiments, the controlled environment allows for specimen processing at elevated temperatures and/or pressures, as compared with an environment external to the chamber. In some embodiments, an unmasking operation is performed within the sealed chamber (see, for example, FIGS. 43A to 43F).

In some embodiments, one or more heating elements can be activated to heat a fluid present within the chamber, thereby increasing the pressure within the chamber (which concomitantly increases the pressure exerted onto any specimen disposed on the substrate). In some embodiments, one or more gases and/or steam may be introduced into the chamber through one or more ports in communication with the chamber to effectuate pre-pressurization of the chamber. In some embodiments, an external force, such as one exerted by a force generating member, may be exerted onto the upper plate to maintain a sealing engagement between the upper and lower plates as the pressure inside the chamber increases (such as from the heating of a fluid and/or the introduction of the one or more gases and/or steam). In some embodiments, the upper and lower plates include features, e.g. tabs and or sealing elements, which facilitate a sealing engagement when an internal pressure within the chamber increases (for example, an internal pressure may force tabs on an upper and lower plate to seal to engage, and/or a sealing element disposed between the upper and lower plates to deform or move to form a sealing engagement).

In some embodiments, the preparation and unmasking areas may be reversed (compare FIGS. 13A and 13B). In some embodiments, the specimen processing assembly 100 may include any number of preparation areas and/or unmasking areas along rail 101. For example, the specimen processing assembly may include a loading area, a first preparation area, a second preparation area, and an unmasking area. In addition, the specimen processing assembly may include a holding area, such as an area where a substrate is held in (e.g. such as for a predetermined amount of time at ambient temperatures and pressures), or an imaging area where a sample disposed on a substrate may be imaged and/or otherwise viewed under a microscope after processing and/or antigen retrieval. For example, the specimen processing assembly may include a loading area, a first preparation area, a second preparation area, an unmasking area, and a holding and/or imaging area. In some embodiments, a holding area may be positioned between any of the loading 110, processing 111 and/or unmasking areas 112; or may be located at a one or both terminal ends of the rail, for example before a loading area or after an unmasking area.

In some embodiments, two or more lower plates 10 may be coupled to a single rail. In some embodiments, each of the lower plates 10 may independently move along the rail 101. Alternatively, two or more lower plates 10 may be coupled to a single rail 101 and may be linked together such that they move in tandem. For example, the two lower plates 10 may be linked such that one is positioned in a preparation area while another is positioned in an unmasking area. Alternatively, the two lower plates 10 may be linked such that one is positioned in a preparation area while another is positioned in an intermediate area or holding area.

### NON-LIMITING EMBODIMENTS OF SPECIMEN PROCESSING ASSEMBLIES

The present disclosure provides specimen processing assemblies that include lower and upper plates where at least one of the lower and upper plates is movable toward the other of the lower and upper plate. In some embodiments, the lower and upper plates are both independently movable in any of the x-, y-, and z-coordinate directions, for example the specimen processing assemblies include upper and lower plates that are both movable along any of the coordinate directions. For example, in some embodiments, the lower plate and the upper plate may both be moved simultaneously toward each other, and the movement of the lower and upper plates may independently be in any of the x-, y-, and z- directions. In some embodiments, both the lower and upper plates may move independently to contact one another (such as at the interface of a lower and upper engagement surface). In some embodiments, subsequent to the contacting of the lower and upper plates at their respective lower and upper engagement surfaces, one or more force generating members may be engaged to exert a force onto at least the upper plate or any structure disposed therebetween. In some embodiments, the one or more force generating members include motors, pistons (e.g. pneumatic and/or hydraulic), springs, screws, levers, and/or a cam mechanism. In some embodiments, any combination of force generation members may be utilized, e.g. a motor and a spring, a motor and a level, a piston and a spring, etc.

In other embodiments, the specimen processing assemblies include upper and lower plates that are both movable, but where the movements of each of the lower and upper plates are limited (e.g. one plate may be limited to movement along a single coordinate direction, while the other plate is movable along any coordinate direction). For example, a lower plate may be moved toward an upper plate in any of the x, y, and z-coordinate directions to a position where the lower plate is in proximity to the upper plate, and then the upper plate may be moved toward the lower plate, where the movement of the upper plate toward the lower plate includes movement along either one or two of the coordinate directions (e.g. movement along only the z-axis).

In yet other embodiments, one of the upper or lower plates is a moved to a first predetermined position, and then the other of the upper or lower plate is moved to meet the plate in the first predetermined position. For example, the lower plate may be moved to a predetermined position and, simultaneously or subsequently, the upper plate may be moved toward the lower plate to facilitate a sealing engagement between the upper and lower engagement surfaces of the upper and lower plates, respectively. By way only of another example, in some embodiments, the lower plate may be moved to a predetermined position and then, simultaneously or subsequently, the upper plate may be moved downward onto the lower plate, such as with a motor, a spring, a piston, or a cam mechanism.

In even further embodiments, one of the upper or lower plates is fixed, and the other of the upper or lower plate is movable to the fixed plate. For example, in some embodiments, the lower plate is fixed, and the upper plate is adapted to move to the lower plate in any of the x-, y-, and z- directions. By way of another example, in some embodiments, the upper plate is fixed, and the lower plate is adapted to move to the second plate in any of the x-, y-, and z- directions.

By way of another example, a lower plate may be fixed, and a specimen loader may be utilized to deliver substrates to the fixed lower plate. In this example, the upper plate may then be moved toward the lower plate such that the upper and lower engagement surfaces contact one another. Following this example further, a motor (including a screw), a piston, and/or a cam mechanism may then be used to exert a force onto at least the upper plate such that a sealing engagement is maintained between the fixed lower plate and the movable upper plate, even as the pressure within the chamber formed from the upper and lower plates is increased (e.g. such as through heating and/or the introduction of gas and/or steam).

### Movement of at least a lower plate along a horizontal sub-assembly

Another aspect of the present disclosure is a specimen processing assembly including (i) a lower plate movably coupled to a horizontal sub-assembly, wherein the lower plate includes a lower engagement surface and one or more substrate stages; and (ii) an upper plate having an upper engagement surface complementary to the lower engagement surface. In some embodiments, the one or more substrate stages are each raised relative to at least a portion of the lower engagement surface, and wherein the raised substrate stage includes an upper planar surface adapted to hold a substrate horizontally. In some embodiments, the upper plate further includes a cavity recessed relative to the upper engagement surface, wherein the recessed cavity is adapted to receive at least a portion of the raised substrate stage. In some embodiments, one of the lower plate or the substrate stage is configured such that the planar upper surface of the substrate stage remains horizontal as the lower plate horizontally traverses the horizontal sub-assembly.

In some embodiments, the upper plate is fixed, and the lower plate first moves horizontally to a position beneath the upper plate, and then the lower plate is raised to contact the upper plate. In some embodiments, the upper plate is coupled (directly or indirectly) to one or more springs and the lower plate first moves horizontally to a position beneath the upper plate, and then the lower plate is raised to contact the upper.

In some embodiments, the lower plate is moved to a predetermined position beneath the upper plate and then upper plate is moved toward the lower plate. For example, one or more force generating members may drive the upper plate downward (along the z-axis) toward the pre-positioned lower plate to facilitate a sealing engagement between the upper and lower engagement surfaces. In some embodiments, the lower plate is moved horizontally along the sub-assembly while the upper plate is moved simultaneously toward the lower plate, where the movement of the upper plate may be in any of the x-, y-, and/or z- directions.

FIG. 14A illustrates one non-limiting example of a specimen processing assembly 100 including a lower plate 10, an upper plate 30 having a cavity 32, a sub-assembly 101 (e.g. a rail) having first and second ends 114 and 113, respectively, and first and second support members 115A and 115B. In some embodiments, the lower plate 10 includes a substrate stage 12 that is configured horizontally, for example parallel to the ground. Although the lower and upper plates 10 and 30, respectively, are illustrated in FIG. 14A as having a rectangular shape, the lower and upper plates 10 and 30, respectively, may have any size and/or shape, including a wedge-based shape (such as set forth in at least FIGS. 6A - 6E), provided the lower plate is configured to include a substrate stage 12 having an upper surface which is parallel to the ground (for example parallel to the x,y plane of FIG. 14A). In some embodiments, the upper and lower plates 30 and 10, respectively, also include complementary upper and lower engagement surfaces 31 and 11, respectively, that have complementary configurations (e.g. complementary planar surfaces which facilitate a sealing engagement, together with any seal body disposed therebetween).

In the embodiment depicted in FIG. 14A, the sub-assembly 101 is positioned horizontally. As compared with the specimen processing assembly depicted in FIGS. 16A and 16B, there is no horizontal offset imparted to the sub-assembly 101. Thus, the movement of the lower plate 10 along the sub-assembly 101 is horizontal, for example parallel to the ground. As a result, any fluids, reagents, and/or samples disposed on the surface of substrate 15, which is held in position by substrate stage 12, will remain on the surface of the substrate 15 as it is moved along the length of the sub-assembly 101.

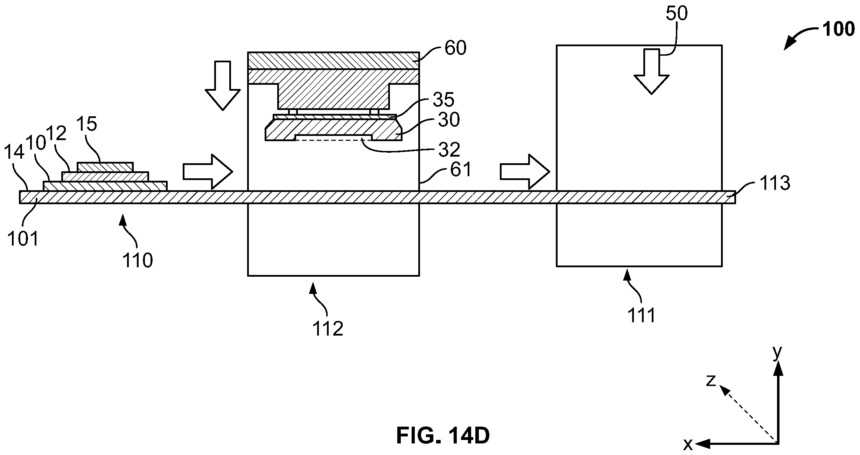

After the lower plate 10 is moved from the loading area 110 to the preparation area 111, one or more fluids and/or reagents may be dispensed from one or more dispense devices 50, such as one or more dispense nozzles or pipettes positioned above sub-assembly 101 (e.g. the dispense devices may be attached to a dispense assembly, such as a movable dispense assembly, as described further herein). Alternatively, the lower plate 10 may be moved directly to the unmasking area 112 from the loading area 110. As shown in FIGS. 13B and 14D, the unmasking area 112 and processing area 111 may be reversed in order. In some embodiments, a total volume of one or more fluids and/or reagents dispensed to the substrate or the specimen disposed on the substrate ranges from between about 100µL to about 2000µL. In some embodiments, a total volume of one or more fluids and/or reagents dispensed to the substrate or the specimen disposed on the substrate ranges from between about 100µL to about 1500µL. In some embodiments, a total volume of one or more fluids and/or reagents dispensed to the substrate or the specimen disposed on the substrate ranges from between about 100µL to about 1250µL. In some embodiments, a total volume of one or more fluids and/or reagents dispensed to the substrate or the specimen disposed on the substrate ranges from between about 100µL to about 1000µL. In some embodiments, a total volume of one or more fluids and/or reagents dispensed to the substrate or the specimen disposed on the substrate ranges from between about 100µL to about 900µL. In some embodiments, a total volume of one or more fluids and/or reagents dispensed to the substrate or the specimen disposed on the substrate ranges from between about 150µL to about 800µL. In some embodiments, a total volume of one or more fluids and/or reagents dispensed to the substrate or the specimen disposed on the substrate ranges from between about 200µL to about 750µL. In some embodiments, a total volume of one or more fluids and/or reagents dispensed to the substrate or the specimen disposed on the substrate ranges from between about 250µL to about 700µL. In some embodiments, a total volume of one or more fluids and/or reagents dispensed to the substrate or the specimen disposed on the substrate ranges from between about 250µL to about 650µL. In some embodiments, a total volume of one or more fluids and/or reagents dispensed to the substrate or the specimen disposed on the substrate ranges from between about 250µL to about 600µL. In some embodiments, a total volume of one or more fluids and/or reagents dispensed to the substrate or the specimen disposed on the substrate ranges from between about 250µL to about 550µL. In some embodiments, a total volume of one or more fluids and/or reagents dispensed to the substrate or the specimen disposed on the substrate ranges from between about 300µL to about 550µL. In some embodiments, a total volume of one or more fluids and/or reagents dispensed to the substrate or the specimen disposed on the substrate ranges from between about 350µL to about 550µL. In some embodiments, a total volume of one or more fluids and/or reagents dispensed to the substrate or the specimen disposed on the substrate is about 500µL.

In some embodiments, following the dispensing of one or more fluids and/or reagents to the specimen disposed on the upper surface of the substrate 15, the lower plate 10 may then be moved to an unmasking area 112 where it meets an upper plate 30, such as a pre-positioned upper plate. In some embodiments, the upper plate 30 is coupled to a support member 115B. In some embodiments, the upper plate 30 is fixed in positioned. In other embodiments, the upper plate 30 is movable, e.g. the upper plate 30 may be moved toward the lower plate.

In some embodiments, the lower plate 10 is first moved under the upper plate 30 such that features of the lower and upper plates align with one another, e.g. such that a least a portion of an upper engagement surface 31 aligns with a lower engagement surface 11. The lower and upper plates 10 and 30, respectively, may then be independently moved together. For example, each of the lower and upper plates 10 and 30, respectively, may be independently moved toward one another, such as along the z-axis.

In some embodiments, a lower plate 10 may be moved vertically upward along the z-axis to contact or couple with the upper plate 30. For example, the upper plate 30 may be fixed to support member 115B and only the lower plate is moved vertically. By way of another example, the upper plate 30 may be coupled to a support member including a spring, such that as the lower plate 10 is moved vertically and contacts the upper plate, the spring coupled to the support member will provide a downward force onto the upper plate and/or the lower to further facilitate a sealing engagement between the upper and lower engagement surfaces of the upper and lower plates. In some embodiments, the support member 115A is coupled to a motor (including a screw) configured to raise the lower plate 10 vertically.

Alternatively, the upper plate 30 may be lowered onto the lower plate 10 after it is positioned in the unmasking area 112. In some embodiments, the upper plate 30 may be lowered (e.g. moved downward along the z-axis) such that at least a portion of the upper engagement surface 31 engages the lower engagement surface 11, and any seal body disposed therebetween. In some embodiments, the upper plate 30 is coupled to one or more force generating members and moved downwards towards the lower plate 10.

In some embodiments, a sample disposed on the substrate and present in the chamber formed from the contacting of the upper and lower plates may then be heated at an elevated temperature and/or pressurized (such as through heating and/or the introduction of a gas and/or steam). In some embodiments, the heating of the substrate (and/or any applied fluids and/or reagents) within the sealed chamber allows for processing at both elevated an temperature and pressure, which may be monitored with one or more temperature and/or pressure sensors in communication with the internal environment of the chamber (e.g. temperature and/or pressure sensors located in the cavity of the upper plate, or temperature sensors in contact with the substrate and/or a sample disposed on the substrate).

### Specimen processing assemblies including a cam mechanism or a piston

Another aspect of the present disclosure is a specimen processing assembly including (i) a lower plate movably coupled to a sub-assembly, wherein the lower plate includes a lower engagement surface and one or more substrate stages; and (ii) an upper plate having an upper engagement surface complementary to the lower engagement surface. In some embodiments, the one or more substrate stages are each raised relative to at least a portion of the lower engagement surface, and wherein the raised substrate stage includes an upper surface adapted to hold a substrate horizontally. In some embodiments, the upper plate further includes a cavity recessed relative to the upper engagement surface, wherein the recessed cavity is adapted to receive at least a portion of the raised substrate stage. In some embodiments, one of the lower plate or the substrate stage is configured such that the planar upper surface of the substrate stage remains horizontal as the lower plate horizontally traverses the horizontal sub-assembly.

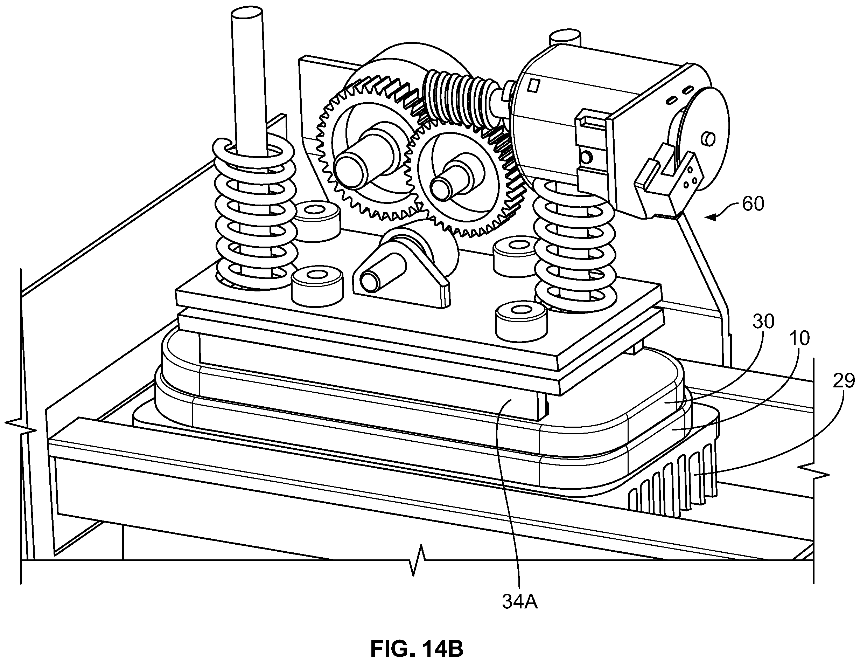

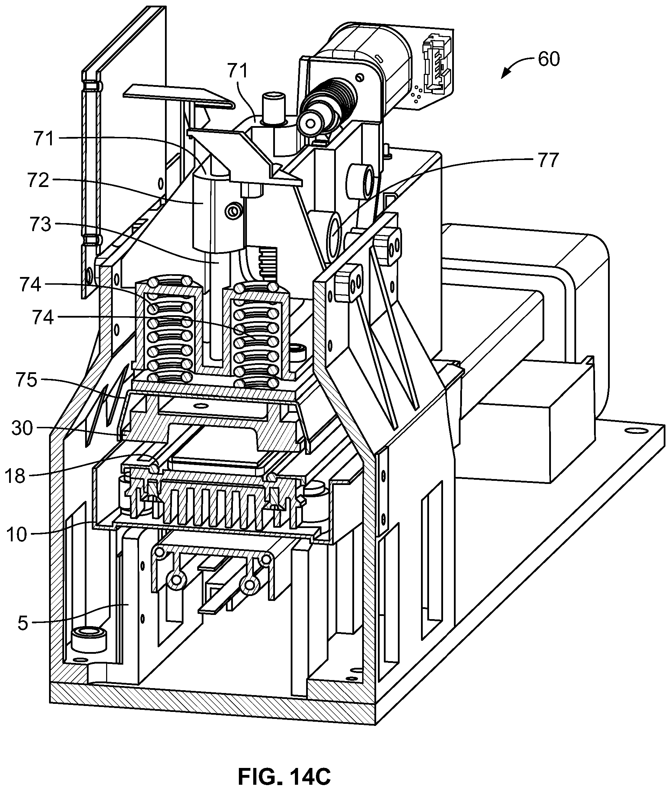

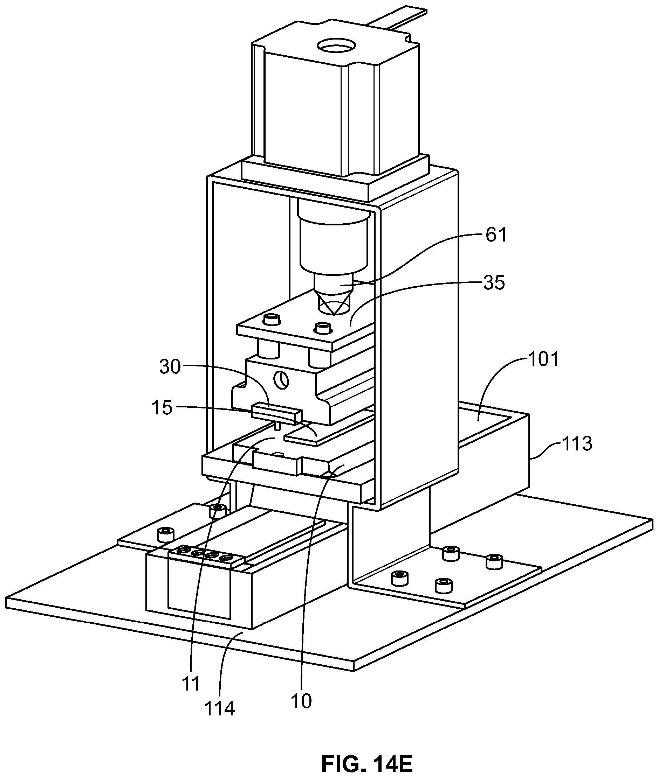

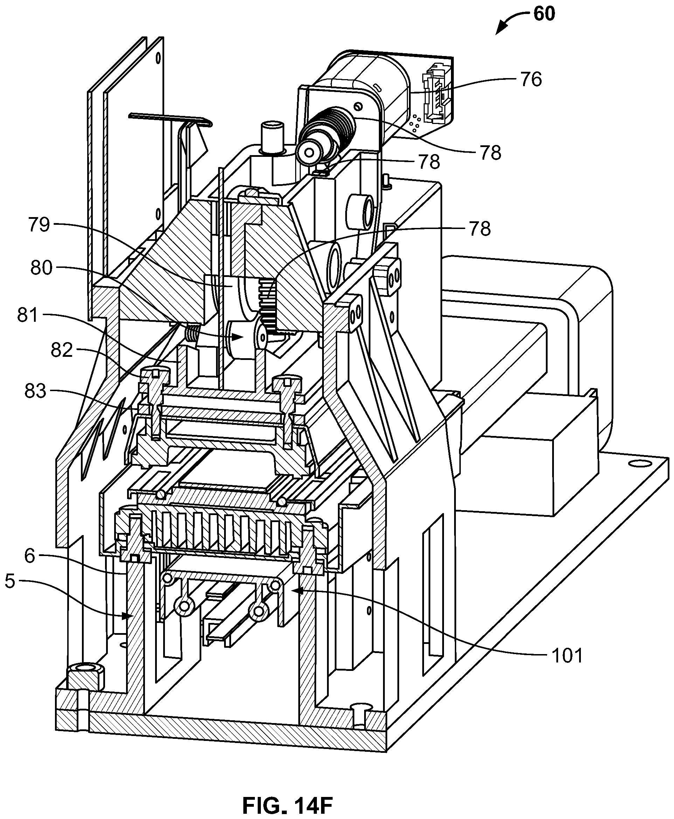

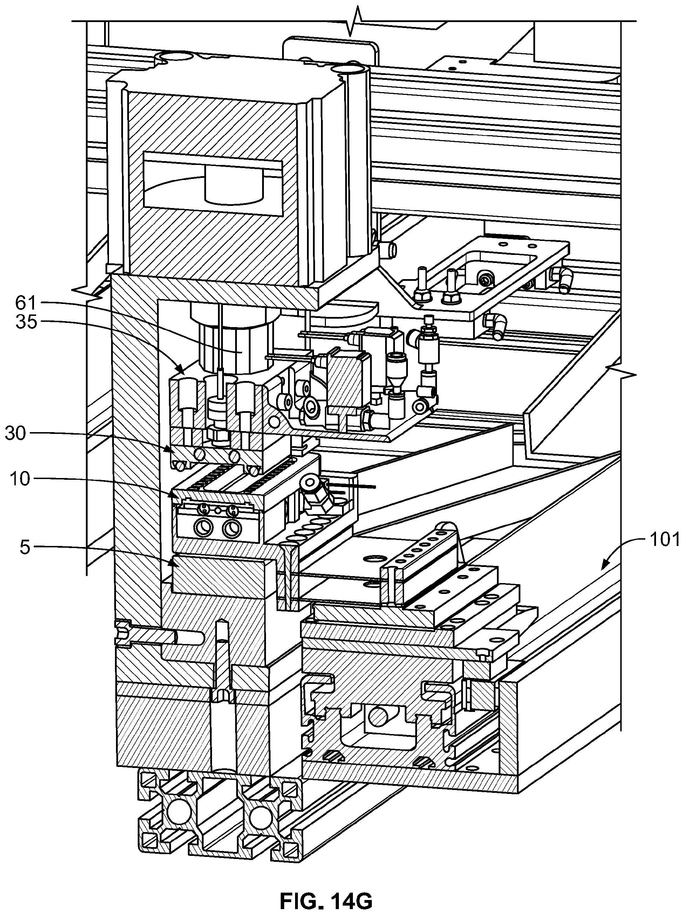

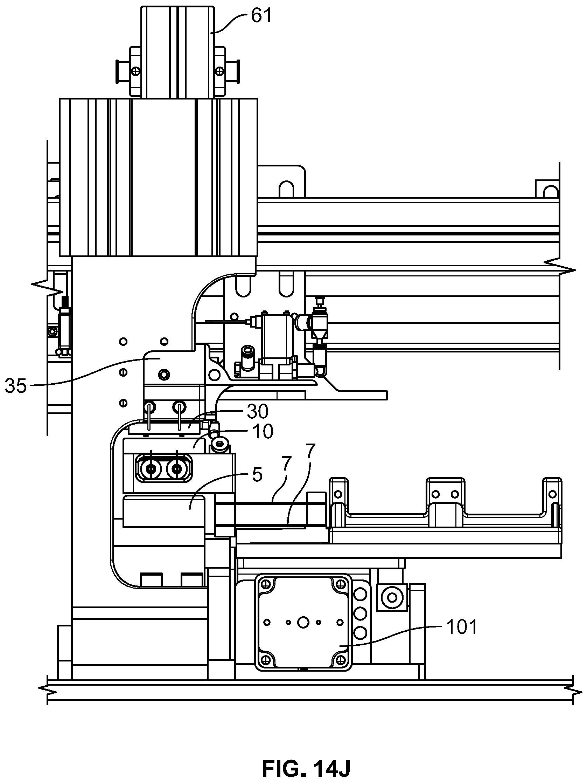

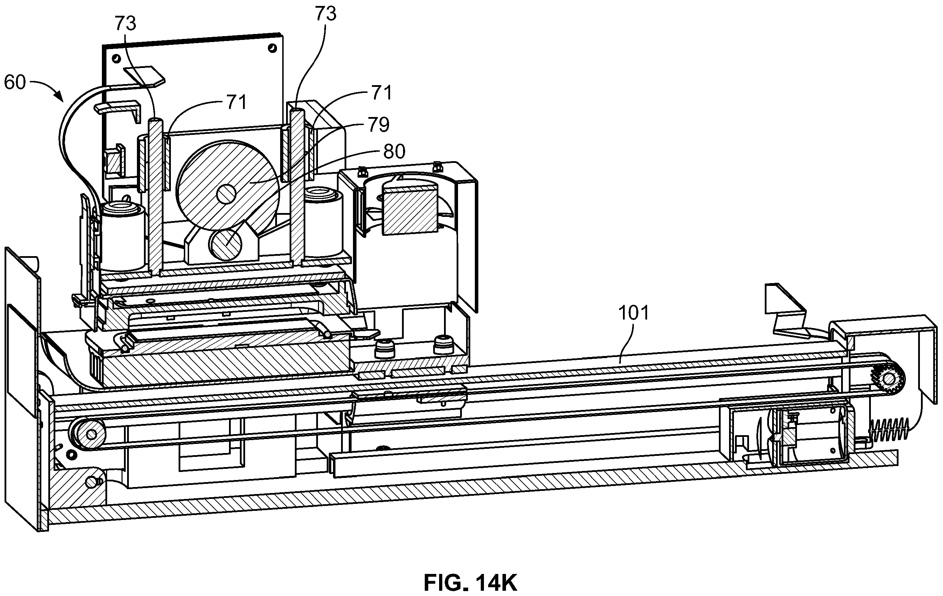

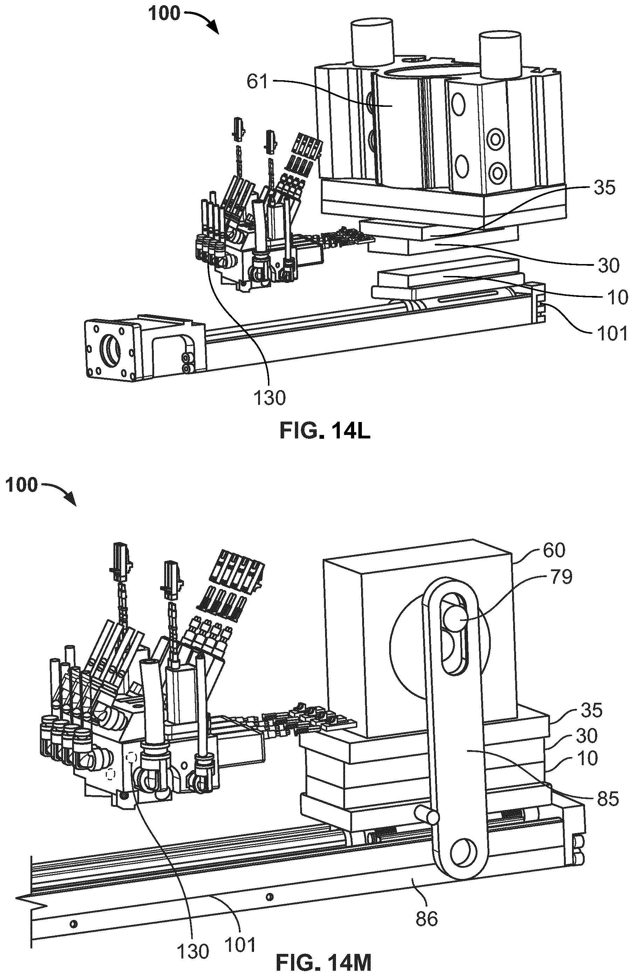

In some embodiments, the upper plate is fixed, and the lower plate first moves horizontally to a position beneath the upper plate, and then the lower plate is raised to contact the upper plate. In some embodiments, the lower plate is moved to a predetermined position beneath the upper plate and the upper plate is moved toward the lower plate. In other embodiments, the upper plate is pushed downward with a piston (e.g. an electric piston, a pneumatic piston or a hydraulic piston) (see FIG. 14E, 14G, 14J, and 14L), or driven downward with a cam mechanism 60 (see, e.g. FIGS. 14B, 14C, 14F, 14K, and 14M).

In some embodiments, the specimen processing assemblies of the present disclosure include a cam mechanism. By way of example, FIG. 14B illustrates a cam mechanism 60 which is illustrated as having acted upon a pressure member 34A coupled to an upper plate 30. FIG. 14B shows the upper plate 30 in a sealing engagement with lower plate 10. In a similar manner, FIGS. 14C and 14K illustrate an upper plate 30 in coupled to a cam mechanism 60, whereby the upper plate 30 is in the process of being moved downward onto a lower plate 10.

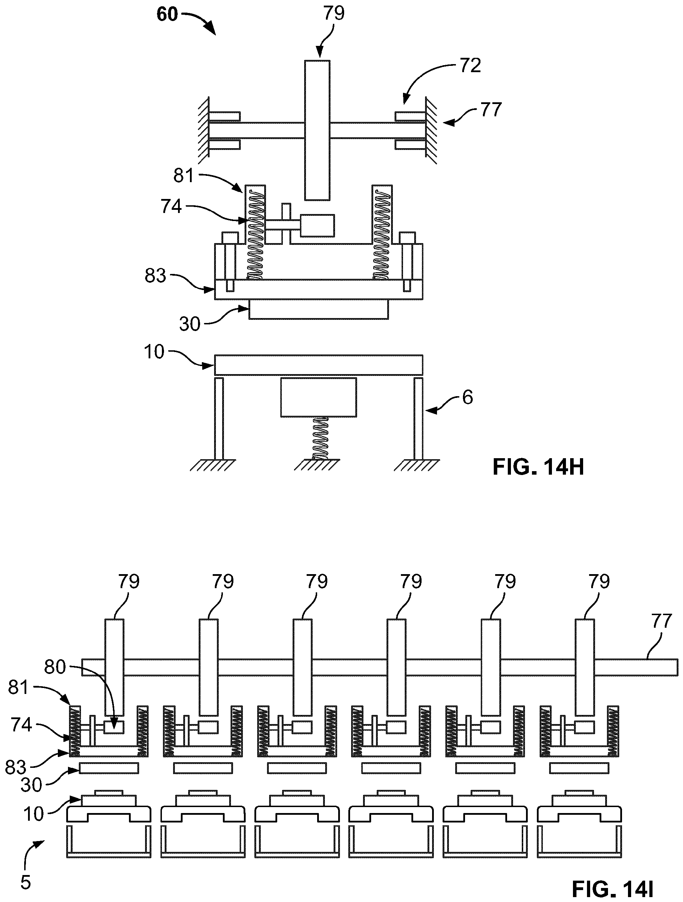

FIGS. 14C, 14F, 14H, 14K, and 14M illustrate the various components which may be included within the cam mechanism 60. For example, the cam mechanism 60 may include a cam 79, a cam shaft 77, and one or more cam gears (which are also illustrated in FIG. 14B). In some embodiments, the cam mechanism may further include a cam roller 80, a cam pressure plate 81, a shoulder screen 82, and a spring pressure plate 83. Additionally, the cam mechanism 60 may include linear bar 71, a bearing support 72, a linear rail 73, one or more springs 74, and/or a heat shield 75. It is believed that the incorporation of one or more springs 74 allows the maximum force generated by the cam mechanism 60 to be limited. Moreover, the springs limit the amount of pressure that may be exerted onto the upper plate 30 by the cam mechanism 60. In this manner, if the pressure within the formed chamber becomes too high, excessive pressure may be relieved safely. In some embodiments, a specimen processing assembly including a cam (or for that matter a piston) may include an anvil support 5 (such as one coupled to an anvil bearing 6) so as to provide support to the lower plate and other components when a downward force is exerted by the cam (or piston). As such, the anvil support 5 may prevent or mitigate deformation of the lower plate and other specimen processing assembly components. In some embodiments, multiple cam mechanisms 60 may be linked together via a common cam shaft 77 (see FIG. 14I). In some embodiments, the cam mechanism 60 may be in communication with a linkage 85, where a pin 86 on a support beneath the lower plate 10 may be used to actuate a cam 79.

In some embodiments, the upper plate 30 is driven down with a force sufficient to form or maintain a seal along an interface of the upper and lower engagement surfaces 31 and 11, respectively. In some embodiments, the amount of force exerted by the cam mechanism is predetermined. In some embodiments, the amount of force exerted by the cam mechanism is limited such that if a pressure within a chamber formed from the upper and lower plates exceeds a predetermined amount, the cam mechanism may give way so as to relieve any excess chamber pressure. In some embodiments, pressure relief ports and/or valves may be provided within the upper and/or lower plates of the formed chamber so as to provide a second safety mechanism for relieving high pressures or mitigating high pressure build-up.

In some embodiments, a sample disposed on the substrate and present in the chamber formed from the contacting of the upper and lower plates may then be heated at an elevated temperature and/or pressurized (such as through heating and/or the introduction of a gas and/or steam). In some embodiments, the heating of the substrate (and/or any applied fluids and/or reagents) within the sealed chamber allows for processing at both elevated an temperature and pressure, which may be monitored with one or more temperature and/or pressure sensors in communication with the internal environment of the chamber (e.g. temperature and/or pressure sensors located in the cavity of the upper plate, or temperature sensors in contact with the substrate and/or a sample disposed on the substrate).

FIG. 14D further illustrates a specimen processing assembly 100 including a sub-assembly 101, a lower plate 10, an upper plate 30, and a cam mechanism 60. In some embodiments, the sub-assembly 10 is positioned horizontally, such that the lower plate 10 moves horizontally, for example parallel to the ground as it traverses the length of sub-assembly 101. In some embodiments, the lower plate 10 includes a substrate stage 12 having an upper surface such that a substrate supported by the upper surface is held horizontally. FIG. 14D illustrates the lower plate 10 initially positioned in a loading area 110. The lower plate 10 may then be moved to an unmasking area 112, such as an unmasking area including an upper plate communicatively coupled to a cam mechanism 60. In some embodiments, the lower plate 10 is moved to a preparation area 111 prior to being moved to the unmasking area 112. As noted herein, a specimen disposed on a substrate 15 may be treated within the preparation area 111, e.g. one or more fluids and/or reagents may be provided to the specimen disposed on the substrate, such as through one or more dispense devices 50.

Once the lower plate 10 is positioned within the unmasking area 112 and aligned with the pre-positioned upper plate 30, the cam mechanism 60 may be lowered such that an upper engagement surface 31 of the upper plate 30 at least partially engages a lower engagement surface 11 of the lower plate 10 (or any seal body disposed therebetween). In some embodiments, the cam mechanism 60 exerts a downward force such that a sealing engagement is formed and/or maintained between the upper engagement surface 31 and the lower engagement surface 11. In this way, a substrate disposed within a chamber formed from upper and lower plates may be subject to a predetermined environment, e.g. one having an elevated temperature and/or pressure as compared with an environment external to the formed chamber.

In some embodiments, while the embodiment depicted in FIG. 14D utilizes a cam mechanism 60, a motor (including a screw) or a piston (see FIGS. 14E, 14G, and 14J) may be used in place of the cam mechanism 60. In other embodiments, the upper plate 30 is pushed downward with a piston 61 (e.g. a pneumatic piston or a hydraulic piston) (see FIGS. 14E, 14G, and 14L). For example, a piston 61 may exert a downward force onto one or more pressure members 35, thereby maintaining a seal between the upper and lower plates 30 and 10, respectively. As depicted in at least FIG. 14G, the lower plate 10 may be in communication with an anvil support 6 such that the lower plate does not deform when a force is exerted onto it by way of the piston 61. In some embodiments, the amount of force exerted by the piston is predetermined. In some embodiments, the amount of force exerted by the piston is limited such that if a pressure within a chamber formed from the upper and lower plates exceeds a predetermined amount, the piston may give way so as to relieve any excess chamber pressure. In some embodiments, one or more pressure relief ports and/or valves may be provided within the upper and/or lower plates of the formed chamber so as to provide a second safety mechanism for relieving high pressures or mitigating high pressure build-up.

### Specimen processing assemblies including a motorized screw or a motorized driveshaft

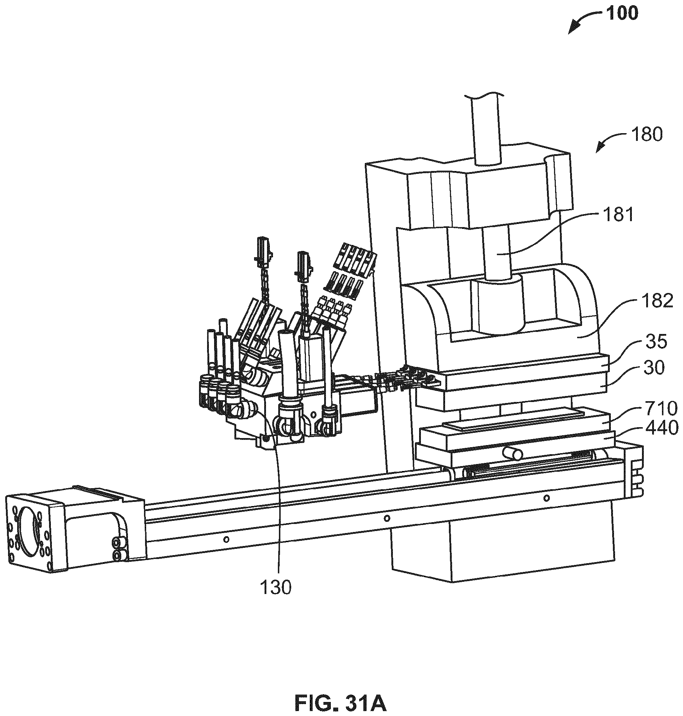

With reference to FIG. 31A, another aspect of the present disclosure is a specimen processing assembly 100 including (i) a lower plate 710 movably coupled to a sub-assembly 101, wherein the lower plate 710 includes a lower engagement surface and one or more substrate stages; (ii) an upper plate 30 having an upper engagement surface complementary to the lower engagement surface; and (iii) a motorized vice, such as depicted in FIG. 31A. In some embodiments, the vice 180 includes a screw 181 which is turned with a motor (not depicted). In some embodiments, as the screw 181 is turned, a clamp 182 is moved downward such that the upper engagement surface 31 of the upper plate 30 contacts the lower engagement surface 11 of the lower plate 710, thus forming a chamber therebetween. In some embodiments, the specimen processing assembly 100 further includes one or more dispense devices 130. In some embodiments, the one or more substrate stages are each raised relative to at least a portion of the lower engagement surface, and wherein the raised substrate stage includes an upper surface adapted to hold a substrate horizontally. In some embodiments, the upper plate further includes a cavity recessed relative to the upper engagement surface, wherein the recessed cavity is adapted to receive at least a portion of the raised substrate stage. In some embodiments, one of the lower plate or the substrate stage is configured such that the planar upper surface of the substrate stage remains horizontal as the lower plate horizontally traverses the horizontal sub-assembly. In some embodiments, a pressure plate 35 is sandwiched between the clamp 182 and the upper plate 30. In some embodiments, the body 16 of the lower plate 710 is in communication with one or more thermal management modules 440.

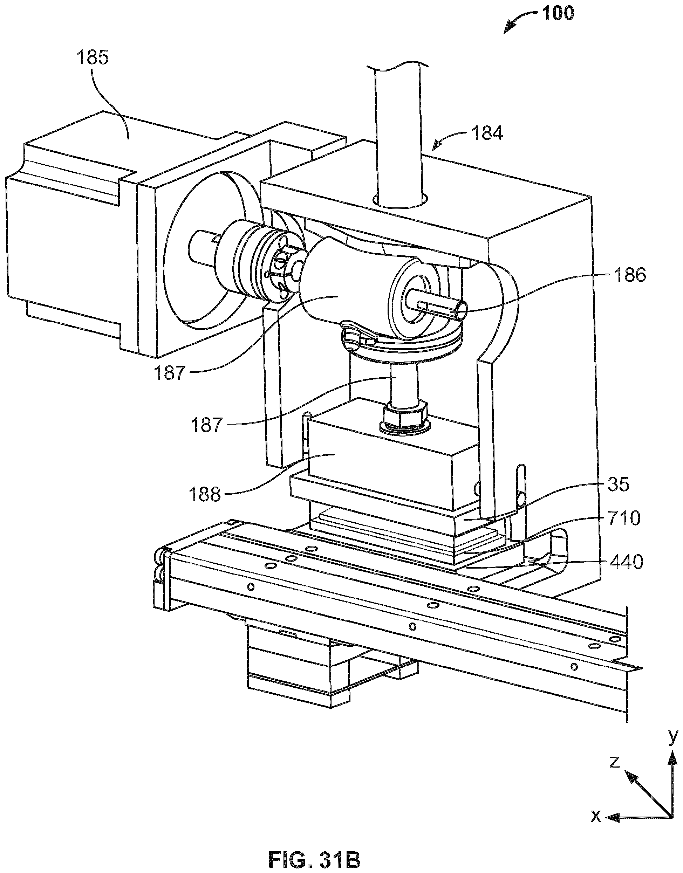

With reference to FIG. 31B, another aspect of the present disclosure is a specimen processing assembly 100 including (i) a lower plate 710 including a lower engagement surface and one or more substrate stages; (ii) a sub-assembly for transporting the lower plate 710; (iii) an upper plate 30 having an upper engagement surface complementary to the lower engagement surface; and (iv) a jack screw mechanism 184. In some embodiments, the jack screw mechanism 184 includes a rod 187 in communication with at least one clamp 188 and a driveshaft 186 in communication with a motor 185. In some embodiments, the motor 185 is configured to turn the driveshaft 186, which in turn moves one or more gears within the housing 187, thus translating motion from the driveshaft 186 to the rod 187. As such, the rod 187 may then be moved upwards or downwards (such as in the y-coordinate direction) to effectuate movement of a clamp 188 and/or a pressure member 35 in communication with an upper plate 30. In some embodiments, the jack screw 184 further includes one or more gears enclosed within a housing 187, wherein the gears are used to translate motion from the driveshaft 186 to the rod 187. In some embodiments, the driveshaft and the rod are oriented perpendicular to each other.

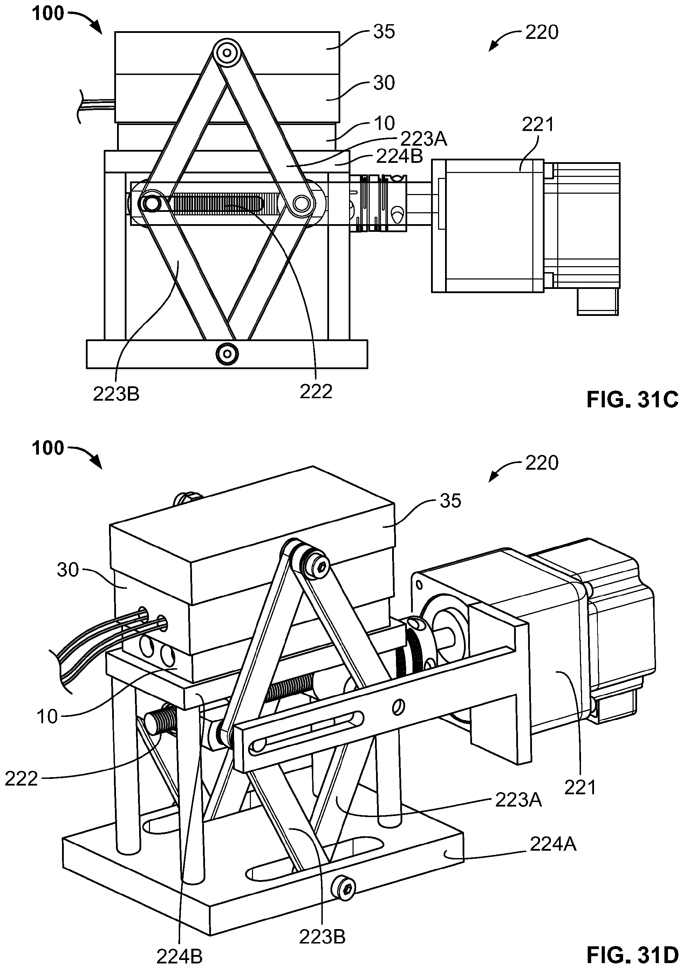

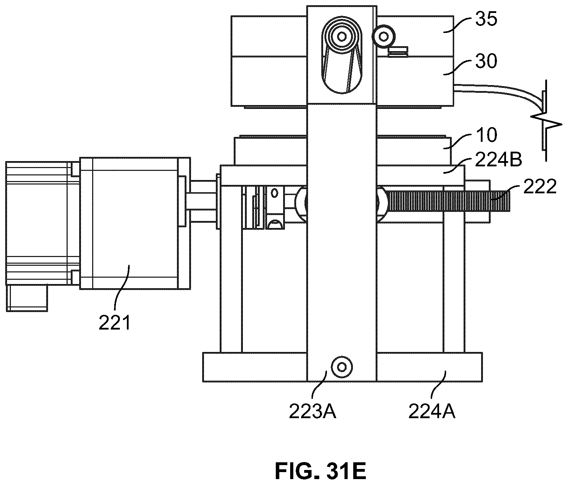

With reference to FIGS. 31C, 31D, and 31E, another aspect of the present disclosure is a specimen processing assembly 100 including (i) a lower plate having a lower engagement surface, (ii) an upper plate 30 having an upper engagement surface complementary to the lower engagement surface; and (iii) a scissor jack mechanism 220. In some embodiments, the scissor jack mechanism 220 includes a motor 221 communicatively coupled to a screw 222. As the motor 221 turns screw 222, the scissor jack arms 223A and 223B move either toward each other (thus raising the upper plate 30) or away from each other (thus lowering the upper plate 30). FIG. 31E depicts a specimen processing assembly 100 where the scissor jack mechanism 220 is shown in an open configuration, whereby the upper plate 30 is positioned above the lower plate 10. As the scissor jack arms are pulled away from each other, for example moved apart from each other, the upper plate 30 is lowered onto the lower plate 10 such that the upper engagement surface 33 contacts the lower engagement surface 11, thereby forming a chamber therebetween as described herein (see FIGS. 31C and 31D for alternative views of a scissor jack mechanism 220 in the closed configuration). In some embodiments, the specimen processing assembly 100 further includes a pressure member 35 in communication with the upper plate 30 and the scissor jack arms 223A and 223B. In some embodiments, the specimen processing assembly 100 further include lower support members 224A and 224B and an upper support member 225B.

### Specimen processing assemblies including a force generating vessel

Another aspect of the present disclosure is a specimen processing assembly including (i) a lower plate movably coupled to a horizontal sub-assembly, wherein the lower plate includes a lower engagement surface and one or more substrate stages; and (ii) an upper plate having an upper engagement surface complementary to the lower engagement surface. In some embodiments, the one or more substrate stages are each raised relative to at least a portion of the lower engagement surface, and wherein the raised substrate stage includes an upper surface adapted to hold a substrate horizontally. In some embodiments, the upper plate further includes a cavity recessed relative to the upper engagement surface, wherein the recessed cavity is adapted to receive at least a portion of the raised substrate stage. In some embodiments, one of the lower plate or the substrate stage is configured such that the planar upper surface of the substrate stage remains horizontal as the lower plate horizontally traverses the horizontal sub-assembly. In some embodiments, the upper plate is fixed, and the lower plate first moves horizontally to a position beneath the upper plate, and then the lower plate is raised to contact the upper plate. In some embodiments, the upper plate may be hinged above a portion of the sub-assembly such that when the lower plate is moved beneath the upper plate, the upper plate may be pivoted downward via the hinge onto the lower plate, as described further herein.

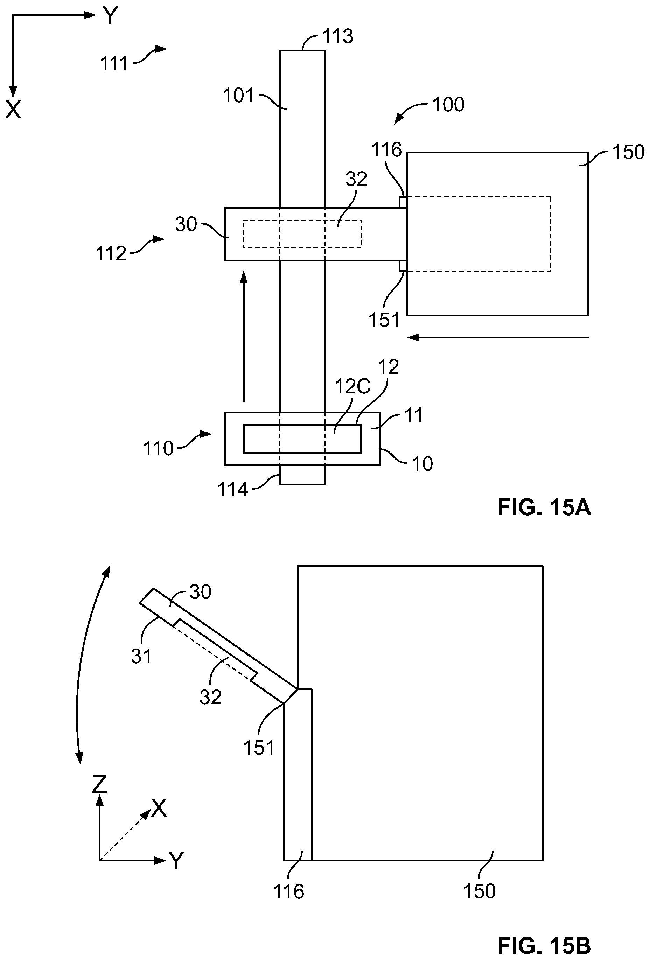

FIGS. 15A - 15D illustrate an alternative embodiment of a specimen processing assembly 100. In these embodiments, a substrate is transferred by moving a lower plate, which acts as a chamber base with the substrate elevated above the surface on a plateau (e.g. on a substrate stage), along a horizontal sub-assembly, e.g. a rail. In some embodiments, the lower plate moves into alignment with the upper plate (the chamber lid), which hinges down. In some embodiments, the upper plate is adapted to compress an O-ring between the upper and lower plates. In some embodiments, a vessel 150 (e.g. a clamping mechanism) is moved into place around the upper and lower plate (for example chamber halves), such as by a stepper motor, and it maintains the compression required for sealing throughout an unmasking operation by using one or more force generating members within the vessel 150, e.g. rollers mounted on compression springs, a cam mechanism, etc. In some embodiments, the linear motor could be powered down or de-coupled and moved to service another lower plate.

As illustrated in FIG. 15A, the specimen processing assembly 100 includes a (i) lower plate 10 coupled to a horizontally disposed sub-assembly 101; and (ii) an upper plate 30 having a cavity 32. In this embodiment, the lower plate 10 may be moved along the horizontally disposed sub-assembly 101 along the x-axis from a loading area 110 to a preparation area 111, and subsequently to an unmasking area 112. In this embodiment, the lower plate 10 includes a substrate stage 12 having an upper surface which is adapted to hold a substrate horizontally, for example parallel to the ground (and which substrate remains parallel to the ground as the lower plate 10 traverses the length of the horizontally disposed sub-assembly 101). In some embodiments, the upper and lower plates include upper and lower engagement surfaces, 31 and 11 respectively, such as complementary upper and lower engagement surfaces to facilitate a sealing engagement and the formation of a chamber therebetween.

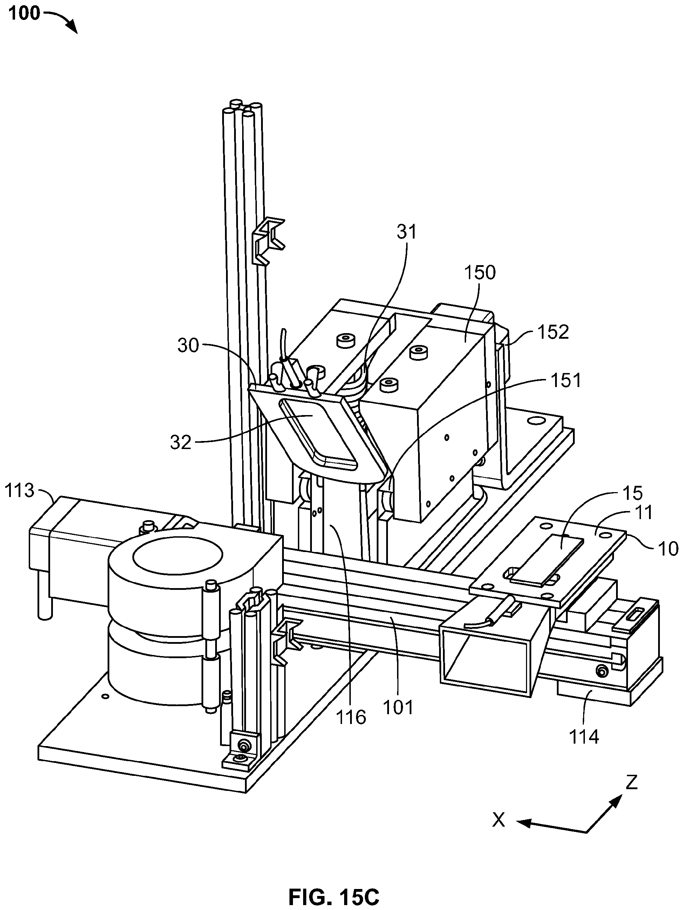

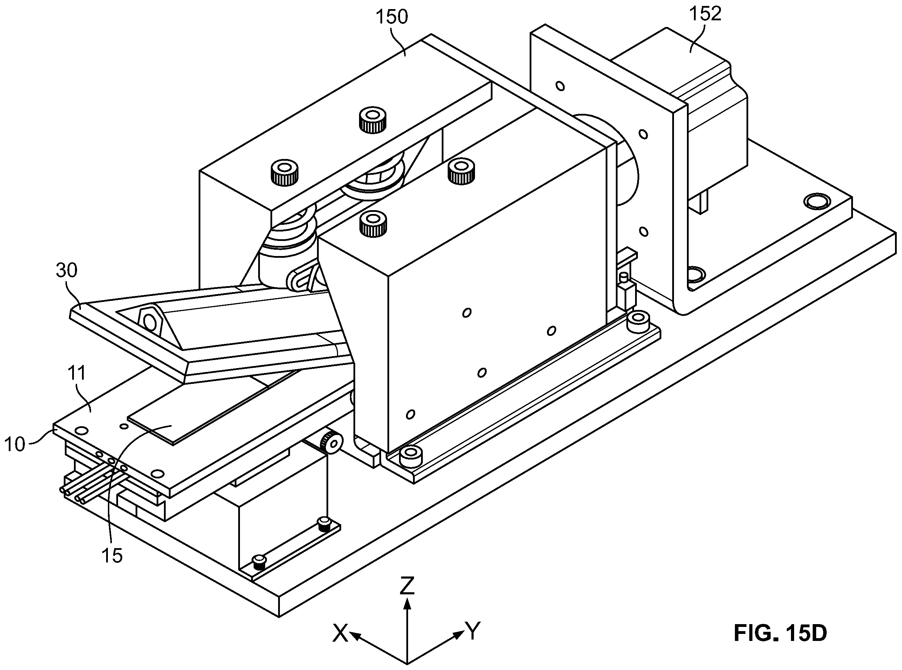

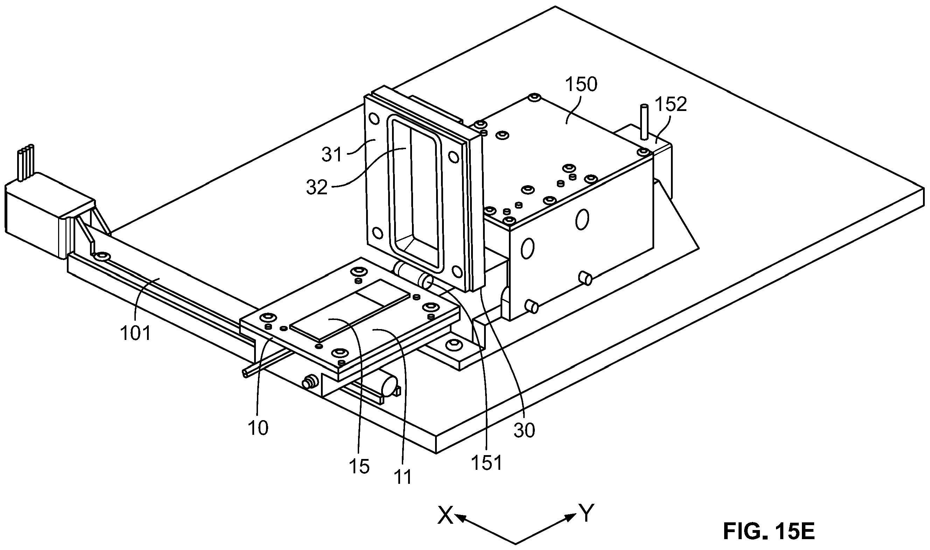

In some embodiments, the upper plate 30 is coupled to a support member 116 via a hinge 151 that enables the upper plate 30 to be pivoted downward onto an awaiting lower plate 10 (see also FIGS. 15B and 15C). Once the lower plate 10 is moved to the unmasking area 112, the hinged upper plate 30 may be pivoted downward onto a pre-positioned lower plate 10. In some embodiments, the hinged upper plate 30 is pivoted downward onto the lower plate 10 as the vessel 150 is moved toward the longitudinal length of the lower plate 10, for example moved along the y-axis. In some embodiments, the vessel 150 is coupled to a motor or drive system 152 which facilities movement of the entire vessel 150. In some embodiments, the vessel 150 includes one or more rollers and/or springs that exert a force onto the upper plate 30 as the vessel 150 is moved along the y-axis, thereby pivoting the upper plate 30 downward onto lower plate 10, and facilitating a sealing engagement between at least a portion of the upper and lower engagement surfaces 31 and 11, respectively (see FIG. 15D). FIG. 15E illustrates an alternative specimen processing assembly 100 having an alternative hinge 151 and vessel 150.

### Movement of at least a lower plate along a horizontally offset sub-assembly

Another aspect of the present disclosure is a specimen processing assembly including (a) a horizontally offset sub-assembly; (b) a lower plate movably coupled to the horizontally offset sub-assembly, wherein the lower plate includes a lower engagement surface and one or more substrate stages; and (ii) an upper plate having an upper engagement surface complementary to the lower engagement surface. In some embodiments, the one or more substrate stages are raised relative to at least a portion of the lower engagement surface, and wherein the one or more raised substrate stages includes an upper surface adapted to hold a substrate horizontally. In some embodiments, the upper plate further includes one or more cavities recessed relative to the upper engagement surface, wherein the one or more recessed cavities are adapted to receive at least a portion of the raised substrate stage.

In some embodiments, one of the lower plate or the one or more substrate stages are configured such that the planar upper surface of the substrate stage remains horizontal as the lower plate horizontally traverses the horizontally offset sub-assembly. In some embodiments, the horizontally offset sub-assembly includes a second end which is raised vertically relative to a first end. In some embodiments, a movement of the lower plate along the horizontally offset sub-assembly includes a vertical movement component. In some embodiments, the upper and lower plates include complementary rectangular shapes. In some embodiments, the upper and lower plates include complementary wedge-based shapes. In embodiments where the upper and lower plates include complementary wedge-based shapes, the substrate stage may also include a generally wedge-based shape.

In some embodiments, the lower plate and the upper plate are both moved simultaneously toward each other until they both contact each other (for example their respective upper and lower engagement surfaces contact one another), and then a force generating member such as a motor, a piston, a spring, a screw mechanism and/or a cam mechanism, alone or working together, act on one or both of the lower plate and the upper plate to force them together and increase a sealing force at the interface between the lower plate and the upper plate. For example, in a more particular embodiment, a motor, a piston, a screw mechanism and/or a cam mechanism is engaged with the upper plate to force the upper plate against the lower plate, thereby further facilitating a sealing engagement between the upper and lower plates, or enabling a sealing engagement to be maintained as the pressure in the chamber formed from the upper and lower plates increases.

In some embodiments the force exerted by a force generating member (for example, a motor, a piston, a spring, a screw mechanism and/or a cam mechanism) is limited such that should pressure within the chamber exceed a predetermined pressure, the force exerted by the force generating member is overcome and the force generating member will slip or give way to relieve pressures above the predetermined threshold pressure that might develop within the chamber. In other embodiments, one or more pressure relief ports and/or valves are included in either or both of the lower and/or upper plates such that such that a predetermined threshold pressure with the chamber is not exceeded.

In some embodiments, the upper plate is fixed in a position above a portion of the horizontally offset sub-assembly and the lower plate moves along the horizontally offset sub-assembly (including with the associated vertical movement component) until the lower plate contacts the fixed upper plate. In some embodiments, the upper plate is coupled to one or more springs at position above a portion of the horizontally offset sub-assembly and the lower plate moves along the horizontally offset sub-assembly (including with the associated vertical movement component) until the lower plate contacts the fixed upper plate. In some embodiments, the upper plate is fixed, and the lower plate first moves along the horizontally offset sub-assembly to a position beneath the upper plate, and then the lower plate is raised to contact the upper. In some embodiments, the upper plate is coupled (directly or indirectly) to one or more springs and the lower plate first moves along the horizontally offset sub-assembly to a position beneath the upper plate, and then the lower plate is raised to contact the upper plate. In other embodiments, the lower and upper plates are independently moved into position such that the upper and lower engagement surfaces at least partially contact one another, and then a force generating member is engaged to exert pressure onto the upper and/or lower plates to effectuate a seal between the upper and lower engagement surfaces or to maintain a sealing engagement between the upper and lower plates as the pressure within the chamber is increased.

In some embodiments, the lower plate is moved along the horizontally offset sub-assembly to a predetermined position beneath the upper plate and the upper plate is moved downward onto the lower plate. For example, a motor, a piston, a spring, a screw mechanism and/or a cam mechanism may drive the upper plate downward (along the z-axis) toward the pre-positioned lower plate to facilitate a sealing engagement between the upper and lower engagement surfaces. In some embodiments, the lower plate is moved along the horizontally offset sub-assembly while the upper plate is moved simultaneously toward the lower plate, where the movement of the upper plate may be in any of the x-, y-, and/or z- directions.

In some embodiments, gas and/or steam is introduced into the chamber formed by the upper and lower plates through one or more ports, such as ports in the upper plate, thereby pressurizing the chamber. In some embodiments, a fluid dispensed onto the substrate or within a fluid reservoir of the lower plate, may be heated (such as with a with a heating element embedded within the body 16 of the lower plate or the body 33 of the upper plate; or with lower and/or upper temperature regulation blocks 440 in thermal communication with the upper and/or lower plates), thereby causing the pressure within the chamber formed by the upper and lower plates to increase. In some embodiments, and in addition to pressurizing the chamber via introduced gas, steam, or the heating of a fluid, a force generating member (e.g. a motor, a spring, a cam mechanism, a piston, or any combination thereof) may be used to exert a force onto at least the upper plate, thus maintaining the upper and lower plates in sealing engagement with one another as the pressure is increased within the formed chamber.

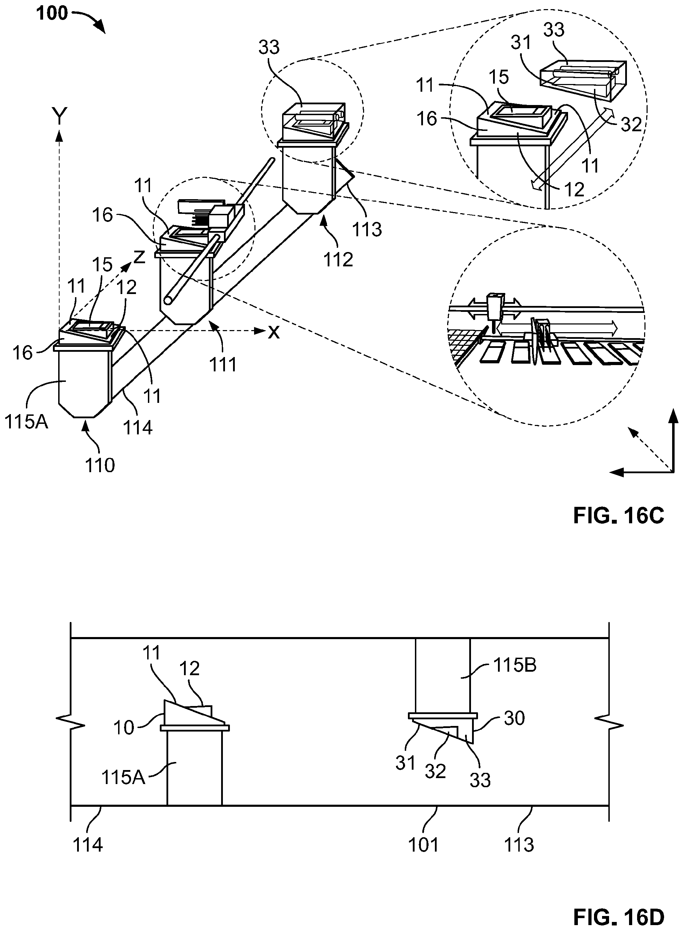

FIGS. 16A - 16C illustrate non-limiting embodiments of a specimen processing assembly 100 including a lower plate 10, an upper plate 30 complementary to the lower plate 10, and a sub-assembly 101 (e.g. a rail) having first and second ends 114 and 113. In some embodiments, the sub-assembly 101 is horizontally offset along the z-axis. In some embodiments, the specimen processing assembly 100 further includes first and second support members 115A and 115B. FIG. 16A depicts an embodiment including lower and upper plates having complementary rectangular bodies. FIGS. 16B and 16C depict embodiments including lower and upper plates having complementary wedge-based bodies (such as including those features described herein, such as illustrated in at least FIGS. 6A and 6B).

Turning first to FIG. 16A, in some embodiments, a substrate 15 supported by substrate stage 12 is moved from a loading area 110 to a preparation area 111, and then to an unmasking area 112 as the lower plate is moved along the length of the horizontally offset sub-assembly 101. In some embodiments, the movement of the lower plate 10 along the horizontally offset sub-assembly 101 includes a vertical component along the z-axis as noted herein. In this way the substrate stage 12 is raised from a first position relative to the z-axis to a second position relative to the z-axis as the lower plate 10 as it is moved along the horizontally offset sub-assembly 101. Notably, the substrate stage 12 remains horizontal, for example parallel to the ground, during the course of its movement along the horizontally offset sub-assembly, such that any fluids, reagents, and/or samples disposed on the upper surface of substrate 15 remain level, for example do not run along or fall off the upper surface of the substrate 15. Said another way, while there is a vertical component to the movement of the substrate 15 and substrate stage 12 as the lower plate 10 traverses the horizontally offset sub-assembly 101, one of the substrate stage 12, body 16 of the lower plate 10, and/or the support member 115A are configured such that the substrate 15 remains horizontal throughout its movement. In some embodiments, the lower and upper plates may have any configuration provided that they are complementary to each other.

After the lower plate 10 is moved to the preparation area 111, one or more fluids and/or reagents may be dispensed from one or more dispense nozzles 50, such as one or more dispense nozzles positioned above sub-assembly 101 (e.g. the dispense nozzles may be attached to a dispense assembly). Alternatively, the lower plate 10 may be moved directly to the unmasking area 112 from the loading area 110. As shown in FIG. 13B, in some embodiments, the unmasking area 112 and processing area 111 may be reversed in order.

The lower plate 10 may then be moved to an unmasking area 112 where it meets a pre-positioned upper plate 30. In some embodiments, the lower plate 10 is first moved under the pre-positioned upper plate 30 (again with a movement that includes a vertical component along the z-axis) such that features of the lower and upper plates align with one another, e.g. such that a least a portion of an upper engagement surface 31 aligns with a lower engagement surface 11. The lower and upper plates 10 and 30, respectively, may then be moved together, e.g. each may be independently moved toward one another. In some embodiments, a lower plate 10 may be moved vertically upward to couple with the upper plate 30, for example the upper plate 30 may be fixed and only the lower plate is moved vertically. Alternatively, the upper plate 30 may be lowed onto the lower plate 10 after it is positioned in the unmasking area 112. In some embodiments, the upper and lower plates may be brought into close proximity (such as through the vertical movement of the lower plate 10 along the horizontally offset sub-assembly) and then the upper plate 30 may be lowered such that at least a portion of the upper engagement surface 31 engages the lower engagement surface 11, and any seal body disposed therebetween.

In some embodiments, the upper plate 30 is coupled to a motor and moved downwards towards the lower plate 10. In other embodiments, the upper plate 30 is pushed downward with a piston (e.g. a hydraulic piston or a pneumatic piston) or driven downward with a cam mechanism. In some embodiments, the upper plate 30 is driven downward with a force sufficient to form a seal along an interface of the upper and lower engagement surfaces 31 and 11, respectively. In some embodiments, a sample disposed on the substrate and present in chamber formed from the contacting of the upper and lower plates may then be heated at an elevated temperature. In some embodiments, the heating of the substrate within the sealed chamber allows for processing at both elevated a temperature and pressure, which may be monitored with one or more temperature and/or pressure sensors in communication with the internal environment of the chamber. In some embodiments, the temperature sensors may be in contact with one of the substrates and/or the specimen disposed on the substrate.

As noted above, the embodiments depicted in FIGS. 16B and 16C include upper and lower plates having complementary wedge-based shapes. More particularly, FIGS. 16B and 16C provide an example of a specimen processing assembly 100 including a lower plate 10, an upper plate 30 which is complementary to the lower plate, a sub-assembly 101 having first and second ends 114 and 113, and first and second support members 115A and 115B. In this embodiment, the sub-assembly 101 is horizontally offset along the z-axis. In some embodiments, a substrate 15 supported by substrate stage 12 is moved from a loading area 110 to a preparation area 111, and then to an unmasking area 112 as the lower plate 10 is moved along the length of the sub-assembly. As noted herein, the movement of the lower plate 10 along the sub-assembly 101 includes a vertical component along the z-axis, for example the substrate is raised from a first position relative to the z-axis to a second position relative to the z-axis as the lower plate 10 is moved along the sub-assembly 101.

In this embodiment, the body 16 of the lower plate 10 and the body 33 of the upper plate 30 both have complementary wedge-based shapes, including complementary upper and a lower engagement surfaces 31 and 11, respectively (e.g. see also FIGS. 6A and 6B). In some embodiments, the lower plate 10 is configured to include a substrate stage 12 having an upper planar surface 12C, such that any substrate 15 supported by the upper planar surface 12C is held horizontally. As such, any therefore fluids, reagents, and/or sample material disposed on the substrate 15 supported by the substrate stage 12 remain level while the lower plate 10 is moved along the horizontally offset sub-assembly 101 (including the lower plate's vertical movement component along the z-axis). Additionally, the upper plate 30 includes a cavity 32 recessed into the body 33 which has a size and/or shape capable of receiving at least a portion of the substrate 15 and/or substrate stage 12 (along with any predetermined headspace volume, as described herein).

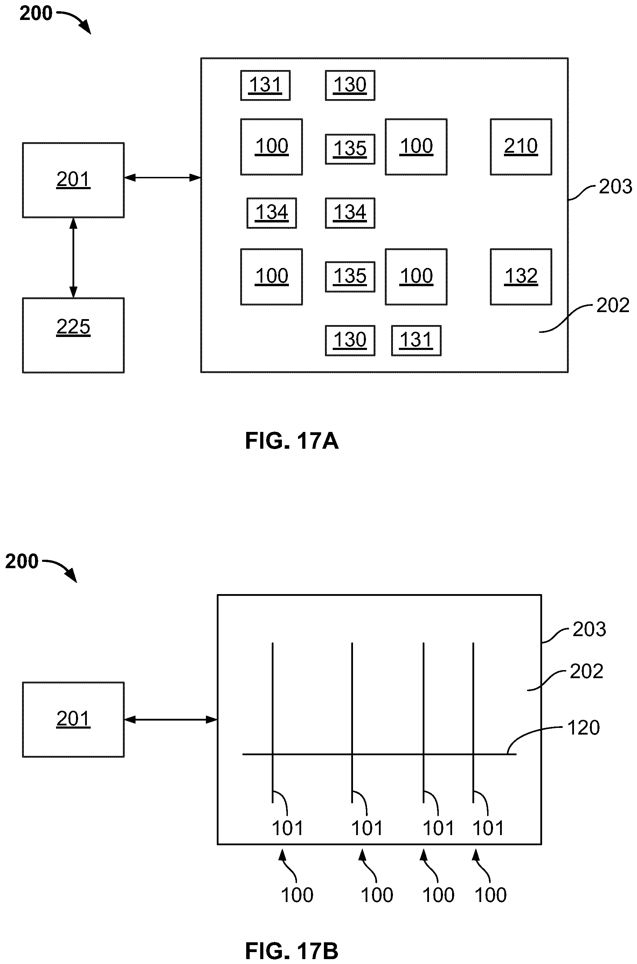

In some embodiments, after the lower plate 10 is moved to the preparation area 111, one or more fluids and/or reagents may be dispensed from one or more dispense devices 50 positioned above sub-assembly 101. Alternatively, the lower plate 10 may be moved directly to the unmasking area 112 from the loading area 110. As shown in FIG. 13B, in some embodiments, the unmasking area 112 and processing area 111 may be reversed in order. In some embodiments, the dispense devices are coupled to a dispense rail 120, such as a rail that runs perpendicular to the sub-assembly 101 (see FIG. 17B). In some embodiments, the preparation area 111 may include liquid removal devices, to remove a fluid, a reagent, or any material dissolved in a fluid from the substrate.

Subsequently, the lower plate 10 may then be moved to an unmasking area 112 where it meets a pre-positioned upper plate 30. In some embodiments, the pre-positioned upper plate 30 is fixed in position or coupled (directly or indirectly) to one or more springs. In this particular embodiment, and given the complementary geometries of the upper and lower plates 30 and 10, respectively, when the lower plate 10 is moved along the horizontally offset sub-assembly, the movement of the lower plate, including the vertical component of the movement, allows for the substrate 15 and substrate stage 12 to be received by cavity 32, while contemporaneously allowing for the upper and lower engagement surfaces 31 and 11, respectively, to at least partially contact one another (or to contact any seal body disposed therebetween).

In some embodiments, the movement of the lower plate 10 alone, by virtue of the complementary geometries, allows for the formation and maintenance of a seal between the upper and lower engagement surfaces, thereby forming a sealed chamber. Said another, the movement of the lower plate (e.g. by means of a motor, screw, etc.) serves to push the lower engagement surface 11 of the lower plate 10 against the upper engagement surface 31 of the upper plate 30, thus enabling the formation and/or maintenance of a seal. Alternatively, in some embodiments, the upper plate 30 is coupled (directly or indirectly) to one or more springs such that when the lower plate 10 is moved upward and contacts the upper plate, the springs exert a downward force onto at least the upper plate 30, thus further facilitating a sealing engagement between complementary upper and lower engagement surfaces.

In some embodiments, an external force, such as one generated by any of a motor (including a screw), a spring, a piston, or a cam mechanism, may be exerted onto the upper plate to maintain a sealing engagement between the upper and lower plates. For example, the pre-positioned upper plate 30 may not be not fixed, but rather may be coupled (directly or indirectly) to a motor (including a screw), a spring, a piston, a cam mechanism or any combination thereof, such that a downward force (along the z-axis) may be applied to the upper and/or lower plates, thus further facilitating or maintaining a sealing engagement between the upper and lower engagement surfaces 31 and 11, respectively.

In some embodiments, a sample disposed on the surface of substrate 15, and positioned within the chamber formed by the upper plate 30 and lower plate 10, may then be heated at an elevated temperature. In some embodiments, the heating of the substrate within the chamber allows for processing at both an elevated temperature and pressure, which may be monitored with one or more temperature and/or pressure sensors in communication with the internal environment of the chamber, or in contact with the substrate or the specimen disposed on the substrate. For example, in some embodiments, one or more heating elements can be activated to heat a fluid present within the chamber formed by the upper and lower plates, thereby increasing the pressure within the chamber and the pressure exerted onto any sample disposed on the substrate. In some embodiments, gas and/or steam may be introduced into the chamber through one or more ports in communication with the chamber to again increase the pressure within the chamber.

FIG. 16D illustrates yet another embodiment of a specimen processing assembly where the lower and upper plates each have complementary wedge-based shapes. In this embodiment, the sub-assembly 101 is positioned horizontally. In one embodiment, the lower plate may be moved toward a fixed upper plate such that complementary upper and lower engagement surfaces contact one another and form a seal. In another embodiment, the upper plate may be moved toward a fixed lower plate such that the upper and lower engagement surfaces contact one another and form a seal. In yet another embodiment, both the upper and lower plates are movable and may independently move toward one another, such that upper and lower engagement surfaces contact one another and form a seal.

### Alternative specimen processing assemblies including horizontally disposed sub-assemblies

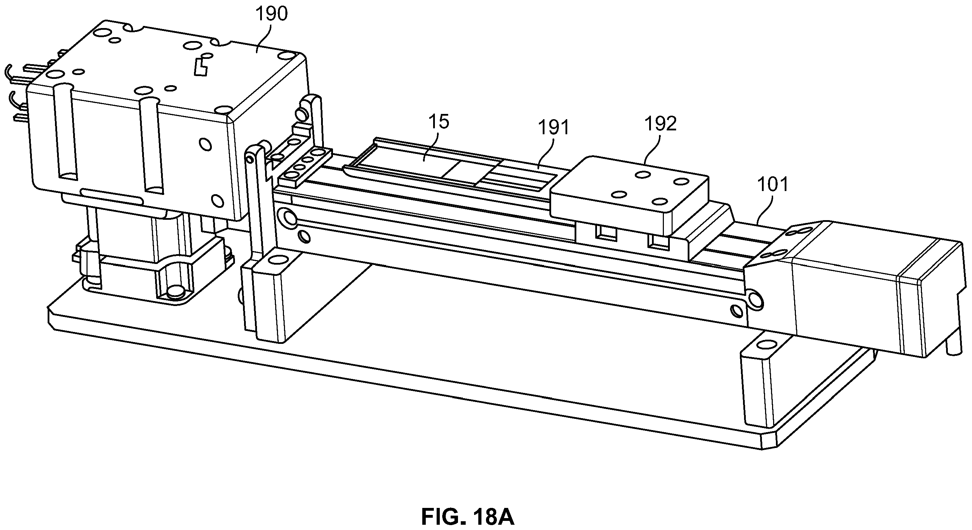

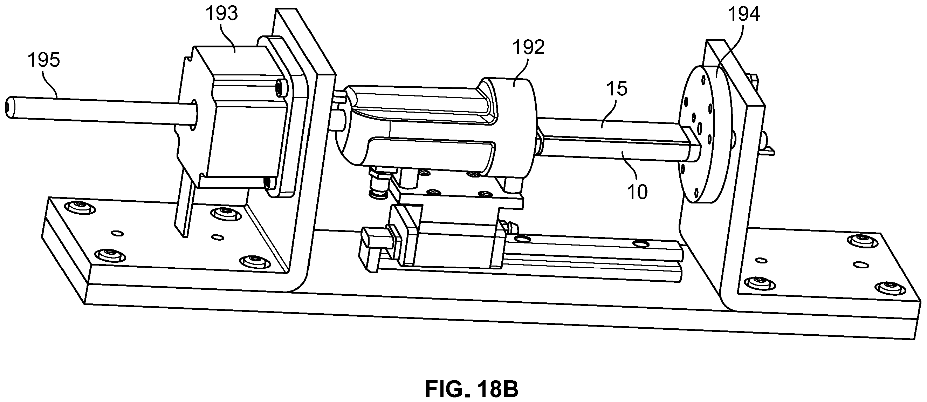

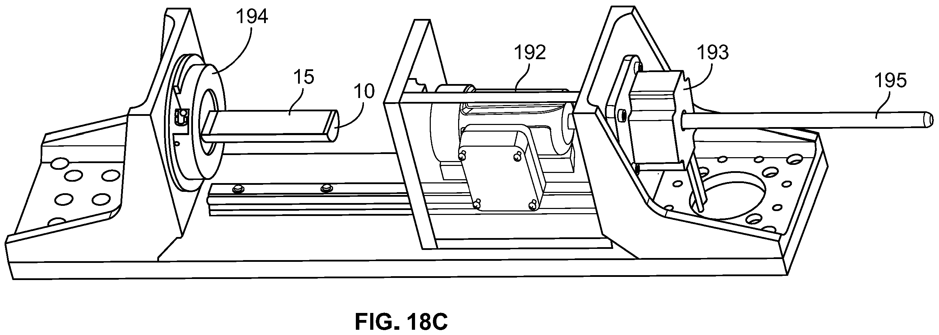

FIGS. 18A, 18B, and 18C provide yet further embodiments of a specimen processing assembly 100. FIG. 18A provides a specimen processing 100 assembly including a substrate holder 191, a sub-assembly 101, and an unmasking device 190. In this embodiment, the substrate holder 191 includes features adapted to hold a substrate while it is moved to an unmasking device 190. In some embodiments, the specimen processing assembly 100 includes a block 192 adapted to provide a seal within the unmasking device 190. Although not shown, in some embodiments, the unmasking device 190 may include a lower plate 10 and an upper plate 30. In some embodiments, the substrate holder 191 is adapted to position the substrate 15 onto the lower plate within the unmasking device 190, where either the lower plate and/or upper plate may be moved together, forming a chamber as described herein. In some embodiments, the unmasking device 190 may include a heating element and/or an active or passing cooling element.

In some embodiments, the substrate is placed on a substrate drip tray, which sits on a forklift-like mechanism. In some embodiments, forklift-like mechanism moves along a linear rail, where its end effector contacts an inward hinging chamber door and enters an internal space of the unmasking device 190 by displacing the door inward. In some embodiments, once the forklift-like device has entered the chamber and is situated over a substrate stage, the chamber lifts to contact the substrate tray and lift the substrate and substrate drip tray off the forklift-like mechanism. In some embodiments, the unloaded forklift then exits the chamber. As the forklift exits, the chamber door is closed back into place by torsion springs. In some embodiments, an O-ring on the face of the door is compressed against the inside face of the chamber opening, creating the seal.

FIGS. 18B and 18C depict a specimen processing assembly 100 where a lower plate 10 is held stationary and an upper surface of the lower plate is adapted to hold a substrate horizontally. In some embodiments, the substrate remains stationary while the pressure vessel of unmasking device 192 moves to seal around the lower, with the intent that other upstream and downstream processes could occur without the lower plate or substrate needing to move. For example, a dispense device (not shown) may move to a position over the stationary lower plate and dispense one or more fluids and/or reagents to the substrate disposed thereon. In some embodiments, an unmasking device 192 is moved towards the lower plate 10 along rail 195 using motor 193 such that the lower plate 10 becomes enclosed by the unmasking device 192. In some embodiments, the unmasking device 192 includes one of a heating and/or a cooling element. In some embodiments, a sealing member 194 includes features which are complementary to an opening of the unmasking device 192. In some embodiments, the sealing member 194 may include a seal body, such as an O-ring. In some embodiments, when the unmasking device 192 engages the sealing member 194, a chamber may be formed, where the chamber houses the substrate 15 in a horizontal position. In some embodiments, the substrate in the formed chamber may be treated at an elevated temperature and/or pressure (as compared with an environment external to the formed chamber) as described herein.

### Specimen processing assemblies including one or more carousels

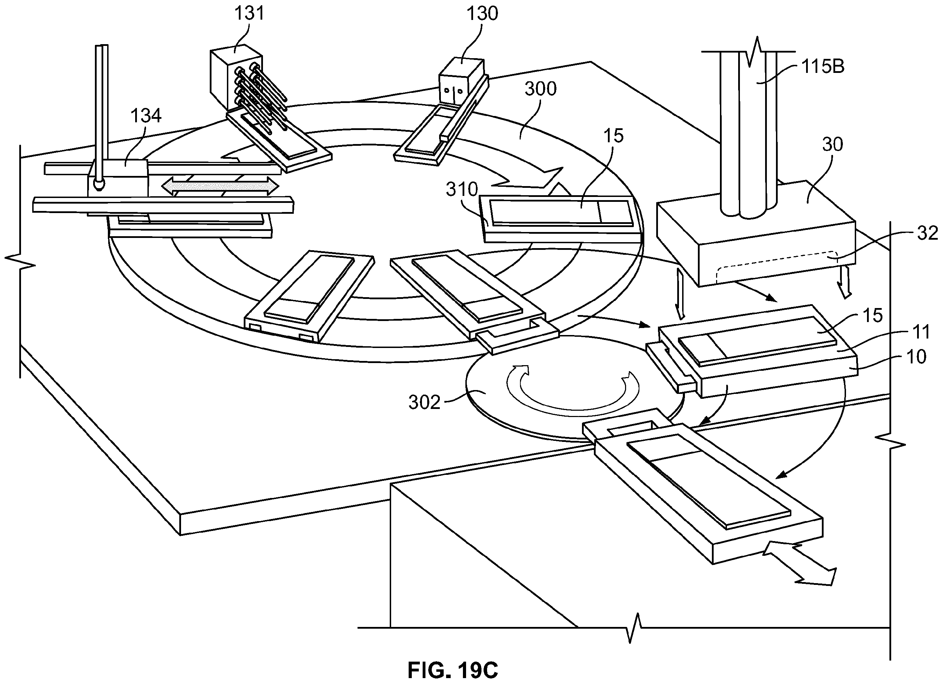

An alternative specimen processing assembly 100 is illustrated in FIGS. 19A - 19C. With reference to FIGS. 19A and 19B, the specimen processing assembly 100 includes a carousel 300, one or more substrate loaders 302, one or more lower plates 10, and one or more upper plates 30. With reference to FIG. 19C, the specimen processing apparatus 100 may operate in conjunction with one or more of a first dispense device 130 (e.g. a bulk fluid dispenser, such as one including one or more dispense nozzles), a second dispense device 131 (e.g. a second bulk fluid dispenser, or a reagent dispenser such as a pipette or a drop-on demand dispenser), a device including a liquid removal device 134, a mixing apparatus (not illustrated), or any combination thereof. Each of the dispense devices, liquid removal devices, and/or mixing devices are described in further detail herein.

In some embodiments, the carousel 300 includes a plurality of substrate holders 310. In some embodiments, the carousel 300 may include from between 3 to about 30 substrate holders 310. In other embodiments, the carousel 300 may include from between 4 to about 20 substrate holders 310. In yet other embodiments, the carousel may include from between 5 to about 15 substrate holders 310. In some embodiments, each substrate holder 310 is adapted to hold a substrate horizontally during any processing step, e.g. during treatment with one or more fluids and/or reagents.

In some embodiments, the specimen processing assembly 100 may further include one or more substrate loaders 302. In some embodiments, each of the one or more substrate loaders 302 are adapted to remove a substrate from one of the substrate holders 310 and move it to another position. For example, each substrate loader 302 may be adapted to move a substrate from a substrate holder 310 of the carousel 300 to a lower plate 10. In this way, the substrate loaders 302 facilitate the movement of substrates for further processing (e.g. treatment with a fluid and/or a reagent and/or an unmasking operation). In some embodiments, the substrate loaders 302 may also be adapted to receiver a substrate from another module.

In some embodiments, the substrate loaders 302 include a forklift mechanism having features complementary to features of the substrate holders 310. In some embodiments, the substrate loaders 302 are rotatable, either clockwise or counterclockwise.

As noted above, the specimen processing assembly 100 depicted in FIGS. 19A and 19B may include lower and upper plates which facilitate the formation of a chamber therebetween. In some embodiments, the lower plate 10 includes a substrate stage 12 and a lower engagement surface 11. In some embodiments, the substrate stage 12 includes an upper surface adapted to maintain a substrate in a horizontal position during unmasking. In some embodiments, the features of the lower plate 10 are adapted to be complementary to corresponding features of the upper plate 30. For example, the lower plate 10 may include a lower engagement surface and the upper plate 30 may include an upper engagement surface which is complementary to the lower engagement surface. In some embodiments, the lower plate and upper plate have complementary wedge-based shapes. In other embodiments, the lower and upper plates have complementary rectangular shapes. In some embodiments, the upper and/or lower plates may include one or more heating elements and/or one or more cooling elements (see, e.g., the configuration of the heating and cooling elements depicted in FIGS. 21A to 21D).

In operation, the specimen processing apparatus 100 is adapted to receive one or more substrates and to maintain those substrates within the carousel 300 during any processing operation. In that regard, and in some embodiments, the carousel 300 may be within a preparation area 111. In some embodiments, the carousel 300 is coupled to a motor allowing the carousel 300 to rotate clockwise or counterclockwise. In that regard, a control system coupled to the specimen processing assembly 100 may command the carousel 300 to move one of the substrate holders 310 to a particular position such that a dispense operation may be performed, for example dispensing one or more fluids and/or reagents to a substrate within the substrate holder 310.

Following treatment, the substrate 15 is then moved from one of the substrate holders 310 via a substrate loader 302 to a lower plate 10. In some embodiments, the lower plate 10 is held stationary and the upper plate 30 is moved to the lower plate (in any of the x, y, and z- directions). For example, the upper plate 30 (such as one coupled to a support 115B) may be moved downward into the pre-positioned lower plate 10, such as with a motor, a piston, a cam mechanism, a spring, or any combination thereof. While not depicted in FIGS. 19A - 19C, in some embodiments, the lower plate 10 may itself be movable, such as movably coupled to a rail. In those embodiments, the lower plate may be moved to a predetermined position where the upper plate 30 may be moved to meet the lower plate, for example both the upper and lower plates are movable. In yet other embodiments, the lower plate may be movable and the upper plate may be fixed in position (or, alternatively, coupled to a spring with limited movement), and the lower plate is moved to the upper plate (along any of the x, y, and z- directions) to the upper plate In some embodiments, the independent movements of the lower and/or the upper plates allows the two plates to contact one another, such as at an interface of their respective upper and lower engagement surfaces, thereby providing a sealing engagement (with or without the application of an additional external force). The sealing engagement facilitates the formation of a chamber, such as a chamber adapted to support a substrate in a horizontal position during an unmasking operation (see, for example, FIGS. 43A - 43F). In some embodiments, the formed chamber represents an unmasking area.

Once an unmasking operation is conducted (see, for example, FIGS. 43A - 43F), the chamber may be opened, and the lower and upper plates may be moved away from each other. In some embodiments, the substrate holder may be removed from the lower plate with the substrate loader 302 and either transferred to another module or moved back to a free substrate holder 310 position within the carousel 300. In some embodiments, a plurality of the substrate assemblies 100 may be linked together in a system and the skilled artisan will further appreciate that the one or more lower plates 10 and one or more upper plates 30 in any system may be shared amongst several carousels 300.

### Self-sealing lower and upper plates

In some embodiments, the upper and lower plates include features (e.g. tabs and or sealing elements) which self-seal the chamber when the internal pressure within the chamber increases (e.g. as the pressure within the chamber increases, a force exerted by that pressure may "push" a sealing element and/or one or more tabs into a position such that an effective seal is maintained).

In some embodiments, the upper and lower plates may include features such that when the upper and lower plates are brought into contact with one another, an internal pressure generated within the formed chamber causes the features of the lower and upper plates to engage one another and form a seal. For example, the upper and/or lower plates may include a sealing element in a groove such that when the internal pressure within the formed chamber is increased, the seal deformed or moves such that a sealing engagement between the upper and lower plates is formed and maintained. Likewise, the upper and lower plates may include tabs which, when the pressure inside the formed chamber is increase, causes the tabs to engage, with or without the use of a sealing element.

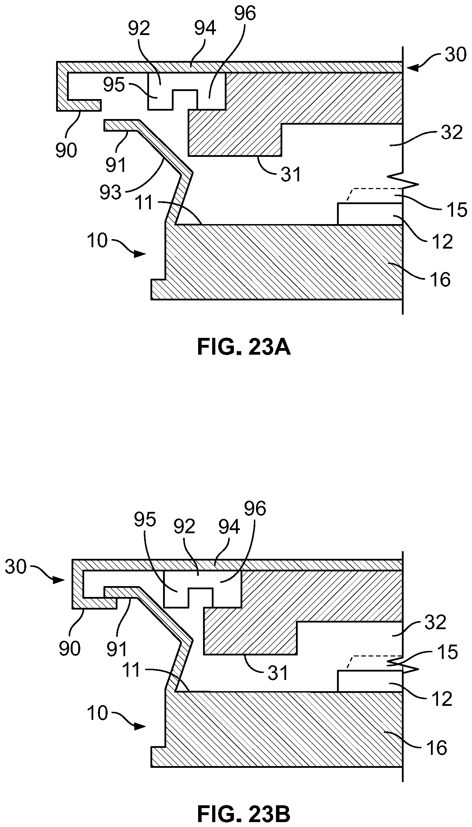

FIGS. 23A and 23B depict sectional views of an upper plate 30 and a lower plate 10. In FIG. 23A, the upper plate 30 is pre-positioned relative to the lower plate 10 such that an upper tab 90 of the upper plate 30 is positioned proximal a lower tab 91 of the lower plate 10, and such that a portion of the tab body 93 contacts a sealing element 92. In some embodiments, the sealing element is a rubberized and is held in a groove 94 of the upper plate 30. In some embodiments, the sealing element 92 includes an outer sealing lip 95 and an inner sealing lip 96. As depicted in FIG. 23A, the sealing element 92 is U-shaped and the outer and inner sealing lips, 95 and 96, respectively, are substantially parallel to one another. As the lower plate 10 is moved further upward, the tab body 93 further contacts the outer lip 95, such that the sealing element transitions from a U-shape to a V-shape. This contacting of the tab body 93 to the outer lip 95 facilitates the formation of a seal between the upper and lower plates 30 and 10, respectively. In some embodiments, as fluid within the chamber formed by the upper and lower plates is heated and the pressure increases within the chamber, the pressure exerted onto the sealing element 92 exerts a further force onto the tab body 93, further facilitating the sealing engagement of the upper and lower plates 30 and 10, respectively.

### SUBSTRATE TRANSPORT

The present disclosure also provides for transport devices, such as substrate transport devices and devices configured to move modular lower plates 710. In some embodiments, the one or more transport devices include, for example, grippers, forks for supporting a substrate, clamp cylinders, vacuum ports, suction cups, or any combination thereof.

### Gripper devices

In some embodiments, substrates may be moved from one position to another via a gripper device. In general, a gripper device includes a pair of gripper arms and an actuator. In some embodiments, the gripper arms are actuated to move in a parallel motion relative to the gripper body (parallel gripper). In other embodiments, the gripper arms are actuated to opened and closed around a central pivot point, moving in a sweeping or arcing motion (angular gripper). In some embodiments, the gripper device includes a sensor, such as a sensor to detect an amount of force exerted by the gripper arms or whether a substrate is being supported by the gripper device.

One example of a gripper device 460 is illustrated in FIGS. 28D and 28E. In this particular embodiment, the gripper device 460 includes gripper arms 461A and 461B, where the gripper arms 461A and 461B terminate in notched ends 462A and 462B, respectively. In some embodiments, the notched ends 462A and 462B each have a recess height 463 that is larger than the thickness of the substrate. In some embodiments, the interior walls 464 of the notched ends 462A and 462B are coated with a rubberized or a silicone material. In the configuration illustrated in FIG. 28E, the gripper arms 461A and 461B are in an extended configuration, but that the gripper arms 461A and 461B may be retracted such that the gripper arms 461A and 461B move in the illustrated directions X and X'. Upon retraction of the gripper arms 461A and 461B, the notched ends 462A and 462B move toward the substrate 15 and at least partially contact the edges of the substrate 15, allowing it to be picked up by the gripper device 460 and moved, such as in the illustrated Z direction. In some embodiments each of the gripper arms 461A and 461B are adapted to exert a force (e.g. each may exert the same amount of force) on each of the longitudinal ends of the substrate. The amount of force exerted by the gripper arms may be regulated by the actuator of the gripper device. In some embodiments, the force exerted is sufficient to hold the substrate between the interior walls 464 of each gripper arm 461A and 461B without damaging the substrate. In some embodiments, no force is exerted onto the edges of the substrate by either of the gripper arms 461A and 461B, and the substrate is merely supported by the cutouts within the notched ends 462A and 462B. FIG. 28F illustrates a substrate 15 being held by gripper arms 461A and 461B and/or supported by the notched ends 462A and 462B.

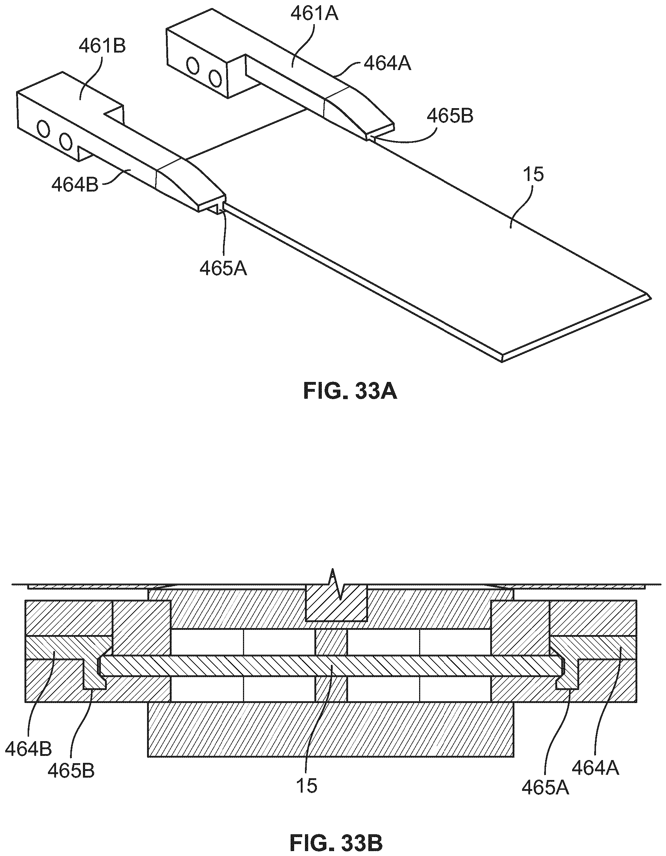

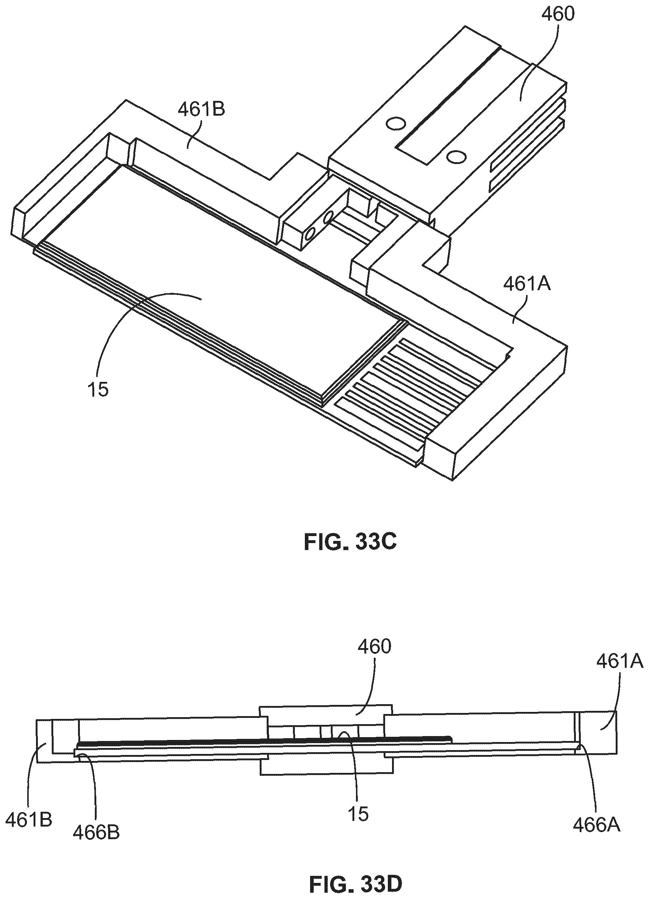

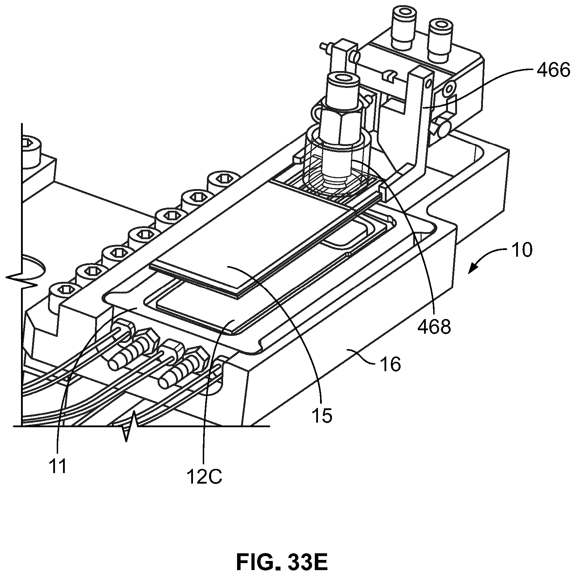

Alternative gripper arms 461A and 461B are illustrated in FIGS. 33A and 33B. As illustrated in FIG. 33A, the gripper arms 461A and 461B have an elongate body 464A and 464B, and each of the elongate bodies terminate in a catch 465A and 465B. In some embodiments, and as illustrated in FIG. 33B, the catches 465A and 465B include angled recesses 466A and 466B, such as recess having a 30-degree angle, a 40-degree angle, a 45-degree angle, a 50-degree angle, a 60-degree angle, etc. Yet other alternative gripper arms 461A and 461B adapted to pick up and/or grip a substrate along its longitudinal axis are illustrated in FIGS. 33C and 33D. In some embodiments, the gripper arms 461A and 461B have step-shaped recesses adapted to support a substrate. In some embodiments, and as illustrated in FIG. 33E, the gripper device 460 may include one or more suction cups 468 or vacuum ports, e.g. the substrate may be supported by the gripper arms while simultaneously being gripped by the one or more suction cups and/or vacuum ports.

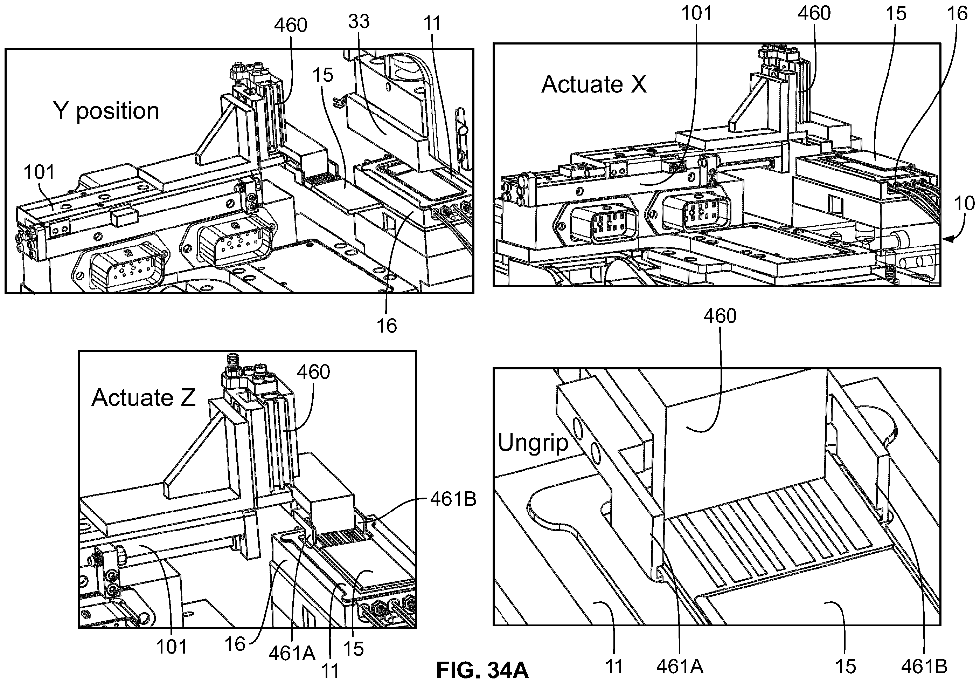

FIG. 34A illustrates the movement of a substrate (e.g. from a loading area or from a substrate preparation area) to a body 16 of a lower plate 10. In some embodiments, the gripper device may include a pair of gripper arms for holding and/or supporting the substrate, and an actuator for opening and closing the pair of gripper arms. In some embodiments, the gripper device is located at the end of a sub-assembly 101. In some embodiments, the gripper device is movably coupled to the sub-assembly 101 (e.g. such that the gripper device and any substrate supported by the gripper device may move along a first coordinate axis). In some embodiments, the gripper device further includes one or more gripper motors, screws, and/or rails for further moving a portion of the gripper device (including the gripper arms) along second and third coordinate axes. In some embodiments, the substrate is picked up at one of its ends, e.g. a label end of a substrate, and held and/or supported by the gripper device 460 (depending, of course, on how the gripper device 460 and its gripper arms 461A and 461B are configured).

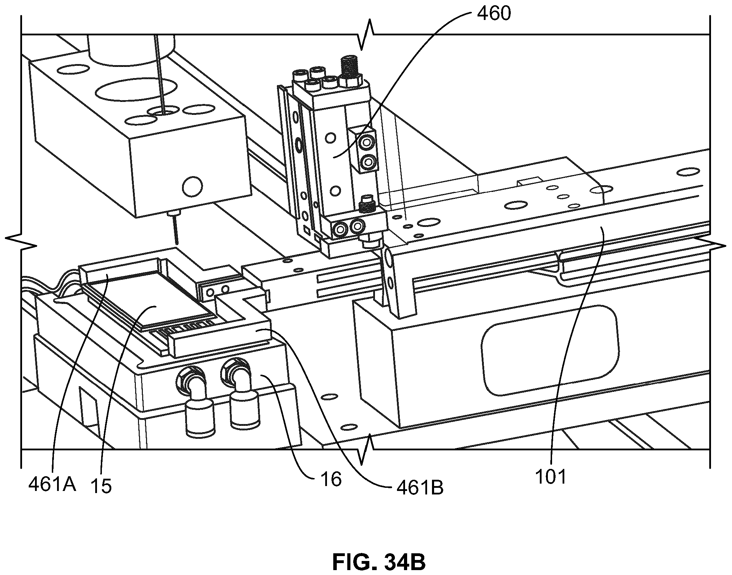

As illustrated in panel A of FIG. 34A, a substrate is first picked up by a gripper device 460. In some embodiments, the gripper arms 461A and 461B are actuated by the gripper device 460 such that a substrate is held by the gripper arms 461A and 461B and/or is supported by the recesses within notched ends 462A and 462B. In some embodiments, at least a portion of the gripper device is moved along the y-axis (e.g. a portion of the gripper device that includes the gripper arms may be moved using one or more of a motor, screw, and/or rail) such that a substrate may be aligned with a substrate stage 12 of a body 16 of lower plate 10. As depicted in panel B of FIG. 34A, the gripper device 460 may then be moved along the sub-assembly 101, e.g. along the x-axis and toward a body 16 of a lower plate and, in particular to a position over a substrate stage 12. Next, and as illustrated in panel C of FIG. 34A, at least a portion of the gripper device 460 is moved along the z-axis to place the substrate on the surface 12C of the substrate 12. Subsequently, the gripper arms 461A and 461B are extended (for example opened) such that the substrate is released (see panel D of FIG. 34A). The gripper device 460 may then be moved along any of the x, y, and z-coordinate directions such that it positioned away from the upper plate 30 of the specimen processing apparatus 100. FIG. 34B illustrates the placement of a substrate onto a body of a lower plate using the gripper device and gripper arms of FIGS. 33C and 33D.

### Forklift Device

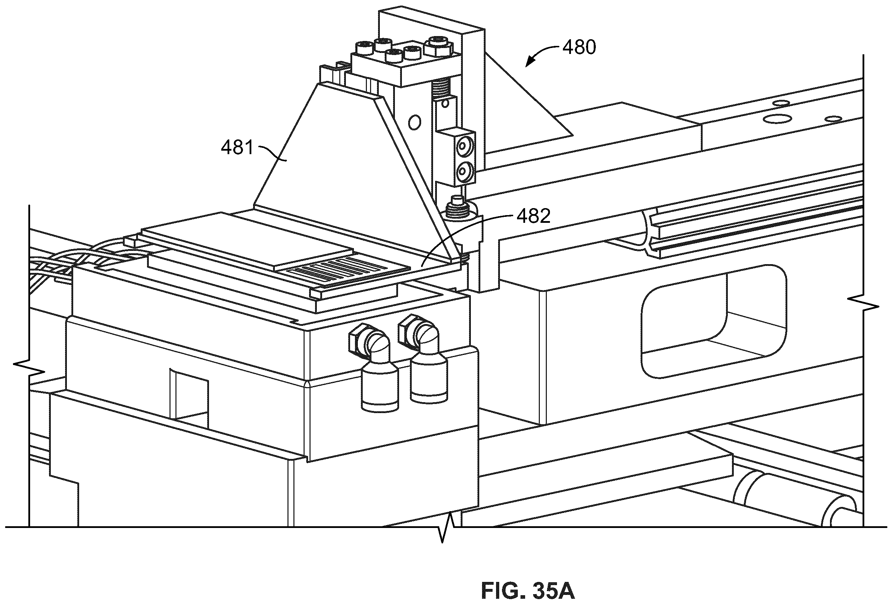

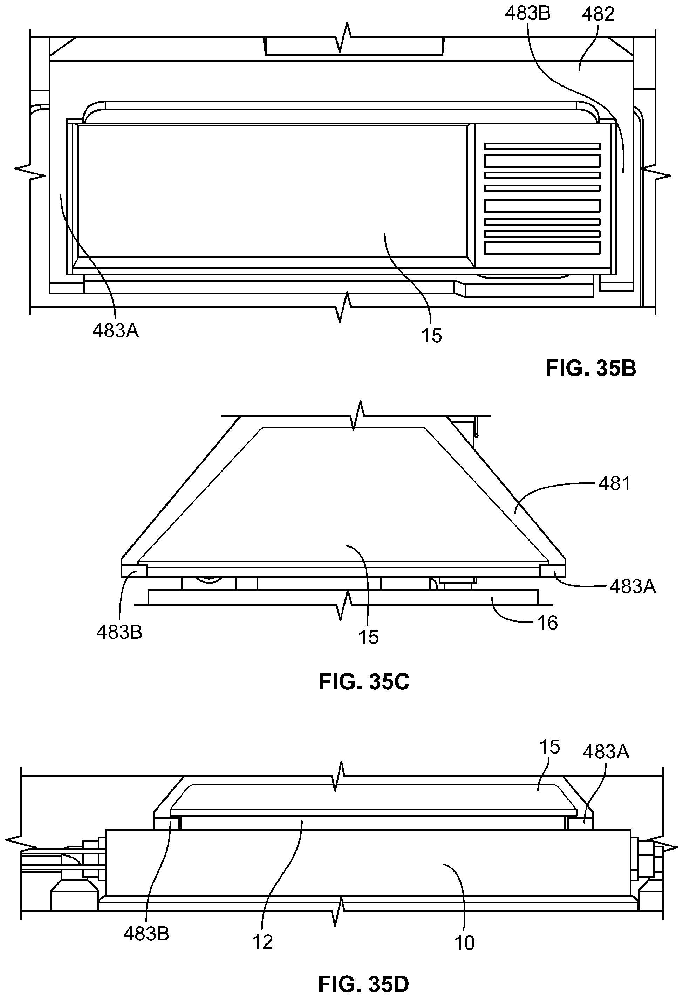

In some embodiments, substrates may be moved from one position to another via a forklift device. One suitable forklift device is illustrated in FIGS. 35A to 35D. In these embodiments, the forklift device 480 includes a forklift attachment member 481 and a forklift body 482. In some embodiments, the forklift body 482 includes a pair of elongate arms 483A and 483B, each of the elongate arms 483A and 483B having a recess adapted to support a substrate 15. In some embodiments, the recess of each elongate arms is sized to accommodate the width of the substrate 15. In operation, an actuator, motor, screw etc. may be used to move the forklift device 480 to a substrate 15. The forklift device 480 may then be moved such that the elongate arms 483A and 483B are positioned under at least a portion of the edges of the substrate 15. The forklift device 480 may then be moved upwards (e.g. along the z-axis) such that the substrate 15 becomes supported within the recesses of the elongate arms 483A and 483B, and thus supported by the forklift device 480. Subsequently, the forklift device 480 may then be moved toward a lower plate 10 such that the substrate 15 may be transferred to and deposited onto a substrate stage. FIG. 35D illustrates a substrate 15 being supported by a substrate stage 12 after the forklift device is moved toward a lower plate as described above. Once the substrate 15 is supported by the substrate stage 12, the forklift device 480 may be moved away from the lower plate 10. In some embodiments, the distance "W" between the elongate arms 483A and 483B should approximate the length of the substrate stage 12 such that it may be properly supported.

In some embodiments, a forklift device may be used in conjunction with a second force exerting device which exerts a force onto the substrate in an opposite direction, for example while the forklift device acts to support a substrate from beneath and thus exerts an upward force, a second device may be used to exert a downward force. In some embodiments, the combination of a forklift device and a second force exerting device may assist in stabilizing the substrate while it is transported from one processing position to another, such as from a loading area to a lower plate of a specimen processing apparatus. In some embodiments, the second force exerting device is a cylinder that may be actuated (mechanically, electrically, pneumatically, etc.) to exert a force in a direction opposite the force exerted by the forklift mechanism.

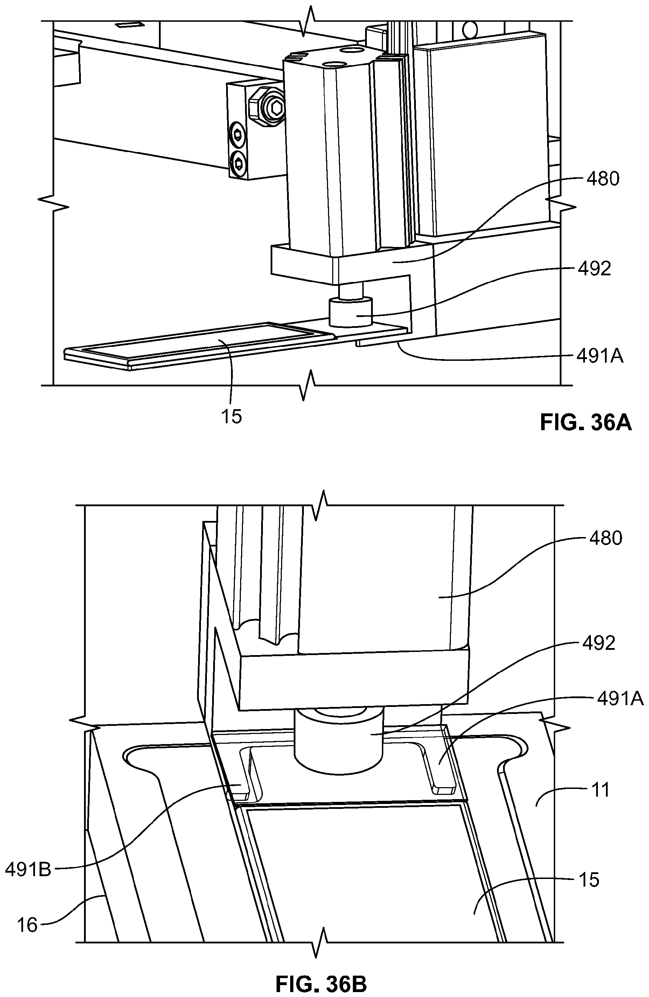

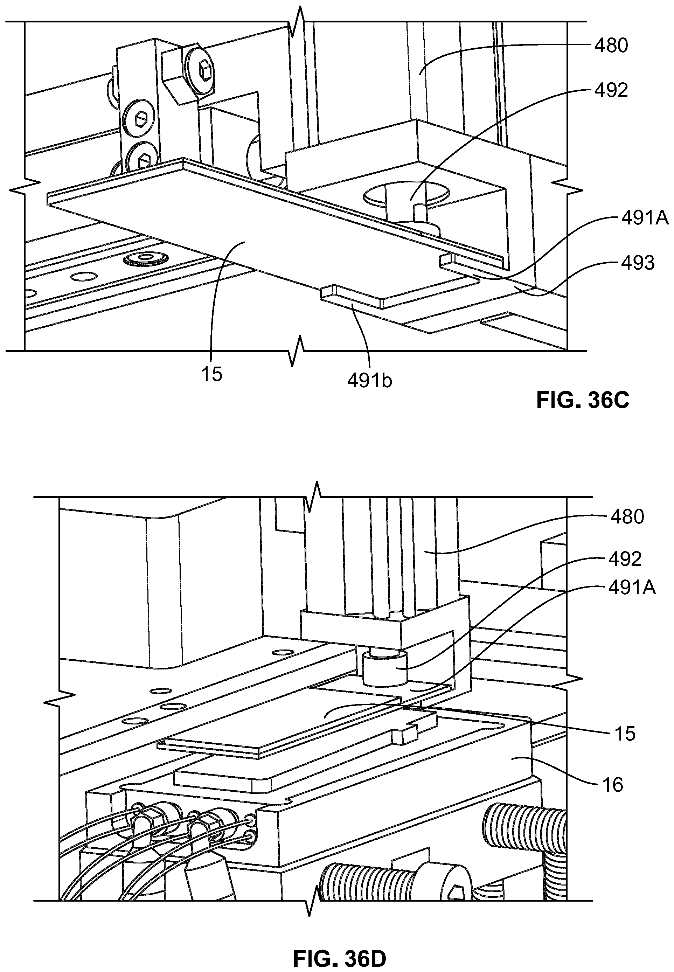

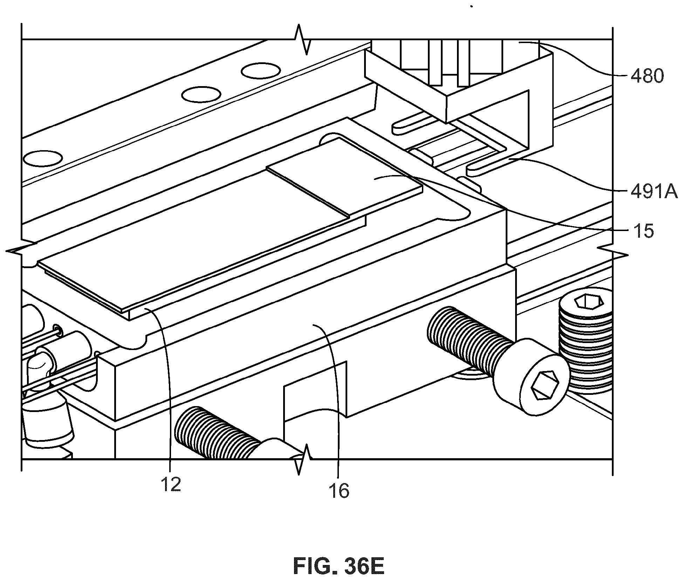

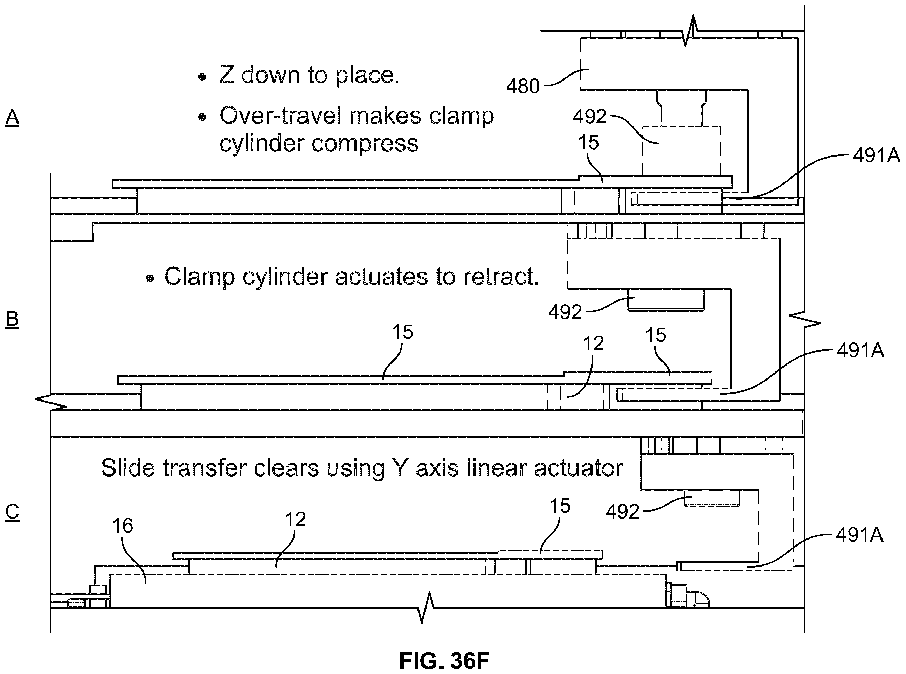

FIGS. 36A - 36D each illustrate a forklift device 480 including a cylinder 492, a forklift body 493, and a pair of forklift arms 491A and 491B. In some embodiments, and as noted above, the cylinder 492 is actuated such that it delivers a downward force onto substrate 15 while the forklift arms 491 and 491B and/or forklift body 493 support the substrate 15 from beneath (for example while the forklift arms and forklift body supply an opposite form in the upward direction). In each of FIGS. 36A to 36D, the cylinder 492 is shown in an extended position, such as an extended position contacting substrate 15. FIG. 36E, on the other hand, illustrates the cylinder 492 in a retracted position. The forklift device 480 illustrated in FIGS. 36A to 36E operates in much the same manner as the forklift device described above, for example the forklift device 480 is transported to a substrate and then positioned beneath the substrate. The forklift device 480 may then be raised such that the forklift arms 491A and 491B and/or forklift body 493 contact at least a portion of the bottom of the substrate. Contemporaneously with the contacting of the substrate with the forklift arms 491A and 491Band/or body, the cylinder 492 may be extended so as to exert a force onto the top of the substrate 15. The substrate may then be transported, such as to a lower plate of a specimen processing assembly, such that the substrate is deposited onto the surface of a substrate stage. Once the substrate has been deposited, the process recited above may be reversed such that the forklift device 480 may be transport another substrate 15, such as from a loading area to a different specimen processing apparatus. Panels A and B of FIG. 36F illustrate the retraction of the cylinder 492. Panel C of FIG. 36F illustrates that movement of the forklift device 480 away from the substrate 15 and lower plate 10.

### Carrier Transport

As noted above, a body 716 may include a carrier block 432 (see, e.g., FIGS. 27A to 27E). FIG. 27F illustrates body 716 including a carrier block 432, where the carrier block 432 is in communication with a carrier pickup member 450 having a carrier pickup body 452. In some embodiments, the carrier pickup member 450 includes a carrier pickup body 452 and carrier pickup arms 451A and 451B which are adapted to support at least a portion of the edges of carrier block 432. FIG. 27G illustrates a modular lower plate 710 including a carrier block 432 after the carrier block 432 has been moved to a position adjacent a thermal management module 440. As illustrated in FIG. 27G, the carrier block 432 is supported by at least carrier pickup arms 451A and 451B. FIG. 27H illustrates a modular lower plate 710 including a carrier block 432 after the carrier 432 has been moved via a pickup device and positioned on top of a thermal management module 440. As illustrated in FIG. 27H, the pickup device is positioned such that carrier pickup arms 451A and 451B are no longer in communication, e.g. supporting, the edges of carrier 432.

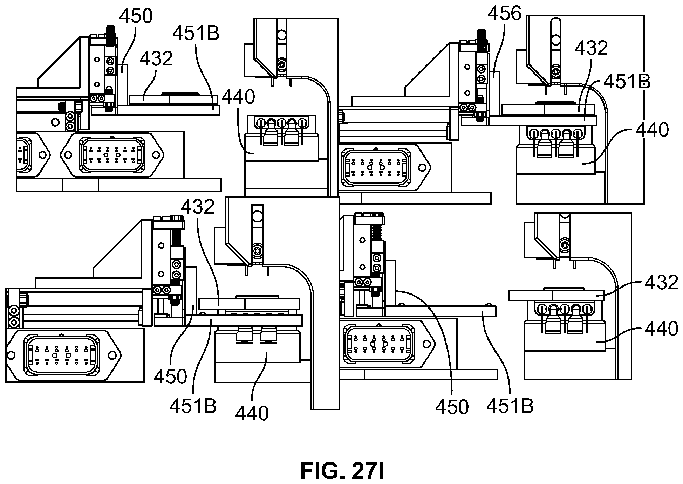

In some embodiments, the modular lower plate 710 including the carrier block 432 may be transported in much the same manner as described above with regard to a forklift device. Indeed, FIG. 27I (Panel A) illustrates a modular lower plate 710 including a carrier block 432 moved by a forklift device 454, wherein the carrier block 432 is supported by a carrier pickup body 452 having carrier pickup arms 451A and 451B. In some embodiments, the forklift device 454 includes motors, actuators, screws, rails, etc. that allow the forklift device 454 to move in each of the x, y, and z-coordinate directions. FIG. 27I (Panel B) illustrates that the carrier block 432 may be transported to a thermal management module 440. Once the carrier block 432 is transported to and deposited onto the thermal management module 440 (FIG. 27I, Panel B), the carrier pickup body 452 may be moved downward via the forklift device 454 such that the carrier pickup arms 451A and 451B no longer support the carrier 432 (FIG. 27I, Panel C). The forklift device 454 may then be moved away from the lower plate 10 of the specimen processing assembly 100.

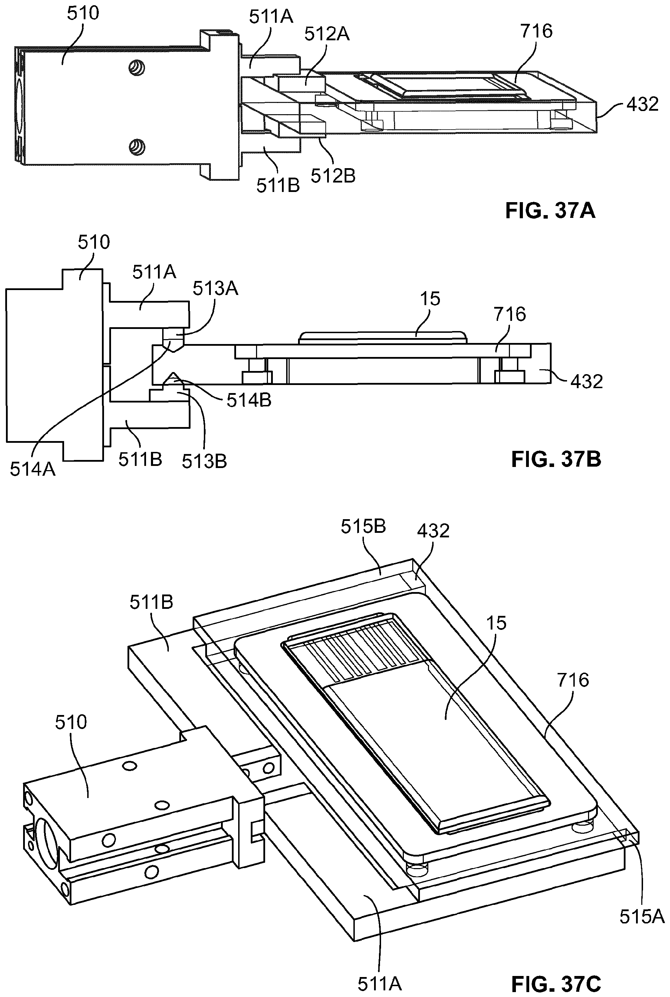

In some embodiments, a body 716 including a carrier block 432 is transported using one or more grippers which releasably engage the carrier 432. FIGS. 37A, 37B, and 37C illustrate three different gripper devices 510 for gripping and/or picking up a carrier block 432. FIG. 37A illustrates a gripper device 510 having gripper arms 511A and 511B, where the gripper arms 511A and 511B are adapted to engage top and bottom surfaces of the carrier block 432. In some embodiments, the gripper arms 511A and 511B include gripper pads 512A and 512B. In some embodiments, the gripper pads are comprised of a compressible material, a rubberized material, or a silicone-based material. FIG. 37B illustrates an alternative gripper device 510 having gripper arms 511A and 511B which include gripper protuberances 513A and 513B. The gripper protuberances 513A and 513B may have any size and/or shape, provided that their ends are compatible with and complementary to indentations 514A and 514B within the carrier block 432. FIG. 37C illustrates yet a further gripper device 510, where the gripper device 510 includes gripper arms 511A and 511B adapted to support the ends of a carrier 432. As illustrated in FIG. 37D, the carrier block 432 may include overhangs 515A and 515B. In some embodiments, the overhangs 515A and 515B are adapted to be supported by gripper arms 511A and 511B while the remainder of the body 516 of the carrier block 0432 is positioned between the gripper arms 511A and 511B.

### Substrate Loading Stations

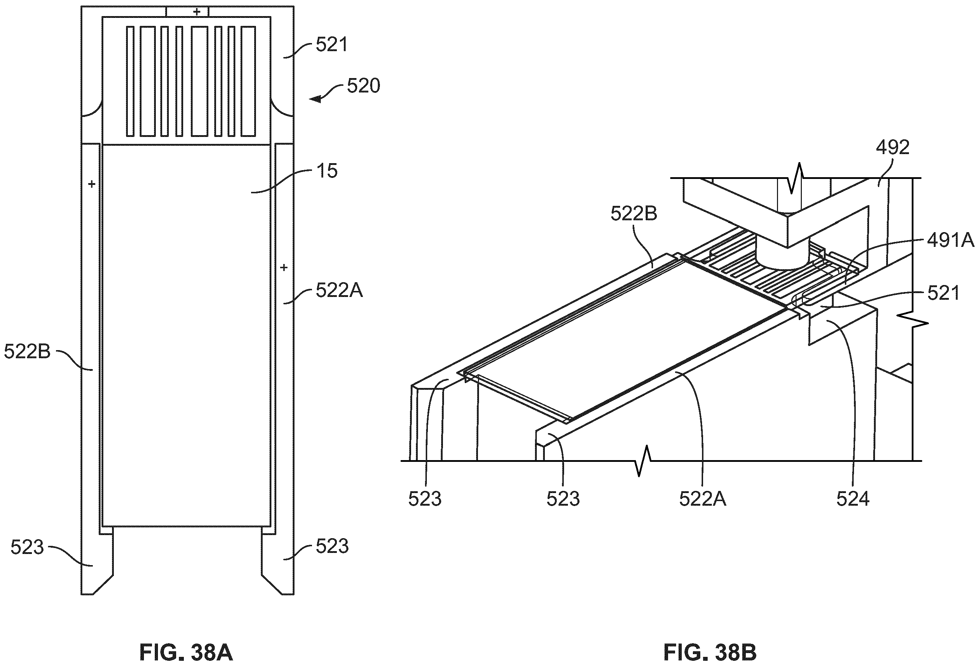

In some embodiments, the specimen processing assemblies and/or systems of the present disclosure may include one or more substrate loading stations (see FIGS. 38A to 38H). In some embodiments, any substrate transport mechanism may not be able to pick up a substrate the same way each time, for example there is variability in the manner in which the substrate transport mechanism needs to be positioned to pick up a substrate and transport the substrate to a lower plate of a specimen processing apparatus. In addition, the position of a substrate prior to pick up by a transport mechanism may also affect the ability of the transport mechanism to repeatedly pick up a substrate the same way each time. Given this variability, the substrate may not be placed in the same position on a substrate stage each time, for example, the substrate may not be placed in the exact predetermined position on the substrate stage of a lower plate each time. This may lead to the substrate not being centered on the substrate stage and/or not appropriately aligned with any heating elements, cooling elements, etc. The skilled artisan will appreciate that one method of accommodating for these variations would be to have an oversized substrate stage that not only could accommodate substrates of different shapes and/or sizes, but also to account for the variability in positioning the substrate on the substrate stage, for example using an oversized substrate stage would mitigate the effects of the a substrate not being placed in the predetermined position. The skilled artisan will appreciate that this particular solution increases the size of the chamber formed from the lower and upper plates of the specimen processing assembly, for example a comparatively larger substrate stage would require a larger complementary recess in an upper plate thereby causing an increase in overall chamber size and volume. The present disclosure provides for substrate loading stations adapted to hold a substrate in a predetermined position so as to reduce variability when a transport mechanism picks up the substrate, while minimizing the size of any chamber.

FIGS. 38A and 38B illustrate a substrate loading station 520 including a platform 521, a pair of side members 522A and 522B raised relative to the platform 521, and one or more stop members 523. In this particular configuration, an operator may load a substrate onto the platform 521 between the pair of side members 522A and 522B, such that one end of the substrate abuts the one or more stop members 523. In some embodiments, the substrate loading station 520 includes one or more cutaways 524 in platform 521. In some embodiments, the cutaways 524 are sized to accommodate a forklift device or a gripper device, for example to allow forklift arms to move under the substrate such that the substrate may be supported or to allow gripper arms to contact one or more side of the substrate.

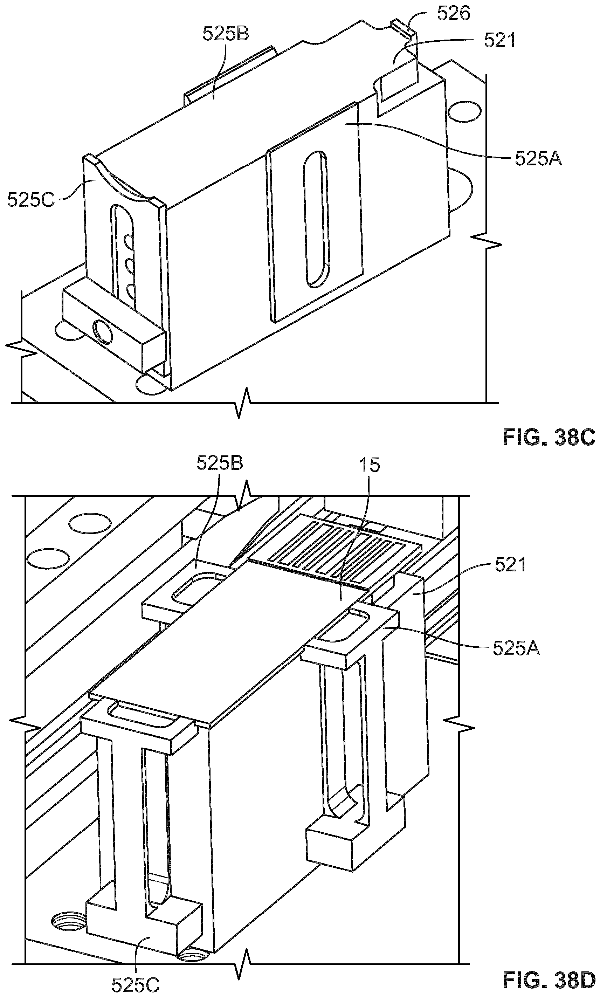

In some embodiments, the substrate loading station 520 includes a platform 521 and three spring flexures 525A, 525B, and 525C, such as depicted in FIGS. 38C and 38D. In some embodiments, the spring flexures are spring leaf flexures (FIG. 38C). In some embodiments, the substrate loading station 520 further includes a clip 526 such that all four edges may be maintained in contact with the substrate loading station 520. In some embodiments, the substrate loading station 520 includes one or more cutaways 524 in platform 521, again to allow a forklift device or a gripper device access to the substrate.

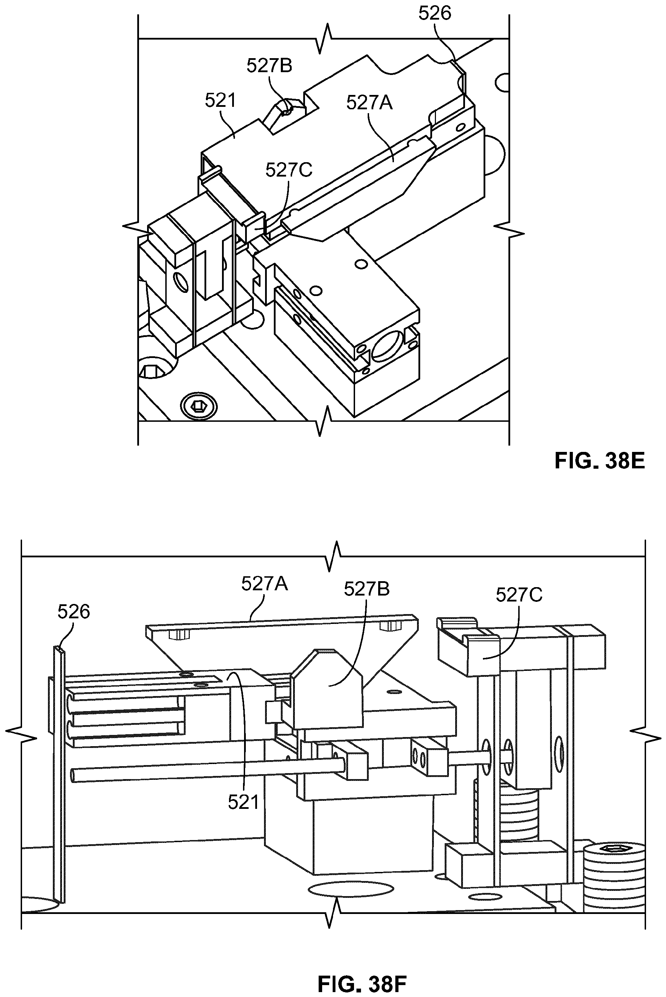

In some embodiments, the substrate loading station 520 includes a platform 521 and two or more independently operable alignment grippers 527. In some embodiments, the substrate loading platform 520 includes three independently operable alignment grippers 527A, 527B, and 527C (see FIGS. 38E and 38F). In some embodiments, each of the two or more independently operable alignment grippers 527 are moved toward the platform 521 (and therefore toward any substrate placed onto the platform) until each of the two or more alignment grippers 527 contact an edge of the substrate. In this way, each of the alignment grippers 527 exert a force onto the substrate, e.g. each alignment gripper may exert an equal force on to the substrate such that the substrate is moved to a predetermined alignment position on platform 521. In some embodiments, the substrate loading station further includes a clip 526, such as a clip for retaining a label end of the substrate.

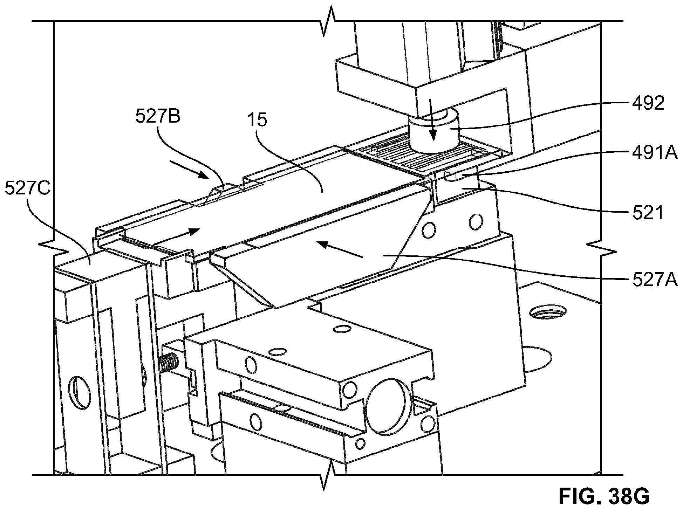

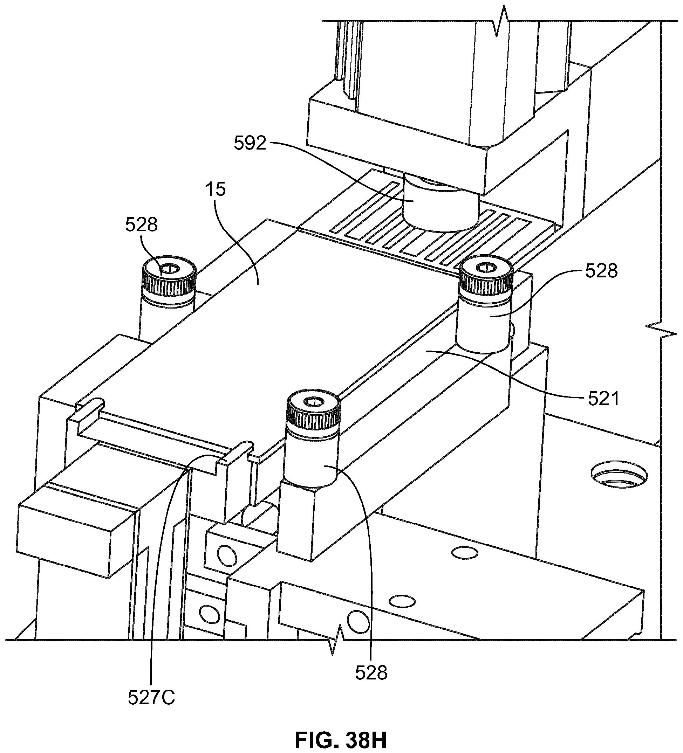

In some embodiments, and with reference to FIG. 38G, alignment grippers 527A and 527B, both of which are pre-positioned positioned adjacent to the longitudinal sides of the platform 521, are first actuated to center a substrate, for example to move simultaneously or sequentially toward a substrate until both of the alignment grippers 572A and 527B contact the substrate. Next, alignment gripper 527C is actuated to push the substrate against clip 526. Subsequently, a gripper device or a forklift device may be moved into position to pick up and transport the substrate, aligned to a predetermined position via the substrate loading station, to a lower plate of a specimen processing assembly. In an alternative embodiment, a plurality of rollers 528 may be substituted for any of the alignment grippers 527 (see FIG. 38H).

### SYSTEMS

With reference to FIG. 17A, the present disclosure is also directed to systems 200 including one or more independently operable specimen processing assemblies 100. In some embodiments, a system 200 may include from between 2 to 60 independently operable specimen processing assemblies 100. In some embodiments, a system 200 may include from between 2 to 50 independently operable specimen processing assemblies 100. In some embodiments, a system 200 may include from between 2 to 40 independently operable specimen processing assemblies 100. In some embodiments, a system 200 may include from between 2 to 30 independently operable specimen processing assemblies 100. In other embodiments, a system 200 may include from between 3 to 20 independently operable specimen processing assemblies 100. In yet other embodiments, a system 200 may include from between 3 to 15 independently operable specimen processing assemblies 100. In further embodiments, a system 200 may include from between 3 to 10 independently operable specimen processing assemblies 100.

In some embodiments, the systems 200 further include one or more dispense devices 130 and 131, liquid removal devices 134, mixing devices 135, substrate loading stations, gripper devices, forklift devices, and/or carrier transport devices, etc. In some embodiments, the systems 200 further includes a control system in communication with each of the independently operable specimen processing assemblies and/or the one or more dispense devices 130 and 131, liquid removal devices 134, mixing devices 135, one or more heating and/or cooling elements, etc.

In some embodiments, the systems 200 of the present disclosure include additional modules, such as staining modules, imaging modules, deparaffinization modules, coverslipping modules, baking modules, etc. In some embodiments, the systems 200 of the present disclosure may include at least one staining module, at least one drying / baking station / module, at least one de-paraffinizing module, and/or at least one combined baking and de-paraffinizing station module. In some embodiments, the systems 200 of the present disclosure may include two or more staining station modules, two or more baking stations / modules, two or more de-paraffinizing station modules, and/or two or more combined baking and de-paraffinizing station modules, which may further increase through-put. In other embodiments, the systems 200 of the present disclosure include a drying/baking station / module, a de-paraffinizing station module, a staining station module, and a coverslipping station module.

### Dispense Devices / Modules Including Dispense Devices

As noted herein, in some embodiments, a system 200 may be utilized to apply a wide range of fluids and/or reagents to the specimen, such either before and/or after an unmasking operation. As such, the system may include one or more dispense devices to for dispensing one or more fluids and/or reagents to the specimen. In some embodiments, the dispense device is capable of selectively dispensing predetermined volumes of fluids and/or reagents onto the substrate or specimen. In some embodiments, the dispense devices are adapted to deliver 50 - 1000 microliters of one or more fluids. In some embodiments, the dispense devices are adapted to deliver 10 - 100 microliters of one or more reagents.

In some embodiments, the dispense device includes one or more dispense nozzles or one or more pipettes. In some embodiments, fluids and/or reagents may be dispensed using a microfluidic applicator. In other embodiments, the fluids and/or reagents are dispensed to the substrate or the specimen using drop-on-demand technology, such as where discrete droplets of reagent are dispensed to a specimen. Drop-on-demand utilize inkjet printheads or like technologies (e.g. where a piezoelectric or thermal element is used to actuate a droplet to be dispensed). Yet other suitable dispense devices and dispense nozzles and the components to effectuate dispensing of fluids and/or reagents (e.g. a fluidics module) are described in U.S. Patent Nos. 8,663,991, 6,945,128, 8,147,773, 8,790,596, 8,048,373, 8,883,509, 7,303,725, and 7,820,381, the disclosures of which are hereby incorporated by reference herein in their entireties. In some embodiments, once the substrates are loaded into the system, test protocols will dictate which fluids and/or reagents are dispensed onto the substrates at specific times and for certain predetermined durations of time (e.g. dispense a predetermined volume of a reagent for 20 minutes, then removing the reagent, and/or dispensing a wash fluid or buffer).

The one or more dispense device may dispense any volume of fluids and/or reagents to the substrate and/or the specimen disposed on the substrate. For example, and as noted further herein, in some embodiments, a total volume of one or more fluids and/or reagents dispensed to the substrate or the specimen disposed on the substrate by the one or more dispense devices ranges from between about 100µL to about 2000µL. In some embodiments, a total volume of one or more fluids and/or reagents dispensed to the substrate or the specimen disposed on the substrate by the one or more dispense devices ranges from between about 100µL to about 1500µL. In some embodiments, a total volume of one or more fluids and/or reagents dispensed to the substrate or the specimen disposed on the substrate by the one or more dispense devices ranges from between about 100µL to about 1250µL. In some embodiments, a total volume of one or more fluids and/or reagents dispensed to the substrate or the specimen disposed on the substrate by the one or more dispense devices ranges from between about 100µL to about 1000µL. In some embodiments, a total volume of one or more fluids and/or reagents dispensed to the substrate or the specimen disposed on the substrate by the one or more dispense devices ranges from between about 200µL to about 750µL. In some embodiments, a total volume of one or more fluids and/or reagents dispensed to the substrate or the specimen disposed on the substrate by the one or more dispense devices ranges from between about 250µL to about 600µL. In some embodiments, a total volume of one or more fluids and/or reagents dispensed to the substrate or the specimen disposed on the substrate by the one or more dispense devices ranges from between about 300µL to about 550µL. In some embodiments, a total volume of one or more fluids and/or reagents dispensed to the substrate or the specimen disposed on the substrate by the one or more dispense devices is about 500µL.

### Liquid Removal Devices

In some embodiments, the system 200 may include one or more liquid removal devices adapted to remove a fluid and/or a reagent (or any material dissolved in a fluid) from the surface of the substrate. In some embodiments, the systems 200 further include one or more gas knifes 134 or liquid removal devices for contactlessly urging, directing, or moving a substance (e.g. a fluid, a particulate solid, or any combination thereof) on the surface of a substrate. In some embodiments, a liquid removal device may be used to drive fluid present on an upper surface of a substrate or slide toward one of (i) a wicking feature in communication with at least a portion of an end of the slide (e.g. a clip in contact with an edge of the slide), or (ii) a longitudinal edge of the slide; where the liquid removal device projects a gas curtain having a shape which approximates a parallelogram. In some embodiments, the liquid removal device is movable in a direction substantially perpendicular to a longitudinal axis of the substrate or slide. In some embodiments, a gas curtain projected from the liquid removal device is oriented substantially perpendicular to a plane of the upper surface of the substrate or slide. In some embodiments, the gas curtain is offset at a predetermined slant angle relative to a longitudinal axis of the gas knife. In some embodiments, the liquid removal device includes a plenum and a plurality of outlets in fluidic communication with the plenum, the plurality of outlets arranged in parallel along an end of the plenum, each gas outlet provided at a slant angle relative to a longitudinal axis of the plenum ranging from between about 20 degrees and about 40 degrees, and wherein a ratio between a length of the outlet and a diameter of the outlet is greater than 5. In some embodiments, the outlets are provided at a pitch of between about 3 and about 20 outlets per inch (2.54 cm). Examples of suitable gas knives 134 are described in PCT Publication Nos. WO/2018/215843 and WO/2016/005347, the disclosures of which are hereby incorporated by reference herein in their entireties.

### Mixing Devices

In some embodiments, the systems 200 further include one or more mixing devices 135. In some embodiments, the mixing device is a contactless mixing device. It is believed that contactless mixing (i) reduces the risk of staining artifacts; (ii) allows for a uniform reagent concentration across the cells and/or tissue during staining, e.g. to mitigate the formation of lightly staining areas e.g. light spots) or the formation of darkly staining areas (e.g. dark spots); (iii) enables increased mixing frequency; (iv) increases mixing efficacy; and/or (v) reduces or eliminates the presence of bubbles in the fluids. Suitable contactless mixing devices include those described in PCT Publication No. WO/2018/215844, the disclosure of which is hereby incorporated by reference herein in its entirety. For example, in some embodiments, a substrate or a support for a substrate (e.g. a substrate stage) may be communicatively coupled to one or more acoustic sources (e.g. one or more transducers) for contactlessly mixing, dispersing, or replenishing fluid present on the surface of a substrate (e.g. a specimen-bearing microscope slide). In some embodiments, the acoustic source is embedded within or in communication with one of the upper and/or lower plates. By "in communication with the support member or substrate" it is meant that, for example, the acoustic source is at least partially in contact with the support, the upper plate, the lower plate, or the substrate itself or can be moved such that it is placed in at least partial contact with the support, the upper plate, the lower plate, or the substrate itself. In some embodiments, the acoustic source is a mechanical transducer or piezoelectric transducer which operates at a low frequency (e.g. a frequency ranging from about lHz to about 1kHz).

### Fluidics / Fluidics Module

Again, with reference to FIG. 17A, in some embodiments, the system 200 includes one or more bulk fluid vessels 210 for storing and maintaining different bulk fluids, where the one or more fluid vessels 210 may be coupled to one or more dispense devices 130 (e.g. dispense nozzles) through one or more fluid lines. Likewise, the system 200 may include one or more reagent storage sub-systems 132 for independently storing and maintain different reagents (e.g. antibody probes, nucleic acid probes, etc.), where the reagent storage sub-systems 132 may be coupled to one or more reagent dispensers 131 (e.g. pipettes) through one or more fluid lines. In some embodiments, the bulk fluid vessel 210 and/or a reagent storage sub-system 132 may be present within the internal environment 202 or which may be housed in a separate area of the system having its own environment (e.g. an environment where fluids and/or reagents are stored at a temperature below room temperature). The one or more reagents dispensers 131 may retrieve reagents from a reagent storage sub-system 132.

The system may also include one or more fluidics modules. In one embodiment, the fluidics module can continuously deliver reagents in packaged concentration, in diluted concentrations and/or in bulk to workstations, even as reagent supplies are being replenished, thereby reducing workflow disruptions. In a more particular embodiment, the fluid motivating components of the fluidics module operate on pressure differentials to achieve continuous availability of reagents for delivery from a dispensing means, even during recharge of the dispensing means. In a working embodiment, high pressure is used to drive recharge fluid from a pump chamber into a lower pressure dispense chamber, and the dispense chamber maintains a particular dispense pressure by "back relieving" the high pressure used for recharge of the dispense chamber through an air system pressure regulator. Reagent pumps, reagent dilution systems, distilled deionized water and alcohol delivery systems all can be operated according to this method. Further aspects of suitable fluidics modules are described in U.S. Patent Publication No. 2017/0131303, the disclosure of which is hereby incorporated by reference herein in its entirety.

### Housings

In some embodiments, the various components of system 200 may be included within a housing 203. In some embodiments, the housing provides an internal environment 202 which may be the same or different than an environment outside the housing 203. In some embodiments, the internal environment 202 is maintained at a predetermined temperature, e.g. a temperature ranging from between 25°C to about 35°C. In other embodiments, the internal environment 202 is maintained at a predetermined temperature of about 30°C. In other embodiments, the internal environment 202 is maintained at a predetermined temperature of about 20°C. In some embodiments, the internal environment may also be maintained at a predetermined humidity.

In some embodiments, the systems may have two, three, four, or more sections, where each section may be maintained at a different temperature. For example, and in some embodiments, the system may have a first section for storing fluids, a second section for storing reagents, a third section for holding substrates prior to any processing, and a fourth section suitable for substrate and/or specimen processing. In some embodiments, the chamber formed from the upper and lower plates described herein may be provided in a section of the system that is maintained at a predetermined temperature and/or humidity so as to prevent and/or mitigate condensation or evaporation within the chamber (such as while the chamber is open), on the substrate, and/or on a specimen disposed on the substrate. In some embodiments, substrate loaders and other means for temporarily storing specimen bearing slides are provided within a section of the system that includes humidified air. In that regard, one or more sections of a system of the present disclosure may include one more humidifiers or may include one or more vent lines for the introduction of humidified air.

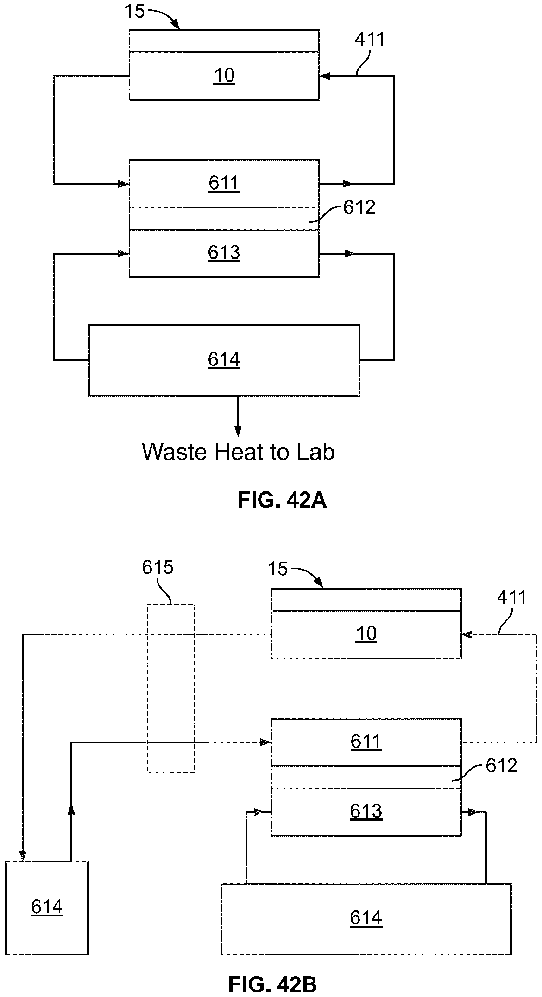

In some embodiments, the chamber formed from the upper and lower plates in accordance with the present disclosure may be in communication with one or more fluid channels to provide cooling to the upper and/or lower plates from which the chamber is formed. In some embodiments, the fluid channels are fluidically coupled to heat exchangers and/or chillers which are located at least partially outside of any section or compartment for substrate and/or specimen processing (see, e.g. FIGS. 42A and 42B). In this way, waste heat extracted from the fluid is not introduced back into the section or compartment for substrate and/or specimen processing. For example, FIGS. 42A and 42B illustrate a thermoelectric module 612 having a cold side 611 and a hot side 613. In some embodiments, the cold side 611 may be in communication with and/or located partially inside the section or compartment for substrate and/or specimen processing; while the hot side 613 is located outside of the section or compartment for substrate and/or specimen processing. As illustrated in these figures, the fluid channels 411 may be in communication with the thermoelectric module 612, one or more pumps 614, and one or more recovery heat exchangers 615.

In some embodiments, the system may include a first section that is maintained at a temperature at or below room temperature. For example, the first section may be a "cold section" where fluids and/or reagents are stored, such as at a temperature at or below room temperature. In some embodiments, different fluids and/or different reagents are independently stored in different sections of the system (such as either within different sections of the system within the housing 203 or within different system sections outside of the housing 203). In some embodiments, fluids and/or reagents which themselves are maintained at a temperate at or below room temperature will not be warmed up to a higher temperature after they are dispensed to the surface of a substrate held by the lower plate.

In some embodiments, a second section may be maintained at a temperature which is higher than the temperature of the first section. In some embodiments, a "warm section" may be maintained separately from the "cold section," the warm section adapted for performing certain processing operations, such as an unmasking operation. In some embodiments, the system may also include a waste collection system.

### Staining Module

The specimens processed according to the present disclosure may be stained after being unmasked (the process of unmasking and examples of uncasing operations are described herein). In some embodiments, staining may be performed with a histochemical staining module or separate platform, such as an automated IHC/ISH slide stainer. Automated IHC/ISH slide stainers typically include at least: reservoirs of the various reagents used in the staining protocols, a reagent dispense unit in fluid communication with the reservoirs for dispensing reagent to onto a slide, a waste removal system for removing used reagents and other waste from the slide, and a control system that coordinates the actions of the reagent dispense unit and waste removal system. In addition to performing staining steps, many automated slide stainers can also perform steps ancillary to staining (or are compatible with separate systems that perform such ancillary steps), including: slide baking (for adhering the sample to the slide), dewaxing (also referred to as deparaffinization), antigen retrieval, counterstaining, dehydration and clearing, and coverslipping. Prichard, Overview of Automated Immunohistochemistry, Arch Pathol Lab Med., Vol. 138, pp. 1578-1582 (2014), incorporated herein by reference in its entirety, describes several specific examples of automated IHC/ISH slide stainers and their various features, including the intelliPATH (Biocare Medical), WAVE (Celerus Diagnostics), DAKO OMNIS and DAKO AUTOSTAINER LINK 48 (Agilent Technologies), BENCHMARK (Ventana Medical Systems, Inc.), Leica BOND, and Lab Vision Autostainer (Thermo Scientific) automated slide stainers. Additionally, Ventana Medical Systems, Inc. is the assignee of a number of United States patents disclosing systems and methods for performing automated analyses, including U.S. Pat. Nos. 5,650,327, 5,654,200, 6,296,809, 6,352,861, 6,827,901 and 6,943,029, and U.S. Published Patent Application Nos. 20030211630 and 20040052685, each of which is incorporated herein by reference in its entirety.

Commercially-available staining units typically operate on one of the following principles: (1) open individual slide staining, in which slides are positioned horizontally and reagents are dispensed as a puddle on the surface of the slide containing a tissue sample (such as implemented on the DAKO AUTOSTAINER Link 48 (Agilent Technologies) and intelliPATH (Biocare Medical) stainers); (2) liquid overlay technology, in which reagents are either covered with or dispensed through an inert fluid layer deposited over the sample (such as implemented on VENTANA BenchMark and DISCOVERY stainers); (3) capillary gap staining, in which the slide surface is placed in proximity to another surface (which may be another slide or a coverplate) to create a narrow gap, through which capillary forces draw up and keep liquid reagents in contact with the samples (such as the staining principles used by DAKO TECHMATE, Leica BOND, and DAKO OMNIS stainers).

Some iterations of capillary gap staining do not mix the fluids in the gap (such as on the DAKO TECHMATE and the Leica BOND). In variations of capillary gap staining termed dynamic gap staining, capillary forces are used to apply sample to the slide, and then the parallel surfaces are translated relative to one another to agitate the reagents during incubation to effect reagent mixing (such as the staining principles implemented on DAKO OMNIS slide stainers (Agilent)). In translating gap staining, a translatable head is positioned over the slide. A lower surface of the head is spaced apart from the slide by a first gap sufficiently small to allow a meniscus of liquid to form from liquid on the slide during translation of the slide. A mixing extension having a lateral dimension less than the width of a slide extends from the lower surface of the translatable head to define a second gap smaller than the first gap between the mixing extension and the slide. During translation of the head, the lateral dimension of the mixing extension is sufficient to generate lateral movement in the liquid on the slide in a direction generally extending from the second gap to the first gap. See WO 2011-139978 A1. It has recently been proposed to use inkjet technology to deposit reagents on slides. See WO 2016-170008 A1. This list of staining technologies is not intended to be comprehensive, and any fully or semi-automated system for performing biomarker staining may be incorporated into the histochemical staining platform.

Where a morphologically stained sample is also desired, an automated H&E staining platform may be used. Automated systems for performing H&E staining typically operate on one of two staining principles: batch staining (also referred to as "dip 'n dunk") or individual slide staining. Batch stainers generally use vats or baths of reagents in which many slides are immersed at the same time. Individual slide stainers, on the other hand, apply reagent directly to each slide, and no two slides share the same aliquot of reagent. Examples of commercially available H&E stainers include the VENTANA SYMPHONY (individual slide stainer) and VENTANA HE 600 (individual slide stainer) series H&E stainers from Roche; the Dako CoverStainer (batch stainer) from Agilent Technologies; the Leica ST4020 Small Linear Stainer (batch stainer), Leica ST5020 Multistainer (batch stainer), and the Leica ST5010 Autostainer XL series (batch stainer) H&E stainers from Leica Biosystems Nussloch GmbH.

### Drying / Baking Station or Module

As noted above, in some embodiments, the systems of the present disclosure include one or more drying or baking stations or modules. For instance, U.S. Publication Nos. 2007/0172911 and 2006/0252025 describes modules and methods of drying slides, the disclosures of which are hereby incorporated by herein in their entireties. Baking modules are also described in U.S. Publication No. 2004/0002163, the disclosure of which is hereby incorporated by reference herein in its entirety.

In some embodiments, a drying/baking station includes a thermally-insulated compartment into which is supplied controlled heat for drying specimen substrates or slides. In some embodiments, a drying/baking station includes a modular unit and further includes a convection heater, arranged to direct a flow of heated air across the surfaces of the specimen slides. In some embodiments, the drying/baking station facilitates the adherence of a specimen to a substrate or slide. Following the baking step, substrates or slides are moved to a staining module for deparaffinization, staining, and clearing. In some embodiments, the systems are configured such that specimen carrying substrates or slides may be dried, baked, dewaxed and prepped for staining, stains applied, and the substrates or slides sealed or covered so that the substrates or slides may then be stored for future analysis.

### Coverslipping Module

By way of example, in some embodiments, a coverslipping module includes a cartridge or magazine having an open dispensing end. In some embodiments, the magazine defines a substantially rectangular box, wherein glass plate coverslips are stacked in a substantially vertical arrangement. In some embodiments, a transfer mechanism, removes the top, or uppermost glass plate coverslips from the box, and onto a substrate or slide. In some embodiments, the transfer mechanism includes a suction cup suspended from a rail and reciprocally driven along the rail by a linear motor and drive. In some embodiments, a reciprocally vertically moveable plunger extending through the bottom of box pushes the stack of glass plate coverslips into contact with suction cup wherein the suction cup engages the top glass plate coverslip. In some embodiments, the plunger is then retracted whereby the stack of glass plate coverslips are separated from the top glass plate coverslip which is retained by the suction cup. In some embodiments, the suction cup is then advanced along the rail to over a selected slide, and the suction cup prompted to release the glass plate coverslip onto the slide. In some embodiments, the suction cup is then returned to above the magazine, and the plunger again activated to push the stack of glass plate coverslips into contact with suction cup, and the process repeated. In some embodiments, each of the glass plate coverslips are coated, on their bottom surface, with a dry activatable adhesive. Additional coverslipping modules and methods of coverslipping suitable for use within the presently disclosed systems are described in U.S. Patent No. 10,317,661 and 8,663,991, the disclosures of which are hereby incorporated by reference herein in their entireties.

### Deparaffinization Module

If the specimen is a sample embedded in paraffin, the sample can be deparaffinized with a deparaffinization module using appropriate deparaffinizing fluid(s). After the waste remover removes the deparaffinizing fluid(s), any number of substances can be successively applied to the specimen. The substances can be for pretreatment (e.g., protein-crosslinking, expose nucleic acids, etc.), denaturation, hybridization, washing (e.g., stringency wash), detection (e.g., link a visual or marker molecule to a probe), amplifying (e.g., amplifying proteins, genes, etc.), counterstaining, coverslipping, or the like. U.S. Publication Nos. 2007/0172911 and 2006/0252025 describes modules and methods of deparaffinization, the disclosures of which are hereby incorporated by herein in their entireties.

### Image Acquisition Module

In some embodiments, after the specimens are stained, the stained samples can be manually analyzed on a microscope, and/or digital images of the stained samples can be acquired for archiving and/or digital analysis.

In some embodiments, the system 200 may include an imaging module 225 (e.g. a Ventana DP200 scanning apparatus, available from Ventana Medical Systems, Inc., Tucson, AZ). Analysis of a biological specimen stained in accordance with the procedures described herein can be automated and facilitated by a computer analysis and/or image analysis system. In some embodiments, light microscopy is utilized for image analysis. Certain disclosed embodiments involve acquiring digital images. This can be done by coupling a digital camera to a microscope (e.g. a brightfield microscope). Digital images obtained of stained samples are analyzed using image analysis software. The samples also can be evaluated qualitatively and semi-quantitatively. Qualitative assessment includes assessing the staining intensity, identifying the positively stained cells and the intracellular compartments involved in staining, and evaluating the overall sample or substrate quality. Separate evaluations are performed on the test samples and this analysis can include a comparison to known average values to determine if the samples represent an abnormal state.

Digital images can be captured via a scanning platform such as a slide scanner that can scan the stained slides at 20x, 40x, or other magnifications to produce high resolution whole-slide digital images. In some embodiments, a scanner includes at least: (1) a microscope with lens objectives, (2) a light source (such as halogen, light emitting diode, white light, and/or multispectral light sources, depending on the dye), (3) robotics to move glass slides around or to move the optics around the slide or both, (4) one or more digital cameras for image capture, (5) a computer and associated software to control the robotics and to manipulate, manage, and view digital slides. Digital data at a number of different X-Y locations (and in some cases, at multiple Z planes) on the slide are captured by the camera's charge-coupled device (CCD), and the images are joined together to form a composite image of the entire scanned surface. Common methods to accomplish this include:
(1) Tile based scanning, in which the slide stage or the optics are moved in very small increments to capture square image frames, which overlap adjacent squares to a slight degree. The captured squares are then automatically matched to one another to build the composite image; and
(2) Line-based scanning, in which the slide stage moves in a single axis during acquisition to capture a number of composite image "strips." The image strips can then be matched with one another to form the larger composite image.

A detailed overview of various scanners (both fluorescent and brightfield) can be found at Farahani et al., Whole slide imaging in pathology: advantages, limitations, and emerging perspectives, Pathology and Laboratory Medicine Int'l, Vol. 7, p. 23-33 (June 2015), the content of which is incorporated by reference in its entirety. Examples of commercially available slide scanners include: 3DHistech PANNORAMIC SCAN II; DigiPath PATHSCOPE; Hamamatsu NANOZOOMER RS, HT, and XR; Huron TISSUESCOPE 4000, 4000XT, and HS; Leica SCANSCOPE AT, AT2, CS, FL, and SCN400; Mikroscan D2; Olympus VS120-SL; Omnyx VL4, and VL120; PerkinElmer LAMINA; Philips ULTRA-FAST SCANNER; Sakura Finetek VISIONTEK; Unic PRECICE 500, and PRECICE 600x; VENTANA ISCAN COREO and ISCAN HT; and Zeiss AXIO SCAN.Z1. Other exemplary systems and features can be found in, for example, WO2011-049608) or in U.S. Patent Application No. 61/533,114, filed on Sep. 9, 2011, entitled IMAGING SYSTEMS, CASSETTES, AND METHODS OF USING THE SAME the content of which is incorporated by reference in its entirety.

In some embodiments, any imaging may be accomplished using any of the systems disclosed in U.S. Patent Nos. 10,317,666 and 10,313,606, the disclosures of which are hereby incorporated by reference herein in their entireties. In some embodiments, the imaging apparatus may be a brightfield imager such as the iScan Coreo^{™} brightfield scanner or the DP200 scanner sold by Ventana Medical Systems, Inc.

### Image Analysis System / Module

In some embodiments, acquired images may be analyzed on an image analysis system or module. Image analysis system may include one or more computing devices such as desktop computers, laptop computers, tablets, smartphones, servers, application-specific computing devices, or any other type(s) of electronic device(s) capable of performing the techniques and operations described herein. In some embodiments, image analysis system may be implemented as a single device. In other embodiments, image analysis system may be implemented as a combination of two or more devices together achieving the various functionalities discussed herein. For example, image analysis system may include one or more server computers and a one or more client computers communicatively coupled to each other via one or more local-area networks and/or wide-area networks such as the Internet.

In some embodiments, the image analysis system typically includes at least a memory, a processor, and a display. Memory may include any combination of any type of volatile or non-volatile memories, such as random-access memories (RAMs), read-only memories such as an Electrically-Erasable Programmable Read-Only Memory (EEPROM), flash memories, hard drives, solid state drives, optical discs, and the like. It is appreciated that memory can be included in a single device and can also be distributed across two or more devices. Processor may include one or more processors of any type, such as central processing units (CPUs), graphics processing units (GPUs), special-purpose signal or image processors, field-programmable gate arrays (FPGAs), tensor processing units (TPUs), and so forth. It is appreciated that processor can be included in a single device and can also be distributed across two or more devices. Display may be implemented using any suitable technology, such as LCD, LED, OLED, TFT, Plasma, etc. In some implementations, display may be a touch-sensitive display (a touchscreen). Image analysis system also typically includes a software system stored on the memory comprising a set of instructions implementable on the processor, the instructions comprising various image analysis tasks, such as object identification, stain intensity quantification, and the like. Exemplary commercially available software packages useful in implementing modules as disclosed herein include VENTANA VIRTUOSO; Definiens TISSUE STUDIO, DEVELOPER XD, and IMAGE MINER; and Visopharm BIOTOPIX, ONCOTOPIX, and STEREOTOPIX software packages.

### Control System

The system 200 of FIG. 17A is further shown in communication with a control system 201. In some embodiments, the control system controls configured to control all of the components within the system, including the one or more dispense devices 130 and 131, the one or more liquid removal devices 134, the one or more mixing devices 135, the one or more substrate loading stations, the one or more gripper devices, the one or more forklift devices, and/or the one or more carrier transport devices In some embodiments, the control system 201 is configured to receive instructions and independently control one or more motors, force generating members, dispense devices 130 and 131, vacuum modules, waste modules, liquid removal modules 134, mixing module 135s, heating elements, cooling elements, etc. In some embodiments, each of the one or more motors, force generating members, dispense devices, vacuum modules, waste modules, liquid removal modules, mixing modules, heating elements, cooling elements may have its own controller (e.g. a controller including a processor and/or a memory) and, in this regard, the control system 201 may be communicatively coupled to each of the controllers of the one or more system components. The control system 201, in some embodiments, includes one or more memories and a programmable processor. To store information, the control system 201 can include, without limitation, one or more storage elements, such as volatile memory, non-volatile memory, read-only memory (ROM), random access memory (RAM), or the like.

The stored information can include heating programs, optimization programs, tissue preparation programs, calibration programs, indexing programs, mixing programs, or other executable programs. In some embodiments, the memory stores a first sequence of program instructions and a second sequence of program instructions. In some embodiments, the programmable processor is configured to execute the first sequence of program instructions in order to treat a specimen on the substrate with a first fluid, such as an unmasking fluid. In some embodiments, the programmable processor is configured to execute the first sequence of program instructions in order to independently move a lower plate and an upper plate such that a sealing engagement is formed between the two plates and whereby an unmasking operation may be commenced according to predetermined parameters (e.g. predetermined temperatures, predetermined pressures, predetermined temperature ramp-up and ramp-down rates, predetermined heating durations, etc.). In some embodiments, the system may include one or more position sensors to determine the position of any of the components of the system.

In some embodiments, the control system 201 is a stand-alone computer, which is external to the system. In some embodiments, the control system 201 is a networked computer which enables control of the system remotely. The term "programmed processor" encompasses all kinds of apparatus, devices, and machines for processing data, including by way of example a programmable microprocessor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus also can include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

By way of example, the control system 201, in some embodiments, is configured to execute a series of instructions to control or operate one or more system components to perform one or more operations, e.g. preprogrammed operations or routines, or to receive feedback from one or more sensor communicatively coupled to the system and command the one or more system components to operate (or cease to operate) depending on the sensor feedback received. For example, the control system may command one or more dispense devices to dispense one or more fluids and/or reagents to a substrate from one or more independently controllable dispense devices. Likewise, the control system 201 is configured to execute a series of instructions to independently command one or more heating and/or cooling elements to heat and/or cool one or more portions of a formed chamber, a lower plate, and/or an upper plate such that predetermined temperatures or temperature gradients may be established and/or maintained.

In some embodiments, the one or more preprogrammed operations or routines can be performed by one or more programmable processors executing one or more computer programs to perform action, including by operating on received sensor feedback data and commanding system components based on that received feedback). In some embodiments, one or more preprogrammed operations or routines can also be performed by, and apparatus can also be implemented as, special purpose logic circuitry, e.g., an FPGA (field programmable gate array) or an ASIC (application-specific integrated circuit). Processors suitable for the execution of a computer program include, by way of example, both general and special purpose microprocessors, and any one or more processors of any kind of digital computer.

By way of a further example, in some embodiments the control system is configured to execute a first sequence of program instructions to command the dispensing device to deliver a first liquid to the substrate at a first rate. In some embodiments, the control system is further configured to execute a second sequence of program instructions to command the dispensing device to deliver a second liquid to the substrate at a second rate that is different from the first rate.

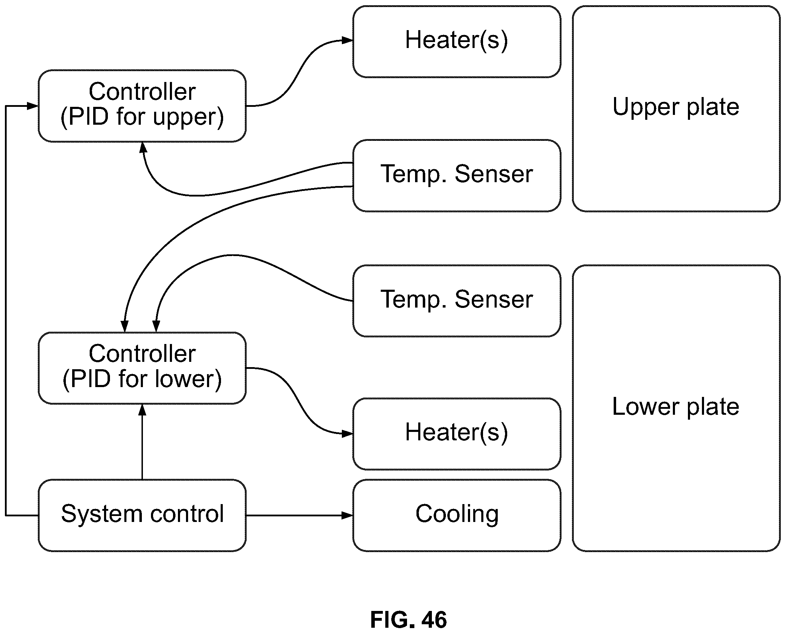

In some embodiments, the control system 201 is configured to execute a third sequence of program instructions to command one or more independently operable heating and/or cooling elements in thermal communication with the upper plate, lower plate, any formed chamber, the substrate, and or the specimen disposed on the substrate (see FIG. 46). By way of example only, the control system 201 may command heating cartridges inserted into bores in the body of the lower plate to heat first and second portions of the body of the lower plate to within a first temperature range, while the control system contemporaneously controls one or more fluid channels and/or thermoelectric modules in the upper and/or lower plates to maintain third, fourth, fifth, etc. portions of the bodies of both the upper and lower plates within a second temperature range, where the first temperature range is lower than the second temperature. In some embodiments, the independently operable heating and/or cooling elements are commanded by the control system 201 to operate such that at least one of a portion of a substrate or the specimen disposed on the substrate is maintained at a temperature lower than any other component within the chamber formed by the upper and lower plates. In some embodiments, at least a portion of the substrate, and/or the specimen disposed on the substrate is maintained at a temperature lower than any other component within the chamber during the course of the entire unmasking operation, for example during temperature ramp-up, during temperature ramp-down, and during steady-state temperature application (see, e.g., FIGS. 43A - 43F herein).

### Barcode Reader

In some embodiments, the system includes a barcode reader (or other like device) to read information from a barcode on the substrate. In some embodiments, the control system 201 may include instructions to read a label or barcode of a substrate and communicate with a memory to retrieve information from a database based on information included within the label. The memory can store different instructions for different processes, including contacting the specimen with a wash, applying one or more reagents (e.g. a stain) to the specimen, heating and cooling the substrate to one or more target temperatures for different processes, etc. The control system 201 may receive the information and execute a plurality of instructions stored in the memory that enable various components of the automated specimen processing system to perform operations that are optimized for the substrate based on the label.

### Additional Modules

The systems 200 contemplated by the present disclosure may also include additional components, such as transport mechanisms (e.g. gripper devices, forklift devices, carrier transport devices) and/or elevators, such as described in U.S. Patent Publication No. 2017/0131303, the disclosure of which is hereby incorporated by reference herein in its entirety. Any means for transporting slide trays between workstations can be employed in the disclosed system. The transport means can include any combination of substrate loading stations, shuttle tables, conveyor belts, elevators and the like equipped with one or more means to push slide trays off of or to pull slide trays onto the transport means, and the like, all under control of the control system. In some embodiments, the control system may include one or more processors and one or more memories which are communicatively to controllers (each having their own processor and memory) within each of the components of the system. For example, the control system may send instructions to a controller of a dispense device, where the controller of the dispense device includes a process and/or a memory. In a working embodiment, a transporter includes an X-Y shuttle table for moving slide trays horizontally and an elevator for moving the shuttle table up and down vertically within the system. In a working embodiment, an X-Y-Z transporter is used to move slide trays between modular workstations arranged in a vertical stack.

### Examples of systems and/or specimen processing assemblies

FIG. 17B illustrates a system 200 including two or more specimen processing assemblies 100 (such as any of the substrate processing assemblies described and/or illustrated herein), where each specimen processing assembly 100 is independently operable. A system 200 may, for example, include two or more of the specimen processing assemblies illustrated in any of FIGS. 14A to 14I. Alternatively, the system 200 may include two or more of the specimen processing assemblies illustrated in any of FIGS. 15A to 15E. In other embodiments, the system 200 may include two or more of the specimen processing assemblies illustrated in any of FIGS. 16A to 16C. In yet other embodiments, the system 200 may include two or more of the specimen processing assemblies illustrated in any of FIGS. 18A to 18C. In some embodiments, multiple assemblies 100, each including an upper plate and a lower plate coupled to a sub-assembly 101, may be arranged parallel to each other (FIG. 15A). Alternatively, multiple assemblies 100 may be arranged radially from a center position (not depicted).

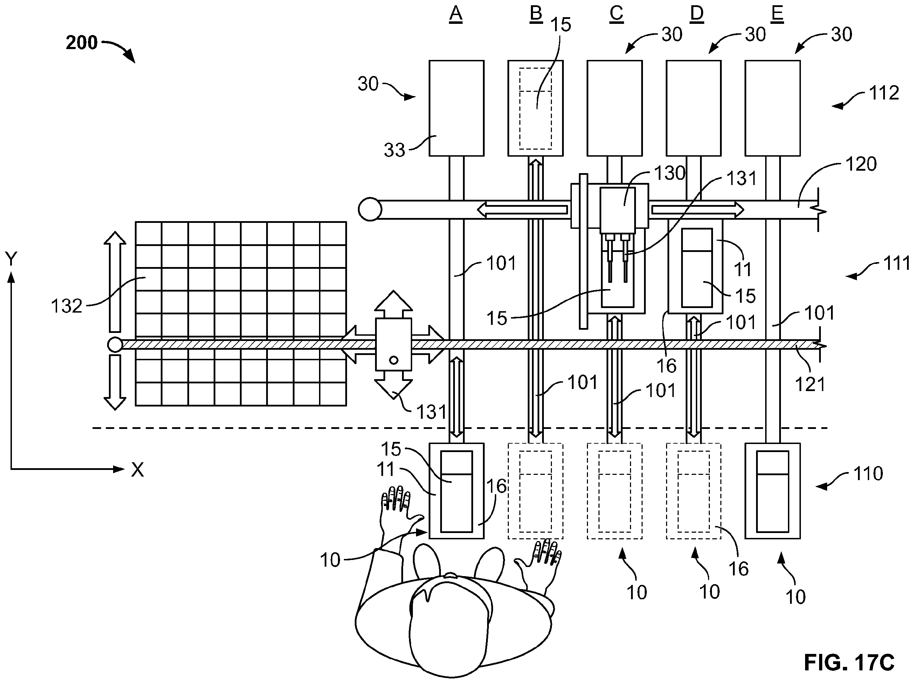

With reference to FIGS. 17B and 17C, in some embodiments, the system 200 includes a plurality of sub-assemblies 101 (e.g. rails). In some embodiments, one or more dispense devices 130 and 131, mixing devices 135, gripper devices, forklift devices, carrier transport devices, and/or liquid removal devices 134 may each be coupled independently to a separate sub-assembly. For example, and as noted herein, a dispense device 130 may be movably coupled to a dispense rail 120. In some embodiments, the dispense rail 120 runs perpendicular to the sub-assembly 101 of any specimen processing assemblies 100. In some embodiments, the dispense device 130 is adapted to dispense any type of fluid and/or reagent as described herein. In some embodiments, the dispense device 130 is a fluid dispenser, e.g. a bulk fluid dispenser adapted to dispense wash fluids, unmasking fluids, buffers, etc. In some embodiments, reagents, e.g. antibody probes or nucleic acid probes, are dispensed from a separate dispense device 131 (e.g. a pipette) coupled to a rail 121. In these embodiments, the dispense devices 130 and 131 may operate independently from one another, and from any other device, such as a liquid removal device or mixing device, etc. In some embodiments, no additional fluids and/or reagents are dispensed to the substrate while the substrate is positioned within the chamber.

FIG. 17C depicts a non-limiting example of a system 200, including multiple specimen processing assemblies 100, with each specimen processing assembly 100 being independently operable. Indeed, FIG. 17C illustrates that each specimen processing assembly 100 is serviceable by a user, and that substrates may be processed in any order. For example, specimen processing assembly "A" and specimen processing assembly "E" are both shown as having a lower plate 10 available at a loading area 110, where substrates are shown as supported on a substrate stage. In some embodiments, a user installs substrates within one or more substrate loading stations, and a transport device (e.g. gripper device, forklift device, or carrier transport device) picks up and moves the substrate to another area of the specimen processing assembly. Specimen processing assembly "A" may represent a substrate 15 that was just positioned by a user and before being transported to any other area (e.g. to a preparation area 111 or to an unmasking area 112); while specimen processing assembly "E" may represent a substrate that has finished processing (finished all dispense steps and/or an unmasking operation) and whereby the user will recover the substrate 15 at the loading area 110.

Specimen processing assembly "B" is shown has having a substrate 15 positioned within a chamber formed through the coupling of a lower plate 10 and an upper plate 30. In some embodiments, the sample disposed on substrate 15 is undergoing an unmasking operation independent of the operation of the other assemblies in the system 200. For example, the substrate positioned within the camber of specimen processing assembly "B" may have been treated with one or more fluids and/or reagents (e.g. an antigen retrieval fluid) in the preparation area. Once within the chamber, the substrate and any fluid, reagent, and/or specimen may be heated. In some embodiments, the heating of the fluids and/or reagents facilitates an increase in the pressure within the chamber. In some embodiments, the temperature of the fluid and/or reagent dispensed to the substrate can be maintained by regulating the temperature of the heating element or by regulating the pressure by a pressure regulator or by both in combination. In some embodiments, the temperature within the chamber is regulated such that evaporative losses are minimized or prevented. In some embodiments, no additional fluids and/or reagents are dispensed to the substrate while the substrate is positioned within the chamber.

Specimen processing assembly "C" shows a substrate at a preparation area 111 receiving a dispense operation from a dispenser 130 having one or more dispense nozzles 131 (e.g. from a dispense device 130 coupled to a dispense assembly 120). For example, if a specimen disposed on the substrate has not yet had an unmasking operation performed, one or more unmasking agents may be dispensed to the specimen bearing substrate. The substrate may then be moved to meet an upper plate to form a chamber where an unmasking operation may be performed. If, on the other hand, an unmasking operation has already been performed, the specimen bearing substrate may be further treated at the preparation area 111, such as through the application or one or more wash fluids, and/or treatment with one or more reagents (e.g. specific binding entities).

Specimen processing assembly "D" shows a substrate at a preparation area 111 and waiting for a dispense operation to commence. In some embodiments, dispenser 130 will move along secondary rail 120 to a position over the substrate 15 of specimen processing assembly "D" after dispensing operations are completed for specimen processing assembly "C." While FIG. 17B depicts the inclusion of only a single dispense device 130, in some embodiments, multiple dispense devices 130 may be coupled to a single dispense rail 120. Likewise, the system may include multiple dispense rails 120 where each dispense rail may have a dispense device, a liquid removal device, and/or a mixing device.

An alternative system 200 is illustrated FIGS. 20A and 20B. In some embodiments, the system 200 depicted in FIGS. 20A and 20B is communicatively coupled to a control system. In some embodiments, the system 200 includes a plurality of substrate holders 310 each housed within or coupled to a carousel 300. In some embodiments, the carousel 300 may include from between 5 to about 30 substrate holders 310. In other embodiments, the carousel 300 may include from between 5 to about 20 substrate holders 310.

In some embodiments, the system 200 further includes a plurality of lower and upper plates 10 and 30, respectively. Each of the lower and upper plates 10 and 30, respectively, may have the same configuration as described herein. For example, each lower plate 10 may include a raised substrate stage and a lower engagement surface 11. Each upper plate 30 of the system 200 has a configuration which is complementary to the lower plate 10 configuration, as described herein. For example, each upper plate 30 may have a recessed cavity adapted to receive at least the raised substrate stage and any substrate disposed thereon. The upper plate 30 may also include an upper engagement surface. In this regard, a chamber may be formed between the upper and lower plates when the upper engagement surface and the lower engagement surfaces are in sealing engagement with one another. Additionally, each of the upper and lower plates may include one or more of heating elements and/or cooling elements. Each of the one or more heating and/or cooling elements in the upper and lower plates may be independently operated. In some embodiments, the one or more heating and/or cooling elements in the upper and lower plates may be independently operated such that the substrate and/or any specimen disposed on the substrate is maintained at a temperature lower than any other component present within the chamber formed by the upper and lower plates. In some embodiments, the one or more heating and/or cooling elements in the upper and lower plates may be independently operated such that a temperature gradient is established between a substrate stage and/or substrate and/or specimen and at least one other portion of the lower plate and/or the upper plate.

Each upper plate 30 may be coupled to a subassembly 115B, whereby the subassembly may be coupled to a motor, a piston, a spring, a cam mechanism, etc. In other embodiments, each upper plate is coupled directly to a motor, a piston, a spring, a screw mechanism, a cam mechanism, or any combination thereof.

The system 200 may further include one or more substrate trays 301 which are adapted to hold one or more substrates. A user of system 200 may deliver substrates to the one or more substrate trays 301. In some embodiments, the substrate trays 301 are within a loading area. A substrate tray may include positions for holding one or more substrates. In some embodiments a substrate tray may include positions for holding two or more substrates, e.g. three or more substrates, or four or more substrates. In some embodiments, the substrate trays may be adapted such that substrates may be moved between entire systems or between different modules, e.g. between a coverslipping module and a staining module, etc. Suitable substrate or slide trays are described in U.S. Patent Publication No. 2017/0131303, the disclosure of which is hereby incorporated by reference herein in its entirety.

In some embodiments, the system may further include one or more substrate loaders 302. Each of the one or more substrate loaders 302 may be coupled to a track which circumscribes the carousel 300. In this way, each substrate loader 302 may independently move around the periphery of carousel 300. In some embodiments, each substrate loader 302 remains in a specific position, but may rotate clockwise or counterclockwise. In these embodiments, each substrate loader 302 will remove a substrate from one of the substrate holders 310 as the carousel 300 rotated past the substrate loader 302.

In some embodiments, each of the one or more substrate loaders 302 are adapted to remove a substrate from one position of the substrate trays 301 and place it onto the surface of a substrate holder 310 in carousel 300. Likewise, the one or more substrate loaders 302 are further adapted to remove a substrate from one of the substrate holders 310 of carousel 300 and move it to a free position within one of the substrate holding trays 301. Additionally, each substrate loader 302 is adapted to move a substrate from a substrate holder 310 of the carousel 300 to a lower plate 10. In this way, the substrate loaders 302 facilitate the movement of substrates for further processing (e.g. treatment with a fluid and/or a reagent and/or an unmasking operation).

In some embodiments, the system further includes one or more dispense devices 130. In some embodiments, the one or more dispense devices 130 are configured such that they may deliver fluids and/or reagents to an upper surface of a substrate disposed on one of the substrate holders 310 in carousel 300. In operation, the carousel 300 may be coupled to a such that the carousel rotates, such as rotating in one or both of the clockwise and/or counterclockwise directions. For example, the carousel 300 may rotate such that one of the substrate holders 310 is positioned under a dispenser of the dispense device 130. In some embodiments, the carousels 300 are within a preparation area. In some embodiments, no additional fluids and/or reagents are dispensed to the substrate while the substrate is positioned within the chamber formed from the upper and lower plates.

With regard to the particular system illustrated in FIGS. 20A and 20B, once the substrate is loaded onto the lower plate 10, the upper plate may be moved towards the lower plate such that the upper and lower engagement surfaces of the upper and lower plates, respectively, contact one another and form a sealing engagement. For example, the upper plate 30 may be lowered onto the lower plate 10 with a motor. Alternatively, the upper plate 30 may be driven downward onto the lower plate 10 with a piston or a cam mechanism. In some embodiments, the lower plates and upper plates define an unmasking area.

### METHODS OF UNMASKING

The specimen processing assemblies and systems of the present disclosure are configured to facilitate the processing of specimens disposed on the surface of a substrate. In some embodiments, the processing of specimens includes retrieving antigens or targets and/or improving the detection of antigens, amino acids, peptides, proteins, nucleic acids, and/or other targets in a specimen, such as a specimen disposed on a slide.

FIG. 43A provides an overview of the steps of unmasking a specimen. As an initial step, a substrate having a specimen disposed thereon is obtained (step 550). In some embodiments, the specimen is a histology sample. In other embodiments, the specimen is a cytology sample. In some embodiments, the specimen is derived from a biopsy, e.g. a biopsy of a tumor or a tissue sample suspected of being cancerous. The specimen-bearing substrate is then, in some embodiments, loaded on a substrate holder or into a substrate loading station (step 551). Next, in some embodiments, the substrate is transported to a preparation area (step 552) where one or more fluids and/or reagents are dispensed to at least the specimen (step 553). In some embodiments, the specimen-bearing substrate may then be transported to an unmasking area (step 554) wherein an unmasking operation may be performed (step 555; see also FIGS. 43B - 43G). Once the unmasking operation is complete, the specimen-bearing substrate is, in some embodiments, removed from the chamber (step 556) and the unmasked specimen may be used in further downstream operations, e.g. staining (step 557).

FIG. 43B outlines the steps of unmasking antigens, targets, etc. within a specimen, such as a specimen disposed on a substrate. First, predetermined amounts one or more fluids and/or reagents are dispensed to a specimen and/or onto the substrate on which the specimen is disposed (step 510). In some embodiments, the predetermined amounts of the one or more fluids and/or reagents dispensed range from between about 100µL to about 2000µL. In some embodiments, the predetermined amounts of the one or more fluids and/or reagents dispensed range from between about 100µL to about 1500µL. In some embodiments, the predetermined amounts of the one or more fluids and/or reagents dispensed range from between about 100µL to about 1250µL. In some embodiments, the predetermined amounts range from between about 100µL to about 1000µL. In some embodiments, the predetermined amounts range from between about 200µL to about 750µL. In some embodiments, the predetermined amounts range from between about 250µL to about 650µL. In some embodiments, the predetermined amounts range from between about 250µL to about 600µL. In some embodiments, the predetermined amounts range from between about 350µL to about 550µL. In some embodiments, the predetermined amounts range from between about 300µL to about 550µL. In some embodiments, the predetermined amounts range from between about 450µL to about 550µL. In some embodiments, the predetermined amount is about 500µL. As noted herein, unmasking of the antigens, targets, etc. present within the specimen may be initiated merely by applying one or more unmasking agents, for example unmasking may commence after the dispensing of the fluids and/or reagents and before commencing an unmasking operation.

In some embodiments, the dispensing of the predetermined amounts of the one or more fluids and/or reagents takes place prior to the formation of the chamber (step 511), for example prior to the upper and lower plates being brought into a sealing engagement with each other. In these embodiments, the one or more fluids and/or reagents may be dispensed using any of the dispensing devices disclosed herein.

At step 511, a chamber is formed, whereby the formed chamber includes a substrate, such as a substrate supported horizontally on a substrate stage. In some embodiments, the dispensing of the one or more fluids and/or reagents takes place after the formation of the chamber but prior to commencing an unmasking operation (e.g. a chamber may be formed and then one or more fluids and/or reagents injected into the formed chamber through one or more nozzles, ports, injectors, etc. in communication with the interior of the formed chamber).

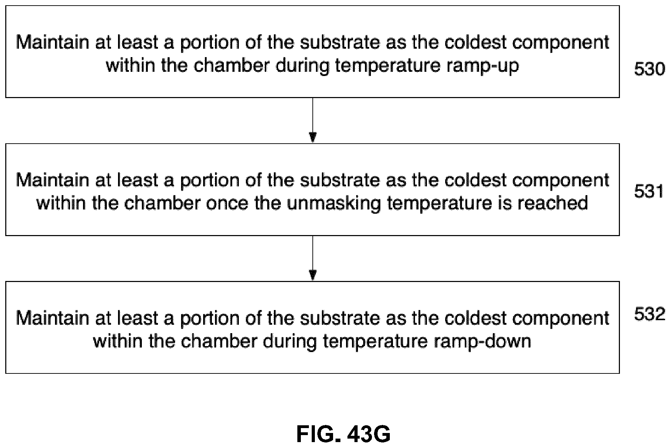

Once all fluids and/or reagents have been dispensed to the specimen or the substrate, an unmasking operation is conducted on the specimen disposed on the substrate (step 512). As noted herein, in some embodiments, the unmasking operation includes heating the specimen and/or the substrate to a predetermined temperature (described further below). In some embodiments, heating may be accomplished using any combination of heating and/or cooling elements described herein, including those heating and/or cooling elements embedded within the upper and lower plates or those heating and/or cooling elements embedded within one or more thermal management modules. In some embodiments, heating is accomplish using steam. In some embodiments, at least a portion of the substrate and/or the specimen disposed on the substrate is maintained at a temperature which is less than the temperature of any other component within the chamber throughout the course of the unmasking operation, such that condensation (such as condensation formed through the evaporation of fluids and/or reagents during any heating step of the unmasking operation) is driven to the substrate or the specimen disposed on the substrate (see also FIG. 43G).

In some embodiments, the specimen disposed on the substrate or the substrate is heated during the unmasking operation to a predetermined temperature ranging from between about 70°C to about 220°C. In other embodiments, the specimen disposed on the substrate or the substrate is heated to a predetermined temperature ranging from between about 90°C to about 200°C. In yet other embodiments, the specimen disposed on the substrate or the substrate is heated to a predetermined temperature ranging from between about 95°C to about 180°C. In further embodiments, the specimen disposed on the substrate or the substrate is heated to a predetermined temperature ranging from between about 100°C to about 170°C. In even further embodiments, the specimen disposed on the substrate or the substrate is heated to a predetermined temperature ranging from between about 110°C to about 160°C. In yet further embodiments, the specimen disposed on the substrate or the substrate is heated to a predetermined temperature ranging from between about 120°C to about 160°C. In yet further embodiments, the specimen disposed on the substrate or the substrate is heated to a predetermined temperature ranging from between about 120°C to about 150°C. In yet further embodiments, the specimen disposed on the substrate or the substrate is heated to a predetermined temperature ranging from between about 120°C to about 145°C. In yet further embodiments, the specimen disposed on the substrate or the substrate is heated to a predetermined temperature ranging from between about 120°C to about 140°C. In yet further embodiments, the specimen disposed on the substrate or the substrate is heated to a predetermined temperature ranging from between about 130°C to about 160°C. In yet further embodiments, the specimen disposed on the substrate or the substrate is heated to a predetermined temperature ranging from between about 135°C to about 155°C. In yet further embodiments, the specimen disposed on the substrate or the substrate is heated to a predetermined temperature ranging from between about 140°C to about 155°C. In yet further embodiments, the specimen disposed on the substrate or the substrate is heated to a predetermined temperature ranging from between about 140°C to about 150°C.

In some embodiments, the chamber is pressurized and/or pre-pressurized to a predetermined pressure (described further below) during the unmasking operation. In some embodiments, gas and/or steam may optionally be introduced into the chamber through one or more ports in communication with the chamber to increase or maintain the predetermined temperature and/or predetermined pressure within the chamber. In some embodiments and given that the unmasking operation is conducted within a sealed chamber, the chamber may be pressurized by heating the one more fluids and/or reagents dispensed onto the specimen and/or the substrate. In some embodiments, the chamber is pressurized and/or pre-pressurized such that boiling of the one or more fluids and/or reagents dispensed to the specimen and/or the substrate is suppressed.

In some embodiments, the chamber is pressurized (or pre-pressurized) during the unmasking operation to a predetermined pressure ranging from between about 95 kPa to about 2000 kPa. In other embodiments, the predetermined pressure ranges from between about 100 kPa to about 1600 kPa. In yet other embodiments, the predetermined pressure ranges from between about 150 kPa to about 1050 kPa. In further embodiments, the predetermined pressure ranges between about 190 kPa to about 850 kPa. In even further embodiments, the predetermined pressure ranges from between about 200 kPa to about 750 kPa. In yet further embodiments, the predetermined pressure ranges from between about 250 kPa to about 700 kPa. In yet further embodiments, the predetermined pressure ranges from between about 300 kPa to about 600 kPa. In yet further embodiments, the predetermined pressure ranges from between about 150 kPa to about 300 kPa. In some embodiments, the pressure within the chamber increases as the temperature increases, for example the pressure increases during any temperature ramp-up phase. In some embodiments, gas and/or steam may optionally be introduced into the chamber through one or more ports in communication with the chamber to increase or maintain the predetermined temperature and/or predetermined pressure within the chamber.

In some embodiments, the unmasking operation may be commenced for a predetermined amount of time. In some embodiments, the amount of time needed for unmasking may vary depending on the type of specimen, the fixation status of the specimen, the temperature and/or pressure applied to the specimen, the type of unmasking agents utilized (e.g. the application of buffers vs. water), the type of downstream biomarker staining operations in which the unmasked specimen will be utilized, etc.

In some embodiments, the predetermined amount of time for performing an unmasking operation ranges from between about 30 seconds to about 30 minutes. In some embodiments, the predetermined amount of time for performing an unmasking operation ranges from between about 1 minute to about 30 minutes. In some embodiments, the predetermined amount of time for performing an unmasking operation ranges from between about 1 minute to about 20 minutes. In some embodiments, the predetermined amount of time for performing an unmasking operation ranges from between about 2 minutes to about 20 minutes. In some embodiments, the predetermined amount of time for performing an unmasking operation ranges from between about 3 minutes to about 15 minutes. In some embodiments, the predetermined amount of time for performing an unmasking operation ranges from between about 3 minutes to about 10 minutes. In some embodiments, the predetermined amount of time for performing an unmasking operation ranges from between about 3 minutes to about 8 minutes. In some embodiments, the predetermined amount of time for performing an unmasking operation ranges from between about 3 minutes to about 5 minutes.

By way of example, in some embodiments, one or more heating elements (and/or one or more cooling elements) in thermal communication with substrate and/or the specimen disposed on the substrate may be activated such that the substrate, the specimen, and/or one or more fluids and/or reagents disposed thereon may be heated to a predetermined temperature for a predetermined amount of time. Likewise, steam may also be introduced into the chamber simultaneously with the activation of the one or more heating elements. In this regard, the heating of the one or more fluids and/or reagents within the chamber may cause the fluids and/or reagents disposed on the surface of the substrate to evaporate, thereby increasing the pressure within the chamber. For example, or more heating elements present within the lower plate and/or upper plate may be activated to heat one or more fluids and/or reagents disposed on the surface of the substrate and/or the specimen thereby increasing the pressure within the chamber and the pressure exerted onto any specimen disposed on the substrate. And, as described further herein, by selectively operating the various heating and/or cooling elements in thermal communication with the chamber, it is possible to establish and maintain thermal gradients across different portions of the formed chamber.

In some embodiments, the temperature and/or pressure within the chamber may be monitored with one or more temperature and/or pressure sensors in communication with the internal environment of the chamber, or in contact with the substrate or the specimen disposed on the substrate. For example, in some embodiments, at least one of the upper and lower plates further includes a sensor, such as a temperature sensor. By way of another example, in some embodiments, the upper plate includes a temperature sensor which contacts the substrate and/or the sample disposed on the substrate. By way of yet another example, in some embodiments, the lower plate includes a temperature sensor which contacts the substrate. In some embodiments, the one or more temperature sensors are platinum resistance thermometers or thermistors. Any of the temperature and pressure sensors described herein may be used for monitoring the temperature and/or pressure within the chamber during an unmasking operation.

In some embodiments, one or more cooling elements and/or one or more pressure relief valves may be activated to ensure that the temperature and/or pressure within the chamber are maintained within predetermined temperature and/or pressure ranges. For example, in some embodiments, a pressure relief port and/or valve is included in either or both of the lower and upper plates such that such that a predetermined threshold pressure with the chamber is not exceeded. In some embodiments, the pressure within the chamber is monitored using one or more pressure sensors and if the pressure exceeds a predetermined pressure threshold, a control system may command one or more pressure relief valves to open until the pressure within the chamber falls within acceptable limits.

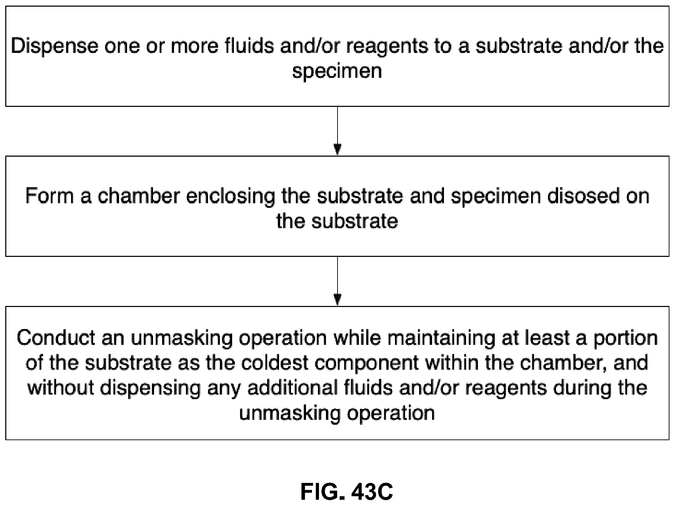

In some embodiments, no additional fluids and/or reagents are dispensed to the substrate and/or the specimen disposed on the substrate during the course of the unmasking operation (FIG. 43C). If evaporative losses of the one or more fluids and/or reagents dispensed to the substrate and/or the specimen are kept to a minimum, then no additional fluids and/or reagents are needed to be dispensed to the substrate and/or the specimen disposed on the substrate following the unmasking operation.

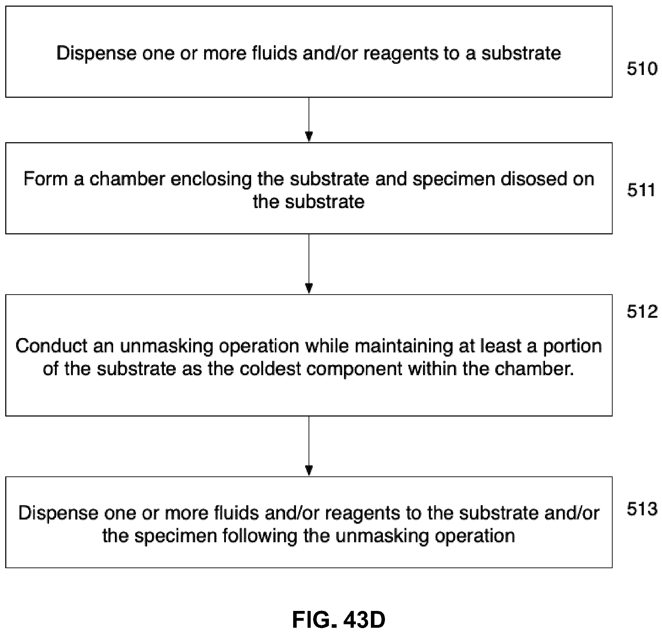

In other embodiments, and with reference to FIG. 43D one or more additional fluids and/or reagents are dispensed to the substrate or the specimen disposed on the substrate (step 513) following the unmasking operation (step 512). In these other embodiments, the one or more additional fluids and/or reagents may be dispensed to the substrate and/or the specimen disposed on the substrate through either (i) one or more nozzles, ports, and/or injectors in communication with the chamber; and/or (ii) one or more dispense devices. In this regard, the one or more additional fluids and/or reagents may be dispensed before or after the chamber is opened.

In some embodiments, the additional fluids and/or reagents introduced into the sealed chamber are cold fluids, e.g. fluids having a temperature of less than 120°C, fluids having a temperature of less than 110°C, fluids having a temperature of less than 100°C, fluids having a temperature of less than 90°C, fluids having a temperature of less than 80°C, fluids having a temperature of less than 70°C, fluids having a temperature of less than 60°C, fluids having a temperature of less than 50°C, fluids having a temperature of less than 40°C, fluids having a temperature of less than 30°C, fluids having a temperature of less than 20°C, fluids having a temperature of less than 10°C, fluids having a temperature of less than 5°C. In some embodiments, the additional fluids and/or reagents introduced into the sealed chamber are at about room temperature.

In embodiments where additional fluids and/or reagents are dispensed (step 513) following the unmasking operation (step 512), between about 100µL to about 2000µL of fluid may be dispensed to the substrate and/or specimen disposed on the substrate. In some embodiments, the amount ranges from between about 100µL to about 1000µL of fluid may be dispensed to the substrate and/or specimen disposed on the substrate. In some embodiments, the amount ranges from between about 250µL to about 750µL of fluid may be dispensed to the substrate and/or specimen disposed on the substrate. In some embodiments, the amount is about 500µL.

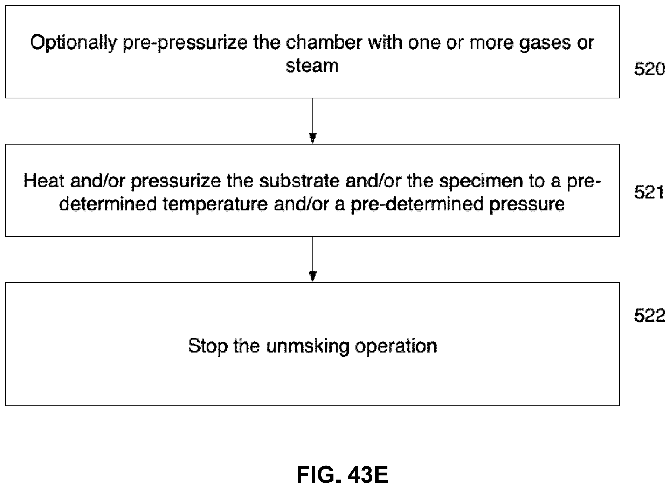

In some embodiments, the amount of the one or more additional fluids and/or reagents added depends on the total volume of the chamber, the volume of the specimen, and the total volume of the fluids and/or reagents already present within the chamber. For example, the amount of fluid introduced may range from between about 250µL to about 3,000µL. In some embodiments, the amount of fluid introduced may range from between about 300µL to about 3000µL; such as from between about 500µL to about 3000µL; such as from between about 500µL to about 2000µL; such as from between about 1000µL to about 2000µL; or such as from between about 500µL to about 1000µL. In some embodiments, the amount of additional fluids and/or reagents added is enough to substantially fill the chamber with the additional fluids and/or reagents. For example, if a chamber has a total volume of 2mL, then enough additional fluids and/or reagents are added to substantially the 2mL chamber volume. In some embodiments, ports (e.g. vacuum ports) present within the lower plate of the formed chamber may be used to remove at least some of the additional fluids and/or reagents introduced to the chamber (e.g. some of the additional fluids and/or reagents may be removed prior to opening the chamber).FIGS. 43E through 43H illustrate further aspects of the unmasking operation.

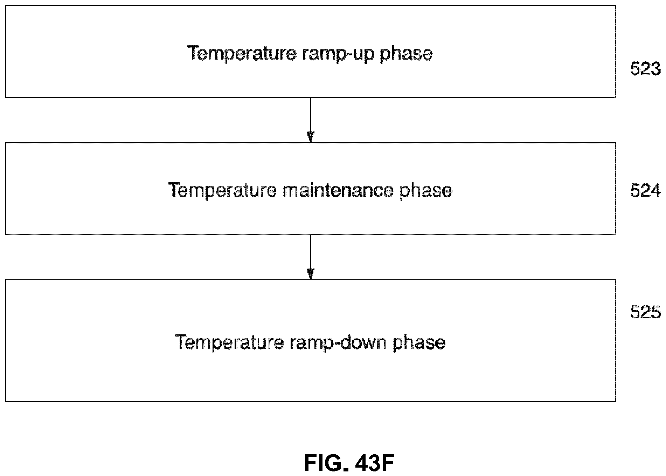

For example, and with respect to FIG. 43E, the chamber, once formed, may be optionally pre-pressurized (step 520), such as with one or more gases and/or steam. In some embodiments, pre-pressurization allows for the seal of a chamber to be tested prior to heating. In other embodiments, pre-pressurization facilitates the unmasking operation when chambers having large volumes are utilized. In some embodiments, one or more gases and/or steam may be introduced into the chamber through one or more ports in communication with the chamber to effectuate pre-pressurization of the chamber. Further heating and/or pressurization may then be commenced (step 521) and concluded (step 522) after a predetermined unmasking temperature and/or pressure has been reached for a predetermined amount of time (see step 524 of FIG. 43F).

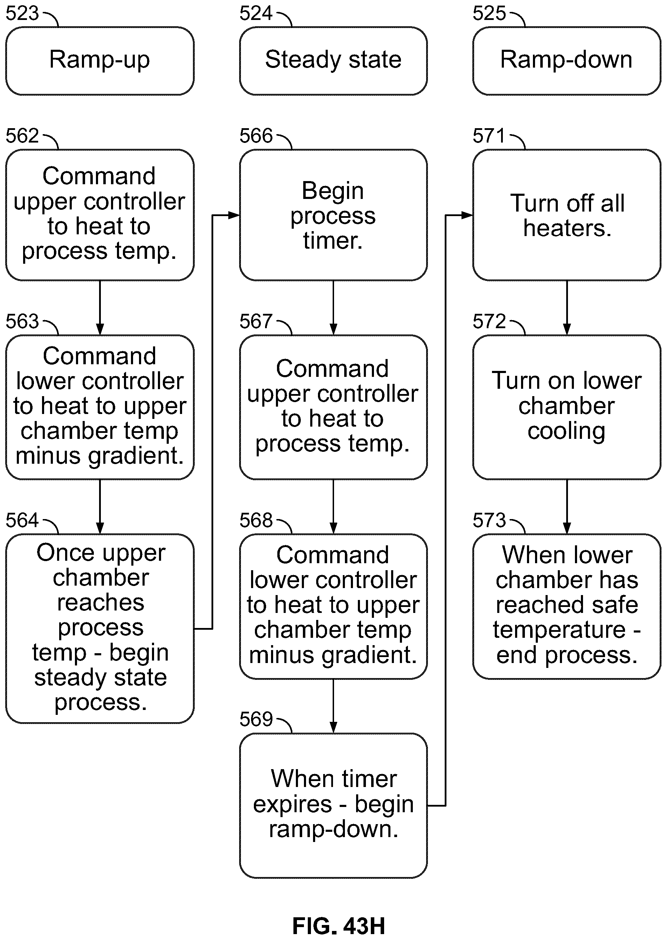

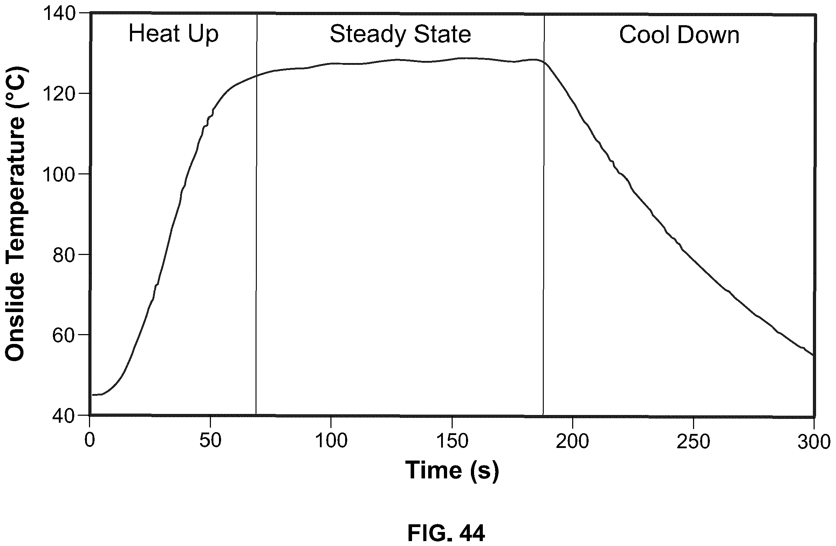

In some embodiments, and with reference to FIGS. 43F and 43H, the unmasking operation includes a temperature ramp-up phase (step 523), a temperature maintenance phase (step 524), and a temperature ramp-down phase (step 525). FIG. 44 sets forth an example of the times and temperatures used in a temperature ramp-up phase (step 523), during a temperature maintenance phase (step 524), and in a temperature ramp-down phase (step 525).

In some embodiments, one or more heating elements in the lower and/or upper plates are activated during the ramp-up phase. In some embodiments, the temperature is increased during the temperature ramp-up phase until the predetermined temperature is reached.

In some embodiments, the temperature ramp-up phase takes place at a rate which is dependent on the material from which the chamber is constructed. In some embodiments, the temperature ramp-up takes place at a rate ranging from between about 1°C/s to about 6°C/s. In some embodiments, the temperature ramp-up occurs at a rate of about 1°C/s. In other embodiments, the temperature ramp-up occurs at a rate of about 1.5°C/s. In other embodiments, the temperature ramp-up occurs at a rate of about 2°C/s. In other embodiments, the temperature ramp-up occurs at a rate of about 2.5°C/s. In other embodiments, the temperature ramp-up occurs at a rate of about 3°C/s. In other embodiments, the temperature ramp-up occurs at a rate of about 3.25°C/s. In other embodiments, the temperature ramp-up occurs at a rate of about 3.5°C/s. In other embodiments, the temperature ramp-up occurs at a rate of about 3.75°C/s. In other embodiments, the temperature ramp-up occurs at a rate of about 4°C/s.

In some embodiments, the temperature ramp-up phase takes from between about 10 seconds to about 5 minutes. In some embodiments, the temperature ramp-up phase takes from between about 10 seconds to about 5 minutes. In some embodiments, the temperature ramp-up phase takes from between about 20 seconds to about 4 minutes. In some embodiments, the temperature ramp-up phase takes from between about 30 seconds to about 3 minutes. In some embodiments, the temperature ramp-up phase takes from between about 30 seconds to about 2 minutes. In some embodiments, the temperature ramp-up phase takes from between about 30 seconds to about 1 minute.

In some embodiments, one or more heating elements in the lower and/or upper plates are activated during the temperature maintenance phase. In some embodiments, one or more cooling elements are also activated to enable uniform heating. In some embodiments, the predetermined temperature is maintained during the temperature maintenance phase. In some embodiments, the predetermined temperature is maintained within about 3% of its target value. In other embodiments, the predetermined temperature is maintained within about 2% of its target value. In yet other embodiments, the predetermined temperature is maintained within about 1% of its target value.

In some embodiments, the temperature maintenance phase has a duration ranging from between about 30 seconds to about 10 minutes. In some embodiments, the temperature maintenance phase has a duration ranging from between about 30 seconds to about 9 minutes. In some embodiments, the temperature maintenance phase has a duration ranging from between about 45 seconds to about 8 minutes. In some embodiments, the temperature maintenance phase has a duration ranging from between about 60 seconds to about 8 minutes. In some embodiments, the temperature maintenance phase has a duration ranging from between about 60 seconds to about 7 minutes. In some embodiments, the temperature maintenance phase has a duration ranging from between about 60 seconds to about 6 minutes. In some embodiments, the temperature maintenance phase has a duration ranging from between about 60 seconds to about 5 minutes. In some embodiments, the temperature maintenance phase has a duration ranging from between about 90 seconds to about 5 minutes. In some embodiments, the temperature maintenance phase has a duration ranging from between about 90 seconds to about 4 minutes. In some embodiments, the temperature maintenance phase has a duration ranging from between about 90 seconds to about 3 minutes.

In some embodiments, one or more heating and/or cooling elements are activated during the temperature ramp-down phase. For example, heating and cooling elements may be activated to maintain a thermal gradient during temperature ramp-down. In some embodiments, temperature ramp-down is a passive process where the one or more heating elements are deactivated and where heat is eliminated through a heatsink in communication with the chamber. In other embodiments, the temperature ramp-down process is an activate process whereby one or more cooling elements are activated.

In some embodiments, the temperature ramp-down takes place at a rate ranging from between 0.5°C/s to about 4°C/s. In some embodiments, the temperature ramp-down occurs at a rate of about 0.5°C/s. In other embodiments, the temperature ramp- down occurs at a rate of about 0.75°C/s. In other embodiments, the temperature ramp-down occurs at a rate of about 1°C/s. In other embodiments, the temperature ramp- down occurs at a rate of about 1.25°C/s. In other embodiments, the temperature ramp-up occurs at a rate of about 1.5°C/s. In other embodiments, the temperature ramp-down occurs at a rate of about 1.75°C/s. In other embodiments, the temperature ramp-down occurs at a rate of about 2°C/s. In other embodiments, the temperature ramp-down occurs at a rate of about 2.5°C/s. In other embodiments, the temperature ramp-down occurs at a rate of about 3.5°C/s.

In some embodiments, the temperature ramp-down phase takes from between about 30 seconds to about 6 minutes. In some embodiments, the temperature ramp-down phase takes from between about 30 seconds to about 5 minutes. In some embodiments, the temperature ramp-down phase takes from between about 45 seconds to about 4 minutes. In some embodiments, the temperature ramp-down phase takes from between about 60 seconds to about 3 minutes. In some embodiments, the temperature ramp-down phase takes from between about 60 seconds to about 2 minutes.

In some embodiments, the unmasking operation does not include a temperature ramp-down phase. In some embodiments, one or both of the upper and/or lower plates are maintained at all times within the predetermined temperature range for conducting an unmasking operation. In those embodiments that do not utilize a temperature ramp-down phase, the chamber may be opened while the specimen or the substrate are at about the predetermined temperature and after the unmasking operation has commenced for the predetermined amount of time. For example, assuming that a predetermined temperature for unmasking of between about 120°C to about 125°C is reached, and assuming further that the unmasking operation was allowed to commence for a predetermined duration of time within the predetermined temperature range, the chamber may be opened while the chamber is still within the predetermined temperature range.

In some embodiments, the chamber is opened without first decreasing pressure within the chamber. In some embodiments, the chamber is opened only after at least partially reducing the pressure existing within the chamber. In some embodiments, the pressure within the chamber is reduced by at least about 5%, such as by opening one or more ports or valves in communication with the interior of the chamber. In some embodiments, the chamber is opened only after reducing the pressure existing within the chamber by at least about 10%. In some embodiments, the chamber is opened only after reducing the pressure existing within the chamber by at least about 15%. In some embodiments, the chamber is opened only after reducing the pressure existing within the chamber by at least about 20%.

In some embodiments, when the chamber is opened, additional fluids and/or reagents are added to the specimen and/or substrate just after the chamber is opened. For example, if the chamber is opened while at the predetermined temperature and/or pressure, water or a buffer (e.g. at room temperature, at a temperature below room temperature, at a temperature below the predetermined temperature for the unmasking operation) may immediately be dispensed to the specimen and/or the substrate to mitigate or prevent the specimen from drying out. In some embodiments, the one or more additional fluids and/or reagents are added concomitantly with the movement of the lower and upper plates.

Alternatively, one or more additional fluids and/or reagents may be introduced into the sealed chamber while the specimen or the substrate are at about the predetermined temperature and after the unmasking operation has commenced for the predetermined amount of time. Only after the one or more additional fluids and/or reagents are dispensed, is the chamber opened. In some embodiments, sufficient additional fluids and/or reagents are added to prevent the specimen from drying out.

In some embodiments, the chamber is opened quickly. In this way, should the fluids and/or reagents disposed on the specimen or substrate rapidly foam or bubble after opening the chamber, the speed at which the chamber is opened would mitigate or prevent the formed foam or bubbles from contacting the interior surfaces of the formed chamber. In some embodiments, the rate at which the chamber is opened is determined based on the total internal volume of the chamber and/or the geometry within the chamber. For example, a chamber having a total volume of 4mL may be opened more slowly than a chamber having a total volume of 2mL. As applied here, the comparatively larger volume of the 4mL chamber would allow room for foam or bubbles to form (and/or expand) without contacting the walls within the interior of the chamber. In some embodiments, the chamber is opened at a rate of between 0.5 cm/s to about 10 cm/s.

In some embodiments, certain steps (e.g. heating and/or cooling steps) of an unmasking operation may be dictated by the physical properties of the lower and upper plates constituting the sealed chamber. For example, lower and upper plates formed from a metal will have different thermal masses, take different amounts of time to heat and/or cool, and retain heat differently than lower and upper plates formed from an insulating material, such as a polymer or copolymer (including any of those polymers and copolymers described herein).

By way of example, in some embodiments, lower and upper plates comprised of an insulating material (e.g. a polymer or copolymer) may be heated and/or pressurized by introducing only steam into the formed chamber. Once the unmasking operation has been conducted for a predetermined amount of time, a first specimen-bearing substrate may be removed from the chamber and replaced with a second specimen-bearing substrate. Given the thermal properties of the insulating materials, heat may be retained by the insulating lower and upper plates. As a result, any temperature ramp-up phase of an unmasking operation may be reduced or even eliminated. In this manner, successive unmasking operations may be conducted on different specimen-bearing substrates rapidly and with little down-time. For example, after the insulating chamber is opened and the first specimen-bearing substrate is removed, a second specimen-bearing substrate may be introduced, the chamber sealed, and steam introduced to maintain a predetermined unmasking temperature with minimal or no temperature ramp-up.

On the other hand, lower and upper plates comprised of a metal may require comparatively longer temperature ramp-up times. Thus, when using metal lower and upper plates, a first specimen-bearing substrate may be removed, and a second specimen-bearing substrate introduced. Regardless of whether a temperature ramp-down phase is initiated between successive unmasking operations, a temperature ramp-up phase will be still be required given the comparatively higher thermal masses of metallic lower and upper plates as compared with lower and upper plates formed from insulating materials.

In some embodiments, a duration of an unmasking operation is standardized for all types of specimens and all types of analyses to be performed on a given type of specimen, thereby increasing the efficiency of the system and all components therein. For example, having a standardized duration for all specimen and analysis types permits easier scheduling of prior specimen processing steps (such as deparaffinization) and subsequent specimen processing steps (such as staining steps) since they can all be in "lock step" with the standardized unmasking operation duration. Standardization of the unmasking operation duration is made possible by the discovery that one need only change the temperature to vary the extent of unmasking for a given type of sample. By selecting a specific temperature at which the unmasking operation is performed for a particular sample type, not only can the duration of the unmasking operation be standardized, but also the extent of unmasking for the particular sample type can be optimized for a particular assay.

In some embodiments, the disclosed system can be optimized to facilitate standardization of the duration of the unmasking operation. For example, in embodiments where the upper and lower plates are comprised of insulating materials, it is possible to use steam heating to quickly heat a sample to its appropriate temperature for a standardized unmasking operation duration. Rapid achievement of the unmasking operation's pre-determined temperature using steam heating helps remove variability in the temperature ramp up time between samples that need to be heated to different temperatures to achieve the desired level of unmasking. Likewise, in embodiments where a pressurized chamber formed between the upper and lower plates is opened quickly to release pressure, the sample is cooled by rapid evaporation, thereby helping to remove variability in ramp-down time between samples that are heated to different temperatures for the unmasking operation. Similarly, in some embodiments, the chamber formed between the upper and lower plates can be rapidly filled with a fluid at a lower temperature, thereby quenching the unmasking operation and ending the unmasking operation and helping to standardize temperature ramp down times between samples that are processed at different unmasking temperatures.

Thus, in some embodiments, each unmasking operation in each independently operable chamber is conducted for the same duration of time regardless of the biomarkers being unmasked in any individual chamber. For instance, if the duration of an unmasking operation being performed in each chamber is the same, then other system components (such as any transport components) may be utilized to process and/or prepare other specimens while the unmasking operations are taking place. For example, the timing of dispense operations and other processing operations may be coordinated to coincide with the unmasking operations. Therefore, one or more fluids and/or reagents may be dispensed to a first set of specimen-bearing substrates while a second set of specimen-bearing substrates are being concurrently processed in the chambers.

To facilitate this, in some embodiments, the control system (or storage module communicatively coupled to the control system) includes a database of biomarkers and associated data. In some embodiments, the database may include an identification of a plurality of biomarkers, and each biomarker of the plurality of biomarkers may be associated with an unmasking temperature and an unmasking duration necessary to fully unmask the biomarker (see, for example, Example 1). For example, a database may include an identification of biomarkers 1, 2, and 3, and associated with each of biomarkers 1, 2, and 3 is a temperature which is required such that the sample may be fully unmasked for a given time period. Following this example, the database may include the following datasets: (biomarker 1, 125°C, 5 minutes), (biomarker 2, 145°C, 5 minutes), and (biomarker 3, 135°C, 5 minutes). The database may also include the datasets: (biomarker 1, 115°C, 10 minutes), (biomarker 1, 140°C, 10 minutes), and (biomarker 1, 130°C, 10 minutes). By way of example, if a system is programmed to run each concurrent unmasking operation for a duration of five minutes, the system may retrieve the datasets (from the control system or a storage module communicatively coupled thereto) relevant to the five-minute duration for each biomarker. In this way, each chamber within a system may be independently heated at an appropriate rate to maintain the required predetermined unmasking temperature for each different biomarker throughout its unmasking operation and for duration set by the system, allowing each specimen to be independently and fully unmasked.

In some embodiments, the system receives an identification of the biomarkers to be unmasked in each individual specimen. Unmasking parameters (e.g. a predetermined unmasking temperature) for each biomarker are then retrieved from the control system or a storage module communicatively coupled thereto based on a system-wide standardized unmasking time (e.g. 5 minutes, 6 minutes, 7 minutes, 8 minutes, 9 minutes, 10 minutes). Each individual specimen, disposed on a substrate, is then transported to a substrate stage (e.g. transported to a lower plate 10 having a substrate stage or a body 716 having a substrate stage). One or more fluids and/or reagents may then be independently dispensed to each specimen (e.g. the volume of the fluids and/or reagents dispensed as well as the type of fluids and/or reagents dispensed may vary from specimen to specimen and may depend on the type of biomarker to be unmasked or the parameters of an unmasking operation). Each specimen, along with any deposited fluids and/or reagents, is then independently enclosed within one independently operable chamber within the system. Based on the identification of the unmasking parameters of each identified biomarker, commands are then sent to each independently operable chamber to individually heat each independently operable chamber at a predetermined temperature necessary to fully unmask the biomarker of the specimen disposed in the chamber. The unmasking operation is then conducted in each independently operable chamber for the system-wide standardized unmasking time. Concurrently with the unmasking operations, other system components may be utilized to prepare yet other samples for unmasking.

As noted above, in some embodiments the specimen and/or at least a portion of the substrate are maintained as the "coldest" component within the formed chamber during any stage of the unmasking operation. In some embodiments, and with reference to FIGS. 43G, the specimen or a portion of the substrate is maintained as the coldest (comparatively) component within the chamber during any temperature ramp-up phase (step 530), for example during the process of increasing the temperature within the chamber or during the process of increasing the temperature of any of the components within the chamber or in thermal communication with any of the components with the chamber (see step 523). At step 531, the specimen or a portion of the substrate is maintained as the coldest (comparatively) component within the chamber once the unmasking temperature is reached, for example during any temperature maintenance phase (see step 524). At step 532, the specimen or a portion of the substrate is maintained as the coldest (comparatively) component within the chamber during any temperature ramp-down operation (see step 525), for example during the process of decreasing the temperature of the chamber or during the process of decreasing the temperature of any of the components within the chamber. Further examples of establishing and maintaining temperature gradients during all phases of an unmasking operation are described further below in relation to FIGS. 39A - 39C.

It is believed that by maintaining at least a portion of the substrate as the "coldest" component within the chamber, that any condensation may be driven to the specimen disposed on the substrate or even the substrate itself (depending on the configuration of the chamber, the components included therein, and the predetermined parameters of the unmasking operation). In this way, evaporative losses are minimized or prevented, thereby mitigating or preventing the specimen from drying out or becoming damaged.

Moreover, and in some embodiments, it is believed that by maintaining the specimen or a portion of the substrate as the "coldest" component within the chamber, at least 90% of a volume of any fluid and/or reagent dispensed onto the substrate or specimen prior to commencing the unmasking operation will be present after the unmasking operation is completed, assuming that no further fluids and/or reagents are dispensed on the specimen or substrate during the course of the unmasking operation. In other embodiments, it is believed that by maintaining the specimen or a portion of the substrate as the "coldest" component within the chamber, at least 95% of a volume of any fluid and/or reagent dispensed onto the substrate prior to commencing the unmasking operation will be present after the unmasking operation is completed. In other embodiments, it is believed that by maintaining the specimen or a portion of the substrate as the "coldest" component within the chamber, at least 96% of a volume of any fluid and/or reagent dispensed onto the substrate prior to commencing the unmasking operation will be present after the unmasking operation is completed. In other embodiments, it is believed that by maintaining the specimen or a portion of the substrate as the "coldest" component within the chamber, at least 97% of a volume of any fluid and/or reagent dispensed onto the substrate prior to commencing the unmasking operation will be present after the unmasking operation is completed. In other embodiments, it is believed that by maintaining the specimen or a portion of the substrate as the "coldest" component within the chamber, at least 98% of a volume of any fluid and/or reagent dispensed onto the substrate prior to commencing the unmasking operation will be present after the unmasking operation is completed. In other embodiments, it is believed that by maintaining the specimen or a portion of the substrate as the "coldest" component within the chamber, at least 99% of a volume of any fluid and/or reagent dispensed onto the substrate prior to commencing the unmasking operation will be present after the unmasking operation is completed.

FIG. 43H further illustrates steps of an unmasking operation, including a temperature ramp-up phase (step 523), a temperature maintenance phase (step 524), and a temperature ramp-down phase (step 525). With regard to the temperature ramp-up phase (step 523), a control system may be commanded to activate heating in the upper and lower plates (steps 562 and 563). Once the predetermined setpoint temperatures are reached, the control system may command the heaters to maintain steady-state heating (step 564). Turning to the temperature maintenance phase (step 524), in some embodiments a timer may be initiated (step 566) while heating is continued (steps 567 and 568). Once the timer ends at step 569, the temperature ramp-down phase may be initiated (step 525). In some embodiments, the temperature ramp-down phase (step 525) includes turning off all of the heaters (step 571) and turning on one or more cooling elements in the lower plate (step 572). The unmasking operation is concluded (step 573) when the lower temperature reaches a predetermined cool-down temperature.

Non-limiting examples of controlling one or more heating and/or cooling elements within the upper and/or lower plates (or within thermal management modules in communication with a body 16 of the lower plate) such that temperature gradients are established and maintained during each of the temperature ramp-up (step 523), temperature ramp-down (step 525), and temperature maintenance (step 524) phases are set forth below in relation to FIGS. 39A - 39C. Specifically, FIG. 39A depicts a chamber formed from an upper plate 30 and a lower plate 10, where the lower plate 10 includes a body 16 having a substrate stage 12. A substrate 15 is depicted as being supported on the surface 12C of the substrate stage 12. FIG. 39A further illustrates that the bodies of the upper and lower plates (33 and 16, respectively) are divided into a plurality of zones, namely numbered zones 1, 2, 3, 4, and 5. FIGS. 39B and 39C are similar to FIG. 39A but where additional numbered zones are depicted to illustrate that the formed chamber may have any number of zones.

In some embodiments, each of the numbered zones depicted in any of FIGS. 39A - 39C may be differentially heated and/or cooled by controlling one or more independently controllable heating and/or cooling elements in thermal communication with the respective zones. As such, each of the zones depicted in FIGS. 39A - 39C may be independently controlled during the course of any temperature ramp-up phase (step 523), during the course of any temperature maintenance phase (step 524), or during the course of any temperature ramp-down phase (step 525) by independently operating one or more heating and/or cooling elements in thermal communication with the respective zones indicated in FIGS. 39A - 39C.

Turning first to a temperature maintenance phase (step 524), heating and/or cooling elements in thermal communication within any of the zones depicted in FIGS. 39A - 39C may be independently controlled such that thermal gradients are established and maintained throughout the course of the temperature maintenance phase. In some embodiments, each of the heating and/cooling elements may be independently operated such that each zone is independently maintained at different end-point temperatures, for example temperatures reached after temperature ramp-up and maintained such that the unmasking operation may be conducted at the predetermined unmasking temperature. For instance, zone 1 may be held at an end-point temperature of T1. Zone 2 may be held at an end-point temperature of T2. Zone 3 may be held at an end-point temperature of T3. Zone 4 may be held at an end-point temperature of T4. Zone 5 may be held at an end-point temperature of T5. In some embodiments, each of the end-point temperatures for each zone (T1 through T5 in the examples which follow) are within the predetermined unmasking temperature ranges, achieved after temperature ramp-up, described above.

By way of example, heating and/or cooling elements within or proximal to zone 1 may be operated such that the body 16 of the lower plate, the substrate stage 12, and/or the substrate 15 are heated to a first end-point temperature T1. In some embodiments, the first end-point temperature T1 is within a first predetermined endpoint temperature range (which, again, falls within the predetermined unmasking temperature ranges described above). In some embodiments, the first predetermined endpoint temperature range is between about 100°C to about 180°C. In other embodiments, the first predetermined endpoint temperature range is between about 110°C to about 160°C. In yet other embodiments, the first predetermined endpoint temperature range is between about 120°C to about 150°C. In yet other embodiments, the first predetermined endpoint temperature range is between about 130°C to about 150°C. In yet other embodiments, the first predetermined endpoint temperature range is between about 140°C to about 150°C. In yet other embodiments, the first predetermined endpoint temperature range is between about 140°C to about 145°C.

Simultaneously or sequentially, heating and/or cooling elements within or proximal to zones 2, 3, and 4 may be independently operated such that other portions of the body 16 of the lower plate 10 and the body 33 of the upper plate 30 are each heated to second (T2), third (T3), and fourth (T4) end-point temperatures. Each of the endpoint temperatures T2, T3, and T3 may be within a second predetermined endpoint temperature range (which, again, falls within the predetermined unmasking temperature ranges described above). In some embodiments, the second predetermined endpoint temperature range is between about 105°C to about 190°C. In other embodiments, the second predetermined endpoint temperature range is between about 110°C to about 180°C. In yet other embodiments, the second predetermined endpoint temperature range is between about 115°C to about 170°C. In yet other embodiments, the second predetermined endpoint temperature range is between about 125°C to about 160°C. In yet other embodiments, the second predetermined endpoint temperature range is between about 130°C to about 160°C. In yet other embodiments, the second predetermined endpoint temperature range is between about 140°C to about 160°C. In yet other embodiments, the second predetermined endpoint temperature range is between about 150°C to about 160°C.

In some embodiments, the first predetermined endpoint temperature range is less than the second predetermined endpoint temperature range. In some embodiments, the second predetermined endpoint temperature range is 5% greater than the first predetermined endpoint temperature range. In some embodiments, the second predetermined endpoint temperature range is 7% greater than the first predetermined endpoint temperature range. In some embodiments, the second predetermined endpoint temperature range is 9% greater than the first predetermined endpoint temperature range. In some embodiments, the second predetermined endpoint temperature range is 12% greater than the first predetermined endpoint temperature range. In some embodiments, the second predetermined endpoint temperature range is 15% greater than the first predetermined endpoint temperature range.

In some embodiments, each of endpoint temperatures T2, T3, and T4 reached after the temperature ramp-up phase (step 523) and maintained during the temperature maintenance phase (step 524) are greater than the endpoint temperature T1. In this manner, a thermal gradient is established and maintained during the temperature maintenance phase (step 524) between at least one of zones 1 and 2, between zones 1 and 3, and between zones 1 and 4. For example, endpoint temperature T1 may be 140°C, while endpoint temperatures T2, T3, and T4 are each about 150°C. As noted herein, it is believed that by maintaining the specimen or at least a portion of the substrate as the comparatively "coldest" component within the chamber formed from the upper and lower plates, that any evaporated liquids (e.g. those evaporated as a result of the unmasking operation) will condense onto the specimen or the portion of the substrate. In this way, it is believed that fluid and/or reagent losses as a result of the temperatures used during the unmasking process will be minimized. In some embodiments, evaporative losses are less than 25%. In some embodiments, evaporative losses are less than 20%. In other embodiments, evaporative losses are less than 15%. In some embodiments, evaporative losses are less than 10%. In some embodiments, evaporative losses are less than 7%. In some embodiments, evaporative losses are less than 5%. In some embodiments, evaporative losses are less than 3%. In some embodiments, evaporative losses are less than 1%. In some embodiments, fluids and/or reagents are dispensed to the substrate only before the chamber is formed, for example before the upper and lower plates are brought into contact with each other. In some embodiments, no additional fluids and/or reagents are dispensed to the substrate while the substrate is positioned within the chamber.

While the example above describes the different temperature gradients which are maintained between the different zones during the temperature maintenance phase (step 524), the skilled artisan will appreciate that the same type of temperature gradients may be established during the temperature ramp-up and ramp-down phases (steps 523 and 525, respectively). For example, zone 1 may be maintained at a temperature less than the temperature in zones 2, 3, 4, and 5 at all times during the ramp-up phase, for example the temperature from time zero to when an endpoint temperature is reached in any single zone is controlled such that the temperature in zones 2, 3, 4, and 5 are greater than in zone 1. In this manner, and again with reference to FIG. 39A, it is possible to maintain zone 1 as the coldest part of the chamber during the ramp-up process and prior to reaching any final end-point temperature in any zone.

By way of further example, and with reference to FIG. 39A, zone 1, which is in thermal communication with a substrate and/or substrate stage and one or more heating and/or cooling elements, may be independently operated such that during any temperature ramp-up phase the surface 12C of substrate stage 12 is maintained at all times at a temperature which is less than the temperature of the surrounding and/or adjacent areas of body 16, for example the temperature of zone 1 is maintained at a temperature less than the temperature in zones 2, 3, and 4 during the entire ramp-up phase. Said another way, at any one particular time point during a temperature ramp-up phase, the specimen or at least a portion of the substrate stage 12 is maintained, in some embodiments, at a temperature lower than the surrounding and/or adjacent portions of body 16. For example, and with reference to FIG. 40A, assuming that a temperature ramp-up takes place over a 10 minute time period, if one were to take a temperature measurement at a time of 3 minutes, temperature A would be comparatively less than temperatures B, B', C, and/or D. Likewise, if one were to take a second temperature measurement at a time of 7 minutes, temperature A would be comparatively less than temperatures B, B', C, and/or D. Following this example further, once a pre-determined temperature is reached for any one of the portions A, B, B', C, and/or D (such as at a time point of 10 minutes), the temperature measurement of A taken at this time point would again be comparatively less than temperatures B, B', C, and/or D.

Just as it is important to maintain a thermal gradient between zones 1 and 2, 1 and 3, 1 and 4, and 1 and 5 during the temperature ramp-up process, it is also important to maintain similar thermal gradients between zone 1 and 2, 1 and 3, 1 and 4, and 1 and 5 during any temperature ramp-down process. In some embodiments, the temperature with each zone is controlled during the ramp-down phase such that zone 1 is maintained at a temperature less than the temperature in zones 2, 3, 4, and 5 during the ramp-down phase. In this manner, and again with reference to FIG. 39A, it is possible to maintain zone 1 as the coldest part of the chamber during the ramp-down process. As a result, any evaporated gases may condense back onto the substrate disposed on the substrate stage.

Alternative embodiments are illustrated in FIGS. 39B and 39C. As compared with FIG. 39A, FIGS. 39B and 39C include additional thermal zones, namely thermal zone 5 (FIG. 39B) and thermal zones 5 and 6 (FIG. 39C). Again, these embodiments are non-limiting and the skilled artisan will appreciate that the upper and lower plates forming a chamber may be divided up into any number of zones and include any number of heating and/or cooling elements or may be in contact with one or more thermal management units.

### FURTHER EMBODIMENTS

### Other embodiments of formed chambers

Another aspect of the present disclosure is a specimen processing assembly including (i) a lower plate movably coupled to a horizontal rail, wherein the lower plate includes a lower engagement surface and a substrate stage raised relative to at least a portion of the lower engagement surface, and wherein the raised substrate stage includes an upper surface adapted to hold a substrate horizontally; wherein one of the lower plate and the substrate stage is configured such that the planar upper surface of the substrate stage remains horizontal as the lower plate horizontally traverses the horizontal rail, and (ii) a hinged upper plate coupled to a vessel, wherein the hinged upper plate includes an upper engagement surface complementary to the lower engagement surface, and wherein the upper plate further includes a cavity recessed relative to the upper engagement surface, wherein the recessed cavity is adapted to receive at least a portion of the raised substrate stage. In some embodiments, the lower plate is moved to a predetermined position near the hinged upper plate. In some embodiments, the hinged upper plate is rotated downward onto a pre-positioned lower plate. In some embodiments, the vessel is coupled to a motor such that the vessel may exert a force onto a chamber formed from the upper and lower plates as the vessel is moved over the formed chamber.

Another aspect of the present disclosure is a specimen processing assembly including (i) a lower plate including a lower engagement surface and a substrate stage raised relative to at least a portion of the lower engagement surface; and (ii) an upper plate including an upper engagement surface and a cavity recessed relative to the upper engagement surface, where the upper and lower engagement surfaces are complementary to each other, and wherein the upper plate is movably coupled to one of a motor (including a screw), a piston, or a cam mechanism (which may be located on top, bottom, or both the top and bottom). In some embodiments, the lower plate is fixed, and the upper plate is movable in any direction toward the lower plate. In some embodiments, the lower plate is pre-positioned beneath an upper plate, and a motor, a piston, a spring, a screw mechanism and/or a cam mechanism drives the upper plate toward the lower plate to form a sealing engagement between the upper and lower plates. In some embodiments, the specimen processing assembly further includes at least one substrate loader in communication with the lower plate. In some embodiments, the at least one substrate loader is in communication with a carousel, with a member including a plurality of substrate holders, such as a carousel or substrate tray having a plurality of substrate holders.

Another aspect of the present disclosure is a chamber formed from an upper plate having a first set of a features, and a lower plate having a second set of features, wherein the first and second sets of features are complementary to each other. In some embodiments, the formed chamber includes a substrate stage having an upper surface adapted to hold a substrate horizontally. In some embodiments, the substrate stage and/or a body of the lower plate are configured such that an upper surface of the substrate stage is horizontal. In some embodiments, the substrate (e.g. microscope slide) is held horizontal while the chamber is formed, for example while the upper and lower plates are independently moved toward each other and contact each other. In some embodiments, any substrate disposed within the chamber remains horizonal as it is processed or moved, e.g. remains horizontal as fluids and/or reagents are dispensed onto a specimen-bearing substrate. In some embodiments, no additional fluids and/or reagents are dispensed to the substrate while the substrate is positioned within the chamber.

In some embodiments, the formed chamber has a shape and/or size adapted to accommodate a substrate (e.g. a microscope slide). In some embodiments, the chamber is formed from an upper plate having a cavity recessed within a body; and from a lower plate having a substrate stage. In some embodiments, the upper and lower plates include upper and lower engagement surfaces, respectively. In some embodiments, the recessed cavity within a body of the upper plate is configured to accept at least a portion of a substrate supported by the upper surface of a substrate stage. In some embodiments, the substrate stage is raised relative to the lower engagement surface of the lower plate. In other embodiments, the substrate stage is recessed relative to the lower engagement surface of the lower plate. In yet other embodiments, the upper surface of the substrate stage is within the same plane as the plane formed by the lower engagement surface. In some embodiments, the recessed chamber has a size and/or shape sufficient to accommodate the substrate and at least a portion of the substrate stage. In some embodiments, the formed chamber is configured to process a single substrate. In some embodiments, the chamber is configured to process multiple substrates as described further herein.

Another aspect of the present disclosure is a chamber formed from an upper plate and a lower plate, wherein the upper plate includes an upper engagement surface complementary to a lower engagement surface of the lower plate, and wherein the upper plate further includes a recessed cavity adapted for receiving at least a portion of a substrate stage having a horizontally oriented upper surface. In some embodiments, the complementary upper and lower engagement surfaces enable the formation of a seal at their interface. In some embodiments, the lower engagement surface further includes a seal body disposed within a groove at least partially circumscribing the substrate stage. In some embodiments, the chamber may be adapted to perform an unmasking operation on a substrate disposed on the surface of the horizontally oriented upper surface. In some embodiments, the unmasking operation takes place at an elevated temperature and/or pressure as compared with an environment external to the chamber. In some embodiments, the chamber is in communication with one or more ports, which allow a gas and/or steam to be introduced into the chamber, such that the chamber may be pressurized and/or heated.

In some embodiments, the lower plate including the substrate stage having the horizontally oriented upper surface is movably coupled to a rail such that after an unmasking operation is completed, the lower plate may be separated from the upper plate and moved away from the upper plate while the substrate remains in a horizontal position. In some embodiments, the lower plate including the substrate stage having the horizontally oriented upper surface is fixed in position, and after the unmasking operation is completed, the upper plate may be separated from the lower plate and the upper plate moved away from the lower plate (moved away along any of the x, y, z coordinates or any combination thereof) while the substrate remains in a horizontal position. In some embodiments, after the unmasking operation is completed, the lower and upper plates are separated from one another and both independently moved away from one another. In some embodiments, after the unmasking operation is completed, the substrate disposed on the substrate stage having the horizontally oriented upper surface is treated in a preparation area, e.g. a rare reagent may be applied to the substrate.

### Non-limiting examples of automated methods of unmasking a specimen

Another aspect of the present disclosure is an automated method of unmasking a specimen disposed on a substrate including: (a) dispensing a predetermined volume of one or more fluids and/or reagents to at least a portion of the specimen; (b) positioning the specimen disposed on the substrate including the dispensed one or more fluids and/or reagents onto a substrate stage of a lower plate, wherein the lower plate further includes a lower engagement surface; (c) sealing the specimen within a chamber by contacting the lower engagement surface of the lower plate and an upper engagement surface of an upper plate, wherein the upper engagement surface is complementary to the lower engagement surface; and (d) performing an unmasking operation on the specimen within the sealed chamber.

In some embodiments, the one or more fluids and/or reagents are selected from water and a buffer solution having a pH ranging from between about 5 to about 10. In some embodiments, the one or more fluids and/or reagents comprise a mixture of deionized water, tris(hydroxymethyl)methylamine, and a chelator. In some embodiments, the predetermined volume of the one or more fluids and/or reagents dispensed to the at least a portion of the specimen ranges from between about 200µL to about 1000µL. In some embodiments, the predetermined volume of the one or more fluids and/or reagents dispensed to the at least the portion on\f the specimen ranges from between about 250µL to about 500µL.

In some embodiments, the unmasking operation includes heating the specimen disposed on the substrate to a first predetermined temperature for a predetermined duration of time. In some embodiments, the first predetermined temperature ranges from between about 125°C to about 155°C. In some embodiments, the first predetermined temperature ranges from between about 135°C to about 150°C. In some embodiments, the first predetermined temperature is about 140°C. In some embodiments, the predetermined duration of time ranges from between about 1 minute to about 10 minutes. In some embodiments, the predetermined duration of time ranges from between about 1 minute to about 7 minutes. In some embodiments, the predetermined duration of time ranges from between about 1 minute to about 5 minutes.

In some embodiments, a temperature of the substrate is less than a temperature of any other component within the chamber during the unmasking operation. In some embodiments, the temperature of the substrate is at least 10°C less than the temperature of the other components within the chamber. In some embodiments, the temperature of the substrate is at least 5°C less than the temperature of the other components within the chamber.

In some embodiments, less than about 5% of the predetermined volume of the one or more fluids and/or reagents dispensed to the specimen is lost to evaporation during the unmasking operation. In some embodiments, less than about 2% of the predetermined volume of the one or more fluids and/or reagents dispensed to the specimen is lost to evaporation during the unmasking operation. In some embodiments, substantially no further fluids and/or reagents are dispensed to the substrate after the chamber is sealed. In some embodiments, no further fluids and/or reagents are dispensed to the substrate after the chamber is sealed.

In some embodiments, the method further includes pre-pressurizing the sealed chamber prior to the performance of the unmasking operation. In some embodiments, the chamber is pre-pressurized simultaneously with the performance of the unmasking operation. In some embodiments, the method further includes introducing steam into the sealed chamber.

In some embodiments, the lower plate further includes at least one heating element. In some embodiments, the lower plate further includes at least three heating elements, wherein a first of the at least three heating elements is positioned beneath the substrate stage, and wherein the second and third of the at least three heating elements are each positioned adjacent the first of the at least three heating elements. In some embodiments, a first thermal gradient is maintained between the first and second of the at least three heating elements during the performance of the unmasking operation, and wherein a second thermal gradient is maintained between the second and third of the at least three heating elements during the performance of the unmasking operation.

In some embodiments, a force generating member applies an external force to the sealed chamber. In some embodiments, the force generating member is selected from the group consisting a motor, a piston, a spring, a screw mechanism, a lever, a cam mechanism. In some embodiments, at least one of the lower and upper plates is in thermal communication with a thermal management module. In some embodiments, the unmasking operation includes a temperature ramp-up phase and a temperature maintenance phase. In some embodiments, the temperature ramp-up phase includes heating the specimen at a rate ranging from between about 1°C/s to about 4°C/s. In some embodiments, the temperature ramp-up phase includes heating the specimen at a rate ranging from between about 3°C/s to about 4°C/s.

In some embodiments, the unmasking operation further includes a temperature ramp-down phase. In some embodiments, the temperature ramp-up phase is shorter than the temperature ramp-down phase. In some embodiments, the temperature ramp-down phase includes cooling the specimen at a rate ranging from between about 0.5°C/s to about 3°C/s.

In some embodiments, the unmasking operation is stopped by opening the chamber without a temperature ramp-down phase. In some embodiments, the unmasking operation is stopped by introducing a predetermined amount of a fluid into the chamber. In some embodiments, the predetermined amount of fluid introduced to stop the unmasking operation ranges from between about 0.5mL to about 5mL.

In some embodiments, the method further includes staining the specimen for the presence of one or more biomarkers after the completion of the unmasking operation.

Another aspect of the present disclosure is an automated method of unmasking a specimen disposed on a substrate including: (a) dispensing a predetermined volume of one or more fluids and/or reagents to at least a portion of the specimen; (b) sealing the specimen within a chamber, wherein the chamber includes (i) a lower plate having a substrate stage and a lower engagement surface, and (ii) an upper plate having an upper engagement surface complementary to the lower engagement surface, and wherein the substrate is supported by the substrate stage in a horizontal position; and (c) performing an unmasking operation within the sealed chamber. In some embodiments, the one or more fluids and/or reagents dispensed to the specimen are selected from the group consisting of water and a buffer solution. In some embodiments, the predetermined volume of the one or more fluids and/or reagents dispensed to the specimen ranges from between about 200µL to about 1000µL. In some embodiments, the predetermined volume of the one or more fluids and/or reagents dispensed to the specimen ranges from between about 250µL to about 500µL.

In some embodiments, the unmasking operation includes heating the specimen disposed on the substrate to a first predetermined temperature for a predetermined duration of time. In some embodiments, the first predetermined temperature ranges from between about 125°C to about 155°C. In some embodiments, the predetermined duration of time ranges from between about 1 minute to about 10 minutes. In some embodiments, a temperature of the substrate is less than a temperature of any other component within the chamber during the unmasking operation. In some embodiments, the temperature of the substrate is at least 5°C less than the temperature of the other components within the chamber. In some embodiments, less than about 5% of the predetermined volume of the one or more fluids and/or reagents dispensed to the specimen are lost to evaporation during the unmasking operation. In some embodiments, no further fluids and/or reagents are dispensed to the substrate after the chamber is sealed.

In some embodiments, the method further includes pre-pressurizing the sealed chamber prior to the performance of the unmasking operation. In some embodiments, the chamber is pre-pressurized simultaneously with the performance of the unmasking operation. In some embodiments, the method further includes introducing steam into the sealed chamber.

In some embodiments, the unmasking operation includes heating the specimen at a rate ranging from between about 1°C/s to about 4°C/s. In some embodiments, the unmasking operation includes heating the specimen at a rate ranging from between about 3°C/s to about 4°C/s. In some embodiments, the unmasking operation includes cooling the specimen at a rate ranging from between about 0.5°C/s to about 2.5°C/s.

In another aspect of the present disclosure is an automated method of unmasking a specimen disposed on a substrate including: (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation, wherein the unmasking operation includes a temperature ramp-up phase, a temperature maintenance phase, and a temperature ramp-down phase. In some embodiments, the temperature ramp-up phase includes heating the specimen at a rate ranging from between about 1°C/s to about 4°C/s. In some embodiments, temperature ramp-up phase includes heating the specimen at a rate ranging from between about 3°C/s to about 4°C/s. In some embodiments, the temperature ramp-up phase includes heating the specimen to a predetermined temperature of between about 110°C to about 150°C. In some embodiments, the temperature ramp-up phase includes heating the specimen to a predetermined temperature of between about 120°C to about 145°C.

In some embodiments, the specimen is maintained at the predetermined temperature for a predetermined time period ranging from between about 1 minute to about 10 minutes. In some embodiments, specimen is maintained at the predetermined temperature for a predetermined time period ranging from between about 2 minutes to about 7 minutes. In some embodiments, the specimen is maintained at the predetermined temperature for a predetermined time period ranging from between about 3 minutes to about 5 minutes.

In some embodiments, the temperature ramp-down phase includes cooling the specimen at a rate ranging from between about 0.5°C/s to about 3°C/s. In some embodiments, temperature ramp-down phase includes cooling the specimen at a rate ranging from between about 0.5°C/s to about 2°C/s.

In some embodiments, the one or more fluids and/or reagents are selected from the group consisting of water and a buffer solution. In some embodiments, the predetermined volume of the one or more fluids and/or reagents dispensed to the specimen ranges from between about 200µL to about 1000µL. In some embodiments, the predetermined volume of the one or more fluids and/or reagents dispensed to the specimen ranges from between about 250µL to about 500µL.

Another aspect of the present disclosure is an antigen retrieved specimen prepared in an automated process comprising (a) dispensing a predetermined volume of one or more fluids and/or reagents to a portion of the specimen; (b) positioning the specimen disposed on the substrate including the dispensed one or more fluids and/or reagents onto a substrate stage of a lower plate, wherein the lower plate further includes a lower engagement surface; (c) sealing the specimen within a chamber by contacting the lower engagement surface of the lower plate and an upper engagement surface of an upper plate, wherein the upper engagement surface is complementary to the lower engagement surface; and (d) performing an unmasking operation on the specimen within the sealed chamber. In some embodiments, the antigen retrieved specimen is a biopsy sample.

Another aspect of the present disclosure is a target retrieved specimen prepared in an automated process comprising (a) dispensing a predetermined volume of one or more fluids and/or reagents to a portion of the specimen; (b) positioning the specimen disposed on the substrate including the dispensed one or more fluids and/or reagents onto a substrate stage of a lower plate, wherein the lower plate further includes a lower engagement surface; (c) sealing the specimen within a chamber by contacting the lower engagement surface of the lower plate and an upper engagement surface of an upper plate, wherein the upper engagement surface is complementary to the lower engagement surface; and (d) performing an unmasking operation on the specimen within the sealed chamber. In some embodiments, the target retrieved specimen is a biopsy sample.

Another aspect of the present disclosure is an antigen retrieved specimen prepared in an automated process comprising (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation, wherein the unmasking operation includes a temperature ramp-up phase, a temperature maintenance phase, and a temperature ramp-down phase. In some embodiments, the specimen is retained as the "coldest" component within the sealed chamber during performance of all phases of the unmasking operation, for example during a temperature ramp-up phase, during a temperature maintenance phase, and during a temperature ramp-down phase.

Another aspect of the present disclosure is a target retrieved specimen prepared in an automated process comprising (a) dispensing a predetermined volume of one or more fluids and/or reagents to at least a portion of the specimen; (b) sealing the specimen within a chamber, wherein the chamber includes a lower plate having a substrate stage and a lower engagement surface and an upper plate having an upper engagement surface complementary to the lower engagement surface, and wherein the substrate is supported by the substrate stage in a horizontal position; and (c) performing an unmasking operation, wherein the unmasking operation includes a temperature ramp-up phase, a temperature maintenance phase, and a temperature ramp-down phase. In some embodiments, the specimen is retained as the "coldest" component within the sealed chamber during performance of all phases of the unmasking operation, for example during a temperature ramp-up phase, during a temperature maintenance phase, and during a temperature ramp-down phase.

Another aspect of the present disclosure is an unmasked specimen disposed on a substrate, wherein the unmasked specimen is prepared in an automated process including (a) dispensing a predetermined volume of one or more fluids and/or reagents to a portion of a specimen disposed on the substrate; (b) positioning the specimen bearing substrate including the dispensed one or more fluids and/or reagents onto a substrate stage within a chamber formed from an upper plate and a lower plate, wherein the lower plate includes the substrate stage and a lower engagement surface, and wherein the upper plate includes an upper engagement surface complementary to the lower engagement surface; (c) sealing the chamber; and (d) performing an unmasking operation on the specimen. In some embodiments, the unmasked specimen includes one or more retrieved antigenic sites. In some embodiments, the unmasked specimen includes one or more retrieved nucleic acid targets. In some embodiments, no further fluids and/or reagents are dispensed to the substrate after the chamber is sealed.

In some embodiments, the one or more fluids and/or reagents are selected from the group consisting of water and a buffer solution having a pH ranging from between about 5 to about 10. In some embodiments, the one or more fluids and/or reagents comprise a mixture of deionized water, tris(hydroxymethyl)methylamine, and a chelator. In some embodiments, the predetermined volume of the one or more fluids and/or reagents dispensed to the specimen ranges from between about 200µL to about 1000µL. In some embodiments, the predetermined volume of the one or more fluids and/or reagents dispensed to the specimen ranges from between about 250µL to about 500µL.

In some embodiments, the unmasking operation includes heating the specimen disposed on the substrate to a first predetermined temperature for a predetermined duration of time. In some embodiments, the first predetermined temperature ranges from between about 125°C to about 155°C. In some embodiments, the first predetermined temperature ranges from between about 135°C to about 150°C. In some embodiments, the first predetermined temperature is about 140°C. In some embodiments, the predetermined duration of time ranges from between about 1 minute to about 10 minutes. In some embodiments, the predetermined duration of time ranges from between about 1 minute to about 5 minutes.

In some embodiments, a temperature of the substrate is less than a temperature of any other component within the chamber during the unmasking operation. In some embodiments, the temperature of the substrate is at least 5°C less than the temperature of the other components within the chamber. In some embodiments, less than about 5% of the predetermined volume of the one or more fluids and/or reagents dispensed to the specimen is lost to evaporation during the unmasking operation. In some embodiments, less than about 2% of the predetermined volume of the one or more fluids and/or reagents dispensed to the specimen is lost to evaporation during the unmasking operation.

In some embodiments, the sealed chamber is pre-pressurized prior to the performance of the unmasking operation. In some embodiments, the chamber is pre-pressurized simultaneously with the performance of the unmasking operation. In some embodiments, steam is further introduced into the sealed chamber, e.g. either simultaneously, prior to, or after the unmasking operation.

In some embodiments, the lower plate further includes at least one heating element. In some embodiments, the lower plate further includes at least three heating elements, wherein a first of the at least three heating elements is positioned beneath the substrate stage, and wherein the second and third of the at least three heating elements are positioned adjacent the first of the at least three heating elements. In some embodiments, a first thermal gradient is maintained between the first and second of the at least three heating elements during the performance of the unmasking operation, and wherein a second thermal gradient is maintained between the second and third of the at least three heating elements during the performance of the unmasking operation.

### EXAMPLE 1

### Methodology

Antigen retrieval time and temperature were manipulated to provide appropriate antigen retrieval for a set of 14 advanced staining assays.

This study was enabled by the development of hardware to perform antigen retrieval using a greater range of temperatures than previously available and without any constraint on the overall timing. This allowed time and temperature to be manipulated relatively independently so that a standard time for antigen retrieval could be pursued.

5 min was selected as an achievable total antigen retrieval time, including heat up, steady state, and cool down. Initially temperatures between about 100 to about 140°C were tested on individual tissues to determine which provided antigen retrieval equivalent to Benchmark ULTRA (Ventana Medical Systems, Inc.; Tucson, AZ). Experiments were performed as hybrid runs where antigen retrieval was performed in purpose-built reaction chambers and staining was completed using BenchMark ULTRA and on-market primary antibodies and detection chemistry.

Stained slides were evaluated by pathologists and scores were used to compare the quality of antigen retrieval achieved in 5 min with that produced by our on-market products. Once an appropriate antigen retrieval temperature was determined for each tissue marker a greater variety of sample tissues and tissue cases were tested to confirm the efficacy of that temperature for 5 min AR.

### Data

Standard Antigen retrieval time was tested using the markers listed in Table 1. Temperatures found to provide appropriate antigen retrieval for each of these markers are provided as Table 2.

### Analysis

Temperatures were found that provided appropriate antigen retrieval for all markers tested in 5 min.

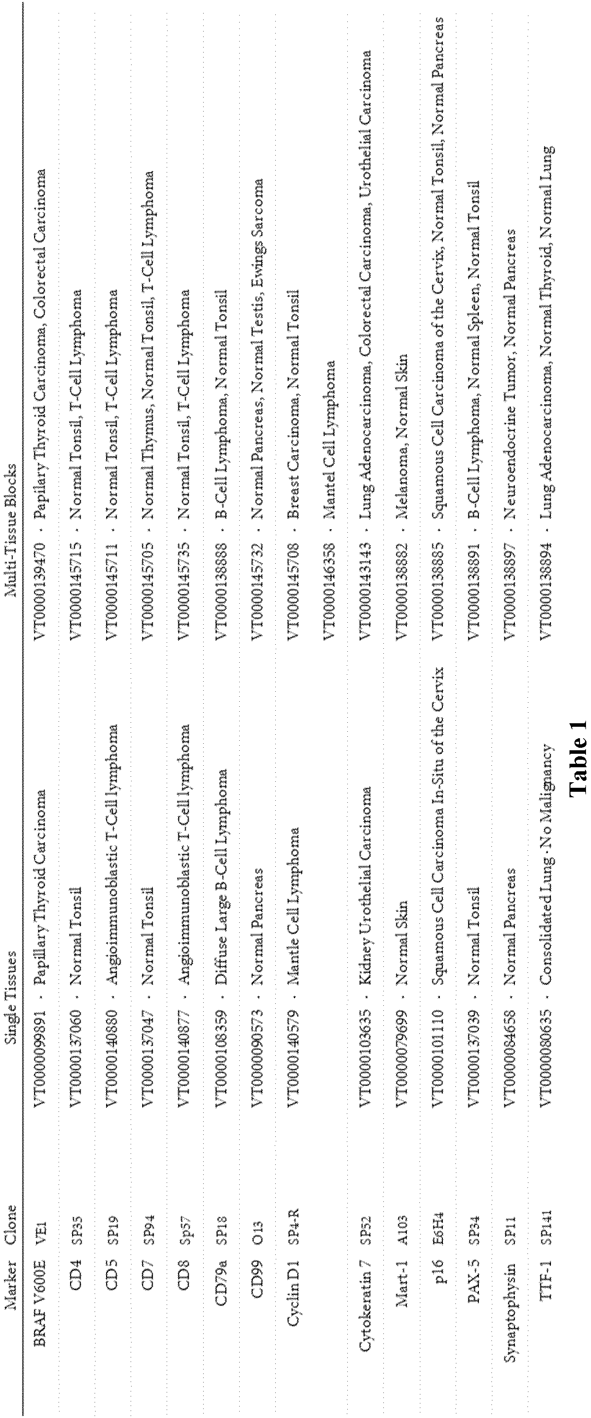

**Table 2**

| Marker | OptiView ARtime (min) | RAR Optimal Temperature (°C) for 5 min AR |
|---|---|---|
| BRAF V600E | 64 | 123 |
| CD4 | 40 | 121 |
| CD5 | 32 | 125^{†} |
| CD7 | 56 | 121 |
| CD79a | 64 | 123 |
| CD8 | 32 | 123 |
| CD99 | 32 | 118 |
| CK7 | 32 | 128^{†} |
| Cyclin D1 | 40 | 121^{†} |
| MART-1 | 64* | 131 |
| p16 | 48 | 118 |
| PAX-5 | 64 | 121 |
| Synaptophysin | 16 | 116 |
| TTF-1 | 56 | 125^{†} |

### EXAMPLE 2

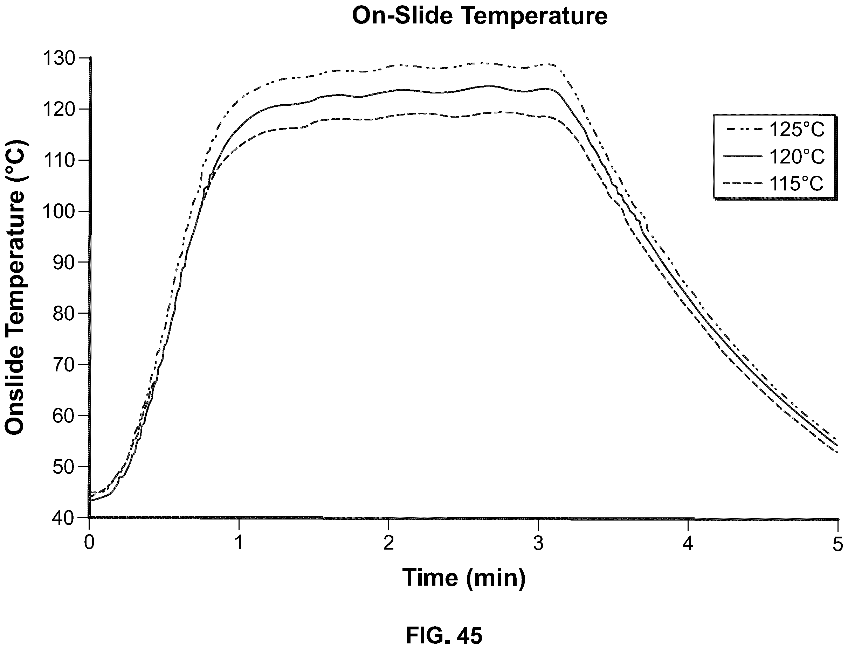

Slides were placed into a sealed chamber along with about 1.6 mL of a diluted or concentrated CC1 unmasking agent (available from Ventana Medical Systems, Inc., Tucson, AZ) was pipetted across the slide surface in order to completely cover the diagnosable area. Once the test retrieval reagent had been applied to the specimen, the specimen processing assembly of the device was closed, and compressed air was introduced into the chamber to increase the pressure to 30 psig. At this point the chamber was heated, exposing samples to a steady state temperature of 125°C. An example temperature profile showing the on-slide temperature during the antigen retrieval process used here is reproduced below in FIG. 45. In some embodiments, the specimen processing assembly used for antigen retrieval (such as any of those specimen processing assemblies described herein) takes less than 60 seconds to reach a steady state temperature of 125°C and slides were cooled for 2 min by flowing compressed air through passages in the bottom component of the chamber. Steady state time was approximately 2 min for the experiments described here. After two minutes of cool down, residual pressure was vented from the chamber and slides were removed and placed in reaction buffer at room temperature so they could be used in later downstream processes (e.g. staining).

### Examples of Biomarkers Which May Be Unmasked

Identified below are non-limiting examples of biomarkers which may be unmasked using the specimen processing assemblies, systems, and methods of the present disclosure. Certain markers are characteristic of particular cells, while other markers have been identified as being associated with a particular disease or condition. Examples of known prognostic markers include enzymatic markers such as, for example, galactosyl transferase II, neuron specific enolase, proton ATPase-2, and acid phosphatase. Hormone or hormone receptor markers include human chorionic gonadotropin (HCG), adrenocorticotropic hormone, carcinoembryonic antigen (CEA), prostate-specific antigen (PSA), estrogen receptor, progesterone receptor, androgen receptor, gC1q-R/p33 complement receptor, IL-2 receptor, p75 neurotrophin receptor, PTH receptor, thyroid hormone receptor, and insulin receptor.

Lymphoid markers include alpha-1-antichymotrypsin, alpha-1-antitrypsin, B cell marker, bcl-2, bcl-6, B lymphocyte antigen 36 kD, BM1 (myeloid marker), BM2 (myeloid marker), galectin-3, granzyme B, HLA class I Antigen, HLA class II (DP) antigen, HLA class II (DQ) antigen, HLA class II (DR) antigen, human neutrophil defensins, immunoglobulin A, immunoglobulin D, immunoglobulin G, immunoglobulin M, kappa light chain, kappa light chain, lambda light chain, lymphocyte/histocyte antigen, macrophage marker, muramidase (lysozyme), p80 anaplastic lymphoma kinase, plasma cell marker, secretory leukocyte protease inhibitor, T cell antigen receptor (JOVI 1), T cell antigen receptor (JOVI 3), terminal deoxynucleotidyl transferase, unclustered B cell marker.

Tumor markers include alpha fetoprotein, apolipoprotein D, BAG-1 (RAP46 protein), CA19-9 (sialyl lewisa), CA50 (carcinoma associated mucin antigen), CA125 (ovarian cancer antigen), CA242 (tumor associated mucin antigen), chromogranin A, clusterin (apolipoprotein J), epithelial membrane antigen, epithelial-related antigen, epithelial specific antigen, epidermal growth factor receptor, estrogen receptor (ER), gross cystic disease fluid protein-15, hepatocyte specific antigen, HER2, heregulin, human gastric mucin, human milk fat globule, MAGE-1, matrix metalloproteinases, melan A, melanoma marker (HMB45), mesothelin, metallothionein, microphthalmia transcription factor (MITF), Muc-1 core glycoprotein. Muc-1 glycoprotein, Muc-2 glycoprotein, Muc-5AC glycoprotein, Muc-6 glycoprotein, myeloperoxidase, Myf-3 (Rhabdomyosarcoma marker), Myf-4 (Rhabdomyosarcoma marker), MyoD1 (Rhabdomyosarcoma marker), myoglobin, nm23 protein, placental alkaline phosphatase, prealbumin, progesterone receptor, prostate specific antigen, prostatic acid phosphatase, prostatic inhibin peptide, PTEN, renal cell carcinoma marker, small intestinal mucinous antigen, tetranectin, thyroid transcription factor-1, tissue inhibitor of matrix metalloproteinase 1, tissue inhibitor of matrix metalloproteinase 2, tyrosinase, tyrosinase-related protein-1, villin, von Willebrand factor, CD34, CD34, Class II, CD51 Ab-1, CD63, CD69, Chk1, Chk2, claspin C-met, COX6C, CREB, Cyclin D1, Cytokeratin, Cytokeratin 8, DAPI, Desmin, DHP (1-6 Diphenyl-1,3,5-Hexatriene), E-Cadherin, EEA1, EGFR, EGFRvIII, EMA (Epithelial Membrane Antigen), ER, ERB3, ERCC1, ERK, E-Selectin, FAK, Fibronectin, FOXP3, Gamma-H2AX, GB3, GFAP, Giantin, GM130, Golgin 97, GRB2, GRP78BiP, GSK3 Beta, HER-2, Histone 3, Histone 3_K14-Ace [Anti-acetyl-Histone H3 (Lys 14)], Histone 3_K18-Ace [Histone H3-Acetyl Lys 18), Histone 3_K27-TriMe, [Histone H3 (trimethyl K27)], Histone 3_K4-diMe [Anti-dimethyl-Histone H3 (Lys 4)], Histone 3_K9-Ace [Acetyl-Histone H3 (Lys 9)], Histone 3_K9-triMe [Histone 3-trimethyl Lys 9], Histone 3_S10-Phos [Anti-Phospho Histone H3 (Ser 10), Mitosis Marker], Histone 4, Histone H2A.X-5139-Phos [Phospho Histone H2A.X (Ser139)antibody], Histone H2B, Histone H3_DiMethyl K4, Histone H4_TriMethyl K20-Chip grad, HSP70, Urokinase, VEGF R1, ICAM-1, IGF-1, IGF-1R, IGF-1 Receptor Beta, IGF-II, IGF-IIR, IKB-Alpha IKKE, IL6, IL8, Integrin alpha V beta 3, Integrin alpha V beta6, Integrin Alpha V/CD51, integrin B5, integrin B6, Integrin B8, Integrin Beta 1(CD 29), Integrin beta 3, Integrin beta 5 integrinB6, IRS-1, Jagged 1, Anti-protein kinase C Beta2, LAMP-1, Light Chain Ab-4 (Cocktail), Lambda Light Chain, kappa light chain, M6P, Mach 2, MAPKAPK-2, MEK 1, MEK 1/2 (Ps222), MEK 2, MEK1/2 (47E6), MEK1/2 Blocking Peptide, MET/HGFR, MGMT, Mitochondrial Antigen, Mitotracker Green F M, MMP-2, MMP9, E-cadherin, mTOR, ATPase, N-Cadherin, Nephrin, NFKB, NFKB p105/p50, NF-KB P65, Notch 1, Notch 2, Notch 3, OxPhos Complex IV, p130Cas, p38 MAPK, p44/42 MAPK antibody, P504S, P53, P70, P70 S6K, Pan Cadherin, Paxillin, P-Cadherin, PDI, pEGFR, Phospho AKT, Phospho CREB, phospho EGF Receptor, Phospho GSK3 Beta, Phospho H3, Phospho HSP-70, Phospho MAPKAPK-2, Phospho MEK1/2, phospho p38 MAP Kinase, Phospho p44/42 MAPK, Phospho p53, Phospho PKC, Phospho S6 Ribosomal Protein, Phospho Src, phospho-Akt, Phospho-Bad, Phospho-IKB-a, phospho-mTOR, Phospho-NF-kappaB p65, Phospho-p38, Phospho-p44/42 MAPK, Phospho-p70 S6 Kinase, Phospho-Rb, phospho-Smad2, PIM1, PIM2, PKC β, Podocalyxin, PR, PTEN, R1, Rb 4H1, R-Cadherin, ribonucleotide Reductase, RRM1, RRM11, SLC7A5, NDRG, HTF9C, HTF9C, CEACAM, p33, S6 Ribosomal Protein, Src, Survivin, Synapopodin, Syndecan 4, Talin, Tensin, Thymidylate Synthase, Tuberlin, VCAM-1, VEGF, Vimentin, Agglutinin, YES, ZAP-70 and ZEB.

Cell cycle associated markers include apoptosis protease activating factor-1, bcl-w, bcl-x, bromodeoxyuridine, CAK (cdk-activating kinase), cellular apoptosis susceptibility protein (CAS), caspase 2, caspase 8, CPP32 (caspase-3), CPP32 (caspase-3), cyclin dependent kinases, cyclin A, cyclin B1, cyclin D1, cyclin D2, cyclin D3, cyclin E, cyclin G, DNA fragmentation factor (N-terminus), Fas (CD95), Fas-associated death domain protein, Fas ligand, Fen-1, IPO-38, Mc1-1, minichromosome maintenance proteins, mismatch repair protein (MSH2), poly (ADP-Ribose) polymerase, proliferating cell nuclear antigen, p16 protein, p27 protein, p34cdc2, p57 protein (Kip2), p105 protein, Stat 1 alpha, topoisomerase I, topoisomerase II alpha, topoisomerase III alpha, topoisomerase II beta.

Neural tissue and tumor markers include alpha B crystallin, alpha-internexin, alpha synuclein, amyloid precursor protein, beta amyloid, calbindin, choline acetyltransferase, excitatory amino acid transporter 1, GAP43, glial fibrillary acidic protein, glutamate receptor 2, myelin basic protein, nerve growth factor receptor (gp75), neuroblastoma marker, neurofilament 68 kD, neurofilament 160 kD, neurofilament 200 kD, neuron specific enolase, nicotinic acetylcholine receptor alpha4, nicotinic acetylcholine receptor beta2, peripherin, protein gene product 9, S-100 protein, serotonin, SNAP-25, synapsin I, synaptophysin, tau, tryptophan hydroxylase, tyrosine hydroxylase, ubiquitin.

Cluster differentiation markers include CD1a, CD1b, CD1c, CD1d, CD1e, CD2, CD3delta, CD3epsilon, CD3gamma, CD4, CD5, CD6, CD7, CD8alpha, CD8beta, CD9, CD10, CD11a, CD11b, CD11c, CDw12, CD13, CD14, CD15, CD15s, CD16a, CD16b, CDw17, CD18, CD19, CD20, CD21, CD22, CD23, CD24, CD25, CD26, CD27, CD28, CD29, CD30, CD31, CD32, CD33, CD34, CD35, CD36, CD37, CD38, CD39, CD40, CD41, CD42a, CD42b, CD42c, CD42d, CD43, CD44, CD44R, CD45, CD46, CD47, CD48, CD49a, CD49b, CD49c, CD49d, CD49e, CD49f, CD50, CD51, CD52, CD53, CD54, CD55, CD56, CD57, CD58, CD59, CDw60, CD61, CD62E, CD62L, CD62P, CD63, CD64, CD65, CD65s, CD66a, CD66b, CD66c, CD66d, CD66e, CD66f, CD68, CD69, CD70, CD71, CD72, CD73, CD74, CDw75, CDw76, CD77, CD79a, CD79b, CD80, CD81, CD82, CD83, CD84, CD85, CD86, CD87, CD88, CD89, CD90, CD91, CDw92, CDw93, CD94, CD95, CD96, CD97, CD98, CD99, CD100, CD101, CD102, CD103, CD104, CD105, CD106, CD107a, CD107b, CDw108, CD109, CD114, CD115, CD116, CD117, CDw119, CD120a, CD120b, CD121a, CDw121b, CD122, CD123, CD124, CDw125, CD126, CD127, CDw128a, CDw128b, CD130, CDw131, CD132, CD134, CD135, CDw136, CDw137, CD138, CD139, CD140a, CD140b, CD141, CD142, CD143, CD144, CDw145, CD146, CD147, CD148, CDw149, CDw150, CD151, CD152, CD153, CD154, CD155, CD156, CD157, CD158a, CD158b, CD161, CD162, CD163, CD164, CD165, CD166, and TCR-zeta.

Other cellular markers include centromere protein-F (CENP-F), giantin, involucrin, lamin A&C [XB 10], LAP-70, mucin, nuclear pore complex proteins, p180 lamellar body protein, ran, r, cathepsin D, Ps2 protein, Her2-neu, P53, S100, epithelial marker antigen (EMA), TdT, MB2, MB3, PCNA, and Ki67.

All the U.S. patents, U.S. patent application publications, U.S. patent applications, foreign patents, foreign patent applications and non-patent publications referred to in this specification and/or listed in the Application Data Sheet are incorporated herein by reference, in their entirety. Aspects of the embodiments can be modified, if necessary, to employ concepts of the various patents, applications and publications to provide yet further embodiments.

Although the present disclosure has been described with reference to several illustrative embodiments, it should be understood that numerous other modifications and embodiments can be devised by those skilled in the art that will fall within the spirit and scope of the principles of this disclosure. More particularly, reasonable variations and modifications are possible in the component parts and/or arrangements of the subject combination arrangement within the scope of the foregoing disclosure, the drawings, and the appended additional embodiments without departing from the spirit of the disclosure. In addition to variations and modifications in the component parts and/or arrangements, alternative uses will also be apparent to those skilled in the art.

### ADDITIONAL EMBODIMENTS

Additional Embodiment 1. A specimen processing assembly including:
   a sub-assembly having first and second ends;
   a lower plate including a lower engagement surface and a substrate stage raised relative to at least a portion of the lower engagement surface, wherein the raised substrate stage includes an upper surface adapted to hold a substrate horizontally, and wherein the lower plate is movable along a length of the sub-assembly between the first and second ends; and
   an upper plate including an upper engagement surface and a cavity, wherein the cavity is recessed relative to the upper engagement surface, and wherein the upper engagement surface is complementary to the lower engagement surface.
Additional Embodiment 2. The specimen processing assembly of additional embodiment 1, wherein a body of the lower plate and a body of the upper plate both have complementary wedge-based shapes.
Additional Embodiment 3. The specimen processing assembly of additional embodiment 1, wherein at least one of the lower plate and the upper plate includes at least one seal body.
Additional Embodiment 4. The specimen processing assembly of additional embodiment 3, wherein the at least one seal body is removable.
Additional Embodiment 5. The specimen processing assembly of additional embodiment 4, wherein the lower plate further includes a groove and wherein the at least one removable seal body at least partially engages the groove.
Additional Embodiment 6. The specimen processing assembly of additional embodiment 5, wherein the at least one removable seal body is integrated within a removable seal attachment, wherein the removable seal attachment is configured to engage a portion of a periphery of the lower plate or the upper plate.
Additional Embodiment 7. The specimen processing assembly of additional embodiment 1, wherein the upper plate further includes one or more pressure members coupled to an upper surface of the upper plate.
Additional Embodiment 8. The specimen processing assembly of additional embodiment 1, wherein at least one of the upper and lower plates further includes one or more heating elements.
Additional Embodiment 9. The specimen processing assembly of additional embodiment 1, wherein at least one of the upper and lower plates further includes one or more cooling elements.
Additional Embodiment 10. The specimen processing assembly of additional embodiment 1, wherein at least one of the upper plate or the lower plate is coupled to at least one of a motor, a piston, a spring, a screw mechanism, a lever, or a cam mechanism.
Additional Embodiment 11. The specimen processing assembly of additional embodiment 1, where the sub-assembly is arranged horizontally.
Additional Embodiment 12. The specimen processing assembly of additional embodiment 11, wherein the lower plate and upper plate are both moved independently to predetermined positions such that the lower engagement surface of the lower plate at least partially contacts the complementary upper engagement surface of the upper plate.
Additional Embodiment 13. The specimen processing assembly of additional embodiment 11, wherein the lower plate is moved to a predetermined position and then the upper plate is moved toward the lower plate.
Additional Embodiment 14. The specimen processing assembly of additional embodiment 13, wherein the movement toward the lower plate is performed using one of a motor, a piston, or a cam mechanism.
Additional Embodiment 15. The specimen processing assembly of additional embodiment 1, wherein the sub-assembly is offset from the horizontal.
Additional Embodiment 16. The specimen processing assembly of additional embodiment 15, wherein the upper plate is held stationary and wherein the lower plate is moved toward the upper plate until the lower engagement surface of the lower plate at least partially contacts the complementary upper engagement surface of the upper plate.
Additional Embodiment 17. The specimen processing assembly of additional embodiment 16, wherein the upper plate and lower plate have complementary wedge-based shapes.
Additional Embodiment 18. The specimen processing assembly of additional embodiment 15, wherein the lower plate and upper plate are both moved independently to predetermined positions such that the lower engagement surface of the lower plate at least partially contacts the complementary upper engagement surface of the upper plate.
Additional Embodiment 19. A specimen processing assembly including (i) a lower plate including a lower engagement surface and a substrate stage raised relative to at least a portion of the lower engagement surface, wherein the substrate stage includes an upper surface adapted to hold a substrate horizontally, and (ii) an upper plate including an upper engagement surface complementary to the lower engagement surface and a cavity recessed relative to the upper engagement surface.
Additional Embodiment 20. The specimen processing assembly of additional embodiment 19, wherein the lower plate is fixed.
Additional Embodiment 21. The specimen processing assembly of additional embodiment 20, wherein the upper plate is movable, and wherein the upper plate is moved to a position such that the complementary lower and upper engagement surfaces contact each other.
Additional Embodiment 22. The specimen processing assembly of additional embodiment 21, wherein the upper plate moves horizontally toward the lower plate.
Additional Embodiment 23. The specimen processing assembly of additional embodiment 21, wherein the movement of the upper plate includes a downward movement component.
Additional Embodiment 24. The specimen processing assembly of additional embodiment 23, wherein the upper plate is coupled to one or more force generating members.
Additional Embodiment 25. The specimen processing assembly of additional embodiment 19, wherein the lower plate is movably coupled to a sub-assembly.
Additional Embodiment 26. The specimen processing assembly of additional embodiment 25, wherein the sub-assembly is arranged horizontally.
Additional Embodiment 27. The specimen processing assembly of additional embodiment 26, wherein the lower and upper plates are both independently movable.
Additional Embodiment 28. The specimen processing assembly of additional embodiment 26, wherein the lower plate is moved to a predetermined position along the sub-assembly, and the upper plate is moved toward the positioned lower plate.
Additional Embodiment 29. The specimen processing assembly of additional embodiment 28, wherein at least one of the upper plate or the lower plate is coupled to at least one of a motor, a spring, a lever, a screw, a piston, or a cam mechanism.
Additional Embodiment 30. The specimen processing assembly of additional embodiment 26, wherein the upper plate is fixed, and the lower plate is moved toward the upper plate until the complementary lower and upper engagement surfaces contact each other.
Additional Embodiment 31. The specimen processing assembly of additional embodiment 25, wherein the sub-assembly is offset from the horizontal.
Additional Embodiment 32. The specimen processing assembly of additional embodiment 31, wherein the lower and upper plates are both independently movable.
Additional Embodiment 33. The specimen processing assembly of additional embodiment 31, wherein the upper plate is fixed, and where the lower plate is moved toward the upper plate until the complementary lower and upper engagement surfaces contact each other.
Additional Embodiment 34. The specimen processing assembly of additional embodiment 33, wherein the lower and upper plates comprise complementary wedge-based shapes.
Additional Embodiment 35. The specimen processing assembly of additional embodiment 19, wherein the lower plate is in communication with a substrate loader.
Additional Embodiment 36. The specimen processing assembly of additional embodiment 35, wherein the substrate loader is in communication with a carousel, the carousel including a plurality of substrate holders.
Additional Embodiment 37. A specimen processing assembly according to any of one additional embodiments 1 - 36, wherein the specimen processing assembly includes a chamber.
Additional Embodiment 38. A system including at least one of the specimen processing assemblies according to any one of additional embodiments 1 - 36.
Additional Embodiment 39. The system of additional embodiment 38, further including one or more dispense devices.
Additional Embodiment 40. The system of any of additional embodiments 38 - 39, further including a control system.
Additional Embodiment 41. The system of any of additional embodiments 38 - 40, further including at least one of a liquid removal device or a mixing device.
Additional Embodiment 42. A chamber formed from an upper plate and a lower plate, wherein the lower plate includes a lower engagement surface and a substrate stage raised relative to the lower engagement surface, wherein the raised substrate stage includes an upper surface adapted to hold a substrate horizontally within the sealed chamber, and wherein the upper plate includes an upper engagement surface which is complementary to the lower engagement surface and a cavity recessed relative to the upper engagement surface; and wherein at least one of the upper plate and the lower plate includes at least one of a heating element or a cooling element.
Additional Embodiment 43. The chamber of additional embodiment 42, wherein an unmasking reagent is disposed on the surface of the horizontally held substrate.
Additional Embodiment 44. A system including:
   a plurality of independently operable specimen processing assemblies,
   each independently operable specimen processing assembly including (i) a lower plate movable along a lower sub-assembly, wherein the lower plate includes a lower engagement surface and a substrate stage having an upper surface adapted to hold a substrate horizontally, and (ii) an upper plate positioned above a portion of the lower sub-assembly, wherein the upper plate includes a recessed cavity and an upper engagement surface complementary to that of the lower engagement surface;
   one or more dispense devices; and
   a control system in communication with the plurality of independently operable specimen processing assemblies and/or the dispense device.
Additional Embodiment 45. The system of additional embodiment 44, wherein at least one of the specimen processing assemblies of the plurality of specimen processing assemblies includes a chamber.
Additional Embodiment 46. The system of additional embodiment 45, further including a substrate at least partially disposed within the chamber.
Additional Embodiment 47. The system of additional embodiment 46, wherein the one or more dispense devices are coupled to a dispense rail, the dispense rail oriented perpendicular to the lower sub-assemblies of each of the plurality of independently operable specimen processing assemblies.
Additional Embodiment 48. The system of additional embodiment 44, wherein the lower sub-assemblies of each of the plurality of independently operable specimen processing assemblies are positioned horizontally.
Additional Embodiment 49. The system of additional embodiment 48, wherein the lower plate and upper plate of each of the independently operable specimen processing assemblies are adapted to independently move to predetermined positions such that the lower engagement surfaces of the lower plates contact the complementary upper engagement surfaces of the upper plates.
Additional Embodiment 50. The system of additional embodiment 44, wherein the lower sub-assemblies of each of the plurality of independently operable specimen processing assemblies are offset from the horizontal.
Additional Embodiment 51. The system of additional embodiment 50, wherein the lower plate and upper plate of each of the independently operable specimen processing assemblies are adapted to independently move to predetermined positions such that the lower engagement surfaces of the lower plates contact the complementary upper engagement surfaces of the upper plates.
Additional Embodiment 52. The system of additional embodiment 50, wherein the upper plates of each of the independently operable specimen processing assemblies are fixed, and wherein the lower plates of each of the independently operable specimen processing assemblies are moved to the upper plates until the lower engagement surfaces of the lower plates contact the complementary upper engagement surfaces of the upper plates.
Additional Embodiment 53. The system of additional embodiment 52, wherein the lower and upper plates of each of the independently operable specimen processing assemblies comprise complementary wedge-based shapes.
Additional Embodiment 54. A system including:
   at least one specimen processing assembly including (i) a lower plate including a lower engagement surface and a substrate stage raised relative to at least a portion of the lower engagement surface, wherein the substrate stage includes an upper surface adapted to hold a substrate horizontally, and (ii) an upper plate including an upper engagement surface complementary to the lower engagement surface and a cavity recessed relative to the upper engagement surface; and
   one or more dispense devices.
Additional Embodiment 55. The system of additional embodiment 54, wherein the lower plate of the at least one specimen processing assembly is fixed.
Additional Embodiment 56. The system of additional embodiment 55, wherein the upper plate of the at least one specimen processing assembly is movable, and wherein the upper plate is moved to a position such that the complementary lower and upper engagement surfaces contact each other.
Additional Embodiment 57. The system of additional embodiment 56, wherein the movement of the upper plate is downward onto the lower plate.
Additional Embodiment 58. The system of additional embodiment 57, wherein the upper plate of the at least one specimen processing assembly is moved downward using one of a motor, a spring, a lever, a screw, a piston, or a cam mechanism.
Additional Embodiment 59. The system of additional embodiment 54, wherein the lower plate of the at least one specimen processing assembly is movably coupled to a first sub-assembly.
Additional Embodiment 60. The system of additional embodiment 59, wherein the first sub-assembly is arranged horizontally.
Additional Embodiment 61. The system of additional embodiment 60, wherein the lower plate of the at least one specimen processing assembly is moved to a predetermined position, and where the upper plate is moved toward the positioned lower plate.
Additional Embodiment 62. The system of additional embodiment 59, wherein the first sub-assembly is offset from horizontal.
Additional Embodiment 63. The system of additional embodiment 62, wherein the upper plate of the at least one specimen processing assembly is fixed, and wherein the lower plate of the at least one specimen processing assembly is moved toward the upper plate of the at least one specimen processing assembly until the complementary upper and lower engagement surfaces contact one another.
Additional Embodiment 64. The system of additional embodiment 63, wherein the upper and lower plates comprise complementary wedge-based shapes.
Additional Embodiment 65. The system of additional embodiment 54, wherein the at least one specimen processing assembly further includes a chamber formed by at least a portion of the raised substrate stage and the recessed chamber.
Additional Embodiment 66. The system of additional embodiment 54, wherein the system further includes a motor adapted to move the lower plate from a first position along the first sub-assembly to a second position along the first sub-assembly.
Additional Embodiment 67. The system of additional embodiment 59, wherein the dispense device is movably coupled to a second sub-assembly, wherein the second sub-assembly is arranged perpendicular to the first sub-assembly.
Additional Embodiment 68. The system of additional embodiment 54, wherein the at least one specimen processing assembly further includes at least one heating element.
Additional Embodiment 69. The system of additional embodiment 54, wherein the system includes at least two independently operable specimen processing assemblies.
Additional Embodiment 70. The system of additional embodiment 69, wherein one of the at least two independently operable specimen processing assemblies includes a chamber.
Additional Embodiment 71. The system of additional embodiment 54, further including a control system in communication with the at least one specimen processing assembly and the one or more dispense devices.
Additional Embodiment 72. An unmasked specimen disposed on a substrate, the unmasked specimen prepared according to a process comprising (a) dispensing a predetermined volume of one or more fluids and/or reagents to at least a portion of the specimen disposed on the substrate; (b) (b) sealing the specimen within a chamber, wherein the chamber is formed by contacting (i) a lower engagement surface of a lower plate, with (ii) an upper engagement surface of an upper plate, wherein the upper engagement surface is complementary to the lower engagement surface, and wherein the lower plate further includes a substrate stage for supporting the substrate; and (c) performing an unmasking operation on the specimen.
Additional Embodiment 73. The unmasked specimen of additional embodiment 72, wherein the unmasked specimen comprises one or more retrieved antigenic sites.
Additional Embodiment 74. The unmasked specimen of additional embodiment 72, wherein the unmasked specimen comprises one or more retrieved nucleic acid targets.
Additional Embodiment 75. The unmasked specimen of additional embodiment 72, wherein the one or more fluids and/or reagents are selected from the group consisting of water and a buffer solution having a pH ranging from between about 5 to about 10.
Additional Embodiment 76. The unmasked specimen of additional embodiment 72, wherein the one or more fluids and/or reagents comprise a mixture of deionized water, tris(hydroxymethyl)methylamine, and a chelator.
Additional Embodiment 77. The unmasked specimen of additional embodiment 72, wherein the predetermined volume of the one or more fluids and/or reagents dispensed to the at least the portion of the specimen ranges from between about 200µL to about 1000µL.
Additional Embodiment 78. The unmasked specimen of additional embodiment 72, wherein the predetermined volume of the one or more fluids and/or reagents dispensed to the at least the portion of the specimen ranges from between about 250µL to about 500µL.
Additional Embodiment 79. The unmasked specimen of additional embodiment 72, wherein the unmasking operation comprises heating the specimen disposed on the substrate to about a first predetermined temperature for about a predetermined duration of time.
Additional Embodiment 80. The unmasked specimen of additional embodiment 79, wherein the first predetermined temperature ranges from between about 125°C to about 155°C.
Additional Embodiment 81. The unmasked specimen of additional embodiment 79, wherein the first predetermined temperature ranges from between about 135°C to about 150°C.
Additional Embodiment 82. The unmasked specimen of additional embodiment 8, wherein the first predetermined temperature is about 140°C.
Additional Embodiment 83. The unmasked specimen of additional embodiment 79, wherein the predetermined duration of time ranges from between about 1 minute to about 10 minutes.
Additional Embodiment 84. The unmasked specimen of additional embodiment 79, wherein the predetermined duration of time ranges from between about 1 minute to about 5 minutes.
Additional Embodiment 85. The unmasked specimen of additional embodiment 1, wherein a temperature of the substrate is less than a temperature of any other component within the chamber during the unmasking operation.
Additional Embodiment 86. The unmasked specimen of additional embodiment 85, wherein the temperature of the substrate is at least 5°C less than the temperature of the any other component within the chamber.
Additional Embodiment 87. The unmasked specimen of additional embodiment 72, wherein less than about 5% of the predetermined volume of the one or more fluids and/or reagents dispensed to the at least the portion of the specimen are lost to evaporation during the unmasking operation.
Additional Embodiment 88. The unmasked specimen of additional embodiment 72, wherein less than about 2% of the predetermined volume of the one or more fluids and/or reagents dispensed to the at least the portion of the specimen are lost to evaporation during the unmasking operation.
Additional Embodiment 89. The unmasked specimen of additional embodiment 72, wherein no further fluids and/or reagents are dispensed to the substrate after the chamber is sealed.
Additional Embodiment 90. The unmasked specimen of additional embodiment 72, further comprising pre-pressurizing the sealed chamber prior to the performance of the unmasking operation.
Additional Embodiment 91. The unmasked specimen of additional embodiment 72, wherein the chamber is pre-pressurized simultaneously with the performance of the unmasking operation.
Additional Embodiment 92. The unmasked specimen of additional embodiment 72, further comprising introducing steam into the sealed chamber.
Additional Embodiment 93. The unmasked specimen of additional embodiment 72, wherein the lower plate further comprises at least one heating element.
Additional Embodiment 94. The unmasked specimen of additional embodiment 72, wherein the lower plate further comprises at least three heating elements, wherein a first of the at least three heating elements is positioned beneath the substrate stage, and wherein the second and third of the at least three heating elements are positioned adjacent the first of the at least three heating elements.
Additional Embodiment 95. The unmasked specimen of additional embodiment 94, wherein a first thermal gradient is maintained between the first and second of the at least three heating elements during the performance of the unmasking operation, and wherein a second thermal gradient is maintained between the second and third of the at least three heating elements during the performance of the unmasking operation.
Additional Embodiment 96. A method of unmasking a specimen disposed on a substrate comprising: (a) dispensing a predetermined volume of one or more fluids and/or reagents to at least a portion of the specimen; (b) sealing the specimen within a chamber, wherein the chamber is formed by contacting (i) a lower engagement surface of a lower plate, with (ii) an upper engagement surface of an upper plate, wherein the upper engagement surface is complementary to the lower engagement surface, and wherein the lower plate further includes a substrate stage for supporting the substrate, and (c) performing an unmasking operation on the specimen within the sealed chamber.
Additional Embodiment 97. The method of additional embodiment 96, wherein the one or more fluids and/or reagents are selected from the group consisting of water and a buffer solution having a pH ranging from between about 5 to about 10.
Additional Embodiment 98. The method of additional embodiment 96, wherein the one or more fluids and/or reagents comprise a mixture of deionized water, tris(hydroxymethyl)methylamine, and a chelator.
Additional Embodiment 99. The method of additional embodiment 96, wherein the predetermined volume of the one or more fluids and/or reagents dispensed to the at least the portion of the specimen ranges from between about 200µL to about 1000µL.
Additional Embodiment 100. The method of 96, wherein the predetermined volume of the one or more fluids and/or reagents dispensed to the at least the portion of the specimen ranges from between about 250µL to about 500µL.
Additional Embodiment 101. The method of additional embodiment 96, wherein the unmasking operation comprises heating the specimen to about a first predetermined temperature for about a predetermined duration of time.
Additional Embodiment 102. The method of additional embodiment 101, wherein the first predetermined temperature ranges from between about 125°C to about 155°C.
Additional Embodiment 103. The method of additional embodiment 101, wherein the first predetermined temperature ranges from between about 135°C to about 150°C.
Additional Embodiment 104. The method of additional embodiment 101, wherein the first predetermined temperature is about 140°C.
Additional Embodiment 105. The method of additional embodiment 101, wherein the predetermined duration of time ranges from between about 1 minute to about 10 minutes.
Additional Embodiment 106. The method of additional embodiment 101, wherein the predetermined duration of time ranges from between about 1 minute to about 5 minutes.
Additional Embodiment 107. The method of additional embodiment 96, wherein a temperature of the substrate is less than a temperature of any other component within the chamber during the unmasking operation.
Additional Embodiment 108. The method of additional embodiment 107, wherein the temperature of the substrate is at least 5°C less than the temperature of the other components within the chamber.
Additional Embodiment 109. The method of additional embodiment 96, wherein less than about 5% of the predetermined volume of the one or more fluids and/or reagents dispensed to the at least the portion of the specimen are lost to evaporation during the unmasking operation.
Additional Embodiment 110. The method of additional embodiment 96, wherein less than about 2% of the predetermined volume of the one or more fluids and/or reagents dispensed to the at least the portion of the specimen are lost to evaporation during the unmasking operation.
Additional Embodiment 111. The method of additional embodiment 96, wherein no further fluids and/or reagents are dispensed to the substrate after the chamber is sealed.
Additional Embodiment 112. The method of additional embodiment 96, further comprising pre-pressurizing the sealed chamber prior to the performance of the unmasking operation.
Additional Embodiment 113. The method of additional embodiment 96, wherein the chamber is pre-pressurized simultaneously with the performance of the unmasking operation.
Additional Embodiment 114. The method of additional embodiment 96, further comprising introducing steam into the sealed chamber.
Additional Embodiment 115. The method of additional embodiment 96, wherein the lower plate further comprises at least one heating element.
Additional Embodiment 116. The method of additional embodiment 96, wherein the lower plate further comprises at least three heating elements, wherein a first of the at least three heating elements is positioned beneath the substrate stage, and wherein the second and third of the at least three heating elements are positioned adjacent the first of the at least three heating elements.
Additional Embodiment 117. The method of additional embodiment 116, wherein a first thermal gradient is maintained between the first and second of the at least three heating elements during the performance of the unmasking operation, and wherein a second thermal gradient is maintained between the second and third of the at least three heating elements during the performance of the unmasking operation.
Additional Embodiment 118. The method of additional embodiment 96, further comprising applying an external force to the sealed chamber with one or more force generating members.
Additional Embodiment 119. The method of additional embodiment 118, wherein the one or more force generating members are selected from the group consisting a motor, a piston, a spring, a screw mechanism, a lever, and a cam mechanism.
Additional Embodiment 120. The method of additional embodiment 96, wherein at least one of the lower and upper plates is in thermal communication with one or more thermal management modules.
Additional Embodiment 121. The method of additional embodiment 96, wherein the unmasking operation comprises a temperature ramp-up phase and a temperature maintenance phase.
Additional Embodiment 122. The method of additional embodiment 121, wherein the temperature ramp-up phase comprises heating the specimen at a rate ranging from between about 1°C/s to about 4°C/s.
Additional Embodiment 123. The method of additional embodiment 121, wherein temperature ramp-up phase comprises heating the specimen at a rate ranging from between about 3°C/s to about 4°C/s.
Additional Embodiment 124. The method of additional embodiment 121, wherein the unmasking operation further comprises a temperature ramp-down phase.
Additional Embodiment 125. The method of additional embodiment 124, wherein the temperature ramp-up phase is shorter than the temperature ramp-down phase.
Additional Embodiment 126. The method of additional embodiment 124, wherein the temperature ramp-down phase comprises cooling the specimen at a rate ranging from between about 0.5°C/s to about 3°C/s.
Additional Embodiment 127. The method of additional embodiment 96, wherein the unmasking operation is stopped by opening the chamber without a temperature ramp-down phase.
Additional Embodiment 128. The method of additional embodiment 96, wherein the unmasking operation is stopped by introducing a predetermined amount of a fluid into the chamber.
Additional Embodiment 129. The method of additional embodiment 128, wherein the predetermined amount of fluid ranges from between about 0.5mL to about 5mL.
Additional Embodiment 130. The method of additional embodiment 96, further comprising staining the specimen for the presence of one or more biomarkers.
Additional Embodiment 131. A method of unmasking a specimen disposed on a substrate comprising: (a) dispensing a predetermined volume of one or more fluids and/or reagents to at least a portion of the specimen; (b) sealing the specimen within a chamber, wherein the chamber comprises a lower plate having a substrate stage and a lower engagement surface and an upper plate having an upper engagement surface complementary to the lower engagement surface, and wherein the substrate is supported by the substrate stage in a horizontal position; and (c) performing an unmasking operation within the sealed chamber.
Additional Embodiment 132. The method of additional embodiment 131, wherein the one or more fluids and/or reagents are selected from the group consisting of water and a buffer solution.
Additional Embodiment 133. The method of additional embodiment 131, wherein the predetermined volume of the one or more fluids and/or reagents dispensed to the at least the portion of the specimen ranges from between about 200µL to about 1000µL.
Additional Embodiment 134. The method of additional embodiment 131, wherein the predetermined volume of the one or more fluids and/or reagents dispensed to the at least the portion of the specimen ranges from between about 250µL to about 500µL.
Additional Embodiment 135. The method of additional embodiment 131, wherein the unmasking operation comprises heating the specimen to about a first predetermined temperature for about a predetermined duration of time.
Additional Embodiment 136. The method of additional embodiment 135, wherein the first predetermined temperature ranges from between about 125°C to about 155°C.
Additional Embodiment 137. The method of additional embodiment 135, wherein the predetermined duration of time ranges from between about 1 minute to about 10 minutes.
Additional Embodiment 138. The method of additional embodiment 131, wherein a temperature of the substrate is less than a temperature of any other component within the chamber during the unmasking operation.
Additional Embodiment 139. The method of additional embodiment 138, wherein the temperature of the substrate is at least 5°C less than the temperature of the other components within the chamber.
Additional Embodiment 140. The method of additional embodiment 131, wherein less than about 5% of the predetermined volume of the one or more fluids and/or reagents dispensed to the at least the portion of the specimen are lost to evaporation during the unmasking operation.
Additional Embodiment 141. The method of additional embodiment 131, wherein no further fluids and/or reagents are dispensed to the at least the portion of the substrate after the chamber is sealed.
Additional Embodiment 142. The method of additional embodiment 131, further comprising pre-pressurizing the sealed chamber prior to the performance of the unmasking operation.
Additional Embodiment 143. The method of additional embodiment 131, wherein the chamber is pre-pressurized simultaneously with the performance of the unmasking operation.
Additional Embodiment 144. The method of additional embodiment 131, further comprising introducing steam into the sealed chamber.
Additional Embodiment 145. The method of additional embodiment 131, wherein the unmasking operation comprises heating the specimen at a rate ranging from between about 1°C/s to about 4°C/s.
Additional Embodiment 146. The method of additional embodiment 131, wherein the unmasking operation comprises heating the specimen at a rate ranging from between about 3°C/s to about 4°C/s.
Additional Embodiment 147. A method of unmasking a specimen disposed on a substrate comprising: (a) dispensing a predetermined volume of one or more fluids and/or reagents to at least a portion of the specimen; (b) sealing the specimen within a chamber, wherein the chamber comprises a lower plate having a substrate stage and a lower engagement surface and an upper plate having an upper engagement surface complementary to the lower engagement surface, and wherein the substrate is supported by the substrate stage in a horizontal position; and (c) performing an unmasking operation, wherein the unmasking operation comprises a temperature ramp-up phase, a temperature maintenance phase, and a temperature ramp-down phase.
Additional Embodiment 148. The method of additional embodiment 147, wherein the temperature ramp-up phase comprises heating the specimen at a rate ranging from between about 1°C/s to about 4°C/s.
Additional Embodiment 149. The method of additional embodiment 147, wherein temperature ramp-up phase comprises heating the specimen at a rate ranging from between about 3°C/s to about 4°C/s.
Additional Embodiment 150. The method of additional embodiment 147, wherein the temperature ramp-up phase comprises heating the specimen to a predetermined temperature of between about 110°C to about 150°C.
Additional Embodiment 151. The method of additional embodiment 147, wherein the temperature ramp-up phase comprises heating the specimen to a predetermined temperature of between about 120°C to about 145°C.
Additional Embodiment 152. The method of additional embodiment 150, wherein the specimen is maintained at the predetermined temperature for a predetermined time period from between about 1 minute to about 10 minutes.
Additional Embodiment 153. The method of additional embodiment 150, wherein the specimen is maintained at the predetermined temperature for a predetermined time period from between about 2 minutes to about 7 minutes.
Additional Embodiment 154. The method of additional embodiment 150, wherein the specimen is maintained at the predetermined temperature for a predetermined time period from between about 3 minutes to about 5 minutes.
Additional Embodiment 155. The method of additional embodiment 147, wherein the temperature ramp-down phase comprises cooling the specimen at a rate ranging from between about 0.5°C/s to about 3°C/s.
Additional Embodiment 156. The method of additional embodiment 147, wherein temperature ramp-down phase comprises cooling the specimen at a rate ranging from between about 0.5°C/s to about 2°C/s.
Additional Embodiment 157. The method of additional embodiment 147, wherein the one or more fluids and/or reagents are selected from the group consisting of water and a buffer solution.
Additional Embodiment 158. The method of additional embodiment 147, wherein the predetermined volume of the one or more fluids and/or reagents dispensed to the at least the portion of the specimen ranges from between about 200µL to about 1000µL.
Additional Embodiment 159. The method of additional embodiment 147, wherein the predetermined volume of the one or more fluids and/or reagents dispensed to the at least the portion of the specimen ranges from between about 250µL to about 500µL.
Additional Embodiment 160. An antigen retrieved specimen prepared according to the method of any one of additional embodiments 96 - 159.
Additional Embodiment 161. The antigen retrieved specimen of additional embodiment 89, wherein the antigen retrieved specimen is a biopsy sample.
Additional Embodiment 162. A target retrieved specimen prepared according to the method of any one of additional embodiments 96 - 159.
Additional Embodiment 163. The target retrieved specimen of additional embodiment 162, wherein the target retrieved specimen is a biopsy sample.
Additional Embodiment 164. A specimen processing assembly comprising (i) a lower plate comprising a body, the body comprising (a) a substrate stage having an upper surface adapted to support a substrate horizontally, (b) a lower engagement surface, and (c) a first lower temperature regulation element in thermal communication with the substrate stage; and (ii) an upper plate comprising an upper engagement surface complementary to the lower engagement surface.
Additional Embodiment 165. The specimen processing assembly of additional embodiment 164, wherein the first lower temperature regulation element is positioned beneath the substrate stage.
Additional Embodiment 166. The specimen processing assembly of additional embodiment 164, wherein the lower plate further comprises a second lower temperature regulation element and a third lower temperature regulation element.
Additional Embodiment 167. The specimen processing assembly of additional embodiment 166, wherein the second and third lower temperature regulation elements are each positioned adjacent the first lower temperature regulation element.
Additional Embodiment 168. The specimen processing assembly of additional embodiment 166, wherein the second and third lower temperature regulation elements are each positioned beneath a portion of the lower engagement surface.
Additional Embodiment 169. The specimen processing assembly of additional embodiment 168, wherein the first, second, and third lower engagement elements are positioned in parallel.
Additional Embodiment 170. The specimen processing assembly of additional embodiment 166, wherein the first lower temperature regulation element has a first thermal output, the second lower temperature regulation element has a second thermal output, and the third lower temperature regulation element has a third thermal output, wherein the first thermal output is less than either of the second and third thermal outputs.
Additional Embodiment 171. The specimen processing assembly of additional embodiment 166, wherein a thermal gradient is maintained between the first and second lower temperature regulation elements and between the first and third temperature regulation elements.
Additional Embodiment 172. The specimen processing assembly of additional embodiment 171, wherein the thermal gradient maintained between the first and second lower temperature regulation elements ranges from between 2°C to about 10°C; and wherein the thermal gradient maintained between the first and second lower temperature regulation elements ranges from between 2°C to about 10°C.
Additional Embodiment 173. The specimen processing assembly of additional embodiment 171, wherein the thermal gradient maintained between the first and second lower temperature regulation elements ranges from between 2°C to about 5°C; and wherein the thermal gradient maintained between the first and second lower temperature regulation elements ranges from between 2°C to about 5°C.
Additional Embodiment 174. The specimen processing assembly of additional embodiment 166, wherein the first, second, and third lower temperature regulation elements are positioned to maintain a thermal gradient between portions of the lower engagement surface and the substrate stage.
Additional Embodiment 175. The specimen processing assembly of additional embodiment 164, wherein the upper plate further comprises at least one upper thermal regulation element.
Additional Embodiment 176. The specimen processing assembly of additional embodiment 175, wherein a thermal output of the first lower temperature regulation element is maintained at a temperature less than a thermal output of the at least one upper thermal regulation element.
Additional Embodiment 177. The specimen processing assembly of additional embodiment 95166 wherein the upper plate further comprises at least one upper thermal regulation element.
Additional Embodiment 178. The specimen processing assembly of additional embodiment 177, wherein the at least one upper thermal regulation element has a fourth thermal output, and wherein the first thermal output is less than the fourth thermal output.
Additional Embodiment 179. The specimen processing assembly of additional embodiment 164, further comprising a substrate disposed on the surface of substrate stage.
Additional Embodiment 180. The specimen processing assembly of additional embodiment 179, wherein the substrate is maintained at a temperature which is less than the temperature of the lower and upper engagement surfaces.
Additional Embodiment 181. The specimen processing assembly of additional embodiment 93164 wherein the first lower temperature regulation element comprises at least one fluid channel.
Additional Embodiment 182. The specimen processing assembly of additional embodiment 166, wherein the second and third lower temperature regulation elements each comprise heating cartridges.
Additional Embodiment 183. The specimen processing assembly of additional embodiment 164, wherein at least one of the lower plate and the upper plate comprises at least one seal body.
Additional Embodiment 184. The specimen processing assembly of additional embodiment 183, wherein the at least one seal body is removable.
Additional Embodiment 185. The specimen processing assembly of additional embodiment 164, wherein at least one of the upper plate or the lower plate is coupled to at least one of a motor, a piston, a spring, a screw mechanism, a lever, or a cam mechanism.
Additional Embodiment 186. The specimen processing assembly of additional embodiment 164, further comprising a sub-assembly having first and second ends.
Additional Embodiment 187. The specimen processing assembly of additional embodiment 186, wherein the lower plate is movable along a length of the sub-assembly between the first and second ends.
Additional Embodiment 188. The specimen processing assembly of additional embodiment 187, where the sub-assembly is arranged horizontally.
Additional Embodiment 189. The specimen processing assembly of additional embodiment 188, wherein the lower plate and upper plate are both moved independently to predetermined positions such that the lower engagement surface of the lower plate at least partially contacts the complementary upper engagement surface of the upper plate.
Additional Embodiment 190. The specimen processing assembly of additional embodiment 188, wherein the lower plate is moved to a predetermined position and then the upper plate is moved toward the lower plate.
Additional Embodiment 191. The specimen processing assembly of additional embodiment 190, wherein the movement toward the lower plate is performed using one of a motor, a piston, or a cam mechanism.
Additional Embodiment 192. The specimen processing assembly of additional embodiment 187, wherein the sub-assembly is offset from the horizontal.
Additional Embodiment 193. The specimen processing assembly of additional embodiment 192, wherein the upper plate is held stationary and wherein the lower plate is moved toward the upper plate until the lower engagement surface of the lower plate at least partially contacts the complementary upper engagement surface of the upper plate.
Additional Embodiment 194. The specimen processing assembly of additional embodiment 193, wherein the upper plate and lower plate have complementary wedge-based shapes.
Additional Embodiment 195. The specimen processing assembly of additional embodiment 192, wherein the lower plate and upper plate are both moved independently to predetermined positions such that the lower engagement surface of the lower plate at least partially contacts the complementary upper engagement surface of the upper plate.
Additional Embodiment 196. The specimen processing assembly of additional embodiment 164, wherein the lower and upper plates are both independently movable.
Additional Embodiment 197. Use of the specimen processing assembly of any one of additional embodiments 164 - 196 in the preparation of an unmasked specimen.
Additional Embodiment 198. The use of additional embodiment 197, wherein the unmasked specimen is a histology sample.
Additional Embodiment 199. The use of additional embodiment 197, wherein the unmasked specimen is a cytology sample.
Additional Embodiment 200. A system comprising at least one specimen processing assembly of any one of additional embodiments 164 - 196.
Additional Embodiment 201. Use of the system of additional embodiment 200, in the preparation of an unmasked specimen.
Additional Embodiment 202. The use of additional embodiment 201, wherein the unmasked specimen is a histology sample.
Additional Embodiment 203. The use of additional embodiment 201, wherein the unmasked specimen is a cytology sample.
Additional Embodiment 204. A method of unmasking a specimen disposed on a substrate comprising: (a) dispensing a predetermined volume of one or more fluids and/or reagents to at least a portion of the specimen; (b) sealing the specimen within a chamber, wherein the chamber comprises a modular lower plate having a substrate stage and a lower engagement surface and an upper plate having an upper engagement surface complementary to the lower engagement surface, and wherein the substrate is supported by the substrate stage in a horizontal position; and (c) performing an unmasking operation within the sealed chamber.
Additional Embodiment 205. The method of additional embodiment 204, further comprising moving the modular lower plate to a position beneath an upper plate prior sealing the specimen within the chamber.
Additional Embodiment 206. The method of additional embodiment 205, wherein the modular lower plate is moved using a transport device.
Additional Embodiment 207. The method of additional embodiment 205, wherein the modular lower plate is enclosed within a carrier.
Additional Embodiment 208. The method of additional embodiment 207, wherein the carried is moved using a gripper device.
Additional Embodiment 209. The method of additional embodiment 204, wherein the modular lower plate and the upper plate are comprised of a polymer or copolymer.
Additional Embodiment 210. The method of additional embodiment 204, wherein the unmasking operation comprises heating and/or pressurizing the sealed chamber with steam for a predetermined duration of time.
Additional Embodiment 211. The method of additional embodiment 210, further comprising opening the chamber without cooling and/or depressurizing the chamber.
Additional Embodiment 212. The method of additional embodiment 211, further comprising dispensing one or more fluids and/or reagents to the specimen within 5 seconds of opening the chamber.
Additional Embodiment 213. The method of additional embodiment 140211 further comprising dispensing one or more fluids and/or reagents to the specimen within 2 seconds of opening the chamber.
Additional Embodiment 214. A method of unmasking one or more biomarkers in a plurality of specimens, wherein each individual specimen of the plurality of specimens is disposed on a substrate, comprising: (a) independently dispensing a predetermined volume of one or more fluids and/or reagents to at least a portion of each individual specimen of the plurality of specimens; (b) sealing each individual specimen of the plurality of specimens in a chamber of a system, the system comprising a plurality of independently operable chambers, wherein each chamber of the plurality of independently operable chambers is formed from a lower plate having a lower engagement surface and an upper plate having a complementary upper engagement surface, and wherein the lower plate includes a substrate stage; and (c) independently performing an unmasking operation on each specimen within each independently operable sealed chamber, wherein the independent performance of each unmasking operation comprises the same predetermined unmasking duration.
Additional Embodiment 215. The method of additional embodiment 214, further comprising retrieving at least one unmasking parameter for each biomarker within each individual specimen.
Additional Embodiment 216. The method of additional embodiment 215, wherein the at least one unmasking parameter for each biomarker within each individual specimen comprises a predetermined unmasking temperature for fully unmasking the biomarker given the predetermined unmasking duration.
Additional Embodiment 217. The method of additional embodiment 215, wherein the independent performance of each unmasking operation is based on the retrieved at least one unmasking parameter for each biomarker within each individual specimen.
Additional Embodiment 218. The method of additional embodiment 216, further comprising controlling one or more heating elements within each lower plate of each independently operable chamber to heat the chamber based on the retrieved predetermined unmasking temperatures.
Additional Embodiment 219. The method of additional embodiment 214, wherein at least two of the independently operable chambers are heated to different temperatures throughout the predetermined unmasking duration.
Additional Embodiment 220. The method of additional embodiment 214, wherein the predetermined unmasking duration ranges from between about 3 minutes to about 9 minutes.
Additional Embodiment 221. An antigen retrieved specimen prepared according to the method of any one of additional embodiments 214 - 220.
Additional Embodiment 222. The antigen retrieved specimen of additional embodiment 221, wherein the antigen retrieved specimen is a biopsy sample.
Additional Embodiment 223. A target retrieved specimen prepared according to the method of any one of additional embodiments 214 - 220.
Additional Embodiment 224. The target retrieved specimen of additional embodiment 223, wherein the target retrieved specimen is a biopsy sample.
Additional Embodiment 225. An unmasked specimen prepared using the specimen processing assembly of any one of additional embodiments 164 - 196 or the system of additional embodiment 200.
Additional Embodiment 226. A system comprising:
   (i) at least one unmasking chamber having a predetermined internal volume, wherein the at least one unmasking chamber comprises an upper plate and a lower plate, wherein the lower plate includes a lower engagement surface and one or more substrate stages adapted to hold a substrate horizontally within the at least one unmasking chamber, and wherein the upper plate includes an upper engagement surface which is complementary to the lower engagement surface and a cavity recessed relative to the upper engagement surface; and wherein at least one of the upper plate and the lower plate includes at least one of a heating element or a cooling element; and
   (ii) a staining module.
Additional Embodiment 227. The system of additional embodiment 226, wherein the predetermined internal volume ranges from between about 14cm³ to about 25cm³.
Additional Embodiment 228. The system of any of the additional embodiments 226 - 227, wherein the predetermined internal volume ranges from between about 16cm³ to about 22cm³.
Additional Embodiment 229. The system of any of the additional embodiments 226 - 228, the predetermined internal volume ranges from between about 18cm³ to about 20cm³.
Additional Embodiment 230. The system of any of additional embodiments 226 - 229, wherein the one or more substrate stages are raised relative to the lower engagement surface.
Additional Embodiment 231. The system of any of additional embodiments 226 - 230, wherein at least one of the lower and/or upper plates further comprises one or more alignment members.
Additional Embodiment 232. The system of any of additional embodiments 226 - 231, wherein at least one of the lower and/or upper plates further comprises one or more temperature and/or pressure sensors.
Additional Embodiment 233. The system of any of the additional embodiments 226 - 232, wherein at least one of the lower and/or upper plates further comprises one or more temperature sensors which contact the horizontally held substrate or a fluid disposed thereon.
Additional Embodiment 234. The system of any of additional embodiments 226 - 233, wherein the upper plate comprises one or more steam injection ports.
Additional Embodiment 235. The system of any one of additional embodiments 226 - 234, wherein a body of the lower plate and a body of the upper plate comprise complementary wedge-based shapes.
Additional Embodiment 236. The system of any one of additional embodiments 226 - 235, wherein at least one of the lower plate and the upper plate comprises at least one seal body.
Additional Embodiment 237. The system of additional embodiment 236, wherein the at least one seal body is removable.
Additional Embodiment 238. The system of embodiment 236, wherein the lower plate comprises a groove and wherein the at least one removable seal body at least partially engages the groove.
Additional Embodiment 239. The system of embodiment 237, wherein the at least one removable seal body is integrated within a removable seal attachment, wherein the removable seal attachment engages a portion of a periphery of the lower plate or the upper plate.
Additional Embodiment 240. The system of any one of the preceding claims, wherein at least one of the upper plate or the lower plate is coupled to at least one of a motor, a piston, a spring, a screw mechanism, a lever, or a cam mechanism.
Additional Embodiment 241. The system of any one of the additional embodiments 226 - 240, where the upper and lower plates are independently movable.
Additional Embodiment 242. The system of any one of the additional embodiments 226 - 241, further comprising a control system.
Additional Embodiment 243. The system of additional embodiment 242, wherein the control system is adapted to operate the at least one heating or cooling element to uniformly heat and/or cool the one or more substrate stages.
Additional Embodiment 244. The system of any one of the additional embodiments 226 - 243, further comprising at least one substrate transfer device.
Additional Embodiment 245. The system of additional embodiment 244, wherein the at least one substrate transfer device is selected from the group consisting of a gripper device, a forklift device, and carrier transport.
Additional Embodiment 246. The system of any one of the additional embodiments 226 - 245, further comprising one or more substrate loading stations.
Additional Embodiment 247. The system of any one of the additional embodiments 226 - 246, wherein the lower plate is modular.
Additional Embodiment 248. The system of additional embodiment 247, wherein the modular lower plate is transportable to the upper plate.
Additional Embodiment 249. The system of any one of the additional embodiments 226 - 248, wherein the upper plate is coupled to a force generating member.
Additional Embodiment 250. The system of any one of the additional embodiments 226 - 249, wherein the force generating member is configured to give way if a pressure within the chamber exceeds a predetermined threshold.
Additional Embodiment 251. A system comprising:
   (i) at least one unmasking chamber having a predetermined interior volume, wherein the at least one unmasking chamber comprises an upper plate and a lower plate, wherein the lower plate includes a lower engagement surface and one or more substrate stages adapted to hold a substrate horizontally within the at least one unmasking chamber, and wherein the upper plate includes an upper engagement surface which is complementary to the lower engagement surface and a cavity recessed relative to the upper engagement surface; and wherein the upper plate comprises one or more steam injection ports for introducing steam into the at least one unmasking chamber;
   (ii) a staining module; and
   (iii) a steam reservoir.
Additional Embodiment 252. The system of additional embodiment 251, wherein the upper plate is coupled to a force generating member.
Additional Embodiment 253. The system of additional embodiment 252, wherein the force generating member is selected from the group consisting of a motor, a spring, a screw, a level, a piston, a cam, or any combination thereof.
Additional Embodiment 254. The system of any one of additional embodiments 251 - 253, wherein the at least one unmasking chamber comprises a predetermined internal volume ranging from between about 14cm³ to about 25cm³.
Additional Embodiment 255. The system of any one of additional embodiments 251 - 254, wherein at least one of the lower and/or upper plates further comprises one or more alignment members.
Additional Embodiment 256. The system of any one of additional embodiments 251 - 255, wherein at least one of the lower and/or upper plates further comprise one or more temperature and/or pressure sensors.
Additional Embodiment 257. The system of any one of additional embodiments 251 - 256, wherein at least one of the lower plate and the upper plate further comprises at least one seal body.
Additional Embodiment 258. The system of additional embodiment 257, wherein the at least one seal body is removable.
Additional Embodiment 259. The system of additional embodiment 258, wherein the lower plate comprises a groove and wherein the at least one removable seal body at least partially engages the groove.
Additional Embodiment 260. A system comprising:
   (i) at least one specimen processing assembly comprising: (1) a lower plate comprising a body, the body comprising (a) a substrate stage having an upper surface adapted to support a substrate horizontally, (b) a lower engagement surface, and (c) a first lower temperature regulation element in thermal communication with the substrate stage; and (2) an upper plate comprising an upper engagement surface complementary to the lower engagement surface; and
   (ii) a staining module.
Additional Embodiment 261. The system of additional embodiment 260, wherein the first lower temperature regulation element is positioned beneath the substrate stage.
Additional Embodiment 262. The system of any one of additional embodiments 260 - 261, wherein the lower plate further comprises a second lower temperature regulation element and a third lower temperature regulation element, wherein the second and third lower temperature regulation elements are each positioned adjacent the first lower temperature regulation element.
Additional Embodiment 263. The system of additional embodiment 262, wherein the first lower temperature regulation element has a first thermal output, the second lower temperature regulation element has a second thermal output, and the third lower temperature regulation element has a third thermal output, wherein the first thermal output is less than either of the second and third thermal outputs.
Additional Embodiment 264. The system of additional embodiment 265, wherein a thermal gradient is maintained between the first and second lower temperature regulation elements and between the first and third temperature regulation elements.
Additional Embodiment 265. The system of additional embodiment 264, wherein the thermal gradient maintained between the first and second lower temperature regulation elements ranges from between 2°C to about 10°C; and wherein the thermal gradient maintained between the first and second lower temperature regulation elements ranges from between 2°C to about 10°C.
Additional Embodiment 266. The system of any one of additional embodiments 260 - 265, wherein the lower plate is modular.
Additional Embodiment 267. The system of embodiment 266, wherein the modular lower plate is transportable to the upper plate.
Additional Embodiment 268. The system of additional embodiment 267, wherein the upper plate includes an upper engagement surface which is complementary to the lower engagement surface and a cavity recessed relative to the upper engagement surface.
Additional Embodiment 269. The system of any one of additional embodiments 268 - 269, wherein the upper plate is coupled to a force generating member.
Additional Embodiment 270. The system of additional embodiment 269, wherein the force generating member is configured to give way if a pressure within a chamber formed from the upper and lower plates exceeds a predetermined threshold.
Additional Embodiment 271. The system of any one of additional embodiments 260 - 270, wherein the first lower temperature regulation element in thermal communication with the substrate stage is configured such that the substrate stage or a substrate disposed thereon remains the coldest component within a chamber formed from the upper and lower plates.
Additional Embodiment 272. The system of any one of additional embodiments 260 - 271, further comprising at least one substrate transfer device.
Additional Embodiment 273. The system of additional embodiment 272, wherein the at least one substrate transfer device is selected from the group consisting of a gripper device, a forklift device, and carrier transport.
Additional Embodiment 274. The system of any one of additional embodiments 260 - 273, further comprising one or more substrate loading stations.
Additional Embodiment 275. Use of a system of any one of additional embodiments 226 - 274 in the preparation of an unmasked specimen.
Additional Embodiment 276. The use of the system of additional embodiment 275, wherein the specimen is a histology sample.
Additional Embodiment 277. The use of the system of additional embodiments 275, wherein the specimen is a cytology sample.

## Claims

1. A system comprising:
(i) at least one unmasking chamber having a predetermined internal volume, wherein the at least one unmasking chamber comprises an upper plate (30) and a lower plate (10), wherein the lower plate (10) includes a lower engagement surface (11) and one or more substrate stages (12) adapted to hold a substrate (15) horizontally within the at least one unmasking chamber, and wherein the upper plate (30) includes an upper engagement surface (31) which is complementary to the lower engagement surface (11) and a cavity (32) recessed relative to the upper engagement surface (31); and wherein at least one of the upper plate (30) and the lower plate (10) includes at least one of a heating element or a cooling element (21), wherein at least one of the lower plate (10) and the upper plate (30) comprises at least one seal body; and
(ii) a staining module.

2. The system of claim 1, wherein the predetermined internal volume ranges from between about 14cm³ to about 25cm³.

3. The system of any of the preceding claims, wherein the one or more substrate stages (12) are raised relative to the lower engagement surface (11).

4. The system of any of the preceding claims, wherein at least one of the lower and/or upper plates further comprises one or more alignment members.

5. The system of any of the preceding claims, wherein at least one of the lower (10) and/or upper plates (30) further comprises one or more temperature and/or pressure sensors.

6. The system of any of the preceding claims, wherein at least one of the lower (10) and/or upper plates (30) further comprises one or more temperature sensors which contact the horizontally held substrate (15) or a fluid disposed thereon.

7. The system of any of the preceding claims, wherein the upper plate (30) comprises one or more steam injection ports.

8. The system of any one of the preceding claims, wherein a body of the lower plate (10) and a body of the upper plate (30) comprise complementary wedge-based shapes.

9. The system of any one of the preceding claims, wherein the at least one seal body is removable, wherein the at least one removable seal body is integrated within a removable seal attachment, wherein the removable seal attachment engages a portion of a periphery of the lower plate (10) or the upper plate (30).

10. The system of any one of the preceding claims, wherein at least one of the upper plate (30) or the lower plate (10) is coupled to at least one of a motor (185; 221), a piston (61), a spring (74), a screw mechanism (181; 184), a lever, or a cam mechanism (60).

11. The system of any one of the preceding claims, where the upper (30) and lower plates (10) are independently movable.

12. The system of any one of the preceding claims, further comprising a control system, wherein the control system (201) is adapted to operate the at least one heating or cooling element (21) to uniformly heat and/or cool the one or more substrate stages (12) .

13. The system of any one of the preceding claims, further comprising at least one substrate transfer device, wherein the at least one substrate transfer device is selected from the group consisting of a gripper device (460), a forklift device (480), and carrier transport.

14. The system of any one of the preceding claims, wherein the lower plate (10) is modular, wherein the modular lower plate (10) is transportable to the upper plate (30).

15. The system of any one of the preceding claims, wherein the upper plate (30) is coupled to a force generating member, wherein the force generating member is configured to give way if a pressure within the chamber exceeds a predetermined threshold.
